(19) Europäisches Patentamt
European Patent Office
Office européen des brevets

(11) **EP 3 978 949 A2**

(12) **EUROPEAN PATENT APPLICATION**

(43) Date of publication:
**06.04.2022 Bulletin 2022/14**

(21) Application number: **21200823.9**

(22) Date of filing: **04.10.2021**

(51) International Patent Classification (IPC):
**G01S 7/41** *(2006.01)*  **G01S 13/04** *(2006.01)*
**G01S 13/50** *(2006.01)*  **G01S 13/56** *(2006.01)*
**G01S 13/66** *(2006.01)*  **G01S 13/88** *(2006.01)*
**G01S 13/46** *(2006.01)*

(52) Cooperative Patent Classification (CPC):
**G01S 7/415; G01S 13/04; G01S 13/50;**
**G01S 13/56; G01S 13/66; G01S 13/886;**
G01S 2013/462

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 02.10.2020  US 202063087122 P
12.10.2020  US 202063090670 P
22.10.2020  US 202063104422 P
11.11.2020  US 202063112563 P
11.06.2021  US 202163209907 P
18.06.2021  US 202117352185
20.06.2021  US 202117352306
02.10.2021  US 202117492598
02.10.2021  US 202117492599
03.10.2021  US 202117492642

(71) Applicants:
• **Origin Wireless, Inc.**
  **Greenbelt, MD 20770 (US)**
• **Wu, Chenshu**
  **Hong Kong (HK)**
• **Wang, Beibei**
  **Clarksville, MD 21029 (US)**
• **Au, Oscar Chi-Lim**
  **San Jose, CA 95136 (US)**
• **Liu, K.J. Ray**
  **Potomac, MD 20854 (US)**
• **Mai, Chao-Lun**
  **Cambridge,  MA (US)**
• **Bugos, Dan**
  **Washington, DC (US)**
• **Lai, Hung-Quoc Duc**
  **Parkville MD (US)**
• **Maid, Spencer**
  **Danvers, MA (US)**
• **Hu, Yuqian**
  **College Park, MD (US)**

• **Regani, Sai Deepika**
  **College Park, MD (US)**
• **Ozturk, Muhammed Zahid**
  **University Park, MD (US)**
• **Zeng, Xiaolu**
  **Greenbelt, MD (US)**
• **Wang, Fengyu**
  **College Park, MD (US)**
• **Lee, Jeng-Feng**
  **Cambrigde, MA (US)**
• **Zan, Peng**
  **Gaithersburg, MD (US)**

(72) Inventors:
• **WU, Chenshu**
  **Hong Kong (HK)**
• **WANG, Beibei**
  **Clarksville, MD 21029 (US)**
• **AU, Oscar Chi-Lim**
  **San Jose, CA 95136 (US)**
• **LIU, K.J. Ray**
  **Potomac, MD 20854 (US)**
• **MAI, Chao-Lun**
  **Cambridge, Massachusetts (US)**
• **BUGOS, Dan**
  **Washington, District of Columbia (US)**
• **LAI, Hung-Quoc Duc**
  **Parkville, Maryland (US)**
• **MAID, Spencer**
  **Danvers (US)**
• **HU, Yuqian**
  **College Park (US)**
• **REGANI, Sai Deepika**
  **College Park 20740 (US)**
• **OZTURK, Muhammed Zahid**
  **University Park (US)**
• **ZENG, Xiaolu**
  **Greenbelz (US)**
• **WANG, Fengyu**
  **College Park (US)**

**(Cont. next page)**

EP 3 978 949 A2

- **LEE, Jeng-Feng**
  **Cambridge (US)**

(74) Representative: **Boult Wade Tennant LLP**
**Salisbury Square House**
**8 Salisbury Square**
**London EC4Y 8AP (GB)**

(54)   **SYSTEM AND METHOD FOR WIRELESS MOTION MONITORING**

(57)   Methods, apparatus and systems for wireless monitoring, movement tracking, human recognition, and sound sensing are described. In one example, a described system comprises: a transmitter configured for transmitting a first wireless signal through a wireless multipath channel of a venue; a receiver configured for receiving a second wireless signal through the wireless multipath channel; and a processor. The second wireless signal differs from the first wireless signal due to the wireless multipath channel and a motion of an object in the venue. The processor is configured for: obtaining a time series of channel information (TSCI) of the wireless multipath channel based on the second wireless signal; computing a spatial-temporal information (STI) based on the TSCI; monitoring the motion of the object based on the TSCI and the STI; performing a task based on the monitoring; and generating a response based on the task.

FIG. 30

## Description

### TECHNICAL FIELD

The present teaching generally relates to wireless monitoring, movement tracking, human recognition, and sound sensing. More specifically, the present teaching relates to: wirelessly monitoring motions for improving security by processing wireless channel information (CI); wireless monitoring based on antenna arrangement with a physical barrier to enlarge the coverage area; wirelessly monitoring a micro motion of an object by computing micro motion statistics based on wireless CI; tracking a location and trajectory of a moving object in a venue; human recognition based on one or more gait features detected wirelessly by processing wireless CI; and sound sensing based on radio signals by processing wireless CI.

### BACKGROUND

Object motion detection becomes more and more important nowadays. For example, for security and/or management purposes, a user may want to detect any object motion in the user's house; a manager of a supermarket may want to detect any object motion in the supermarket; and a nurse in a hospital may want to detect any motion of a patient in the hospital.

Existing systems and methods for detecting object motions cannot provide enough accuracy and often lead to false alarms. Existing approaches include those based on passive infrared (PIR), active infrared (AIR) and Ultrasonic. PIR sensors are the most widely used motion sensor in home security systems, which detect human motions by sensing the difference between background heat and the heat emitted by moving people. However, solutions based on PIR sensors are prone to false alarms due to its sensitivity to environmental changes, like hot/cold air flow and sunlight. These solutions are easily defeated by blocking the body heat emission, e.g. wearing a heat-insulating full-body suit. In addition, the solutions have limited detection ranges and need line-of-sight (LOS), and thus multiple devices are needed. In AIR based approaches, an infrared (IR) emitter sends a beam of IR which will be received by an IR receiver. When the beam is interrupted, a motion is detected. However, this kind of approaches can be easily seen as using a regular camera or any IR detection mechanism and also has limited range and thus need LOS. Ultrasonic sensors detect human motion by sending out ultrasonic sound waves into a space and measuring the speed at which they return, and motion can be detected if there are frequency changes. However, this kind of approaches can be defeated by wearing an anechoic suit. In addition, ultrasound cannot penetrate solid objects such as furniture or boxes and thus cause gaps in detection field. Furthermore, slow movements by a burglar may not trigger an alarm in an ultrasound-based detection system.

Motion measurements are essential inputs for a range of applications such as robot navigation, indoor tracking, and mobile gaming, etc., and have been widely used in robots, drones, automotive, unmanned vehicles, various consumer electronics, and pretty much anything that moves. The mainstream technology has been using Inertial Measurement Units (IMUs) for motion tracking. The rise in demand of accurate and robust motion tracking, coupled with an increase in smart device production, has been driving the IMU market. An improvement to motion measurements will profoundly impact a number of systems and applications.

Precise and robust motion measurement is non-trivial. Existing IMUs realized by sensors, e.g. accelerometers that measure linear acceleration, are well known to suffer from significant errors and drifts. For example, an accelerometer is hardly capable of measuring moving distance due to the noisy readings. Therefore, an existing method, to compute a moving distance by integrating acceleration to get speed and then integrating speed to get distance, is not reliable due to noise, which prevents many applications that require accurate motion processing, such as indoor tracking, virtual reality, and motion sensing games.

Ubiquitous human recognition acts as an essential element for a variety of applications in smart spaces, such as personalized environmental control, security management, access control for automatic doors and internet-of-things (IoT) devices, etc. Mainstream approaches rely on fingerprint identification, face recognition, voice authentication, etc., which usually require a user to actively cooperate within certain proximity. Radio biometric based on a unique way that a human body alters the multipath channel propagation has been proposed, which is, however, very sensitive to environmental changes and thus requires a lot of training and calibration.

Recently, human gait has been proposed as an effective biometric that is useful for more passive person identification, i.e., identification (at a distance) during normal walking without any other active actions. In order to enable ubiquitous and reliable application, a gait recognition system must be robust to environment changes and easy to use without requiring too much user cooperation and re-calibration, while maintaining high accuracy, which is often not satisfied in conventional approaches. Various gait recognition modalities have been considered in the literature, such as vision, acoustic sensing, wearable sensors, and pressure pads. Each of these approaches has some drawbacks with respect to the criteria above. For instance, the vision-based systems suffer from environmental changes and impose privacy concerns. Methods using inertial sensors require user cooperation and thus are not practical.

Sound sensing, as the most natural way of human communication, has also become a ubiquitous modality for human-machine-environment interactions. Many applications have emerged in the Internet of Things (IoT), including voice interfaces, sound events monitoring in smart homes and buildings, acoustic sensing for gestures and health, etc. For example, smart speakers can now understand user voices, control IoT devices, monitor the environment, and sense sounds of interest such as glass breaking or smoke detectors, all currently using microphones as the primary interface.

Although microphones have been the most commonly used sensors to sense acoustics events, they have certain limitations. As they can only sense the sound at the destination (i.e., the microphone's location), a single microphone cannot separate and identify multiple sound sources, whereas a microphone array can only separate in the azimuth direction and require large apertures. By sensing any sound arrived at the destination, microphones raise potential privacy concerns when deploying them as ubiquitous and continuous sound sensing interfaces in homes. In addition, microphones are prone to inaudible voice attacks and replay attacks, as they only sense the received sound but nothing about the source.

To overcome some of these limitations, various modalities have been exploited to sense sound signals, like accelerometer, vibration motor, cameras, etc. These systems either still sense the sound at the destination, thus having similar drawbacks as microphones, or require line-of-sight (LOS) and lighting conditions to operate. Consequently, these modalities are not entirely satisfactory.

Wireless monitoring using wireless channel state information (CSI) has received a lot of attention in the era of Internet of Things. The environmental changes and human activities affect the multipath propagation, which is embedded in the CSI variation, making it possible to monitor the environment by analyzing the wireless CSI. In existing systems, the transmit antennas and the receive antennas are in different devices to provide a reasonable coverage for the wireless monitoring. If the transmit antennas and the receive antennas are collocated in the same device, e.g., for reducing device cost, there is a strong and dominant line-of-sight (LOS) between the transmit antennas and the receive antennas. When there are environmental changes and human activities, their impact on the multipath propagation can be overwhelmed by the strong LOS. Then only those activities very close to the transmitter (TX) or the receiver (RX) may be detected with a small chance. As such, it is desirable to design a special arrangement of transmit and receive antennas to ensure a reasonable coverage area of wireless monitoring.

Object motion detection becomes more and more important nowadays. For example, for security and/or management purposes, a user may want to detect any object motion in the user's house; a manager of a supermarket may want to detect any object motion in the supermarket; and a nurse in a hospital may want to detect any motion of a patient in the hospital.

Existing systems and methods for detecting object motions cannot provide enough accuracy and often lead to false alarms. Existing approaches include those based on passive infrared (PIR), active infrared (AIR) and Ultrasonic. PIR sensors are the most widely used motion sensor in home security systems, which detect human motions by sensing the difference between background heat and the heat emitted by moving people. However, solutions based on PIR sensors are prone to false alarms due to its sensitivity to environmental changes, like hot/cold air flow and sunlight. These solutions are easily defeated by blocking the body heat emission, e.g. wearing a heat-insulating full-body suit. In addition, the solutions have limited detection ranges and need line-of-sight (LOS), and thus multiple devices are needed. In AIR based approaches, an infrared (IR) emitter sends a beam of IR which will be received by an IR receiver. When the beam is interrupted, a motion is detected. However, this kind of approaches can be easily seen as using a regular camera or any IR detection mechanism and also has limited range and thus need LOS. Ultrasonic sensors detect human motion by sending out ultrasonic sound waves into a space and measuring the speed at which they return, and motion can be detected if there are frequency changes. However, this kind of approaches can be defeated by wearing an anechoic suit. In addition, ultrasound cannot penetrate solid objects such as furniture or boxes and thus cause gaps in detection field. Furthermore, slow movements by a burglar may not trigger an alarm in an ultrasound-based detection system.

Thus, existing systems and methods for wireless monitoring, movement tracking, human recognition, and/or sound sensing are not entirely satisfactory.

## SUMMARY

The present teaching generally relates to wireless monitoring, movement tracking, human recognition, and sound sensing. More specifically, the present teaching relates to: wirelessly monitoring motions for improving security by processing wireless channel information (CI); wireless monitoring based on antenna arrangement with a physical barrier to enlarge the coverage area; wirelessly monitoring a micro motion of an object by computing micro motion statistics based on wireless CI; tracking a location and trajectory of a moving object in a venue; human recognition based on one or more gait features detected wirelessly by processing wireless CI; and sound sensing based on radio signals by processing wireless CI.

In one embodiment, a system for wireless motion monitoring is described. The system comprises: a transmitter configured for transmitting a first wireless signal through a wireless multipath channel of a venue; a receiver configured for receiving a second wireless signal through the wireless multipath channel; and a processor. The second wireless signal differs from the first wireless signal due to the wireless multipath channel and a motion of an object in the venue. The processor is configured for: obtaining a time series of channel information (TSCI) of the wireless multipath channel based on the second wireless signal; computing a spatial-temporal information (STI) based on the TSCI; monitoring the motion of the object based on the TSCI and the STI; performing a task based on the monitoring; and generating a response based on the task.

In another embodiment, a wireless device of a wireless monitoring system is described. The wireless device comprises: a processor; a memory communicatively coupled to the processor; and a receiver communicatively coupled to the processor. An additional wireless device of the wireless monitoring system is configured for transmitting a first wireless signal through a wireless multipath channel of a venue in accordance with a current operating mode. The receiver is configured for receiving a second wireless signal through the wireless multipath channel in accordance with the current operating mode. The second wireless signal differs from the first wireless signal due to the wireless multipath channel and a motion of an object in the venue. The processor is configured for: choosing the current operating mode from a plurality of supported operating modes associated with a task and the motion of the object; obtaining a time series of channel information (TSCI) of the wireless multipath channel based on the second wireless signal; computing a spatial-temporal information (STI) based on the TSCI; monitoring the motion of the object based on the TSCI and the STI; performing the task based on the monitoring; and generating a response based on the task.

In yet another embodiment, a method of a wireless monitoring system is described. The method comprises: transmitting a plurality of wireless signals asynchronously through a wireless multipath channel of a venue, wherein each wireless signal is transmitted from a respective one of a plurality of first devices in the wireless monitoring system; receiving the plurality of wireless signals by a plurality of second devices in the wireless monitoring system through the wireless multipath channel, wherein each received wireless signal differs from the respective transmitted wireless signal due to the wireless multipath channel and a motion of an object in the venue; obtaining each of a plurality of time series of channel information (TSCI) of the wireless multipath channel based on a respective received wireless signal; computing a plurality of spatial-temporal information (STI) each based on a respective TSCI; monitoring a first aspect of the motion of the object based on a first subset of the plurality of TSCI and a first subset the plurality of STI; monitoring a second aspect of the motion of the object based on a second subset of the plurality of TSCI and a second subset the plurality of STI; performing a first task based on monitoring the first aspect of the motion; performing a second task based on monitoring the second aspect of the motion; generating a first response based on the first task; and generating a second response based on the second task.

In one embodiment, a system for movement tracking is described. The system comprises: at least one sensor configured to generate at least one sensing information (SI); a memory; a processor communicatively coupled to the memory and the at least one sensor; and a set of instructions stored in the memory. The set of instructions, when executed by the processor, cause the processor to: obtain at least one time series of SI (TSSI) from the at least one sensor, analyze the at least one TSSI, track a movement of an object in a venue based on the at least one TSSI, compute an incremental distance associated with the movement of the object in a first incremental time period based on the at least one TSSI, compute a direction associated with the movement of the object in a second incremental time period based on the at least one TSSI, and compute a next location of the object at a next time based on at least one of: a current location of the object at a current time, a current orientation of the object at the current time, the incremental distance, the direction, or a map of the venue.

In another embodiment, a device of a movement tracking system is described. The device comprises: a processor; a memory communicatively coupled to the processor; and a sensor communicatively coupled to the processor. The sensor is configured to generate at least one sensing information (SI). The processor is configured to: obtain at least one time series of SI (TSSI) from the sensor, analyze the at least one TSSI, track a movement of an object in a venue based on the at least one TSSI, compute an incremental distance associated with the movement of the object in a first incremental time period based on the at least one TSSI, compute a direction associated with the movement of the object in a second incremental time period based on the at least one TSSI, and compute a next location of the object at a next time based on at least one of: a current location of the object at a current time, a current orientation of the object at the current time, the incremental distance, the direction, or a map of the venue.

In yet another embodiment, a method of a movement tracking system is described. The method comprises: generating at least one sensing information (SI); obtaining at least one time series of SI (TSSI); analyzing the at least one TSSI, tracking a movement of an object in a venue based on the at least one TSSI; computing an incremental distance associated with the movement of the object in a first incremental time period based on the at least one TSSI; computing a direction associated with the movement of the object in a second incremental time period based on the at least one TSSI; and computing a next location of the object at a next time based on at least one of: a current location of the object at a current time, a current orientation of the object at the current time, the incremental distance, the direction, or a map of the venue.

In one embodiment, a system for human recognition is described. The system comprises: a transmitter configured to transmit a first wireless signal through a wireless channel of a venue; a receiver configured to receive a second wireless signal through the wireless channel, wherein the second wireless signal comprises a reflection of the first wireless signal by at least one object in the venue; and a processor. The processor is configured for: obtaining a time series of channel information (CI) of the wireless channel based on the second wireless signal, determining a presence of a person moving in the venue based on the time series of CI (TSCI), extracting at least one gait feature of the person from the TSCI, and recognizing an identity of the person based on the at least one gait feature.

In another embodiment, a wireless device of a human recognition system is described. The wireless device comprises: a processor; a memory communicatively coupled to the processor; and a receiver communicatively coupled to the processor. An additional wireless device of the human recognition system is configured to transmit a first wireless signal through a wireless channel of a venue. The receiver is configured to receive a second wireless signal through the wireless channel. The second wireless signal comprises a reflection of the first wireless signal by at least one object in the venue. The processor is configured for: obtaining a time series of channel information (CI) of the wireless channel based on the second wireless signal, determining a presence of a person moving in the venue based on the time series of CI (TSCI), extracting at least one gait feature of the person from the TSCI, and recognizing an identity of the person based on the at least one gait feature.

In yet another embodiment, a method of a human recognition system is described. The method comprises: transmitting a first wireless signal through a wireless channel of a venue; receiving a second wireless signal through the wireless channel, wherein the second wireless signal comprises a reflection of the first wireless signal by at least one object in the venue; obtaining a time series of channel information (CI) of the wireless channel based on the second wireless signal; determining a presence of a person moving in the venue based on the time series of CI (TSCI); extracting at least one gait feature of the person from the TSCI; and recognizing an identity of the person based on the at least one gait feature.

In one embodiment, a system for sound sensing is described. The system comprises: a transmitter configured to transmit a first wireless signal through a wireless channel of a venue; a receiver configured to receive a second wireless signal through the wireless channel, wherein the second wireless signal comprises a reflection of the first wireless signal by at least one object in the venue; and a processor. The processor is configured for: obtaining a time series of channel information (CI) of the wireless channel based on the second wireless signal, determining a presence of a vibrating object in the venue based on the time series of CI (TSCI), extracting a sound signal from the TSCI, and reconstructing at least one speech based on the sound signal.

In another embodiment, a wireless device of a sound sensing system is described. The wireless device comprises: a processor; a memory communicatively coupled to the processor; and a receiver communicatively coupled to the processor. An additional wireless device of the sound sensing system is configured to transmit a first wireless signal through a wireless channel of a venue. The receiver is configured to receive a second wireless signal through the wireless channel. The second wireless signal comprises a reflection of the first wireless signal by at least one object in the venue. The processor is configured for: obtaining a time series of channel information (CI) of the wireless channel based on the second wireless signal, determining a presence of a vibrating object in the venue based on the time series of CI (TSCI), extracting a sound signal from the TSCI, and reconstructing at least one speech based on the sound signal.

In yet another embodiment, a method of a sound sensing system is described. The method comprises: transmitting a first wireless signal through a wireless channel of a venue; receiving a second wireless signal through the wireless channel, wherein the second wireless signal comprises a reflection of the first wireless signal by at least one object in the venue; obtaining a time series of channel information (CI) of the wireless channel based on the second wireless signal; determining a presence of a vibrating object in the venue based on the time series of CI (TSCI); extracting a sound signal from the TSCI, and reconstructing at least one speech based on the sound signal.

In one embodiment, a system for wireless motion monitoring is described. The system comprises: a transmitter configured for transmitting a first wireless signal through a wireless multipath channel of a venue; a receiver configured for receiving a second wireless signal through the wireless multipath channel; and a processor. The second wireless signal differs from the first wireless signal due to the wireless multipath channel and a motion of an object in the venue. The processor is configured for: obtaining a time series of channel information (TSCI) of the wireless multipath channel based on the second wireless signal, wherein each channel information (CI) of the TSCI comprises N1 CI components, wherein N1 is an integer greater than one; selecting N2 CI components from the N1 CI components based on a first analysis of the N1 CI components of the TSCI, wherein N2 is an integer less than or equal to N1; computing a micromotion (MM) statistics based on the N2 selected CI components of the TSCI and the first analysis; monitoring the motion of the object based on a second analysis of the MM statistics; performing a task based on the first analysis and the second analysis; and generating a response based on the task, the first analysis and the second analysis.

In another embodiment, a wireless device of a wireless monitoring system is described. The wireless device comprises: a processor; a memory communicatively coupled to the processor; and a receiver communicatively coupled to the processor. An additional wireless device of the wireless monitoring system is configured for transmitting a first wireless signal through a wireless multipath channel of a venue. The receiver is configured for receiving a second wireless signal through the wireless multipath channel. The second wireless signal differs from the first wireless signal due to the wireless multipath channel and a motion of an object in the venue. The processor is configured for: obtaining a time series of channel information (TSCI) of the wireless multipath channel based on the second wireless signal, wherein each channel information (CI) of the TSCI comprises N1 CI components, wherein N1 is an integer greater than one; selecting N2 CI components from the N1 CI components based on a first analysis of the N1 CI components of the TSCI, wherein N2 is an integer less than or equal to N1; computing a micro-motion (MM) statistics based on the N2 selected CI components of the TSCI and the first analysis; monitoring the motion of the object based on a second analysis of the MM statistics; performing a task based on the first analysis and the second analysis; and generating a response based on the task, the first analysis and the second analysis.

In yet another embodiment, a method of a wireless monitoring system is described. The method comprises: transmitting, from a first device in the wireless monitoring system, a first wireless signal through a wireless multipath channel of a venue; receiving, by a second device in the wireless monitoring system, a second wireless signal through the wireless multipath channel, wherein the second wireless signal differs from the first wireless signal due to the wireless multipath channel and a motion of an object in the venue; obtaining a time series of channel information (TSCI) of the wireless multipath channel based on the second wireless signal, wherein each channel information (CI) of the TSCI comprises N1 CI components, wherein N1 is an integer greater than one; selecting N2 CI components from the N1 CI components based on a first analysis of the N1 CI components of the TSCI, wherein N2 is an integer less than or equal to N1; computing a micro-motion (MM) statistics based on the N2 selected CI components of the TSCI and the first analysis; monitoring the motion of the object based on a second analysis of the MM statistics; performing a task based on the first analysis and the second analysis; and generating a response based on the task, the first analysis and the second analysis.

Other concepts relate to software for implementing the present teaching on wireless monitoring, movement tracking, human recognition, and sound sensing. Additional novel features will be set forth in part in the description which follows, and in part will become apparent to those skilled in the art upon examination of the following and the accompanying drawings or may be learned by production or operation of the examples. The novel features of the present teachings may be realized and attained by practice or use of various aspects of the methodologies, instrumentalities and combinations set forth in the detailed examples discussed below.

**BRIEF DESCRIPTION OF DRAWINGS**

The methods, systems, and/or devices described herein are further described in terms of exemplary embodiments. These exemplary embodiments are described in detail with reference to the drawings. These embodiments are non-limiting exemplary embodiments, in which like reference numerals represent similar structures throughout the several views of the drawings.

FIG. 1 illustrates an overall architecture of a movement tracking system, according to some embodiments of the present disclosure.

FIG. 2 illustrates a diagram showing operations performed by a movement tracking system using IMU, according to some embodiments of the present disclosure.

FIG. 3 illustrates a work flow for a sensor engine in a movement tracking system, according to some embodiments of the present disclosure.

FIG. 4 illustrates exemplary atomic events extracted by a sensor engine in a movement tracking system, according to some embodiments of the present disclosure.

FIG. 5 illustrates exemplary temporal constraints for extracted atomic events, according to some embodiments of the present disclosure.

FIG. 6 illustrates an example of a Finite State Machine (FSM) for step detection, according to some embodiments of the present disclosure.

FIG. 7 illustrates an example of a step on sensing information based on step detection, according to some embodiments of the present disclosure.

FIG. 8 illustrates a flow chart of an exemplary method for movement tracking, according to some embodiments of the present disclosure.

FIG. 9 illustrates an overview of a protocol of fine time measurement (FTM), according to some embodiments of the present disclosure.

FIG. 10 illustrates exemplary distance measurements when an initiating station (ISTA) starts to approach a response station (RSTA) from different directions and initial distances, according to some embodiments of the present disclosure.

FIG. 11 illustrates a flow chart of an exemplary method for driver arrival sensing based on fine time measurement (FTM), according to some embodiments of the present disclosure.

FIG. 12 illustrates key steps of a knee point detection for driver arrival sensing, according to some embodiments of the present disclosure.

FIG. 13 shows a table about accuracy of the arrival time estimation, according to some embodiments of the present disclosure.

FIG. 14 illustrates a diagram of an exemplary human recognition system based on gait cube data using millimeter wave (mmWave) radio, according to some embodiments of the present disclosure.

FIG. 15 illustrates a performance result of an exemplary human recognition system, according to some embodiments of the present disclosure.

FIG. 16 illustrates a flow chart of an exemplary method for human recognition based on gait cube feature using mmWave signal, according to some embodiments of the present disclosure.

FIG. 17 illustrates an exemplary implementation environment for a sound sensing system using millimeter wave (mmWave) radio, according to some embodiments of the present disclosure.

FIGS. 18A-18D illustrate different use cases of a sound sensing system, according to some embodiments of the present disclosure.

FIG. 19 illustrates a diagram showing operations performed by a sound sensing system based on mmWave radio signal, according to some embodiments of the present disclosure.

FIG. 20 illustrates a diagram of a structure of a neural network model, according to some embodiments of the present disclosure.

FIG. 21 illustrates a processing flow of data augmentation, training and evaluation of a neural network model, according to some embodiments of the present disclosure.

FIG. 22 illustrates a flow chart of an exemplary method for sound sensing using mmWave radio signal, according to some embodiments of the present disclosure.

FIG. 23 shows an exemplary network topology of four devices, according to some embodiments of the present teaching.

FIG. 24 shows an exemplary network topology of four devices, according to some embodiments of the present teaching.

FIG. 25 shows an exemplary network topology of three devices, according to some embodiments of the present teaching.

FIG. 26 shows exemplary flow chart and components of a Master Origin device, according to some embodiments of the present teaching.

FIG. 27 shows an exemplary network topology of six devices, according to some embodiments of the present teaching.

FIG. 28 shows an exemplary network topology of nine devices in the local area network, according to some embodiments of the present teaching.

FIG. 29 illustrates a flow chart of an exemplary method for analyzing and improving network topology, according to some embodiments of the present teaching.

FIG. 30 illustrates a flow chart of an exemplary method for wireless motion monitoring, according to some embodiments of the present disclosure.

FIG. 31 illustrates a method for wireless monitoring based on a physical barrier arranged between a transmitter and a receiver, according to some embodiments of the present disclosure.

FIG. 32 illustrates a method for wireless monitoring based on at least one directional antenna, according to some embodiments of the present disclosure.

FIG. 33 illustrates an exemplary device plugged in a wall-plug for fall detection, according to some embodiments of the present disclosure.

FIG. 34 illustrates a method for wireless monitoring based on a physical barrier arranged between a transmitter and a receiver, according to some embodiments of the present disclosure.

FIG. 35 illustrates examples for hardware configurations of a transmitter and a receiver in a wireless monitoring system, according to some embodiments of the present disclosure.

FIG. 36 illustrates examples of different aspects of transmitters and receivers in a wireless monitoring system, according to some embodiments of the present disclosure.

FIG. 37 illustrates an exemplary scenario where object motion is monitored, according to some embodiments of the present disclosure.

FIG. 38 illustrates an exemplary floor plan and placement of wireless devices for wireless monitoring, according to some embodiments of the present disclosure.

FIG. 39 illustrates an exemplary block diagram of a first wireless device of a wireless monitoring system, according to one embodiment of the present teaching.

FIG. 40 illustrates an exemplary block diagram of a second wireless device of a wireless monitoring system, according to one embodiment of the present teaching.

FIG. 41 illustrates a flow chart of an exemplary method for wireless micro motion monitoring, according to some embodiments of the present teaching.

## DETAILED DESCRIPTION

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

In one embodiment, the present teaching discloses a method, apparatus, device, system, and/or software (method/apparatus/device/system/software) of a wireless monitoring system. A time series of channel information (CI) of a wireless multipath channel (channel) may be obtained (e.g. dynamically) using a processor, a memory communicatively coupled with the processor and a set of instructions stored in the memory. The time series of CI (TSCI) may be extracted from a wireless signal (signal) transmitted between a Type 1 heterogeneous wireless device (e.g. wireless transmitter, TX) and a Type 2 heterogeneous wireless device (e.g. wireless receiver, RX) in a venue through the channel. The channel may be impacted by an expression (e.g. motion, movement, expression, and/or change in position/pose/shape/expression) of an object in the venue. A characteristics and/or a spatial-temporal information (STI, e.g. motion information) of the object and/or of the motion of the object may be monitored based on the TSCI. A task may be performed based on the characteristics and/or STI. A presentation associated with the task may be generated in a user-interface (UI) on a device of a user. The TSCI may be a wireless signal stream. The TSCI or each CI may be preprocessed. A device may be a station (STA). The symbol "A/B" means "A and/or B" in the present teaching.

The expression may comprise placement, placement of moveable parts, location, position, orientation, identifiable place, region, spatial coordinate, presentation, state, static expression, size, length, width, height, angle, scale, shape, curve, surface, area, volume, pose, posture, manifestation, body language, dynamic expression, motion, motion sequence, gesture, extension, contraction, distortion, deformation, body expression (e.g. head, face, eye, mouth, tongue, hair, voice, neck, limbs, arm, hand, leg, foot, muscle, moveable parts), surface expression (e.g. shape, texture, material, color, electromagnetic (EM) characteristics, visual pattern, wetness, reflectance, translucency, flexibility), material property (e.g. living tissue, hair, fabric, metal, wood, leather, plastic, artificial material, solid, liquid, gas, temperature), movement, activity, behavior, change of expression, and/or some combination.

The wireless signal may comprise: transmitted/received signal, EM radiation, RF signal/transmission, signal in licensed/unlicensed /ISM band, bandlimited signal, baseband signal, wireless/mobile/cellular communication signal, wireless/mobile/cellular network signal, mesh signal, light signal/communication, downlink/uplink signal, unicast/multicast/broadcast signal, standard (e.g. WLAN, WWAN, WPAN, WBAN, international, national, industry, defacto, IEEE, IEEE 802, 802.11/15/16, WiFi, 802.11n/ac/ax/be, 3G/4G/LTE/5G/6G/7G/8G, 3GPP, Bluetooth, BLE, Zigbee, RFID, UWB, WiMax) compliant signal, protocol signal, standard frame, beacon/pilot/probe/enquiry/acknowledgement/handshake/synchronization signal, management/control/data frame, management/control/data signal, standardized wireless/cellular communication protocol, reference signal, source signal, motion probe/detection/sensing signal, and/or series of signals. The wireless signal may comprise a line-of-sight (LOS), and/or a non-LOS component (or path/link). Each CI may be extracted/generated/computed/sensed at a layer (e.g. PHY/MAC layer in OSI model) of Type 2 device and may be obtained by an application (e.g. software, firmware, driver, app, wireless monitoring software/system).

The wireless multipath channel may comprise: a communication channel, analog frequency channel (e.g. with analog carrier frequency near 700/800/900MHz, 1.8/1.8/2.4/3/5/6/27/60 GHz), coded channel (e.g. in CDMA), and/or channel of a wireless network/system (e.g. WLAN, WiFi, mesh, LTE, 4G/5G, Bluetooth, Zigbee, UWB, RFID, microwave). It may comprise more than one channel. The channels may be consecutive (e.g. with adjacent/overlapping bands) or non-consecutive channels (e.g. non-overlapping WiFi channels, one at 2.4GHz and one at 5GHz).

The TSCI may be extracted from the wireless signal at a layer of the Type 2 device (e.g. a layer of OSI reference model, physical layer, data link layer, logical link control layer, media access control (MAC) layer, network layer, transport layer, session layer, presentation layer, application layer, TCP/IP layer, internet layer, link layer). The TSCI may be extracted from a derived signal (e.g. baseband signal, motion detection signal, motion sensing signal) derived from the wireless signal (e.g. RF signal). It may be (wireless) measurements sensed by the communication protocol (e.g. standardized protocol) using existing mechanism (e.g. wireless/cellular communication standard/network, 3G/LTE/4G/5G/6G/7G/8G, WiFi, IEEE 802.11/15/16). The derived signal may comprise a packet with at least one of: a preamble, a header and a payload (e.g. for data/control/management in wireless links/networks). The TSCI may be extracted from a probe signal (e.g. training sequence, STF, LTF, L-STF, L-LTF, L-SIG, HE-STF, HE-LTF, HE-SIG-A, HE-SIG-B, CEF) in the packet. A motion detection/sensing signal may be recognized/identified base on the probe signal.

The packet may be a standard-compliant protocol frame, management frame, control frame, data frame, sounding frame, excitation frame, illumination frame, null data frame, beacon frame, pilot frame, probe frame, request frame, response frame, association frame, reassociation frame, disassociation frame, authentication frame, action frame, report frame, poll frame, announcement frame, extension frame, enquiry frame, acknowledgement frame, RTS frame, CTS frame, QoS frame, CF-Poll frame, CF-Ack frame, block acknowledgement frame, reference frame, training frame, and/or synchronization frame.

The packet may comprise a control data and/or a motion detection probe. A data (e.g. ID/parameters/ characteristics/ settings/ control signal/command/instruction/ notification/ broadcasting-related information of the Type 1 device) may be obtained from the payload. The wireless signal may be transmitted by the Type 1 device. It may be received by the Type 2 device. A database (e.g. in local server, hub device, cloud server, storage network) may be used to store the TSCI, characteristics, STI, signatures, patterns, behaviors, trends, parameters, analytics, output responses, identification information, user information, device information, channel information, venue (e.g. map, environmental model, network, proximity devices/networks) information, task information, class/category information, presentation (e.g. UI) information, and/or other information.

The Type 1/Type 2 device may comprise at least one of: electronics, circuitry, transmitter (TX)/receiver (RX)/transceiver, RF interface, "Origin Satellite"/"Tracker Bot", unicast/multicast/broadcasting device, wireless source device, source/destination device, wireless node, hub device, target device, motion detection device, sensor device, remote/wireless sensor device, wireless communication device, wireless-enabled device, standard compliant device, and/or receiver. The Type 1 (or Type 2) device may be heterogeneous because, when there are more than one instances of Type 1 (or Type 2) device, they may have different circuitry, enclosure, structure, purpose, auxiliary functionality, chip/IC, processor, memory, software, firmware, network connectivity, antenna, brand, model, appearance, form, shape, color, material, and/or specification. The Type 1/Type 2 device may comprise: access point, router, mesh router, internet-of-things (IoT) device, wireless terminal, one or more radio/RF subsystem/wireless interface (e.g. 2.4GHz radio, 5GHz radio, front haul radio, backhaul radio), modem, RF front end, RF/radio chip or integrated circuit (IC).

At least one of: Type 1 device, Type 2 device, a link between them, the object, the characteristics, the STI, the monitoring of the motion, and the task may be associated with an identification (ID) such as UUID. The Type 1/Type 2/another device may obtain/store/retrieve/ access/preprocess/condition/process/analyze/monitor/apply the TSCI. The Type 1 and Type 2 devices may communicate network traffic in another channel (e.g. Ethernet, HDMI, USB, Bluetooth, BLE, WiFi, LTE, other network, the wireless multipath channel) in parallel to the wireless signal. The Type 2 device may passively observe/monitor/receive the wireless signal from the Type 1 device in the wireless multipath channel without establishing connection (e.g. association/authentication) with, or requesting service from, the Type 1 device.

The transmitter (i.e. Type 1 device) may function as (play role of) receiver (i.e. Type 2 device) temporarily, sporadically, continuously, repeatedly, interchangeably, alternately, simultaneously, concurrently, and/or contemporaneously; and vice versa. A device may function as Type 1 device (transmitter) and/or Type 2 device (receiver) temporarily, sporadically, continuously, repeatedly, simultaneously, concurrently, and/or contemporaneously. There may be multiple wireless nodes each being Type 1 (TX) and/or Type 2 (RX) device. A TSCI may be obtained between every two nodes when they exchange/communicate wireless signals. The characteristics and/or STI of the object may be monitored individually based on a TSCI, or jointly based on two or more (e.g. all) TSCI.

The motion of the object may be monitored actively (in that Type 1 device, Type 2 device, or both, are wearable of/associated with the object) and/or passively (in that both Type 1 and Type 2 devices are not wearable of/associated with the object). It may be passive because the object may not be associated with the Type 1 device and/or the Type 2 device. The object (e.g. user, an automated guided vehicle or AGV) may not need to carry/install any wearables/fixtures (i.e. the Type 1 device and the Type 2 device are not wearable/attached devices that the object needs to carry in order perform the task). It may be active because the object may be associated with either the Type 1 device and/or the Type 2 device. The object may carry (or installed) a wearable/a fixture (e.g. the Type 1 device, the Type 2 device, a device communicatively coupled with either the Type 1 device or the Type 2 device).

The presentation may be visual, audio, image, video, animation, graphical presentation, text, etc. A computation of the task may be performed by a processor (or logic unit) of the Type 1 device, a processor (or logic unit) of an IC of the Type 1 device, a processor (or logic unit) of the Type 2 device, a processor of an IC of the Type 2 device, a local server, a cloud server, a data analysis subsystem, a signal analysis subsystem, and/or another processor. The task may be performed with/without reference to a wireless fingerprint or a baseline (e.g. collected, processed, computed, transmitted and/or stored in a training phase/survey/current survey/previous survey/recent survey/initial wireless survey, a passive fingerprint), a training, a profile, a trained profile, a static profile, a survey, an initial wireless survey, an initial setup, an installation, a re-training, an updating and a reset.

The Type 1 device (TX device) may comprise at least one heterogeneous wireless transmitter. The Type 2 device (RX device) may comprise at least one heterogeneous wireless receiver. The Type 1 device and the Type 2 device may be collocated. The Type 1 device and the Type 2 device may be the same device. Any device may have a data processing unit/apparatus, a computing unit/system, a network unit/system, a processor (e.g. logic unit), a memory communicatively coupled with the processor, and a set of instructions stored in the memory to be executed by the processor. Some processors, memories and sets of instructions may be coordinated.

There may be multiple Type 1 devices interacting (e.g. communicating, exchange signal/control/notification/other data) with the same Type 2 device (or multiple Type 2 devices), and/or there may be multiple Type 2 devices interacting with the same Type 1 device. The multiple Type 1 devices/Type 2 devices may be synchronized and/or asynchronous, with same/different window width/size and/or time shift, same/different synchronized start time, synchronized end time, etc. Wireless signals sent by the multiple Type 1 devices may be sporadic, temporary, continuous, repeated, synchronous, simultaneous, concurrent, and/or contemporaneous. The multiple Type 1 devices/Type 2 devices may operate independently and/or collaboratively. A Type 1 and/or Type 2 device may have/comprise/be heterogeneous hardware circuitry (e.g. a heterogeneous chip or a heterogeneous IC capable of generating/receiving the wireless signal, extracting CI from received signal, or making the CI available). They may be communicatively coupled to same or different servers (e.g. cloud server, edge server, local server, hub device).

Operation of one device may be based on operation, state, internal state, storage, processor, memory output, physical location, computing resources, network of another device. Difference devices may communicate directly, and/or via another device/server/hub device/cloud server. The devices may be associated with one or more users, with associated settings. The settings may be chosen once, pre-programmed, and/or changed (e.g. adjusted, varied, modified)/varied over time. There may be additional steps in the method. The steps and/or the additional steps of the method may be performed in the order shown or in another order. Any steps may be performed in parallel, iterated, or otherwise repeated or performed in another manner. A user may be human, adult, older adult, man, woman, juvenile, child, baby, pet, animal, creature, machine, computer module/software, etc.

In the case of one or multiple Type 1 devices interacting with one or multiple Type 2 devices, any processing (e.g. time domain, frequency domain) may be different for different devices. The processing may be based on locations, orientation, direction, roles, user-related characteristics, settings, configurations, available resources, available bandwidth, network connection, hardware, software, processor, co-processor, memory, battery life, available power, antennas, antenna types, directional/unidirectional characteristics of the antenna, power setting, and/or other parameters/characteristics of the devices.

The wireless receiver (e.g. Type 2 device) may receive the signal and/or another signal from the wireless transmitter (e.g. Type 1 device). The wireless receiver may receive another signal from another wireless transmitter (e.g. a second Type 1 device). The wireless transmitter may transmit the signal and/or another signal to another wireless receiver (e.g. a second Type 2 device). The wireless transmitter, wireless receiver, another wireless receiver and/or another wireless transmitter may be moving with the object and/or another object. The another object may be tracked.

The Type 1 and/or Type 2 device may be capable of wirelessly coupling with at least two Type 2 and/or Type 1 devices. The Type 1 device may be caused/controlled to switch/establish wireless coupling (e.g. association, authentication) from the Type 2 device to a second Type 2 device at another location in the venue. Similarly, the Type 2 device may be caused/controlled to switch/establish wireless coupling from the Type 1 device to a second Type 1 device at yet another location in the venue. The switching may be controlled by a server (or a hub device), the processor, the Type 1 device, the Type 2 device, and/or another device. The radio used before and after switching may be different. A second wireless signal (second signal) may be caused to be transmitted between the Type 1 device and the second Type 2 device (or between the Type 2 device and the second Type 1 device) through the channel. A second TSCI of the channel extracted from the second signal may be obtained. The second signal may be the first signal. The characteristics, STI and/or another quantity of the object may be monitored based on the second TSCI. The Type 1 device and the Type 2 device may be the same. The characteristics, STI and/or another quantity with different time stamps may form a waveform. The waveform may be displayed in the presentation.

The wireless signal and/or another signal may have data embedded. The wireless signal may be a series of probe signals (e.g. a repeated transmission of probe signals, a re-use of one or more probe signals). The probe signals may change/vary over time. A probe signal may be a standard compliant signal, protocol signal, standardized wireless protocol signal, control signal, data signal, wireless communication network signal, cellular network signal, WiFi signal, LTE/5G/6G/7G signal, reference signal, beacon signal, motion detection signal, and/or motion sensing signal. A probe signal may be formatted according to a wireless network standard (e.g. WiFi), a cellular network standard (e.g. LTE/5G/6G), or another standard. A probe signal may comprise a packet with a header and a payload. A probe signal may have data embedded. The payload may comprise data. A probe signal may be replaced by a data signal. The probe signal may be embedded in a data signal. The wireless receiver, wireless transmitter, another wireless receiver and/or another wireless transmitter may be associated with at least one processor, memory communicatively coupled with respective processor, and/or respective set of instructions stored in the memory which when executed cause the processor to perform any and/or all steps needed to determine the STI (e.g. motion information), initial STI, initial time, direction, instantaneous location, instantaneous angle, and/or speed, of the object.

The processor, the memory and/or the set of instructions may be associated with the Type 1 device, one of the at least one Type 2 device, the object, a device associated with the object, another device associated with the venue, a cloud server, a hub device, and/or another server.

The Type 1 device may transmit the signal in a broadcasting manner to at least one Type 2 device(s) through the channel in the venue. The signal is transmitted without the Type 1 device establishing wireless connection (e.g. association, authentication) with any Type 2 device, and without any Type 2 device requesting services from the Type 1 device. The Type 1 device may transmit to a particular media access control (MAC) address common for more than one Type 2 devices. Each Type 2 device may adjust its MAC address to the particular MAC address. The particular MAC address may be associated with the venue. The association may be recorded in an association table of an Association Server (e.g. hub device). The venue may be identified by the Type 1 device, a Type 2 device and/or another device based on the particular MAC address, the series of probe signals, and/or the at least one TSCI extracted from the probe signals.

For example, a Type 2 device may be moved to a new location in the venue (e.g. from another venue). The Type 1 device may be newly set up in the venue such that the Type 1 and Type 2 devices are not aware of each other. During set up, the Type 1 device may be instructed/guided/caused/controlled (e.g. using dummy receiver, using hardware pin setting/connection, using stored setting, using local setting, using remote setting, using downloaded setting, using hub device, or using server) to send the series of probe signals to the particular MAC address. Upon power up, the Type 2 device may scan for probe signals according to a table of MAC addresses (e.g. stored in a designated source, server, hub device, cloud server) that may be used for broadcasting at different locations (e.g. different MAC address used for different venue such as house, office, enclosure, floor, multi-storey building, store, airport, mall, stadium, hall, station, subway, lot, area, zone, region, district, city, country, continent). When the Type 2 device detects the probe signals sent to the particular MAC address, the Type 2 device can use the table to identify the venue based on the MAC address.

A location of a Type 2 device in the venue may be computed based on the particular MAC address, the series of probe signals, and/or the at least one TSCI obtained by the Type 2 device from the probe signals. The computing may be performed by the Type 2 device.

The particular MAC address may be changed (e.g. adjusted, varied, modified) over time. It may be changed according to a time table, rule, policy, mode, condition, situation and/or change. The particular MAC address may be selected based on availability of the MAC address, a pre-selected list, collision pattern, traffic pattern, data traffic between the Type 1 device and another device, effective bandwidth, random selection, and/or a MAC address switching plan. The particular MAC address may be the MAC address of a second wireless device (e.g. a dummy receiver, or a receiver that serves as a dummy receiver).

The Type 1 device may transmit the probe signals in a channel selected from a set of channels. At least one CI of the selected channel may be obtained by a respective Type 2 device from the probe signal transmitted in the selected channel.

The selected channel may be changed (e.g. adjusted, varied, modified) over time. The change may be according to a time table, rule, policy, mode, condition, situation, and/or change. The selected channel may be selected based on availability of channels, random selection, a pre-selected list, co-channel interference, inter-channel interference, channel traffic pattern, data traffic between the Type 1 device and another device, effective bandwidth associated with channels, security criterion, channel switching plan, a criterion, a quality criterion, a signal quality condition, and/or consideration.

The particular MAC address and/or an information of the selected channel may be communicated between the Type 1 device and a server (e.g. hub device) through a network. The particular MAC address and/or the information of the selected channel may also be communicated between a Type 2 device and a server (e.g. hub device) through another network. The Type 2 device may communicate the particular MAC address and/or the information of the selected channel to another Type 2 device (e.g. via mesh network, Bluetooth, WiFi, NFC, ZigBee, etc.). The particular MAC address and/or selected channel may be chosen by a server (e.g. hub device). The particular MAC address and/or selected channel may be signaled in an announcement channel by the Type 1 device, the Type 2 device and/or a server (e.g. hub device). Before being communicated, any information may be pre-processed.

Wireless connection (e.g. association, authentication) between the Type 1 device and another wireless device may be established (e.g. using a signal handshake). The Type 1 device may send a first handshake signal (e.g. sounding frame, probe signal, request-to-send RTS) to the another device. The another device may reply by sending a second handshake signal (e.g. a command, or a clear-to-send CTS) to the Type 1 device, triggering the Type 1 device to transmit the signal (e.g. series of probe signals) in the broadcasting manner to multiple Type 2 devices without establishing connection with any Type 2 device. The second handshake signals may be a response or an acknowledge (e.g. ACK) to the first handshake signal. The second handshake signal may contain a data with information of the venue, and/or the Type 1 device. The another device may be a dummy device with a purpose (e.g. primary purpose, secondary purpose) to establish the wireless connection with the Type 1 device, to receive the first signal, and/or to send the second signal. The another device may be physically attached to the Type 1 device.

In another example, the another device may send a third handshake signal to the Type 1 device triggering the Type 1 device to broadcast the signal (e.g. series of probe signals) to multiple Type 2 devices without establishing connection (e.g. association, authentication) with any Type 2 device. The Type 1 device may reply to the third special signal by transmitting a fourth handshake signal to the another device. The another device may be used to trigger more than one Type 1 devices to broadcast. The triggering may be sequential, partially sequential, partially parallel, or fully parallel. The another device may have more than one wireless circuitries to trigger multiple transmitters in parallel. Parallel trigger may also be achieved using at least one yet another device to perform the triggering (similar to what as the another device does) in parallel to the another device. The another device may not communicate (or suspend communication) with the Type 1 device after establishing connection with the Type 1 device. Suspended communication may be resumed. The another device may enter an inactive mode, hibernation mode, sleep mode, stand-by mode, low-power mode, OFF mode and/or power-down mode, after establishing the connection with the Type 1 device. The another device may have the particular MAC address so that the Type 1 device sends the signal to the particular MAC address. The Type 1 device and/or the another device may be controlled and/or coordinated by a first processor associated with the Type 1 device, a second processor associated with the another device, a third processor associated with a designated source and/or a fourth processor associated with another device. The first and second processors may coordinate with each other.

A first series of probe signals may be transmitted by a first antenna of the Type 1 device to at least one first Type 2 device through a first channel in a first venue. A second series of probe signals may be transmitted by a second antenna of the Type 1 device to at least one second Type 2 device through a second channel in a second venue. The first series and the second series may/may not be different. The at least one first Type 2 device may/may not be different from the at least one second Type 2 device. The first and/or second series of probe signals may be broadcasted without connection (e.g. association, authentication) established between the Type 1 device and any Type 2 device. The first and second antennas may be same/different.

The two venues may have different sizes, shape, multipath characteristics. The first and second venues may overlap. The respective immediate areas around the first and second antennas may overlap. The first and second channels may be same/different. For example, the first one may be WiFi while the second may be LTE. Or, both may be WiFi, but the first one may be 2.4GHz WiFi and the second may be 5GHz WiFi. Or, both may be 2.4GHz WiFi, but have different channel numbers, SSID names, and/or WiFi settings.

Each Type 2 device may obtain at least one TSCI from the respective series of probe signals, the CI being of the respective channel between the Type 2 device and the Type 1 device. Some first Type 2 device(s) and some second Type 2 device(s) may be the same. The first and second series of probe signals may be synchronous/asynchronous. A probe signal may be transmitted with data or replaced by a data signal. The first and second antennas may be the same.

The first series of probe signals may be transmitted at a first rate (e.g. 30Hz). The second series of probe signals may be transmitted at a second rate (e.g. 200Hz). The first and second rates may be same/different. The first and/or second rate may be changed (e.g. adjusted, varied, modified) over time. The change may be according to a time table, rule, policy, mode, condition, situation, and/or change. Any rate may be changed (e.g. adjusted, varied, modified) over time.

The first and/or second series of probe signals may be transmitted to a first MAC address and/or second MAC address respectively. The two MAC addresses may be same/different. The first series of probe signals may be transmitted in a first channel. The second series of probe signals may be transmitted in a second channel. The two channels may be same/different. The first or second MAC address, first or second channel may be changed over time. Any change may be according to a time table, rule, policy, mode, condition, situation, and/or change.

The Type 1 device and another device may be controlled and/or coordinated, physically attached, or may be of/in/of a common device. They may be controlled by/connected to a common data processor, or may be connected to a common bus interconnect/ network/ LAN/ Bluetooth network/ NFC network/ BLE network/ wired network/ wireless network/ mesh network/ mobile network/ cloud. They may share a common memory, or be associated with a common user, user device, profile, account, identity (ID), identifier, household, house, physical address, location, geographic coordinate, IP subnet, SSID, home device, office device, and/or manufacturing device.

Each Type 1 device may be a signal source of a set of respective Type 2 devices (i.e. it sends a respective signal (e.g. respective series of probe signals) to the set of respective Type 2 devices). Each respective Type 2 device chooses the Type 1 device from among all Type 1 devices as its signal source. Each Type 2 device may choose asynchronously. At least one TSCI may be obtained by each respective Type 2 device from the respective series of probe signals from the Type 1 device, the CI being of the channel between the Type 2 device and the Type 1 device.

The respective Type 2 device chooses the Type 1 device from among all Type 1 devices as its signal source based on identity (ID) or identifier of Type 1/Type 2 device, task to be performed, past signal source, history (e.g. of past signal source, Type 1 device, another Type 1 device, respective Type 2 receiver, and/or another Type 2 receiver), threshold for switching signal source, and/or information of a user, account, access info, parameter, characteristics, and/or signal strength (e.g. associated with the Type 1 device and/or the respective Type 2 receiver).

Initially, the Type 1 device may be signal source of a set of initial respective Type 2 devices (i.e. the Type 1 device sends a respective signal (series of probe signals) to the set of initial respective Type 2 devices) at an initial time. Each initial respective Type 2 device chooses the Type 1 device from among all Type 1 devices as its signal source.

The signal source (Type 1 device) of a particular Type 2 device may be changed (e.g. adjusted, varied, modified) when (1) time interval between two adjacent probe signals (e.g. between current probe signal and immediate past probe signal, or between next probe signal and current probe signal) received from current signal source of the Type 2 device exceeds a first threshold; (2) signal strength associated with current signal source of the Type 2 device is below a second threshold; (3) a processed signal strength associated with current signal source of the Type 2 device is below a third threshold, the signal strength processed with low pass filter, band pass filter, median filter, moving average filter, weighted averaging filter, linear filter and/or non-linear filter; and/or (4) signal strength (or processed signal strength) associated with current signal source of the Type 2 device is below a fourth threshold for a significant percentage of a recent time window (e.g. 70%, 80%, 90%). The percentage may exceed a fifth threshold. The first, second, third, fourth and/or fifth thresholds may be time varying.

Condition (1) may occur when the Type 1 device and the Type 2 device become progressively far away from each other, such that some probe signal from the Type 1 device becomes too weak and is not received by the Type 2 device. Conditions (2)-(4) may occur when the two devices become far from each other such that the signal strength becomes very weak.

The signal source of the Type 2 device may not change if other Type 1 devices have signal strength weaker than a factor (e.g. 1, 1.1, 1.2, or 1.5) of the current signal source.

If the signal source is changed (e.g. adjusted, varied, modified), the new signal source may take effect at a near future time (e.g. the respective next time). The new signal source may be the Type 1 device with strongest signal strength, and/or processed signal strength. The current and new signal source may be same/different.

A list of available Type 1 devices may be initialized and maintained by each Type 2 device. The list may be updated by examining signal strength and/or processed signal strength associated with the respective set of Type 1 devices. A Type 2 device may choose between a first series of probe signals from a first Type 1 device and a second series of probe signals from a second Type 1 device based on: respective probe signal rate, MAC addresses, channels, characteristics/properties/ states, task to be performed by the Type 2 device, signal strength of first and second series, and/or another consideration.

The series of probe signals may be transmitted at a regular rate (e.g. 100 Hz). The series of probe signals may be scheduled at a regular interval (e.g. 0.01s for 100 Hz), but each probe signal may experience small time perturbation, perhaps due to timing requirement, timing control, network control, handshaking, message passing, collision avoidance, carrier sensing, congestion, availability of resources, and/or another consideration.

The rate may be changed (e.g. adjusted, varied, modified). The change may be according to a time table (e.g. changed once every hour), rule, policy, mode, condition and/or change (e.g. changed whenever some event occur). For example, the rate may normally be 100Hz, but changed to 1000Hz in demanding situations, and to 1Hz in low power/standby situation. The probe signals may be sent in burst.

The probe signal rate may change based on a task performed by the Type 1 device or Type 2 device (e.g. a task may need 100 Hz normally and 1000 Hz momentarily for 20 seconds). In one example, the transmitters (Type 1 devices), receivers (Type 2 device), and associated tasks may be associated adaptively (and/or dynamically) to classes (e.g. classes that are: low-priority, high-priority, emergency, critical, regular, privileged, non-subscription, subscription, paying, and/or non-paying). A rate (of a transmitter) may be adjusted for the sake of some class (e.g. high priority class). When the need of that class changes, the rate may be changed (e.g. adjusted, varied, modified). When a receiver has critically low power, the rate may be reduced to reduce power consumption of the receiver to respond to the probe signals. In one example, probe signals may be used to transfer power wirelessly to a receiver (Type 2 device), and the rate may be adjusted to control the amount of power transferred to the receiver.

The rate may be changed by (or based on): a server (e.g. hub device), the Type 1 device and/or the Type 2 device. Control signals may be communicated between them. The server may monitor, track, forecast and/or anticipate the needs of the Type 2 device and/or the tasks performed by the Type 2 device, and may control the Type 1 device to change the rate. The server may make scheduled changes to the rate according to a time table. The server may detect an emergency situation and change the rate immediately. The server may detect a developing condition and adjust the rate gradually.

The characteristics and/or STI (e.g. motion information) may be monitored individually based on a TSCI associated with a particular Type 1 device and a particular Type 2 device, and/or monitored jointly based on any TSCI associated with the particular Type 1 device and any Type 2 device, and/or monitored jointly based on any TSCI associated with the particular Type 2 device and any Type 1 device, and/or monitored globally based on any TSCI associated with any Type 1 device and any Type 2 device. Any joint monitoring may be associated with: a user, user account, profile, household, map of venue, environmental model of the venue, and/or user history, etc.

A first channel between a Type 1 device and a Type 2 device may be different from a second channel between another Type 1 device and another Type 2 device. The two channels may be associated with different frequency bands, bandwidth, carrier frequency, modulation, wireless standards, coding, encryption, payload characteristics, networks, network ID, SSID, network characteristics, network settings, and/or network parameters, etc.

The two channels may be associated with different kinds of wireless system (e.g. two of the following: WiFi, LTE, LTE-A, LTE-U, 2.5G, 3G, 3.5G, 4G, beyond 4G, 5G, 6G, 7G, a cellular network standard, UMTS, 3GPP, GSM, EDGE, TDMA, FDMA, CDMA, WCDMA, TD-SCDMA, 802.11 system, 802.15 system, 802.16 system, mesh network, Zigbee, NFC, WiMax, Bluetooth, BLE, RFID, UWB, microwave system, radar like system). For example, one is WiFi and the other is LTE.

The two channels may be associated with similar kinds of wireless system, but in different network. For example, the first channel may be associated with a WiFi network named "Pizza and Pizza" in the 2.4GHz band with a bandwidth of 20MHz while the second may be associated with a WiFi network with SSID of "StarBud hotspot" in the 5GHz band with a bandwidth of 40MHz. The two channels may be different channels in same network (e.g. the "StarBud hotspot" network).

In one embodiment, a wireless monitoring system may comprise training a classifier of multiple events in a venue based on training TSCI associated with the multiple events. A CI or TSCI associated with an event may be considered/may comprise a wireless sample/characteristics/fingerprint associated with the event (and/or the venue, the environment, the object, the motion of the object, a state/ emotional state/ mental state/ condition/ stage/ gesture/ gait/ action/ movement/ activity/ daily activity/ history/ event of the object, etc.).

For each of the multiple known events happening in the venue in a respective training (e.g. surveying, wireless survey, initial wireless survey) time period associated with the known event, a respective training wireless signal (e.g. a respective series of training probe signals) may be transmitted by an antenna of a first Type 1 heterogeneous wireless device using a processor, a memory and a set of instructions of the first Type 1 device to at least one first Type 2 heterogeneous wireless device through a wireless multipath channel in the venue in the respective training time period.

At least one respective time series of training CI (training TSCI) may be obtained asynchronously by each of the at least one first Type 2 device from the (respective) training signal. The CI may be CI of the channel between the first Type 2 device and the first Type 1 device in the training time period associated with the known event. The at least one training TSCI may be preprocessed. The training may be a wireless survey (e.g. during installation of Type 1 device and/or Type 2 device).

For a current event happening in the venue in a current time period, a current wireless signal (e.g. a series of current probe signals) may be transmitted by an antenna of a second Type 1 heterogeneous wireless device using a processor, a memory and a set of instructions of the second Type 1 device to at least one second Type 2 heterogeneous wireless device through the channel in the venue in the current time period associated with the current event.

At least one time series of current CI (current TSCI) may be obtained asynchronously by each of the at least one second Type 2 device from the current signal (e.g. the series of current probe signals). The CI may be CI of the channel between the second Type 2 device and the second Type 1 device in the current time period associated with the current event. The at least one current TSCI may be preprocessed.

The classifier may be applied to classify at least one current TSCI obtained from the series of current probe signals by the at least one second Type 2 device, to classify at least one portion of a particular current TSCI, and/or to classify a combination of the at least one portion of the particular current TSCI and another portion of another TSCI. The classifier may partition TSCI (or the characteristics/STI or other analytics or output responses) into clusters and associate the clusters to specific events/ objects/ subjects/ locations/ movements/ activities. Labels/tags may be generated for the clusters. The clusters may be stored and retrieved. The classifier may be applied to associate the current TSCI (or characteristics/STI or the other analytics/output response, perhaps associated with a current event) with: a cluster, a known/specific event, a class/ category/ group/ grouping/ list/ cluster/ set of known events/subjects/locations/movements/activities, an unknown event, a class/ category/ group/ grouping/ list/ cluster/ set of unknown events/subjects/locations/movements/activities, and/or another event/subject/location/movement/activity/ class/ category/ group/ grouping/ list/ cluster/ set. Each TSCI may comprise at least one CI each associated with a respective timestamp. Two TSCI associated with two Type 2 devices may be different with different: starting time, duration, stopping time, amount of CI, sampling frequency, sampling period. Their CI may have different features. The first and second Type 1 devices may be at same location in the venue. They may be the same device. The at least one second Type 2 device (or their locations) may be a permutation of the at least one first Type 2 device (or their locations). A particular second Type 2 device and a particular first Type 2 device may be the same device.

A subset of the first Type 2 device and a subset of the second Type 2 device may be the same. The at least one second Type 2 device and/or a subset of the at least one second Type 2 device may be a subset of the at least one first Type 2 device. The at least one first Type 2 device and/or a subset of the at least one first Type 2 device may be a permutation of a subset of the at least one second Type 2 device. The at least one second Type 2 device and/or a subset of the at least one second Type 2 device may be a permutation of a subset of the at least one first Type 2 device. The at least one second Type 2 device and/or a subset of the at least one second Type 2 device may be at same respective location as a subset of the at least one first Type 2 device. The at least one first Type 2 device and/or a subset of the at least one first Type 2 device may be at same respective location as a subset of the at least one second Type 2 device.

The antenna of the Type 1 device and the antenna of the second Type 1 device may be at same location in the venue. Antenna(s) of the at least one second Type 2 device and/or antenna(s) of a subset of the at least one second Type 2 device may be at same respective location as respective antenna(s) of a subset of the at least one first Type 2 device. Antenna(s) of the at least one first Type 2 device and/or antenna(s) of a subset of the at least one first Type 2 device may be at same respective location(s) as respective antenna(s) of a subset of the at least one second Type 2 device.

A first section of a first time duration of the first TSCI and a second section of a second time duration of the second section of the second TSCI may be aligned. A map between items of the first section and items of the second section may be computed. The first section may comprise a first segment (e.g. subset) of the first TSCI with a first starting /ending time, and/or another segment (e.g. subset) of a processed first TSCI. The processed first TSCI may be the first TSCI processed by a first operation. The second section may comprise a second segment (e.g. subset) of the second TSCI with a second starting time and a second ending time, and another segment (e.g. subset) of a processed second TSCI. The processed second TSCI may be the second TSCI processed by a second operation. The first operation and/or the second operation may comprise: subsampling, re-sampling, interpolation, filtering, transformation, feature extraction, pre-processing, and/or another operation.

A first item of the first section may be mapped to a second item of the second section. The first item of the first section may also be mapped to another item of the second section. Another item of the first section may also be mapped to the second item of the second section. The mapping may be one-to-one, one-to-many, many-to-one, many-to-many. At least one function of at least one of: the first item of the first section of the first TSCI, another item of the first TSCI, timestamp of the first item, time difference of the first item, time differential of the first item, neighboring timestamp of the first item, another timestamp associated with the first item, the second item of the second section of the second TSCI, another item of the second TSCI, timestamp of the second item, time difference of the second item, time differential of the second item, neighboring timestamp of the second item, and another timestamp associated with the second item, may satisfy at least one constraint.

One constraint may be that a difference between the timestamp of the first item and the timestamp of the second item may be upper-bounded by an adaptive (and/or dynamically adjusted) upper threshold and lower-bounded by an adaptive lower threshold.

The first section may be the entire first TSCI. The second section may be the entire second TSCI. The first time duration may be equal to the second time duration. A section of a time duration of a TSCI may be determined adaptively (and/or dynamically). A tentative section of the TSCI may be computed. A starting time and an ending time of a section (e.g. the tentative section, the section) may be determined. The section may be determined by removing a beginning portion and an ending portion of the tentative section. A beginning portion of a tentative section may be determined as follows. Iteratively, items of the tentative section with increasing timestamp may be considered as a current item, one item at a time.

In each iteration, at least one activity measure/index may be computed and/or considered. The at least one activity measure may be associated with at least one of: the current item associated with a current timestamp, past items of the tentative section with timestamps not larger than the current timestamp, and/or future items of the tentative section with timestamps not smaller than the current timestamp. The current item may be added to the beginning portion of the tentative section if at least one criterion (e.g. quality criterion, signal quality condition) associated with the at least one activity measure is satisfied.

The at least one criterion associated with the activity measure may comprise at least one of: (a) the activity measure is smaller than an adaptive (e.g. dynamically adjusted) upper threshold, (b) the activity measure is larger than an adaptive lower threshold, (c) the activity measure is smaller than an adaptive upper threshold consecutively for at least a predetermined amount of consecutive timestamps, (d) the activity measure is larger than an adaptive lower threshold consecutively for at least another predetermined amount of consecutive timestamps, (e) the activity measure is smaller than an adaptive upper threshold consecutively for at least a predetermined percentage of the predetermined amount of consecutive timestamps, (f) the activity measure is larger than an adaptive lower threshold consecutively for at least another predetermined percentage of the another predetermined amount of consecutive timestamps, (g) another activity measure associated with another timestamp associated with the current timestamp is smaller than another adaptive upper threshold and larger than another adaptive lower threshold, (h) at least one activity measure associated with at least one respective timestamp associated with the current timestamp is smaller than respective upper threshold and larger than respective lower threshold, (i) percentage of timestamps with associated activity measure smaller than respective upper threshold and larger than respective lower threshold in a set of timestamps associated with the current timestamp exceeds a threshold, and (j) another criterion (e.g. a quality criterion, signal quality condition).

An activity measure/index associated with an item at time T1 may comprise at least one of: (1) a first function of the item at time T1 and an item at time T1-D1, wherein D1 is a pre-determined positive quantity (e.g. a constant time offset), (2) a second function of the item at time T1 and an item at time T1+D1, (3) a third function of the item at time T1 and an item at time T2, wherein T2 is a pre-determined quantity (e.g. a fixed initial reference time; T2 may be changed (e.g. adjusted, varied, modified) over time; T2 may be updated periodically; T2 may be the beginning of a time period and T1 may be a sliding time in the time period), and (4) a fourth function of the item at time T1 and another item.

At least one of: the first function, the second function, the third function, and/or the fourth function may be a function (e.g. F(X, Y, ...)) with at least two arguments: X and Y. The two arguments may be scalars. The function (e.g. F) may be a function of at least one of: X, Y, (X-Y), (Y-X), abs(X-Y), X^a, Y^b, abs(X^a - Y^b), (X-Y)^a, (X/Y), (X+a)/(Y+b), (X^a/Y^b), and ((X/Y)^a-b), wherein a and b are may be some predetermined quantities. For example, the function may simply be abs(X-Y), or (X-Y)^2, (X-Y)^4. The function may be a robust function. For example, the function may be (X-Y)^2 when abs (X-Y) is less than a threshold T, and (X-Y)+a when abs(X-Y) is larger than T. Alternatively, the function may be a constant when abs(X-Y) is larger than T. The function may also be bounded by a slowly increasing function when abs(X-y) is larger than T, so that outliers cannot severely affect the result. Another example of the function may be (abs(X/Y)-a), where a=1. In this way, if X=Y (i.e. no change or no activity), the function will give a value of 0. If X is larger than Y, (X/Y) will be larger than 1 (assuming X and Y are positive) and the function will be positive. And if X is less than Y, (X/Y) will be smaller than 1 and the function will be negative. In another example, both arguments X and Y may be n-tuples such that X=(x_1, x_2, ..., x_n) and Y=(y_1, y_2, ..., y_n). The function may be a function of at least one of: x_i, y_i, (x_i - y_i), (y_i- x_i), abs(x_i - y_i), x_i^a, y_i ^b, abs(x_i ^a - y_i ^b), (x_i - y_i)^a, (x_i/y_i), (x_i+a)/(y_i +b), (x_i ^a/ y_i ^b), and ((x_i / y_i)^a-b), wherein i is a component index of the n-tuple X and Y, and 1 <=i<=n, e.g. component index of x_1 is i=1, component index of x_2 is i=2. The function may comprise a component-by-component summation of another function of at least one of the following: x_i, y_i, (x_i - y_i), (y_i- x_i), abs(x_i - y_i), x_i ^a, y_i ^b, abs(x_i ^a - y_i ^b), (x_i - y_i)^a, (x_i/y_i), (x_i+a)/(y_i +b), (x_i ^a/ y_i ^b), and ((x_i / y_i)^a-b), wherein i is the component index of the n-tuple X and Y. For example, the function may be in a form of sum_{i=1}^n (abs(x_i/y_i)-1)/n, or sum_{i=1}^n w_i*(abs(x_i/y_i)-1), where w_i is some weight for component i.

The map may be computed using dynamic time warping (DTW). The DTW may comprise a constraint on at least one of: the map, the items of the first TSCI, the items of the second TSCI, the first time duration, the second time duration, the first section, and/or the second section. Suppose in the map, the i^{th} domain item is mapped to the j^{th} range item. The constraint may be on admissible combination of i and j (constraint on relationship between i and j). Mismatch cost between a first section of a first time duration of a first TSCI and a second section of a second time duration of a second TSCI may be computed.

The first section and the second section may be aligned such that a map comprising more than one links may be established between first items of the first TSCI and second items of the second TSCI. With each link, one of the first items with a first timestamp may be associated with one of the second items with a second timestamp. A mismatch cost between the aligned first section and the aligned second section may be computed. The mismatch cost may comprise a function of: an item-wise cost between a first item and a second item associated by a particular link of the map, and a link-wise cost associated with the particular link of the map.

The aligned first section and the aligned second section may be represented respectively as a first vector and a second vector of same vector length. The mismatch cost may comprise at least one of: an inner product, inner-product-like quantity, quantity based on correlation, correlation indicator, quantity based on covariance, discriminating score, distance, Euclidean distance, absolute distance, Lk distance (e.g. LI, L2, ... ), weighted distance, distance-like quantity and/or another similarity value, between the first vector and the second vector. The mismatch cost may be normalized by the respective vector length.

A parameter derived from the mismatch cost between the first section of the first time duration of the first TSCI and the second section of the second time duration of the second TSCI may be modeled with a statistical distribution. At least one of: a scale parameter, location parameter and/or another parameter, of the statistical distribution may be estimated.

The first section of the first time duration of the first TSCI may be a sliding section of the first TSCI. The second section of the second time duration of the second TSCI may be a sliding section of the second TSCI.

A first sliding window may be applied to the first TSCI and a corresponding second sliding window may be applied to the second TSCI. The first sliding window of the first TSCI and the corresponding second sliding window of the second TSCI may be aligned.

Mismatch cost between the aligned first sliding window of the first TSCI and the corresponding aligned second sliding window of the second TSCI may be computed. The current event may be associated with at least one of: the known event, the unknown event and/or the another event, based on the mismatch cost.

The classifier may be applied to at least one of: each first section of the first time duration of the first TSCI, and/or each second section of the second time duration of the second TSCI, to obtain at least one tentative classification results. Each tentative classification result may be associated with a respective first section and a respective second section.

The current event may be associated with at least one of: the known event, the unknown event, a class/category/ group/ grouping/list/ set of unknown events, and/or the another event, based on the mismatch cost. The current event may be associated with at least one of: the known event, the unknown event and/or the another event, based on a largest number of tentative classification results in more than one sections of the first TSCI and corresponding more than sections of the second TSCI. For example, the current event may be associated with a particular known event if the mismatch cost points to the particular known event for N consecutive times (e.g. N=10). In another example, the current event may be associated with a particular known event if the percentage of mismatch cost within the immediate past N consecutive N pointing to the particular known event exceeds a certain threshold (e.g. >80%).

In another example, the current event may be associated with a known event that achieves smallest mismatch cost for the most times within a time period. The current event may be associated with a known event that achieves smallest overall mismatch cost, which is a weighted average of at least one mismatch cost associated with the at least one first sections. The current event may be associated with a particular known event that achieves smallest of another overall cost. The current event may be associated with the "unknown event" if none of the known events achieve mismatch cost lower than a first threshold T1 in a sufficient percentage of the at least one first section. The current event may also be associated with the "unknown event" if none of the events achieve an overall mismatch cost lower than a second threshold T2. The current event may be associated with at least one of: the known event, the unknown event and/or the another event, based on the mismatch cost and additional mismatch cost associated with at least one additional section of the first TSCI and at least one additional section of the second TSCI. The known events may comprise at least one of: a door closed event, door open event, window closed event, window open event, multi-state event, on-state event, off-state event, intermediate state event, continuous state event, discrete state event, human-present event, human-absent event, sign-of-life-present event, and/or a sign-of-life-absent event.

A projection for each CI may be trained using a dimension reduction method based on the training TSCI. The dimension reduction method may comprise at least one of: principal component analysis (PCA), PCA with different kernel, independent component analysis (ICA), Fisher linear discriminant, vector quantization, supervised learning, unsupervised learning, self-organizing maps, auto-encoder, neural network, deep neural network, and/or another method. The projection may be applied to at least one of: the training TSCI associated with the at least one event, and/or the current TSCI, for the classifier.

The classifier of the at least one event may be trained based on the projection and the training TSCI associated with the at least one event. The at least one current TSCI may be classified/categorized based on the projection and the current TSCI. The projection may be re-trained using at least one of: the dimension reduction method, and another dimension reduction method, based on at least one of: the training TSCI, at least one current TSCI before retraining the projection, and/or additional training TSCI. The another dimension reduction method may comprise at least one of: principal component analysis (PCA), PCA with different kernels, independent component analysis (ICA), Fisher linear discriminant, vector quantization, supervised learning, unsupervised learning, self-organizing maps, auto-encoder, neural network, deep neural network, and/or yet another method. The classifier of the at least one event may be re-trained based on at least one of: the re-trained projection, the training TSCI associated with the at least one events, and/or at least one current TSCI. The at least one current TSCI may be classified based on: the re-trained projection, the re-trained classifier, and/or the current TSCI.

Each CI may comprise a vector of complex values. Each complex value may be preprocessed to give the magnitude of the complex value. Each CI may be preprocessed to give a vector of non-negative real numbers comprising the magnitude of corresponding complex values. Each training TSCI may be weighted in the training of the projection. The projection may comprise more than one projected components. The projection may comprise at least one most significant projected component. The projection may comprise at least one projected component that may be beneficial for the classifier.

Channel/channel information/venue/spatial-temporal info/motion/object

The channel information (CI) may be associated with/may comprise signal strength, signal amplitude, signal phase, spectral power measurement, modem parameters (e.g. used in relation to modulation/ demodulation in digital communication systems such as WiFi, 4G/LTE), dynamic beamforming information (including feedback or steering matrices generated by wireless communication devices, according to a standardized process, e.g., IEEE 802.11, or another standard), transfer function components, radio state (e.g. used in digital communication systems to decode digital data, baseband processing state, RF processing state, etc.), measurable variables, sensed data, coarse-grained/ fine-grained information of a layer (e.g. physical layer, data link layer, MAC layer, etc.), digital setting, gain setting, RF filter setting, RF front end switch setting, DC offset setting, DC correction setting, IQ compensation setting, effect(s) on the wireless signal by the environment (e.g. venue) during propagation, transformation of an input signal (the wireless signal transmitted by the Type 1 device) to an output signal (the wireless signal received by the Type 2 device), a stable behavior of the environment, a state profile, wireless channel measurements, received signal strength indicator (RSSI), channel state information (CSI), beamforming dynamic information (including feedback or steering matrices generated by wireless communication devices, according to a standardized process, e.g., IEEE 802.11, or another standard), channel impulse response (CIR), channel frequency response (CFR), characteristics of frequency components (e.g. subcarriers) in a bandwidth, channel characteristics, channel filter response, timestamp, auxiliary information, data, meta data, user data, account data, access data, security data, session data, status data, supervisory data, household data, identity (ID), identifier, device data, network data, neighborhood data, environment data, real-time data, sensor data, stored data, encrypted data, compressed data, protected data, and/or another channel information. Each CI may be associated with a time stamp, and/or an arrival time. A CSI can be used to equalize/undo/ minimize/reduce the multipath channel effect (of the transmission channel) to demodulate a signal similar to the one transmitted by the transmitter through the multipath channel. The CI may be associated with information associated with a frequency band, frequency signature, frequency phase, frequency amplitude, frequency trend, frequency characteristics, frequency-like characteristics, time domain element, frequency domain element, time-frequency domain element, orthogonal decomposition characteristics, and/or non-orthogonal decomposition characteristics of the signal through the channel. The TSCI may be a stream of wireless signals (e.g. CI).

The CI may be preprocessed, processed, postprocessed, stored (e.g. in local memory, portable/mobile memory, removable memory, storage network, cloud memory, in a volatile manner, in a non-volatile manner), retrieved, transmitted and/or received. One or more modem parameters and/or radio state parameters may be held constant. The modem parameters may be applied to a radio subsystem. The modem parameters may represent a radio state. A motion detection signal (e.g. baseband signal, and/or packet decoded/demodulated from the baseband signal, etc.) may be obtained by processing (e.g. down-converting) the first wireless signal (e.g. RF/WiFi/LTE/5G signal) by the radio subsystem using the radio state represented by the stored modem parameters. The modem parameters/radio state may be updated (e.g. using previous modem parameters or previous radio state). Both the previous and updated modem parameters/radio states may be applied in the radio subsystem in the digital communication system. Both the previous and updated modem parameters/radio states may be compared/ analyzed/ processed/ monitored in the task.

The channel information may also be modem parameters (e.g. stored or freshly computed) used to process the wireless signal. The wireless signal may comprise a plurality of probe signals. The same modem parameters may be used to process more than one probe signals. The same modem parameters may also be used to process more than one wireless signals. The modem parameters may comprise parameters that indicate settings or an overall configuration for the operation of a radio subsystem or a baseband subsystem of a wireless sensor device (or both). The modem parameters may include one or more of: a gain setting, an RF filter setting, an RF front end switch setting, a DC offset setting, or an IQ compensation setting for a radio subsystem, or a digital DC correction setting, a digital gain setting, and/or a digital filtering setting (e.g. for a baseband subsystem). The CI may also be associated with information associated with a time period, time signature, timestamp, time amplitude, time phase, time trend, and/or time characteristics of the signal. The CI may be associated with information associated with a time-frequency partition, signature, amplitude, phase, trend, and/or characteristics of the signal. The CI may be associated with a decomposition of the signal. The CI may be associated with information associated with a direction, angle of arrival (AoA), angle of a directional antenna, and/or a phase of the signal through the channel. The CI may be associated with attenuation patterns of the signal through the channel. Each CI may be associated with a Type 1 device and a Type 2 device. Each CI may be associated with an antenna of the Type 1 device and an antenna of the Type 2 device.

The CI may be obtained from a communication hardware (e.g. of Type 2 device, or Type 1 device) that is capable of providing the CI. The communication hardware may be a WiFi-capable chip/IC (integrated circuit), chip compliant with a 802.11 or 802.16 or another wireless/radio standard, next generation WiFi-capable chip, LTE-capable chip, 5G-capable chip, 6G/7G/8G-capable chip, Bluetooth-enabled chip, NFC (near field communication)-enabled chip, BLE (Bluetooth low power)-enabled chip, UWB chip, another communication chip (e.g. Zigbee, WiMax, mesh network), etc. The communication hardware computes the CI and stores the CI in a buffer memory and make the CI available for extraction. The CI may comprise data and/or at least one matrices related to channel state information (CSI). The at least one matrices may be used for channel equalization, and/or beam forming, etc. The channel may be associated with a venue. The attenuation may be due to signal propagation in the venue, signal propagating/reflection/ refraction/ diffraction through/at/around air (e.g. air of venue), refraction medium/reflection surface such as wall, doors, furniture, obstacles and/or barriers, etc. The attenuation may be due to reflection at surfaces and obstacles (e.g. reflection surface, obstacle) such as floor, ceiling, furniture, fixtures, objects, people, pets, etc. Each CI may be associated with a timestamp. Each CI may comprise N1 components (e.g. N1 frequency domain components in CFR, N1 time domain components in CIR, or N1 decomposition components). Each component may be associated with a component index. Each component may be a real, imaginary, or complex quantity, magnitude, phase, flag, and/or set. Each CI may comprise a vector or matrix of complex numbers, a set of mixed quantities, and/or a multi-dimensional collection of at least one complex numbers.

Components of a TSCI associated with a particular component index may form a respective component time series associated with the respective index. A TSCI may be divided into N1 component time series. Each respective component time series is associated with a respective component index. The characteristics/STI of the motion of the object may be monitored based on the component time series. In one example, one or more ranges of CI components (e.g. one range being from component 11 to component 23, a second range being from component 44 to component 50, and a third range having only one component) may be selected based on some criteria/cost function/signal quality metric (e.g. based on signal-to-noise ratio, and/or interference level) for further processing.

A component-wise characteristic of a component-feature time series of a TSCI may be computed. The component-wise characteristics may be a scalar (e.g. energy) or a function with a domain and a range (e.g. an autocorrelation function, transform, inverse transform). The characteristics/STI of the motion of the object may be monitored based on the component-wise characteristics. A total characteristics (e.g. aggregate characteristics) of the TSCI may be computed based on the component-wise characteristics of each component time series of the TSCI. The total characteristics may be a weighted average of the component-wise characteristics. The characteristics/STI of the motion of the object may be monitored based on the total characteristics. An aggregate quantity may be a weighted average of individual quantities.

The Type 1 device and Type 2 device may support WiFi, WiMax, 3G/beyond 3G, 4G/beyond 4G, LTE, LTE-A, 5G, 6G, 7G, Bluetooth, NFC, BLE, Zigbee, UWB, UMTS, 3GPP, GSM, EDGE, TDMA, FDMA, CDMA, WCDMA, TD-SCDMA, mesh network, proprietary wireless system, IEEE 802.11 standard, 802.15 standard, 802.16 standard, 3GPP standard, and/or another wireless system.

A common wireless system and/or a common wireless channel may be shared by the Type 1 transceiver and/or the at least one Type 2 transceiver. The at least one Type 2 transceiver may transmit respective signal contemporaneously (or: asynchronously, synchronously, sporadically, continuously, repeatedly, concurrently, simultaneously and/or temporarily) using the common wireless system and/or the common wireless channel. The Type 1 transceiver may transmit a signal to the at least one Type 2 transceiver using the common wireless system and/or the common wireless channel.

Each Type 1 device and Type 2 device may have at least one transmitting/receiving antenna. Each CI may be associated with one of the transmitting antenna of the Type 1 device and one of the receiving antenna of the Type 2 device. Each pair of a transmitting antenna and a receiving antenna may be associated with a link, a path, a communication path, signal hardware path, etc. For example, if the Type 1 device has M (e.g. 3) transmitting antennas, and the Type 2 device has N (e.g. 2) receiving antennas, there may be MxN (e.g. 3x2=6) links or paths. Each link or path may be associated with a TSCI.

The at least one TSCI may correspond to various antenna pairs between the Type 1 device and the Type 2 device. The Type 1 device may have at least one antenna. The Type 2 device may also have at least one antenna. Each TSCI may be associated with an antenna of the Type 1 device and an antenna of the Type 2 device. Averaging or weighted averaging over antenna links may be performed. The averaging or weighted averaging may be over the at least one TSCI. The averaging may optionally be performed on a subset of the at least one TSCI corresponding to a subset of the antenna pairs.

Timestamps of CI of a portion of a TSCI may be irregular and may be corrected so that corrected timestamps of time-corrected CI may be uniformly spaced in time. In the case of multiple Type 1 devices and/or multiple Type 2 devices, the corrected timestamp may be with respect to the same or different clock. An original timestamp associated with each of the CI may be determined. The original timestamp may not be uniformly spaced in time. Original timestamps of all CI of the particular portion of the particular TSCI in the current sliding time window may be corrected so that corrected timestamps of time-corrected CI may be uniformly spaced in time.

The characteristics and/or STI (e.g. motion information) may comprise: location, location coordinate, change in location, position (e.g. initial position, new position), position on map, height, horizontal location, vertical location, distance, displacement, speed, acceleration, rotational speed, rotational acceleration, direction, angle of motion, azimuth, direction of motion, rotation, path, deformation, transformation, shrinking, expanding, gait, gait cycle, head motion, repeated motion, periodic motion, pseudo-periodic motion, impulsive motion, sudden motion, fall-down motion, transient motion, behavior, transient behavior, period of motion, frequency of motion, time trend, temporal profile, temporal characteristics, occurrence, change, temporal change, change of CI, change in frequency, change in timing, change of gait cycle, timing, starting time, initiating time, ending time, duration, history of motion, motion type, motion classification, frequency, frequency spectrum, frequency characteristics, presence, absence, proximity, approaching, receding, identity/identifier of the object, composition of the object, head motion rate, head motion direction, mouth-related rate, eye-related rate, breathing rate, heart rate, tidal volume, depth of breath, inhale time, exhale time, inhale time to exhale time ratio, airflow rate, heart heat-to-beat interval, heart rate variability, hand motion rate, hand motion direction, leg motion, body motion, walking rate, hand motion rate, positional characteristics, characteristics associated with movement (e.g. change in position/location) of the object, tool motion, machine motion, complex motion, and/or combination of multiple motions, event, signal statistics, signal dynamics, anomaly, motion statistics, motion parameter, indication of motion detection, motion magnitude, motion phase, similarity score, distance score, Euclidean distance, weighted distance, L_1 norm, L_2 norm, L_k norm for k>2, statistical distance, correlation, correlation indicator, auto-correlation, covariance, auto-covariance, cross-covariance, inner product, outer product, motion signal transformation, motion feature, presence of motion, absence of motion, motion localization, motion identification, motion recognition, presence of object, absence of object, entrance of object, exit of object, a change of object, motion cycle, motion count, gait cycle, motion rhythm, deformation motion, gesture, handwriting, head motion, mouth motion, heart motion ,internal organ motion, motion trend, size, length, area, volume, capacity, shape, form, tag, starting/initiating location, ending location, starting/initiating quantity, ending quantity, event, fall-down event, security event, accident event, home event, office event, factory event, warehouse event, manufacturing event, assembly line event, maintenance event, car-related event, navigation event, tracking event, door event, door-open event, door-close event, window event, window-open event, window-close event, repeatable event, one-time event, consumed quantity, unconsumed quantity, state, physical state, health state, well-being state, emotional state, mental state, another event, analytics, output responses, and/or another information. The characteristics and/or STI may be computed/monitored based on a feature computed from a CI or a TSCI (e.g. feature computation/extraction). A static segment or profile (and/or a dynamic segment/profile) may be identified /computed/analyzed/ monitored/ extracted/ obtained/ marked/ presented/ indicated/ highlighted/ stored/ communicated based on an analysis of the feature. The analysis may comprise a motion detection/movement assessment/presence detection. Computational workload may be shared among the Type 1 device, the Type 2 device and another processor.

The Type 1 device and/or Type 2 device may be a local device. The local device may be: a smart phone, smart device, TV, sound bar, set-top box, access point, router, repeater, wireless signal repeater/extender, remote control, speaker, fan, refrigerator, microwave, oven, coffee machine, hot water pot, utensil, table, chair, light, lamp, door lock, camera, microphone, motion sensor, security device, fire hydrant, garage door, switch, power adapter, computer, dongle, computer peripheral, electronic pad, sofa, tile, accessory, home device, vehicle device, office device, building device, manufacturing device, watch, glasses, clock, television, oven, air-conditioner, accessory, utility, appliance, smart machine, smart vehicle, internet-of-thing (IoT) device, internet-enabled device, computer, portable computer, tablet, smart house, smart office, smart building, smart parking lot, smart system, and/or another device.

Each Type 1 device may be associated with a respective identifier (e.g. ID). Each Type 2 device may also be associated with a respective identify (ID). The ID may comprise: numeral, combination of text and numbers, name, password, account, account ID, web link, web address, index to some information, and/or another ID. The ID may be assigned. The ID may be assigned by hardware (e.g. hardwired, via dongle and/or other hardware), software and/or firmware. The ID may be stored (e.g. in database, in memory, in server (e.g. hub device), in the cloud, stored locally, stored remotely, stored permanently, stored temporarily) and may be retrieved. The ID may be associated with at least one record, account, user, household, address, phone number, social security number, customer number, another ID, another identifier, timestamp, and/or collection of data. The ID and/or part of the ID of a Type 1 device may be made available to a Type 2 device. The ID may be used for registration, initialization, communication, identification, verification, detection, recognition, authentication, access control, cloud access, networking, social networking, logging, recording, cataloging, classification, tagging, association, pairing, transaction, electronic transaction, and/or intellectual property control, by the Type 1 device and/or the Type 2 device.

The object may be person, user, subject, passenger, child, older person, baby, sleeping baby, baby in vehicle, patient, worker, high-value worker, expert, specialist, waiter, customer in mall, traveler in airport/ train station/ bus terminal/ shipping terminals, staff/worker/customer service personnel in factory/ mall/ supermarket/ office/ workplace, serviceman in sewage/air ventilation system/lift well, lifts in lift wells, elevator, inmate, people to be tracked/ monitored, animal, plant, living object, pet, dog, cat, smart phone, phone accessory, computer, tablet, portable computer, dongle, computing accessory, networked devices, WiFi devices, IoT devices, smart watch, smart glasses, smart devices, speaker, keys, smart key, wallet, purse, handbag, backpack, goods, cargo, luggage, equipment, motor, machine, air conditioner, fan, air conditioning equipment, light fixture, moveable light, television, camera, audio and/or video equipment, stationary, surveillance equipment, parts, signage, tool, cart, ticket, parking ticket, toll ticket, airplane ticket, credit card, plastic card, access card, food packaging, utensil, table, chair, cleaning equipment/tool, vehicle, car, cars in parking facilities, merchandise in warehouse/ store/ supermarket/ distribution center, boat, bicycle, airplane, drone, remote control car/plane/ boat, robot, manufacturing device, assembly line, material/unfinished part/robot/wagon/ transports on factory floor, object to be tracked in airport/shopping mart/supermarket, non-object, absence of an object, presence of an object, object with form, object with changing form, object with no form, mass of fluid, mass of liquid, mass of gas/smoke, fire, flame, electromagnetic (EM) source, EM medium, and/or another object.

The object itself may be communicatively coupled with some network, such as WiFi, MiFi, 3G/ 4G/ LTE/ 5G/ 6G/ 7G, Bluetooth, NFC, BLE, WiMax, Zigbee, UMTS, 3GPP, GSM, EDGE, TDMA, FDMA, CDMA, WCDMA, TD-SCDMA, mesh network, adhoc network, and/or other network. The object itself may be bulky with AC power supply, but is moved during installation, cleaning, maintenance, renovation, etc. It may also be installed in moveable platform such as lift, pad, movable, platform, elevator, conveyor belt, robot, drone, forklift, car, boat, vehicle, etc. The object may have multiple parts, each part with different movement (e.g. change in position/location). For example, the object may be a person walking forward. While walking, his left hand and right hand may move in different direction, with different instantaneous speed, acceleration, motion, etc.

The wireless transmitter (e.g. Type 1 device), the wireless receiver (e.g. Type 2 device), another wireless transmitter and/or another wireless receiver may move with the object and/or another object (e.g. in prior movement, current movement and/or future movement. They may be communicatively coupled to one or more nearby device. They may transmit TSCI and/or information associated with the TSCI to the nearby device, and/or each other. They may be with the nearby device. The wireless transmitter and/or the wireless receiver may be part of a small (e.g. coin-size, cigarette box size, or even smaller), light-weight portable device. The portable device may be wirelessly coupled with a nearby device.

The nearby device may be smart phone, iPhone, Android phone, smart device, smart appliance, smart vehicle, smart gadget, smart TV, smart refrigerator, smart speaker, smart watch, smart glasses, smart pad, iPad, computer, wearable computer, notebook computer, gateway. The nearby device may be connected to a cloud server, local server (e.g. hub device) and/or other server via internet, wired internet connection and/or wireless internet connection. The nearby device may be portable. The portable device, the nearby device, a local server (e.g. hub device) and/or a cloud server may share the computation and/or storage for a task (e.g. obtain TSCI, determine characteristics/STI of the object associated with the movement (e.g. change in position/location) of the object, computation of time series of power (e.g. signal strength) information, determining/computing the particular function, searching for local extremum, classification, identifying particular value of time offset, de-noising, processing, simplification, cleaning, wireless smart sensing task, extract CI from signal, switching, segmentation, estimate trajectory/path/track, process the map, processing trajectory/path/track based on environment models/constraints/limitations, correction, corrective adjustment, adjustment, map-based (or model-based) correction, detecting error, checking for boundary hitting, thresholding) and information (e.g. TSCI). The nearby device may/ may not move with the object. The nearby device may be portable/ not portable/ moveable/ non-moveable. The nearby device may use battery power, solar power, AC power and/or other power source. The nearby device may have replaceable/non-replaceable battery, and/or rechargeable/non-rechargeable battery. The nearby device may be similar to the object. The nearby device may have identical (and/or similar) hardware and/or software to the object. The nearby device may be a smart device, network enabled device, device with connection to WiFi/ 3G/ 4G/ 5G/ 6G/ Zigbee/ Bluetooth/ NFC/ UMTS/ 3GPP/ GSM/ EDGE/ TDMA/ FDMA/ CDMA/ WCDMA/ TD-SCDMA/ adhoc network/ other network, smart speaker, smart watch, smart clock, smart appliance, smart machine, smart equipment, smart tool, smart vehicle, internet-of-thing (IoT) device, internet-enabled device, computer, portable computer, tablet, and another device. The nearby device and/or at least one processor associated with the wireless receiver, the wireless transmitter, the another wireless receiver, the another wireless transmitter and/or a cloud server (in the cloud) may determine the initial STI of the object. Two or more of them may determine the initial spatial-temporal info jointly. Two or more of them may share intermediate information in the determination of the initial STI (e.g. initial position).

In one example, the wireless transmitter (e.g. Type 1 device, or Tracker Bot) may move with the object. The wireless transmitter may send the signal to the wireless receiver (e.g. Type 2 device, or Origin Register) or determining the initial STI (e.g. initial position) of the object. The wireless transmitter may also send the signal and/or another signal to another wireless receiver (e.g. another Type 2 device, or another Origin Register) for the monitoring of the motion (spatial-temporal info) of the object. The wireless receiver may also receive the signal and/or another signal from the wireless transmitter and/or the another wireless transmitter for monitoring the motion of the object. The location of the wireless receiver and/or the another wireless receiver may be known. In another example, the wireless receiver (e.g. Type 2 device, or Tracker Bot) may move with the object. The wireless receiver may receive the signal transmitted from the wireless transmitter (e.g. Type 1 device, or Origin Register) for determining the initial spatial-temporal info (e.g. initial position) of the object. The wireless receiver may also receive the signal and/or another signal from another wireless transmitter (e.g. another Type 1 device, or another Origin Register) for the monitoring of the current motion (e.g. spatial-temporal info) of the object. The wireless transmitter may also transmit the signal and/or another signal to the wireless receiver and/or the another wireless receiver (e.g. another Type 2 device, or another Tracker Bot) for monitoring the motion of the object. The location of the wireless transmitter and/or the another wireless transmitter may be known.

The venue may be a space such as a sensing area, room, house, office, property, workplace, hallway, walkway, lift, lift well, escalator, elevator, sewage system, air ventilations system, staircase, gathering area, duct, air duct, pipe, tube, enclosed space, enclosed structure, semi-enclosed structure, enclosed area, area with at least one wall, plant, machine, engine, structure with wood, structure with glass, structure with metal, structure with walls, structure with doors, structure with gaps, structure with reflection surface, structure with fluid, building, roof top, store, factory, assembly line, hotel room, museum, classroom, school, university, government building, warehouse, garage, mall, airport, train station, bus terminal, hub, transportation hub, shipping terminal, government facility, public facility, school, university, entertainment facility, recreational facility, hospital, pediatric/neonatal wards, seniors home, elderly care facility, geriatric facility, community center, stadium, playground, park, field, sports facility, swimming facility, track and/or field, basketball court, tennis court, soccer stadium, baseball stadium, gymnasium, hall, garage, shopping mart, mall, supermarket, manufacturing facility, parking facility, construction site, mining facility, transportation facility, highway, road, valley, forest, wood, terrain, landscape, den, patio, land, path, amusement park, urban area, rural area, suburban area, metropolitan area, garden, square, plaza, music hall, downtown facility, over-air facility, semi-open facility, closed area, train platform, train station, distribution center, warehouse, store, distribution center, storage facility, underground facility, space (e.g. above ground, outer-space) facility, floating facility, cavern, tunnel facility, indoor facility, open-air facility, outdoor facility with some walls/ doors/ reflective barriers, open facility, semi-open facility, car, truck, bus, van, container, ship/boat, submersible, train, tram, airplane, vehicle, mobile home, cave, tunnel, pipe, channel, metropolitan area, downtown area with relatively tall buildings, valley, well, duct, pathway, gas line, oil line, water pipe, network of interconnecting pathways/alleys/roads/tubes/cavities/ caves/pipe-like structure/air space/fluid space, human body, animal body, body cavity, organ, bone, teeth, soft tissue, hard tissue, rigid tissue, non-rigid tissue, blood/body fluid vessel, windpipe, air duct, den, etc. The venue may be indoor space, outdoor space, The venue may include both the inside and outside of the space. For example, the venue may include both the inside of a building and the outside of the building. For example, the venue can be a building that has one floor or multiple floors, and a portion of the building can be underground. The shape of the building can be, e.g., round, square, rectangular, triangle, or irregular-shaped. These are merely examples. The disclosure can be used to detect events in other types of venue or spaces.

The wireless transmitter (e.g. Type 1 device) and/or the wireless receiver (e.g. Type 2 device) may be embedded in a portable device (e.g. a module, or a device with the module) that may move with the object (e.g. in prior movement and/or current movement). The portable device may be communicatively coupled with the object using a wired connection (e.g. through USB, microUSB, Firewire, HDMI, serial port, parallel port, and other connectors) and/or a connection (e.g. Bluetooth, Bluetooth Low Energy (BLE), WiFi, LTE, NFC, ZigBee). The portable device may be a lightweight device. The portable may be powered by battery, rechargeable battery and/or AC power. The portable device may be very small (e.g. at sub-millimeter scale and/or sub-centimeter scale), and/or small (e.g. coin-size, card-size, pocket-size, or larger). The portable device may be large, sizable, and/or bulky (e.g. heavy machinery to be installed). The portable device may be a WiFi hotspot, access point, mobile WiFi (MiFi), dongle with USB/micro USB/ Firewire/ other connector, smartphone, portable computer, computer, tablet, smart device, internet-of-thing (IoT) device, WiFi-enabled device, LTE-enabled device, a smart watch, smart glass, smart mirror, smart antenna, smart battery, smart light, smart pen, smart ring, smart door, smart window, smart clock, small battery, smart wallet, smart belt, smart handbag, smart clothing/garment, smart ornament, smart packaging, smart paper/ book/ magazine/ poster/ printed matter/ signage/ display/ lighted system/ lighting system, smart key/ tool, smart bracelet/ chain/ necklace/ wearable/ accessory, smart pad/ cushion, smart tile/ block/ brick/ building material/ other material, smart garbage can/ waste container, smart food carriage/ storage, smart ball/ racket, smart chair/ sofa/ bed, smart shoe/ footwear/ carpet/ mat/ shoe rack, smart glove/ hand wear/ ring/ hand ware, smart hat/ headwear/ makeup/ sticker/ tattoo, smart mirror, smart toy, smart pill, smart utensil, smart bottle/food container, smart tool, smart device, IoT device, WiFi enabled device, network enabled device, 3G/4G/5G/6G enabled device, UMTS devices, 3GPP devices, GSM devices, EDGE devices, TDMA devices, FDMA devices, CDMA devices, WCDMA devices, TD-SCDMA devices, embeddable device, implantable device, air conditioner, refrigerator, heater, furnace, furniture, oven, cooking device, television/ set-top box (STB)/ DVD player/ audio player/ video player/ remote control, hi-fi, audio device, speaker, lamp/ light, wall, door, window, roof, roof tile/ shingle/ structure/ attic structure/ device/ feature/ installation/ fixtures, lawn mower/ garden tools/ yard tools/ mechanics tools/ garage tools/, garbage can/ container, 20-ft/40-ft container, storage container, factory/ manufacturing/ production device, repair tools, fluid container, machine, machinery to be installed, vehicle, cart, wagon, warehouse vehicle, car, bicycle, motorcycle, boat, vessel, airplane, basket/ box/ bag/ bucket/ container, smart plate/ cup/ bowl/ pot/ mat/ utensils/ kitchen tools/ kitchen devices/ kitchen accessories/ cabinets/ tables/ chairs/ tiles/ lights/ water pipes/ taps/ gas range/ oven/ dishwashing machine/ etc. The portable device may have a battery that may be replaceable, irreplaceable, rechargeable, and/or non-rechargeable. The portable device may be wirelessly charged. The portable device may be a smart payment card. The portable device may be a payment card used in parking lots, highways, entertainment parks, or other venues/facilities that need payment. The portable device may have an identity (ID)/identifier as described above.

An event may be monitored based on the TSCI. The event may be an object related event, such as fall-down of the object (e.g. an person and/or a sick person), rotation, hesitation, pause, impact (e.g. a person hitting a sandbag, door, window, bed, chair, table, desk, cabinet, box, another person, animal, bird, fly, table, chair, ball, bowling ball, tennis ball, football, soccer ball, baseball, basketball, volley ball), two-body action (e.g. a person letting go a balloon, catching a fish, molding a clay, writing a paper, person typing on a computer), car moving in a garage, person carrying a smart phone and walking around an airport/mall/government building/office/etc., autonomous moveable object/machine moving around (e.g. vacuum cleaner, utility vehicle, car, drone, self-driving car).

The task or the wireless smart sensing task may comprise: object detection, presence detection, proximity detection, object recognition, activity recognition, object verification, object counting, daily activity monitoring, well-being monitoring, vital sign monitoring, health condition monitoring, baby monitoring, elderly monitoring, sleep monitoring, sleep stage monitoring, walking monitoring, exercise monitoring, tool detection, tool recognition, tool verification, patient detection, patient monitoring, patient verification, machine detection, machine recognition, machine verification, human detection, human recognition, human verification, baby detection, baby recognition, baby verification, human breathing detection, human breathing recognition, human breathing estimation, human breathing verification, human heart beat detection, human heart beat recognition, human heart beat estimation, human heart beat verification, fall-down detection, fall-down recognition, fall-down estimation, fall-down verification, emotion detection, emotion recognition, emotion estimation, emotion verification, motion detection, motion degree estimation, motion recognition, motion estimation, motion verification, periodic motion detection, periodic motion recognition, periodic motion estimation, periodic motion verification, repeated motion detection, repeated motion recognition, repeated motion estimation, repeated motion verification, stationary motion detection, stationary motion recognition, stationary motion estimation, stationary motion verification, cyclo-stationary motion detection, cyclo-stationary motion recognition, cyclo-stationary motion estimation, cyclo-stationary motion verification, transient motion detection, transient motion recognition, transient motion estimation, transient motion verification, trend detection, trend recognition, trend estimation, trend verification, breathing detection, breathing recognition, breathing estimation, breathing estimation, human biometrics detection, human biometric recognition, human biometrics estimation, human biometrics verification, environment informatics detection, environment informatics recognition, environment informatics estimation, environment informatics verification, gait detection, gait recognition, gait estimation, gait verification, gesture detection, gesture recognition, gesture estimation, gesture verification, machine learning, supervised learning, unsupervised learning, semi-supervised learning, clustering, feature extraction, featuring training, principal component analysis, eigen-decomposition, frequency decomposition, time decomposition, time-frequency decomposition, functional decomposition, other decomposition, training, discriminative training, supervised training, unsupervised training, semi-supervised training, neural network, sudden motion detection, fall-down detection, danger detection, life-threat detection, regular motion detection, stationary motion detection, cyclo-stationary motion detection, intrusion detection, suspicious motion detection, security, safety monitoring, navigation, guidance, map-based processing, map-based correction, model-based processing/correction, irregularity detection, locationing, room sensing, tracking, multiple object tracking, indoor tracking, indoor position, indoor navigation, energy management, power transfer, wireless power transfer, object counting, car tracking in parking garage, activating a device/system (e.g. security system, access system, alarm, siren, speaker, television, entertaining system, camera, heater/air-conditioning (HVAC) system, ventilation system, lighting system, gaming system, coffee machine, cooking device, cleaning device, housekeeping device), geometry estimation, augmented reality, wireless communication, data communication, signal broadcasting, networking, coordination, administration, encryption, protection, cloud computing, other processing and/or other task. The task may be performed by the Type 1 device, the Type 2 device, another Type 1 device, another Type 2 device, a nearby device, a local server (e.g. hub device), edge server, a cloud server, and/or another device. The task may be based on TSCI between any pair of Type 1 device and Type 2 device. A Type 2 device may be a Type 1 device, and vice versa. A Type 2 device may play/perform the role (e.g. functionality) of Type 1 device temporarily, continuously, sporadically, simultaneously, and/or contemporaneously, and vice versa. A first part of the task may comprise at least one of: preprocessing, processing, signal conditioning, signal processing, post-processing, processing sporadically/ continuously/ simultaneously/ contemporaneously/ dynamically/ adaptive/ on-demand/ as-needed, calibrating, denoising, feature extraction, coding, encryption, transformation, mapping, motion detection, motion estimation, motion change detection, motion pattern detection, motion pattern estimation, motion pattern recognition, vital sign detection, vital sign estimation, vital sign recognition, periodic motion detection, periodic motion estimation, repeated motion detection/estimation, breathing rate detection, breathing rate estimation, breathing pattern detection, breathing pattern estimation, breathing pattern recognition, heart beat detection, heart beat estimation, heart pattern detection, heart pattern estimation, heart pattern recognition, gesture detection, gesture estimation, gesture recognition, speed detection, speed estimation, object locationing, object tracking, navigation, acceleration estimation, acceleration detection, fall-down detection, change detection, intruder (and/or illegal action) detection, baby detection, baby monitoring, patient monitoring, object recognition, wireless power transfer, and/or wireless charging.

A second part of the task may comprise at least one of: a smart home task, smart office task, smart building task, smart factory task (e.g. manufacturing using a machine or an assembly line), smart internet-of-thing (IoT) task, smart system task, smart home operation, smart office operation, smart building operation, smart manufacturing operation (e.g. moving supplies/parts/raw material to a machine/an assembly line), IoT operation, smart system operation, turning on a light, turning off the light, controlling the light in at least one of: a room, region, and/or the venue, playing a sound clip, playing the sound clip in at least one of: the room, the region, and/or the venue, playing the sound clip of at least one of: a welcome, greeting, farewell, first message, and/or a second message associated with the first part of the task, turning on an appliance, turning off the appliance, controlling the appliance in at least one of: the room, the region, and/or the venue, turning on an electrical system, turning off the electrical system, controlling the electrical system in at least one of: the room, the region, and/or the venue, turning on a security system, turning off the security system, controlling the security system in at least one of: the room, the region, and/or the venue, turning on a mechanical system, turning off a mechanical system, controlling the mechanical system in at least one of: the room, the region, and/or the venue, and/or controlling at least one of: an air conditioning system, heating system, ventilation system, lighting system, heating device, stove, entertainment system, door, fence, window, garage, computer system, networked device, networked system, home appliance, office equipment, lighting device, robot (e.g. robotic arm), smart vehicle, smart machine, assembly line, smart device, internet-of-thing (IoT) device, smart home device, and/or a smart office device.

The task may include: detect a user returning home, detect a user leaving home, detect a user moving from one room to another, detect/control/lock/unlock/open/ close/partially open a window/door/garage door/blind/curtain/panel/solar panel/sun shade, detect a pet, detect/monitor a user doing something (e.g. sleeping on sofa, sleeping in bedroom, running on treadmill, cooking, sitting on sofa, watching TV, eating in kitchen, eating in dining room, going upstairs/downstairs, going outside/coming back, in the rest room), monitor/detect location of a user/pet, do something (e.g. send a message, notify/report to someone) automatically upon detection, do something for the user automatically upon detecting the user, turn on/off/dim a light, turn on/off music/radio/home entertainment system, turn on/off/adjust/control TV/HiFi/set-top-box (STB)/ home entertainment system/smart speaker/smart device, turn on/off/adjust air conditioning system, turn on/off/adjust ventilation system, turn on/off/adjust heating system, adjust/control curtains/light shades, turn on/off/wake a computer, turn on/off/pre-heat/control coffee machine/hot water pot, turn on/off/control/preheat cooker/oven/microwave oven/another cooking device, check/adjust temperature, check weather forecast, check telephone message box, check mail, do a system check, control/adjust a system, check/control/arm/disarm security system/baby monitor, check/control refrigerator, give a report (e.g. through a speaker such as Google home, Amazon Echo, on a display/screen, via a webpage/email/messaging system/notification system).

For example, when a user arrives home in his car, the task may be to, automatically, detect the user or his car approaching, open the garage door upon detection, turn on the driveway/garage light as the user approaches the garage, turn on air conditioner/ heater/ fan, etc. As the user enters the house, the task may be to, automatically, turn on the entrance light, turn off driveway/garage light, play a greeting message to welcome the user, turn on the music, turn on the radio and tuning to the user's favorite radio news channel, open the curtain/blind, monitor the user's mood, adjust the lighting and sound environment according to the user's mood or the current/imminent event (e.g. do romantic lighting and music because the user is scheduled to eat dinner with girlfriend in 1 hour) on the user's daily calendar, warm the food in microwave that the user prepared in the morning, do a diagnostic check of all systems in the house, check weather forecast for tomorrow's work, check news of interest to the user, check user's calendar and to-do list and play reminder, check telephone answer system/messaging system/email and give a verbal report using dialog system/speech synthesis, remind (e.g. using audible tool such as speakers/HiFi/ speech synthesis/sound/voice/ music/song/sound field/ background sound field/ dialog system, using visual tool such as TV/entertainment system/ computer/ notebook/smart pad/display/light/color/brightness/patterns/symbols, using haptic tool/virtual reality tool/gesture/ tool, using a smart device/appliance/material/furniture/fixture, using web tool/server/ hub device/cloud server/fog server/edge server/home network/mesh network, using messaging tool/notification tool/communication tool/scheduling tool/email, using user interface/GUI, using scent/smell/ fragrance/taste, using neural tool/nervous system tool, using a combination) the user of his mother's birthday and to call her, prepare a report, and give the report (e.g. using a tool for reminding as discussed above). The task may turn on the air conditioner/heater/ventilation system in advance, or adjust temperature setting of smart thermostat in advance, etc. As the user moves from the entrance to the living room, the task may be to turn on the living room light, open the living room curtain, open the window, turn off the entrance light behind the user, turn on the TV and set-top box, set TV to the user's favorite channel, adjust an appliance according to the user's preference and conditions/states (e.g. adjust lighting and choose/play music to build a romantic atmosphere), etc.

Another example may be: When the user wakes up in the morning, the task may be to detect the user moving around in the bedroom, open the blind/curtain, open the window, turn off the alarm clock, adjust indoor temperature from night-time temperature profile to day-time temperature profile, turn on the bedroom light, turn on the restroom light as the user approaches the restroom, check radio or streaming channel and play morning news, turn on the coffee machine and preheat the water, turn off security system, etc. When the user walks from bedroom to kitchen, the task may be to turn on the kitchen and hallway lights, turn off the bedroom and restroom lights, move the music/message/reminder from the bedroom to the kitchen, turn on the kitchen TV, change TV to morning news channel, lower the kitchen blind and open the kitchen window to bring in fresh air, unlock backdoor for the user to check the backyard, adjust temperature setting for the kitchen, etc. Another example may be: When the user leaves home for work, the task may be to detect the user leaving, play a farewell and/or have-a-good-day message, open/close garage door, turn on/off garage light and driveway light, turn off/dim lights to save energy (just in case the user forgets), close/lock all windows/doors (just in case the user forgets), turn off appliance (especially stove, oven, microwave oven), turn on/arm the home security system to guard the home against any intruder, adjust air conditioning/heating/ventilation systems to "away-from-home" profile to save energy, send alerts/reports/updates to the user's smart phone, etc.

A motion may comprise at least one of: a no-motion, resting motion, non-moving motion, movement, change in position/location, deterministic motion, transient motion, fall-down motion, repeating motion, periodic motion, pseudo-periodic motion, periodic/repeated motion associated with breathing, periodic/repeated motion associated with heartbeat, periodic/repeated motion associated with living object, periodic/repeated motion associated with machine, periodic/repeated motion associated with man-made object, periodic/repeated motion associated with nature, complex motion with transient element and periodic element, repetitive motion, non-deterministic motion, probabilistic motion, chaotic motion, random motion, complex motion with non-deterministic element and deterministic element, stationary random motion, pseudo-stationary random motion, cyclo-stationary random motion, non-stationary random motion, stationary random motion with periodic autocorrelation function (ACF), random motion with periodic ACF for period of time, random motion that is pseudo-stationary for a period of time, random motion of which an instantaneous ACF has a pseudo-periodic/repeating element for a period of time, machine motion, mechanical motion, vehicle motion, drone motion, air-related motion, wind-related motion, weather-related motion, water-related motion, fluid-related motion, ground-related motion, change in electro-magnetic characteristics, sub-surface motion, seismic motion, plant motion, animal motion, human motion, normal motion, abnormal motion, dangerous motion, warning motion, suspicious motion, rain, fire, flood, tsunami, explosion, collision, imminent collision, human body motion, head motion, facial motion, eye motion, mouth motion, tongue motion, neck motion, finger motion, hand motion, arm motion, shoulder motion, body motion, chest motion, abdominal motion, hip motion, leg motion, foot motion, body joint motion, knee motion, elbow motion, upper body motion, lower body motion, skin motion, below-skin motion, subcutaneous tissue motion, blood vessel motion, intravenous motion, organ motion, heart motion, lung motion, stomach motion, intestine motion, bowel motion, eating motion, breathing motion, facial expression, eye expression, mouth expression, talking motion, singing motion, eating motion, gesture, hand gesture, arm gesture, keystroke, typing stroke, user-interface gesture, man-machine interaction, gait, dancing movement, coordinated movement, and/or coordinated body movement.

The heterogeneous IC of the Type 1 device and/or any Type 2 receiver may comprise low-noise amplifier (LNA), power amplifier, transmit-receive switch, media access controller, baseband radio, 2.4 GHz radio, 3.65 GHz radio, 4.9 GHz radio, 5 GHz radio, 5.9GHz radio, below 6GHz radio, below 60 GHz radio and/or another radio. The heterogeneous IC may comprise a processor, a memory communicatively coupled with the processor, and a set of instructions stored in the memory to be executed by the processor. The IC and/or any processor may comprise at least one of: general purpose processor, special purpose processor, microprocessor, multi-processor, multi-core processor, parallel processor, CISC processor, RISC processor, microcontroller, central processing unit (CPU), graphical processor unit (GPU), digital signal processor (DSP), application specific integrated circuit (ASIC), field programmable gate array (FPGA), embedded processor (e.g. ARM), logic circuit, other programmable logic device, discrete logic, and/or a combination. The heterogeneous IC may support broadband network, wireless network, mobile network, mesh network, cellular network, wireless local area network (WLAN), wide area network (WAN), and metropolitan area network (MAN), WLAN standard, WiFi, LTE, LTE-A, LTE-U, 802.11 standard, 802.11a, 802.11b, 802.11g, 802.11n, 802.11ac, 802.11ad, 802.11af, 802,11ah, 802.11ax, 802.11ay, mesh network standard, 802.15 standard, 802.16 standard, cellular network standard, 3G, 3.5G, 4G, beyond 4G, 4.5G, 5G, 6G, 7G, 8G, 9G, UMTS, 3GPP, GSM, EDGE, TDMA, FDMA, CDMA, WCDMA, TD-SCDMA, Bluetooth, Bluetooth Low-Energy (BLE), NFC, Zigbee, WiMax, and/or another wireless network protocol.

The processor may comprise general purpose processor, special purpose processor, microprocessor, microcontroller, embedded processor, digital signal processor, central processing unit (CPU), graphical processing unit (GPU), multi-processor, multi-core processor, and/or processor with graphics capability, and/or a combination. The memory may be volatile, non-volatile, random access memory (RAM), Read Only Memory (ROM), Electrically Programmable ROM (EPROM), Electrically Erasable Programmable ROM (EEPROM), hard disk, flash memory, CD-ROM, DVD-ROM, magnetic storage, optical storage, organic storage, storage system, storage network, network storage, cloud storage, edge storage, local storage, external storage, internal storage, or other form of non-transitory storage medium known in the art. The set of instructions (machine executable code) corresponding to the method steps may be embodied directly in hardware, in software, in firmware, or in combinations thereof. The set of instructions may be embedded, pre-loaded, loaded upon boot up, loaded on the fly, loaded on demand, pre-installed, installed, and/or downloaded.

The presentation may be a presentation in an audio-visual way (e.g. using combination of visual, graphics, text, symbols, color, shades, video, animation, sound, speech, audio, etc.), graphical way (e.g. using GUI, animation, video), textual way (e.g. webpage with text, message, animated text), symbolic way (e.g. emoticon, signs, hand gesture), or mechanical way (e.g. vibration, actuator movement, haptics, etc.).

Basic computation

Computational workload associated with the method is shared among the processor, the Type 1 heterogeneous wireless device, the Type 2 heterogeneous wireless device, a local server (e.g. hub device), a cloud server, and another processor.

An operation, pre-processing, processing and/or postprocessing may be applied to data (e.g. TSCI, autocorrelation, features of TSCI). An operation may be preprocessing, processing and/or postprocessing. The preprocessing, processing and/or postprocessing may be an operation. An operation may comprise preprocessing, processing, postprocessing, scaling, computing a confidence factor, computing a line-of-sight (LOS) quantity, computing a non-LOS (NLOS) quantity, a quantity comprising LOS and NLOS, computing a single link (e.g. path, communication path, link between a transmitting antenna and a receiving antenna) quantity, computing a quantity comprising multiple links, computing a function of the operands, filtering, linear filtering, nonlinear filtering, folding, grouping, energy computation, lowpass filtering, bandpass filtering, highpass filtering, median filtering, rank filtering, quartile filtering, percentile filtering, mode filtering, finite impulse response (FIR) filtering, infinite impulse response (IIR) filtering, moving average (MA) filtering, autoregressive (AR) filtering, autoregressive moving averaging (ARMA) filtering, selective filtering, adaptive filtering, interpolation, decimation, subsampling, upsampling, resampling, time correction, time base correction, phase correction, magnitude correction, phase cleaning, magnitude cleaning, matched filtering, enhancement, restoration, denoising, smoothing, signal conditioning, enhancement, restoration, spectral analysis, linear transform, nonlinear transform, inverse transform, frequency transform, inverse frequency transform, Fourier transform (FT), discrete time FT (DTFT), discrete FT (DFT), fast FT (FFT), wavelet transform, Laplace transform, Hilbert transform, Hadamard transform, trigonometric transform, sine transform, cosine transform, DCT, power-of-2 transform, sparse transform, graph-based transform, graph signal processing, fast transform, a transform combined with zero padding, cyclic padding, padding, zero padding, feature extraction, decomposition, projection, orthogonal projection, non-orthogonal projection, over-complete projection, eigen-decomposition, singular value decomposition (SVD), principle component analysis (PCA), independent component analysis (ICA), grouping, sorting, thresholding, soft thresholding, hard thresholding, clipping, soft clipping, first derivative, second order derivative, high order derivative, convolution, multiplication, division, addition, subtraction, integration, maximization, minimization, least mean square error, recursive least square, constrained least square, batch least square, least absolute error, least mean square deviation, least absolute deviation, local maximization, local minimization, optimization of a cost function, neural network, recognition, labeling, training, clustering, machine learning, supervised learning, unsupervised learning, semi-supervised learning, comparison with another TSCI, similarity score computation, quantization, vector quantization, matching pursuit, compression, encryption, coding, storing, transmitting, normalization, temporal normalization, frequency domain normalization, classification, clustering, labeling, tagging, learning, detection, estimation, learning network, mapping, remapping, expansion, storing, retrieving, transmitting, receiving, representing, merging, combining, splitting, tracking, monitoring, matched filtering, Kalman filtering, particle filter, intrapolation, extrapolation, histogram estimation, importance sampling, Monte Carlo sampling, compressive sensing, representing, merging, combining, splitting, scrambling, error protection, forward error correction, doing nothing, time varying processing, conditioning averaging, weighted averaging, arithmetic mean, geometric mean, harmonic mean, averaging over selected frequency, averaging over antenna links, logical operation, permutation, combination, sorting, AND, OR, XOR, union, intersection, vector addition, vector subtraction, vector multiplication, vector division, inverse, norm, distance, and/or another operation. The operation may be the preprocessing, processing, and/or post-processing. Operations may be applied jointly on multiple time series or functions.

The function (e.g. function of operands) may comprise: scalar function, vector function, discrete function, continuous function, polynomial function, characteristics, feature, magnitude, phase, exponential function, logarithmic function, trigonometric function, transcendental function, logical function, linear function, algebraic function, nonlinear function, piecewise linear function, real function, complex function, vector-valued function, inverse function, derivative of function, integration of function, circular function, function of another function, one-to-one function, one-to-many function, many-to-one function, many-to-many function, zero crossing, absolute function, indicator function, mean, mode, median, range, statistics, histogram, variance, standard deviation, measure of variation, spread, dispersion, deviation, divergence, range, interquartile range, total variation, absolute deviation, total deviation, arithmetic mean, geometric mean, harmonic mean, trimmed mean, percentile, square, cube, root, power, sine, cosine, tangent, cotangent, secant, cosecant, elliptical function, parabolic function, hyperbolic function, game function, zeta function, absolute value, thresholding, limiting function, floor function, rounding function, sign function, quantization, piecewise constant function, composite function, function of function, time function processed with an operation (e.g. filtering), probabilistic function, stochastic function, random function, ergodic function, stationary function, deterministic function, periodic function, repeated function, transformation, frequency transform, inverse frequency transform, discrete time transform, Laplace transform, Hilbert transform, sine transform, cosine transform, triangular transform, wavelet transform, integer transform, power-of-2 transform, sparse transform, projection, decomposition, principle component analysis (PCA), independent component analysis (ICA), neural network, feature extraction, moving function, function of moving window of neighboring items of time series, filtering function, convolution, mean function, histogram, variance/standard deviation function, statistical function, short-time transform, discrete transform, discrete Fourier transform, discrete cosine transform, discrete sine transform, Hadamard transform, eigen-decomposition, eigenvalue, singular value decomposition (SVD), singular value, orthogonal decomposition, matching pursuit, sparse transform, sparse approximation, any decomposition, graph-based processing, graph-based transform, graph signal processing, classification, identifying a class/group/category, labeling, learning, machine learning, detection, estimation, feature extraction, learning network, feature extraction, denoising, signal enhancement, coding, encryption, mapping, remapping, vector quantization, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, first order derivative, high order derivative, integration, zero crossing, smoothing, median filtering, mode filtering, sampling, random sampling, resampling function, downsampling, down-converting, upsampling, up-converting, interpolation, extrapolation, importance sampling, Monte Carlo sampling, compressive sensing, statistics, short term statistics, long term statistics, autocorrelation function, cross correlation, moment generating function, time averaging, weighted averaging, special function, Bessel function, error function, complementary error function, Beta function, Gamma function, integral function, Gaussian function, Poisson function, etc.

Machine learning, training, discriminative training, deep learning, neural network, continuous time processing, distributed computing, distributed storage, acceleration using GPU/DSP/coprocessor/multicore/multiprocessing may be applied to a step (or each step) of this disclosure.

A frequency transform may include Fourier transform, Laplace transform, Hadamard transform, Hilbert transform, sine transform, cosine transform, triangular transform, wavelet transform, integer transform, power-of-2 transform, combined zero padding and transform, Fourier transform with zero padding, and/or another transform. Fast versions and/or approximated versions of the transform may be performed. The transform may be performed using floating point, and/or fixed point arithmetic.

An inverse frequency transform may include inverse Fourier transform, inverse Laplace transform, inverse Hadamard transform, inverse Hilbert transform, inverse sine transform, inverse cosine transform, inverse triangular transform, inverse wavelet transform, inverse integer transform, inverse power-of-2 transform, combined zero padding and transform, inverse Fourier transform with zero padding, and/or another transform. Fast versions and/or approximated versions of the transform may be performed. The transform may be performed using floating point, and/or fixed point arithmetic.

A quantity/feature from a TSCI may be computed. The quantity may comprise statistic of at least one of: motion, location, map coordinate, height, speed, acceleration, movement angle, rotation, size, volume, time trend, pattern, one-time pattern, repeating pattern, evolving pattern, time pattern, mutually excluding patterns, related/correlated patterns, cause-and-effect, correlation, short-term/long-term correlation, tendency, inclination, statistics, typical behavior, atypical behavior, time trend, time profile, periodic motion, repeated motion, repetition, tendency, change, abrupt change, gradual change, frequency, transient, breathing, gait, action, event, suspicious event, dangerous event, alarming event, warning, belief, proximity, collision, power, signal, signal power, signal strength, signal intensity, received signal strength indicator (RSSI), signal amplitude, signal phase, signal frequency component, signal frequency band component, channel state information (CSI), map, time, frequency, time-frequency, decomposition, orthogonal decomposition, non-orthogonal decomposition, tracking, breathing, heart beat, statistical parameters, cardiopulmonary statistics/analytics (e.g. output responses), daily activity statistics/analytics, chronic disease statistics/analytics, medical statistics/analytics, an early (or instantaneous or contemporaneous or delayed) indication/suggestion/sign/indicator/verifier/ detection/symptom of a disease/condition/ situation, biometric, baby, patient, machine, device, temperature, vehicle, parking lot, venue, lift, elevator, spatial, road, fluid flow, home, room, office, house, building, warehouse, storage, system, ventilation, fan, pipe, duct, people, human, car, boat, truck, airplane, drone, downtown, crowd, impulsive event, cyclo-stationary, environment, vibration, material, surface, 3-dimensional, 2-dimensional, local, global, presence, and/or another measurable quantity/variable.

Sliding window/algorithm

Sliding time window may have time varying window width. It may be smaller at the beginning to enable fast acquisition and may increase over time to a steady-state size. The steady-state size may be related to the frequency, repeated motion, transient motion, and/or STI to be monitored. Even in steady state, the window size may be adaptively (and/or dynamically) changed (e.g. adjusted, varied, modified) based on battery life, power consumption, available computing power, change in amount of targets, the nature of motion to be monitored, etc.

The time shift between two sliding time windows at adjacent time instance may be constant/variable/locally adaptive/dynamically adjusted over time. When shorter time shift is used, the update of any monitoring may be more frequent which may be used for fast changing situations, object motions, and/or objects. Longer time shift may be used for slower situations, object motions, and/or objects.

The window width/size and/or time shift may be changed (e.g. adjusted, varied, modified) upon a user request/choice. The time shift may be changed automatically (e.g. as controlled by processor/ computer/server/hub device/cloud server) and/or adaptively (and/or dynamically).

At least one characteristics (e.g. characteristic value, or characteristic point) of a function (e.g. auto-correlation function, auto-covariance function, cross-correlation function, cross-covariance function, power spectral density, time function, frequency domain function, frequency transform) may be determined (e.g. by an object tracking server, the processor, the Type 1 heterogeneous device, the Type 2 heterogeneous device, and/or another device). The at least one characteristics of the function may include: a maximum, minimum, extremum, local maximum, local minimum, local extremum, local extremum with positive time offset, first local extremum with positive time offset, n^th local extremum with positive time offset, local extremum with negative time offset, first local extremum with negative time offset, n^th local extremum with negative time offset, constrained maximum, constrained minimum, constrained extremum, significant maximum, significant minimum, significant extremum, slope, derivative, higher order derivative, maximum slope, minimum slope, local maximum slope, local maximum slope with positive time offset, local minimum slope, constrained maximum slope, constrained minimum slope, maximum higher order derivative, minimum higher order derivative, constrained higher order derivative, zero-crossing, zero crossing with positive time offset, n^th zero crossing with positive time offset, zero crossing with negative time offset, n^th zero crossing with negative time offset, constrained zero-crossing, zero-crossing of slope, zero-crossing of higher order derivative, and/or another characteristics. At least one argument of the function associated with the at least one characteristics of the function may be identified. Some quantity (e.g. spatial-temporal information of the object) may be determined based on the at least one argument of the function.

A characteristics (e.g. characteristics of motion of an object in the venue) may comprise at least one of: an instantaneous characteristics, short-term characteristics, repetitive characteristics, recurring characteristics, history, incremental characteristics, changing characteristics, deviational characteristics, phase, magnitude, degree, time characteristics, frequency characteristics, time-frequency characteristics, decomposition characteristics, orthogonal decomposition characteristics, non-orthogonal decomposition characteristics, deterministic characteristics, probabilistic characteristics, stochastic characteristics, autocorrelation function (ACF), mean, variance, standard deviation, measure of variation, spread, dispersion, deviation, divergence, range, interquartile range, total variation, absolute deviation, total deviation, statistics, duration, timing, trend, periodic characteristics, repetition characteristics, long-term characteristics, historical characteristics, average characteristics, current characteristics, past characteristics, future characteristics, predicted characteristics, location, distance, height, speed, direction, velocity, acceleration, change of the acceleration, angle, angular speed, angular velocity, angular acceleration of the object, change of the angular acceleration, orientation of the object, angular of rotation, deformation of the object, shape of the object, change of shape of the object, change of size of the object, change of structure of the object, and/or change of characteristics of the object.

At least one local maximum and at least one local minimum of the function may be identified. At least one local signal-to-noise-ratio-like (SNR-like) parameter may be computed for each pair of adjacent local maximum and local minimum. The SNR-like parameter may be a function (e.g. linear, log, exponential function, monotonic function) of a fraction of a quantity (e.g. power, magnitude) of the local maximum over the same quantity of the local minimum. It may also be the function of a difference between the quantity of the local maximum and the same quantity of the local minimum. Significant local peaks may be identified or selected. Each significant local peak may be a local maximum with SNR-like parameter greater than a threshold T1 and/or a local maximum with amplitude greater than a threshold T2. The at least one local minimum and the at least one local minimum in the frequency domain may be identified/computed using a persistence-based approach.

A set of selected significant local peaks may be selected from the set of identified significant local peaks based on a selection criterion (e.g. a quality criterion, a signal quality condition). The characteristics/STI of the object may be computed based on the set of selected significant local peaks and frequency values associated with the set of selected significant local peaks. In one example, the selection criterion may always correspond to select the strongest peaks in a range. While the strongest peaks may be selected, the unselected peaks may still be significant (rather strong).

Unselected significant peaks may be stored and/or monitored as "reserved" peaks for use in future selection in future sliding time windows. As an example, there may be a particular peak (at a particular frequency) appearing consistently over time. Initially, it may be significant but not selected (as other peaks may be stronger). But in later time, the peak may become stronger and more dominant and may be selected. When it became "selected", it may be back-traced in time and made "selected" in the earlier time when it was significant but not selected. In such case, the back-traced peak may replace a previously selected peak in an early time. The replaced peak may be the relatively weakest, or a peak that appear in isolation in time (i.e. appearing only briefly in time).

In another example, the selection criterion may not correspond to select the strongest peaks in the range. Instead, it may consider not only the "strength" of the peak, but the "trace" of the peak - peaks that may have happened in the past, especially those peaks that have been identified for a long time.

For example, if a finite state machine (FSM) is used, it may select the peak(s) based on the state of the FSM. Decision thresholds may be computed adaptively (and/or dynamically) based on the state of the FSM.

A similarity score and/or component similarity score may be computed (e.g. by a server (e.g. hub device), the processor, the Type 1 device, the Type 2 device, a local server, a cloud server, and/or another device) based on a pair of temporally adjacent CI of a TSCI. The pair may come from the same sliding window or two different sliding windows. The similarity score may also be based on a pair of, temporally adjacent or not so adjacent, CI from two different TSCI. The similarity score and/or component similar score may be/comprise: time reversal resonating strength (TRRS), correlation, cross-correlation, auto-correlation, correlation indicator, covariance, cross-covariance, auto-covariance, inner product of two vectors, distance score, norm, metric, quality metric, signal quality condition, statistical characteristics, discrimination score, neural network, deep learning network, machine learning, training, discrimination, weighted averaging, preprocessing, denoising, signal conditioning, filtering, time correction, timing compensation, phase offset compensation, transformation, component-wise operation, feature extraction, finite state machine, and/or another score. The characteristics and/or STI may be determined/computed based on the similarity score.

Any threshold may be pre-determined, adaptively (and/or dynamically) determined and/or determined by a finite state machine. The adaptive determination may be based on time, space, location, antenna, path, link, state, battery life, remaining battery life, available power, available computational resources, available network bandwidth, etc.

A threshold to be applied to a test statistics to differentiate two events (or two conditions, or two situations, or two states), A and B, may be determined. Data (e.g. CI, channel state information (CSI), power parameter) may be collected under A and/or under B in a training situation. The test statistics may be computed based on the data. Distributions of the test statistics under A may be compared with distributions of the test statistics under B (reference distribution), and the threshold may be chosen according to some criteria. The criteria may comprise: maximum likelihood (ML), maximum aposterior probability (MAP), discriminative training, minimum Type 1 error for a given Type 2 error, minimum Type 2 error for a given Type 1 error, and/or other criteria (e.g. a quality criterion, signal quality condition). The threshold may be adjusted to achieve different sensitivity to the A, B and/or another event/condition/situation/state. The threshold adjustment may be automatic, semi-automatic and/or manual. The threshold adjustment may be applied once, sometimes, often, periodically, repeatedly, occasionally, sporadically, and/or on demand. The threshold adjustment may be adaptive (and/or dynamically adjusted). The threshold adjustment may depend on the object, object movement/location/ direction/action, object characteristics/ STI/size/ property/trait/habit/behavior, the venue, feature/ fixture/ furniture/barrier/ material/ machine/living thing/thing/object/boundary/ surface/ medium that is in/at/of the venue, map, constraint of the map (or environmental model), the event/state/ situation/condition, time, timing, duration, current state, past history, user, and/or a personal preference, etc.

A stopping criterion (or skipping or bypassing or blocking or pausing or passing or rejecting criterion) of an iterative algorithm may be that change of a current parameter (e.g. offset value) in the updating in an iteration is less than a threshold. The threshold may be 0.5, 1, 1.5, 2, or another number. The threshold may be adaptive (and/or dynamically adjusted). It may change as the iteration progresses. For the offset value, the adaptive threshold may be determined based on the task, particular value of the first time, the current time offset value, the regression window, the regression analysis, the regression function, the regression error, the convexity of the regression function, and/or an iteration number.

The local extremum may be determined as the corresponding extremum of the regression function in the regression window. The local extremum may be determined based on a set of time offset values in the regression window and a set of associated regression function values. Each of the set of associated regression function values associated with the set of time offset values may be within a range from the corresponding extremum of the regression function in the regression window.

The searching for a local extremum may comprise robust search, minimization, maximization, optimization, statistical optimization, dual optimization, constraint optimization, convex optimization, global optimization, local optimization an energy minimization, linear regression, quadratic regression, higher order regression, linear programming, nonlinear programming, stochastic programming, combinatorial optimization, constraint programming, constraint satisfaction, calculus of variations, optimal control, dynamic programming, mathematical programming, multi-objective optimization, multi-modal optimization, disjunctive programming, space mapping, infinite-dimensional optimization, heuristics, metaheuristics, convex programming, semidefinite programming, conic programming, cone programming, integer programming, quadratic programming, fractional programming, numerical analysis, simplex algorithm, iterative method, gradient descent, subgradient method, coordinate descent, conjugate gradient method, Newton's algorithm, sequential quadratic programming, interior point method, ellipsoid method, reduced gradient method, quasi-Newton method, simultaneous perturbation stochastic approximation, interpolation method, pattern search method, line search, non-differentiable optimization, genetic algorithm, evolutionary algorithm, dynamic relaxation, hill climbing, particle swarm optimization, gravitation search algorithm, simulated annealing, memetic algorithm, differential evolution, dynamic relaxation, stochastic tunneling, Tabu search, reactive search optimization, curve fitting, least square, simulation based optimization, variational calculus, and/or variant. The search for local extremum may be associated with an objective function, loss function, cost function, utility function, fitness function, energy function, and/or an energy function.

Regression may be performed using regression function to fit sampled data (e.g. CI, feature of CI, component of CI) or another function (e.g. autocorrelation function) in a regression window. In at least one iteration, a length of the regression window and/or a location of the regression window may change. The regression function may be linear function, quadratic function, cubic function, polynomial function, and/or another function.

The regression analysis may minimize at least one of: error, aggregate error, component error, error in projection domain, error in selected axes, error in selected orthogonal axes, absolute error, square error, absolute deviation, square deviation, higher order error (e.g. third order, fourth order), robust error (e.g. square error for smaller error magnitude and absolute error for larger error magnitude, or first kind of error for smaller error magnitude and second kind of error for larger error magnitude), another error, weighted sum (or weighted mean) of absolute/square error (e.g. for wireless transmitter with multiple antennas and wireless receiver with multiple antennas, each pair of transmitter antenna and receiver antenna form a link), mean absolute error, mean square error, mean absolute deviation, and/or mean square deviation. Error associated with different links may have different weights. One possibility is that some links and/or some components with larger noise or lower signal quality metric may have smaller or bigger weight.), weighted sum of square error, weighted sum of higher order error, weighted sum of robust error, weighted sum of the another error, absolute cost, square cost, higher order cost, robust cost, another cost, weighted sum of absolute cost, weighted sum of square cost, weighted sum of higher order cost, weighted sum of robust cost, and/or weighted sum of another cost.

The regression error determined may be an absolute error, square error, higher order error, robust error, yet another error, weighted sum of absolute error, weighted sum of square error, weighted sum of higher order error, weighted sum of robust error, and/or weighted sum of the yet another error.

The time offset associated with maximum regression error (or minimum regression error) of the regression function with respect to the particular function in the regression window may become the updated current time offset in the iteration.

A local extremum may be searched based on a quantity comprising a difference of two different errors (e.g. a difference between absolute error and square error). Each of the two different errors may comprise an absolute error, square error, higher order error, robust error, another error, weighted sum of absolute error, weighted sum of square error, weighted sum of higher order error, weighted sum of robust error, and/or weighted sum of the another error.

The quantity may be compared with a reference data or a reference distribution, such as an F-distribution, central F-distribution, another statistical distribution, threshold, threshold associated with probability/histogram, threshold associated with probability/histogram of finding false peak, threshold associated with the F-distribution, threshold associated the central F-distribution, and/or threshold associated with the another statistical distribution.

The regression window may be determined based on at least one of: the movement (e.g. change in position/location) of the object, quantity associated with the object, the at least one characteristics and/or STI of the object associated with the movement of the object, estimated location of the local extremum, noise characteristics, estimated noise characteristics, signal quality metric, F-distribution, central F-distribution, another statistical distribution, threshold, preset threshold, threshold associated with probability/histogram, threshold associated with desired probability, threshold associated with probability of finding false peak, threshold associated with the F-distribution, threshold associated the central F-distribution, threshold associated with the another statistical distribution, condition that quantity at the window center is largest within the regression window, condition that the quantity at the window center is largest within the regression window, condition that there is only one of the local extremum of the particular function for the particular value of the first time in the regression window, another regression window, and/or another condition.

The width of the regression window may be determined based on the particular local extremum to be searched. The local extremum may comprise first local maximum, second local maximum, higher order local maximum, first local maximum with positive time offset value, second local maximum with positive time offset value, higher local maximum with positive time offset value, first local maximum with negative time offset value, second local maximum with negative time offset value, higher local maximum with negative time offset value, first local minimum, second local minimum, higher local minimum, first local minimum with positive time offset value, second local minimum with positive time offset value, higher local minimum with positive time offset value, first local minimum with negative time offset value, second local minimum with negative time offset value, higher local minimum with negative time offset value, first local extremum, second local extremum, higher local extremum, first local extremum with positive time offset value, second local extremum with positive time offset value, higher local extremum with positive time offset value, first local extremum with negative time offset value, second local extremum with negative time offset value, and/or higher local extremum with negative time offset value.

A current parameter (e.g. time offset value) may be initialized based on a target value, target profile, trend, past trend, current trend, target speed, speed profile, target speed profile, past speed trend, the motion or movement (e.g. change in position/location) of the object, at least one characteristics and/or STI of the object associated with the movement of object, positional quantity of the object, initial speed of the object associated with the movement of the object, predefined value, initial width of the regression window, time duration, value based on carrier frequency of the signal, value based on subcarrier frequency of the signal, bandwidth of the signal, amount of antennas associated with the channel, noise characteristics, signal h metric, and/or an adaptive (and/or dynamically adjusted) value. The current time offset may be at the center, on the left side, on the right side, and/or at another fixed relative location, of the regression window.

In the presentation, information may be displayed with a map (or environmental model) of the venue. The information may comprise: location, zone, region, area, coverage area, corrected location, approximate location, location with respect to (w.r.t.) a map of the venue, location w.r.t. a segmentation of the venue, direction, path, path w.r.t. the map and/or the segmentation, trace (e.g. location within a time window such as the past 5 seconds, or past 10 seconds; the time window duration may be adjusted adaptively (and/or dynamically); the time window duration may be adaptively (and/or dynamically) adjusted w.r.t. speed, acceleration, etc.), history of a path, approximate regions/zones along a path, history/ summary of past locations, history of past locations of interest, frequently-visited areas, customer traffic, crowd distribution, crowd behavior, crowd control information, speed, acceleration, motion statistics, breathing rate, heart rate, presence/absence of motion, presence/absence of people or pets or object, presence/absence of vital sign, gesture, gesture control (control of devices using gesture), location-based gesture control, information of a location-based operation, identity (ID) or identifier of the respect object (e.g. pet, person, self-guided machine/device, vehicle, drone, car, boat, bicycle, self-guided vehicle, machine with fan, air-conditioner, TV, machine with movable part), identification of a user (e.g. person), information of the user, location/speed/acceleration/direction/motion/gesture/gesture control/ motion trace of the user, ID or identifier of the user, activity of the user, state of the user, sleeping/resting characteristics of the user, emotional state of the user, vital sign of the user, environment information of the venue, weather information of the venue, earthquake, explosion, storm, rain, fire, temperature, collision, impact, vibration, event, door-open event, door-close event, window-open event, window-close event, fall-down event, burning event, freezing event, water-related event, wind-related event, air-movement event, accident event, pseudo-periodic event (e.g. running on treadmill, jumping up and down, skipping rope, somersault, etc.), repeated event, crowd event, vehicle event, gesture of the user (e.g. hand gesture, arm gesture, foot gesture, leg gesture, body gesture, head gesture, face gesture, mouth gesture, eye gesture, etc.).

The location may be 2-dimensional (e.g. with 2D coordinates), 3-dimensional (e.g. with 3D coordinates). The location may be relative (e.g. w.r.t. a map or environmental model) or relational (e.g. halfway between point A and point B, around a corner, up the stairs, on top of table, at the ceiling, on the floor, on a sofa, close to point A, a distance R from point A, within a radius of R from point A, etc.). The location may be expressed in rectangular coordinate, polar coordinate, and/or another representation.

The information (e.g. location) may be marked with at least one symbol. The symbol may be time varying. The symbol may be flashing and/or pulsating with or without changing color/intensity. The size may change over time. The orientation of the symbol may change over time. The symbol may be a number that reflects an instantaneous quantity (e.g. vital sign/ breathing rate/heart rate/gesture/state/status/action/motion of a user, temperature, network traffic, network connectivity, status of a device/machine, remaining power of a device, status of the device, etc.). The rate of change, the size, the orientation, the color, the intensity and/or the symbol may reflect the respective motion. The information may be presented visually and/or described verbally (e.g. using prerecorded voice, or voice synthesis). The information may be described in text. The information may also be presented in a mechanical way (e.g. an animated gadget, a movement of a movable part).

The user-interface (UI) device may be a smart phone (e.g. iPhone, Android phone), tablet (e.g. iPad), laptop (e.g. notebook computer), personal computer (PC), device with graphical user interface (GUI), smart speaker, device with voice/audio/speaker capability, virtual reality (VR) device, augmented reality (AR) device, smart car, display in the car, voice assistant, voice assistant in a car, etc.

The map (or environmental model) may be 2-dimensional, 3-dimensional and/or higher-dimensional. (e.g. a time varying 2D/3D map/environmental model) Walls, windows, doors, entrances, exits, forbidden areas may be marked on the map or the model. The map may comprise floor plan of a facility. The map or model may have one or more layers (overlays). The map/model may be a maintenance map/model comprising water pipes, gas pipes, wiring, cabling, air ducts, crawl-space, ceiling layout, and/or underground layout. The venue may be segmented/subdivided/zoned/grouped into multiple zones/ regions/geographic regions/ sectors/ sections/ territories/ districts/ precincts/ localities/ neighborhoods/ areas/ stretches/expanse such as bedroom, living room, storage room, walkway, kitchen, dining room, foyer, garage, first floor, second floor, rest room, offices, conference room, reception area, various office areas, various warehouse regions, various facility areas, etc. The segments/regions/areas may be presented in a map/model. Different regions may be color-coded. Different regions may be presented with a characteristic (e.g. color, brightness, color intensity, texture, animation, flashing, flashing rate, etc.). Logical segmentation of the venue may be done using the at least one heterogeneous Type 2 device, or a server (e.g. hub device), or a cloud server, etc.

Here is an example of the disclosed system, apparatus, and method. Stephen and his family want to install the disclosed wireless motion detection system to detect motion in their 2000 sqft two-storey town house in Seattle, Washington. Because his house has two storeys, Stephen decided to use one Type 2 device (named A) and two Type 1 devices (named B and C) in the ground floor. His ground floor has predominantly three rooms: kitchen, dining room and living room arranged in a straight line, with the dining room in the middle. The kitchen and the living rooms are on opposite end of the house. He put the Type 2 device (A) in the dining room, and put one Type 1 device (B) in the kitchen and the other Type 1 device (C) in the living room. With this placement of the devices, he is practically partitioning the ground floor into 3 zones (dining room, living room and kitchen) using the motion detection system. When motion is detected by the AB pair and the AC pair, the system would analyze the motion information and associate the motion with one of the 3 zones.

When Stephen and his family go out on weekends (e.g. to go for a camp during a long weekend), Stephen would use a mobile phone app (e.g. Android phone app or iPhone app) to turn on the motion detection system. When the system detects motion, a warning signal is sent to Stephen (e.g. an SMS text message, an email, a push message to the mobile phone app, etc.). If Stephen pays a monthly fee (e.g. $10/month), a service company (e.g. security company) will receive the warning signal through wired network (e.g. broadband) or wireless network (e.g. home WiFi, LTE, 3G, 2.5G, etc.) and perform a security procedure for Stephen (e.g. call him to verify any problem, send someone to check on the house, contact the police on behalf of Stephen, etc.). Stephen loves his aging mother and cares about her well-being when she is alone in the house. When the mother is alone in the house while the rest of the family is out (e.g. go to work, or shopping, or go on vacation), Stephen would turn on the motion detection system using his mobile app to ensure the mother is ok. He then uses the mobile app to monitor his mother's movement in the house. When Stephen uses the mobile app to see that the mother is moving around the house among the 3 regions, according to her daily routine, Stephen knows that his mother is doing ok. Stephen is thankful that the motion detection system can help him monitor his mother's well-being while he is away from the house.

On a typical day, the mother would wake up at around 7 AM. She would cook her breakfast in the kitchen for about 20 minutes. Then she would eat the breakfast in the dining room for about 30 minutes. Then she would do her daily exercise in the living room, before sitting down on the sofa in the living room to watch her favorite TV show. The motion detection system enables Stephen to see the timing of the movement in each of the 3 regions of the house.

When the motion agrees with the daily routine, Stephen knows roughly that the mother should be doing fine. But when the motion pattern appears abnormal (e.g. there is no motion until 10 AM, or she stayed in the kitchen for too long, or she remains motionless for too long, etc.), Stephen suspects something is wrong and would call the mother to check on her. Stephen may even get someone (e.g. a family member, a neighbor, a paid personnel, a friend, a social worker, a service provider) to check on his mother.

At some time, Stephen feels like repositioning the Type 2 device. He simply unplugs the device from the original AC power plug and plug it into another AC power plug. He is happy that the wireless motion detection system is plug-and-play and the repositioning does not affect the operation of the system. Upon powering up, it works right away.

Sometime later, Stephen is convinced that our wireless motion detection system can really detect motion with very high accuracy and very low alarm, and he really can use the mobile app to monitor the motion in the ground floor. He decides to install a similar setup (i.e. one Type 2 device and two Type 1 devices) in the second floor to monitor the bedrooms in the second floor. Once again, he finds that the system set up is extremely easy as he simply needs to plug the Type 2 device and the Type 1 devices into the AC power plug in the second floor. No special installation is needed. And he can use the same mobile app to monitor motion in the ground floor and the second floor. Each Type 2 device in the ground floor/second floor can interact with all the Type 1 devices in both the ground floor and the second floor. Stephen is happy to see that, as he doubles his investment in the Type 1 and Type 2 devices, he has more than double the capability of the combined systems.

According to various embodiments, each CI (CI) may comprise at least one of: channel state information (CSI), frequency domain CSI, frequency representation of CSI, frequency domain CSI associated with at least one sub-band, time domain CSI, CSI in domain, channel response, estimated channel response, channel impulse response (CIR), channel frequency response (CFR), channel characteristics, channel filter response, CSI of the wireless multipath channel, information of the wireless multipath channel, timestamp, auxiliary information, data, meta data, user data, account data, access data, security data, session data, status data, supervisory data, household data, identity (ID), identifier, device data, network data, neighborhood data, environment data, real-time data, sensor data, stored data, encrypted data, compressed data, protected data, and/or another CI. In one embodiment, the disclosed system has hardware components (e.g. wireless transmitter/receiver with antenna, analog circuitry, power supply, processor, memory) and corresponding software components. According to various embodiments of the present teaching, the disclosed system includes Bot (referred to as a Type 1 device) and Origin (referred to as a Type 2 device) for vital sign detection and monitoring. Each device comprises a transceiver, a processor and a memory.

The disclosed system can be applied in many cases. In one example, the Type 1 device (transmitter) may be a small WiFi-enabled device resting on the table. It may also be a WiFi-enabled television (TV), set-top box (STB), a smart speaker (e.g. Amazon echo), a smart refrigerator, a smart microwave oven, a mesh network router, a mesh network satellite, a smart phone, a computer, a tablet, a smart plug, etc. In one example, the Type 2 (receiver) may be a WiFi-enabled device resting on the table. It may also be a WiFi-enabled television (TV), set-top box (STB), a smart speaker (e.g. Amazon echo), a smart refrigerator, a smart microwave oven, a mesh network router, a mesh network satellite, a smart phone, a computer, a tablet, a smart plug, etc. The Type 1 device and Type 2 devices may be placed in/near a conference room to count people. The Type 1 device and Type 2 devices may be in a well-being monitoring system for older adults to monitor their daily activities and any sign of symptoms (e.g. dementia, Alzheimer's disease). The Type 1 device and Type 2 device may be used in baby monitors to monitor the vital signs (breathing) of a living baby. The Type 1 device and Type 2 devices may be placed in bedrooms to monitor quality of sleep and any sleep apnea. The Type 1 device and Type 2 devices may be placed in cars to monitor well-being of passengers and driver, detect any sleeping of driver and detect any babies left in a car. The Type 1 device and Type 2 devices may be used in logistics to prevent human trafficking by monitoring any human hidden in trucks and containers. The Type 1 device and Type 2 devices may be deployed by emergency service at disaster area to search for trapped victims in debris. The Type 1 device and Type 2 devices may be deployed in an area to detect breathing of any intruders. There are numerous applications of wireless breathing monitoring without wearables.

Hardware modules may be constructed to contain the Type 1 transceiver and/or the Type 2 transceiver. The hardware modules may be sold to/used by variable brands to design, build and sell final commercial products. Products using the disclosed system and/or method may be home/office security products, sleep monitoring products, WiFi products, mesh products, TV, STB, entertainment system, HiFi, speaker, home appliance, lamps, stoves, oven, microwave oven, table, chair, bed, shelves, tools, utensils, torches, vacuum cleaner, smoke detector, sofa, piano, fan, door, window, door/window handle, locks, smoke detectors, car accessories, computing devices, office devices, air conditioner, heater, pipes, connectors, surveillance camera, access point, computing devices, mobile devices, LTE devices, 3G/4G/5G/6G devices, UMTS devices, 3GPP devices, GSM devices, EDGE devices, TDMA devices, FDMA devices, CDMA devices, WCDMA devices, TD-SCDMA devices, gaming devices, eyeglasses, glass panels, VR goggles, necklace, watch, waist band, belt, wallet, pen, hat, wearables, implantable device, tags, parking tickets, smart phones, etc.

The summary may comprise: analytics, output response, selected time window, subsampling, transform, and/or projection. The presenting may comprise presenting at least one of: monthly/weekly/daily view, simplified/detailed view, cross-sectional view, small/large form-factor view, color-coded view, comparative view, summary view, animation, web view, voice announcement, and another presentation related to the periodic/repetition characteristics of the repeating motion.

A Type 1/Type 2 device may be an antenna, a device with antenna, a device with a housing (e.g. for radio, antenna, data/signal processing unit, wireless IC, circuits), device that has interface to attach/connect to/link antenna, device that is interfaced to/attached to/connected to/linked to another device/system/computer/phone/network/data aggregator, device with a user interface(UI)/graphical UI/display, device with wireless transceiver, device with wireless transmitter, device with wireless receiver, internet-of-thing (IoT) device, device with wireless network, device with both wired networking and wireless networking capability, device with wireless integrated circuit (IC), Wi-Fi device, device with Wi-Fi chip (e.g. 802.11a/b/g/n/ac/ax standard compliant), Wi-Fi access point (AP), Wi-Fi client, Wi-Fi router, Wi-Fi repeater, Wi-Fi hub, Wi-Fi mesh network router/hub/AP, wireless mesh network router, adhoc network device, wireless mesh network device, mobile device (e.g. 2G/2.5G/3G/3.5G/4G/LTE/ 5G/6G/7G, UMTS, 3GPP, GSM, EDGE, TDMA, FDMA, CDMA, WCDMA, TD-SCDMA), cellular device, base station, mobile network base station, mobile network hub, mobile network compatible device, LTE device, device with LTE module, mobile module (e.g. circuit board with mobile-enabling chip (IC) such as Wi-Fi chip, LTE chip, BLE chip), Wi-Fi chip (IC), LTE chip, BLE chip, device with mobile module, smart phone, companion device (e.g. dongle, attachment, plugin) for smart phones, dedicated device, plug-in device, AC-powered device, battery-powered device, device with processor/memory/set of instructions, smart device/gadget/items: clock, stationary, pen, user-interface, paper, mat, camera, television (TV), set-top-box, microphone, speaker, refrigerator, oven, machine, phone, wallet, furniture, door, window, ceiling, floor, wall, table, chair, bed, night-stand, air-conditioner, heater, pipe, duct, cable, carpet, decoration, gadget, USB device, plug, dongle, lamp/light, tile, ornament, bottle, vehicle, car, AGV, drone, robot, laptop, tablet, computer, harddisk, network card, instrument, racket, ball, shoe, wearable, clothing, glasses, hat, necklace, food, pill, small device that moves in the body of creature (e.g. in blood vessels, in lymph fluid, digestive system), and/or another device. The Type 1 device and/or Type 2 device may be communicatively coupled with: the internet, another device with access to internet (e.g. smart phone), cloud server (e.g. hub device), edge server, local server, and/or storage. The Type 1 device and/or the Type 2 device may operate with local control, can be controlled by another device via a wired/wireless connection, can operate automatically, or can be controlled by a central system that is remote (e.g. away from home).

In one embodiment, a Type B device may be a transceiver that may perform as both Origin (a Type 2 device, a Rx device) and Bot (a Type 1 device, a Tx device), i.e., a Type B device may be both Type 1 (Tx) and Type 2 (Rx) devices (e.g. simultaneously or alternately), for example, mesh devices, a mesh router, etc. In one embodiment, a Type A device may be a transceiver that may only function as Bot (a Tx device), i.e., Type 1 device only or Tx only, e.g., simple IoT devices. It may have the capability of Origin (Type 2 device, Rx device), but somehow it is functioning only as Bot in the embodiment. All the Type A and Type B devices form a tree structure. The root may be a Type B device with network (e.g. internet) access. For example, it may be connected to broadband service through a wired connection (e.g. Ethernet, cable modem, ADSL/HDSL modem) connection or a wireless connection (e.g. LTE, 3G/4G/5G, WiFi, Bluetooth, microwave link, satellite link, etc.). In one embodiment, all the Type A devices are leaf node. Each Type B device may be the root node, non-leaf node, or leaf node.

Type 1 device (transmitter, or Tx) and Type 2 device (receiver, or Rx) may be on same device (e.g. RF chip/IC) or simply the same device. The devices may operate at high frequency band, such as 28GHz, 60GHz, 77GHz, etc. The RF chip may have dedicated Tx antennas (e.g. 32 antennas) and dedicated Rx antennas (e.g. another 32 antennas).

One Tx antenna may transmit a wireless signal (e.g. a series of probe signal, perhaps at 100Hz). Alternatively, all Tx antennas may be used to transmit the wireless signal with beamforming (in Tx), such that the wireless signal is focused in certain direction (e.g. for energy efficiency or boosting the signal to noise ratio in that direction, or low power operation when "scanning" that direction, or low power operation if object is known to be in that direction).

The wireless signal hits an object (e.g. a living human lying on a bed 4 feet away from the Tx/Rx antennas, with breathing and heart beat) in a venue (e.g. a room). The object motion (e.g. lung movement according to breathing rate, or blood-vessel movement according to heart beat) may impact/modulate the wireless signal. All Rx antennas may be used to receive the wireless signal.

Beamforming (in Rx and/or Tx) may be applied (digitally) to "scan" different directions. Many directions can be scanned or monitored simultaneously. With beamforming, "sectors" (e.g. directions, orientations, bearings, zones, regions, segments) may be defined related to the Type 2 device (e.g. relative to center location of antenna array). For each probe signal (e.g. a pulse, an ACK, a control packet, etc.), a channel information or CI (e.g. channel impulse response/CIR, CSI, CFR) is obtained/computed for each sector (e.g. from the RF chip). In breathing detection, one may collect CIR in a sliding window (e.g. 30 sec, and with 100Hz sounding/probing rate, one may have 3000 CIR over 30 sec).

The CIR may have many taps (e.g. N1 components/taps). Each tap may be associated with a time lag, or a time-of-flight (tof, e.g. time to hit the human 4 feet away and back). When a person is breathing in a certain direction at a certain distance (e.g. 4ft), one may search for the CIR in the "certain direction". Then one may search for the tap corresponding to the "certain distance". Then one may compute the breathing rate and heart rate from that tap of that CIR.

One may consider each tap in the sliding window (e.g. 30 second window of "component time series") as a time function (e.g. a "tap function", the "component time series"). One may examine each tap function in search of a strong periodic behavior (e.g. corresponds to breathing, perhaps in the range of 10bpm to 40bpm).

The Type 1 device and/or the Type 2 device may have external connections/links and/or internal connections/links. The external connections (e.g. connection 1110) may be associated with 2G/2.5G/3G/3.5G/4G/LTE/5G/6G/7G/NBIoT, UWB, WiMax, Zigbee, 802.16 etc. The internal connections (e.g., 1114A and 1114B, 1116, 1118, 1120) may be associated with WiFi, an IEEE 802.11 standard, 802.11a/b/g/n/ac/ad/af/ag/ah/ai/aj/aq/ax/ay, Bluetooth, Bluetooth 1.0/1.1/1.2/2.0/2.1/3.0/4.0/4.1/ 4.2/5, BLE, mesh network, an IEEE 802.16/1/1a/1b/2/2a/a/b/c/d/e/f/g/h/i/j/k/l/m/n/o/p/ standard.

The Type 1 device and/or Type 2 device may be powered by battery (e.g. AA battery, AAA battery, coin cell battery, button cell battery, miniature battery, bank of batteries, power bank, car battery, hybrid battery, vehicle battery, container battery, non-rechargeable battery, rechargeable battery, NiCd battery, NiMH battery, Lithium ion battery, Zinc carbon battery, Zinc chloride battery, lead acid battery, alkaline battery, battery with wireless charger, smart battery, solar battery, boat battery, plane battery, other battery, temporary energy storage device, capacitor, fly wheel).

Any device may be powered by DC or direct current (e.g. from battery as described above, power generator, power convertor, solar panel, rectifier, DC-DC converter, with various voltages such as 1.2V, 1.5V, 3V, 5V, 6V, 9V, 12V, 24V, 40V, 42V, 48V, 110V, 220V, 380V, etc.) and may thus have a DC connector or a connector with at least one pin for DC power.

Any device may be powered by AC or alternating current (e.g. wall socket in a home, transformer, invertor, shorepower, with various voltages such as 100V, 110V, 120V, 100-127V, 200V, 220V, 230V, 240V, 220-240V, 100-240V, 250V, 380V, 50Hz, 60Hz, etc.) and thus may have an AC connector or a connector with at least one pin for AC power. The Type 1 device and/or the Type 2 device may be positioned (e.g. installed, placed, moved to) in the venue or outside the venue.

For example, in a vehicle (e.g. a car, truck, lorry, bus, special vehicle, tractor, digger, excavator, teleporter, bulldozer, crane, forklift, electric trolley, AGV, emergency vehicle, freight, wagon, trailer, container, boat, ferry, ship, submersible, airplane, air-ship, lift, mono-rail, train, tram, rail-vehicle, railcar, etc.), the Type 1 device and/or Type 2 device may be an embedded device embedded in the vehicle, or an add-on device (e.g. aftermarket device) plugged into a port in the vehicle (e.g. OBD port/socket, USB port/socket, accessory port/socket, 12V auxiliary power outlet, and/or 12V cigarette lighter port/socket).

For example, one device (e.g. Type 2 device) may be plugged into 12V cigarette lighter/accessory port or OBD port or the USB port (e.g. of a car/truck/vehicle) while the other device (e.g. Type 1 device) may be plugged into 12V cigarette lighter/accessory port or the OBD port or the USB port. The OBD port and/or USB port can provide power, signaling and/or network (of the car/truck/vehicle). The two devices may jointly monitor the passengers including children/babies in the car. They may be used to count the passengers, recognize the driver, detect presence of passenger in a particular seat/position in the vehicle.

In another example, one device may be plugged into 12V cigarette lighter/accessory port or OBD port or the USB port of a car/truck/vehicle while the other device may be plugged into 12V cigarette lighter/accessory port or OBD port or the USB port of another car/truck/vehicle.

In another example, there may be many devices of the same type A (e.g. Type 1 or Type 2) in many heterogeneous vehicles/portable devices/smart gadgets (e.g. automated guided vehicle/AGV, shopping/luggage/moving cart, parking ticket, golf cart, bicycle, smart phone, tablet, camera, recording device, smart watch, roller skate, shoes, jackets, goggle, hat, eye-wear, wearable, Segway, scooter, luggage tag, cleaning machine, vacuum cleaner, pet tag/collar/wearable/implant), each device either plugged into 12V accessory port/OBD port/USB port of a vehicle or embedded in a vehicle. There may be one or more device of the other type B (e.g. B is Type 1 if A is Type 2, or B is Type 2 if A is Type 1) installed at locations such as gas stations, street lamp post, street corners, tunnels, multi-storey parking facility, scattered locations to cover a big area such as factory/ stadium/ train station/ shopping mall/construction site. The Type A device may be located, tracked or monitored based on the TSCI.

The area/venue may have no local connectivity, e.g., broadband services, WiFi, etc. The Type 1 and/or Type 2 device may be portable. The Type 1 and/or Type 2 device may support plug and play.

Pairwise wireless links may be established between many pairs of devices, forming the tree structure. In each pair (and the associated link), a device (second device) may be a non-leaf (Type B). The other device (first device) may be a leaf (Type A or Type B) or non-leaf (Type B). In the link, the first device functions as a bot (Type 1 device or a Tx device) to send a wireless signal (e.g. probe signal) through the wireless multipath channel to the second device. The second device may function as an Origin (Type 2 device or Rx device) to receive the wireless signal, obtain the TSCI and compute a "linkwise analytics" based on the TSCI.

The present teaching discloses a movement tracking system to find location or position or trajectory of a moving object without using a satellite. In some embodiments, the disclosed system uses a sensor, which may be an initial measurement unit (IMU), accelerometer, gyroscope, magnetometer, barometer, etc., combined with a map engine (e.g.

a particle filter) to track motions. This can be implemented easily on existing smart phones (which all have IMU) or many tablets or notebook computers using a simple software upgrade, without any need of additional hardware infrastructure.

In some embodiments, the system uses data obtained from the sensor to compute distance and orientation of the movement, and then uses a map engine to improve tracking accuracy or correct tracking errors based on a particle filter.

In a training phase, a user may be asked to walk for a known distance (e.g. 10m), for the system to capture acceleration information. During a walking action, one stride has two steps: left step due to left foot, and right step due to right foot. As such, there should be two "oscillations" or "cycles" of acceleration. In some embodiments, the system can analyze acceleration of the user to recognize or identify the steps or the strides. Then the system can compute the stride length or step length as a known distance, step and/or number of stride.

In an operating phase, the system can analyze real-time acceleration to recognize/identify each stride or step in a measuring time window. The system may compute distance by multiplying the known stride length (or step length) by number of strides in the measuring time window. Then the system can apply dead reckoning and compute new location based on old location, direction from gyro sensor and the distance.

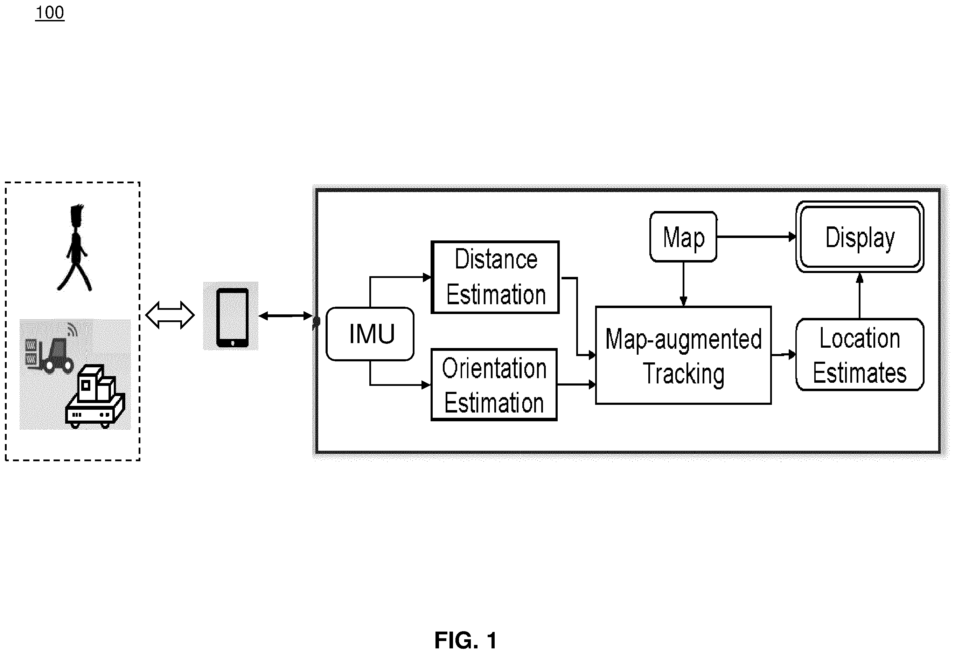

FIG. 1 shows an overall architecture where a tracking system 100 tracks object movements based on inertial sensors (e.g. IMU) built in a mobile device. In some embodiments, the system first calculates the moving distance and orientation from IMU. Then it fuses the two types of estimates to continuously track, in combination with an indoor map.

FIG. 1 depicts an overview of the tracking system's architecture, according to some embodiments of the present disclosure. As shown in FIG. 1, in an example usage scenario, a client, which could be a mobile, wearable, robot, automated guided vehicle (AGV), or any other device equipped with inertial sensors (IMU), may be moving in a venue, e.g. due to a moving user or vehicle carrying the client. The client reads its built-in inertial sensors to obtain measurements or other sensing information. The system's core engine, running on the client, can infer the moving distance and orientation from the measurements and incorporate them together to track the client's continuous locations.

The right part of FIG. 1 shows the system's work flow on a mobile client. After the system performs distance estimation and orientation estimation, the system fuses the estimated moving distance and the estimated moving direction into a map-augmented tracking module. In some embodiments, the system takes the indoor map as input and transforms it into a weighted graph. The output graph is then fed into a novel Graph-based Particle Filter (GPF), which leverages the geometric constraints imposed by the map and jointly learns the accurate 2D location and orientation of a target when it moves. The location estimates are then displayed to users together with the map. Since the disclosed GPF only uses an ordinary indoor map (e.g., an image of the floorplan), it can easily scale to massive buildings with few costs.

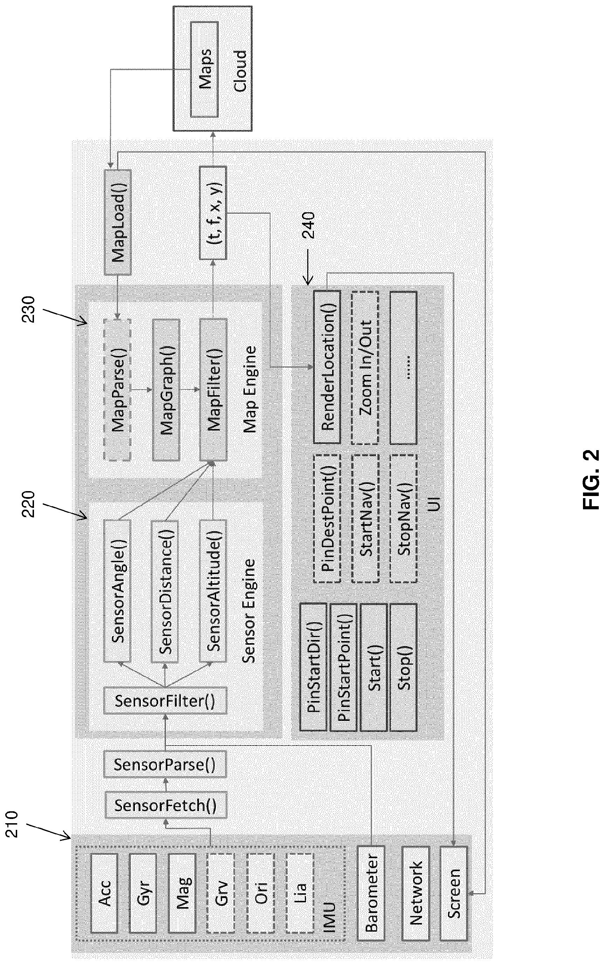

FIG. 2 illustrates a diagram showing operations performed by a movement tracking system using IMU, according to some embodiments of the present disclosure. As shown in FIG. 2, the system includes a sensor block 210, a sensor engine 220, a map engine 230, and a UI 240. The sensor block 210 may include IMU sub-block and barometer (for altitude estimation). The IMU can measure any one of the following: Acc- acceleration, Gyr - gyroscope reading, Mag - magnetometer reading, Grv - gravity reading, Ori- orientation reading.

In some embodiments, there may be several functions between the IMU and the sensor engine 220. For example, a SensorFetch() may be performed by the system to fetch sensor readings to the sensor engine 220; a SensorParse() may be performed by the system to parse sensor readings.

In some embodiments, the sensor engine 220 may perform several functions to estimate parameters related to movement. For example, the sensor engine 220 may perform a function of SensorFilter() to filter noisy reading; and perform functions of SensorAngle(),SensorDistance(), SensorAltitude() based on sensor readings to estimate the moving distance, moving angle, and altitude, respectively.

In some embodiments, the map engine 230 may correct any location error based on particle filtering. For example, the map engine 230 may perform a function of MapParse() to parse map data uploaded in cloud; perform a function of MapGraph() to turn map to graph; and perform a function of MapFilter() to construct map-based graph particle filtering.

The UI block 240 may be used for displaying real-time location of the monitored moving object.

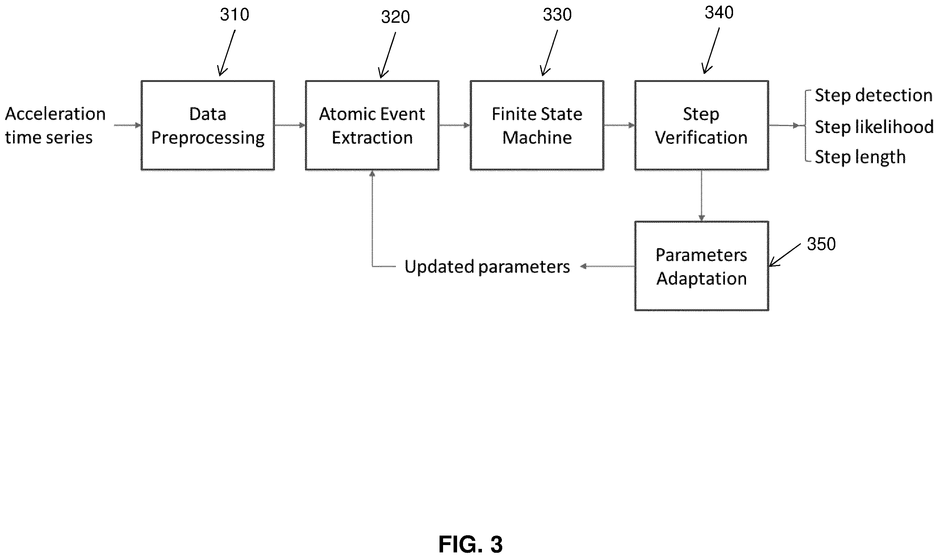

FIG. 3 illustrates a work flow for a sensor engine in a movement tracking system, e.g. the sensor engine 220 in FIG. 2, according to some embodiments of the present disclosure. As shown in FIG. 3, after obtaining acceleration time series from IMU, the sensor engine may perform data preprocessing 310 and atomic event extraction 320 to transform preprocessed accelerations into atomic events.

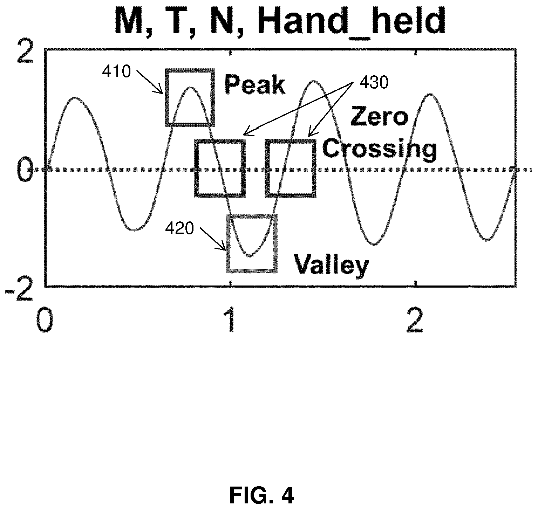

FIG. 4 illustrates exemplary atomic events extracted by a sensor engine in a movement tracking system, according to some embodiments of the present disclosure. As shown in FIG. 4, three basic atomic events can be defined as peak, valley, zero-crossing, respectively. A peak event 410 happens at a local maximum of a processed acceleration data. A valley event 420 happens at a local minimum of a processed acceleration data. A zero-crossing event 430 happens at a zero point crossing the processed acceleration data, either from negative to positive or from positive to negative.

In some embodiments, the three extended atomic events are further defined by considering temporal constraints:

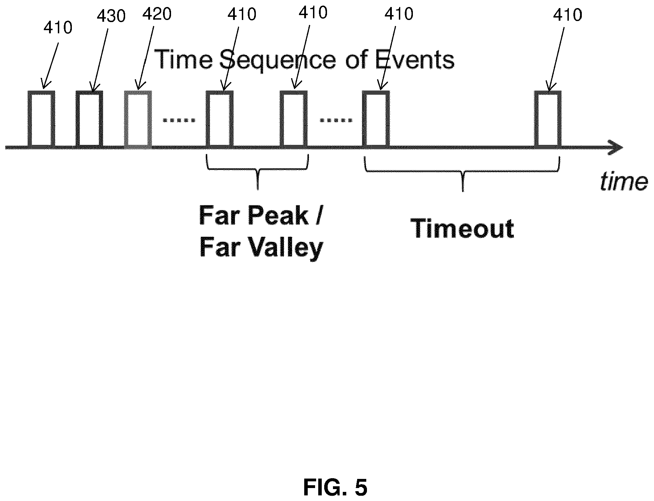

far_peak, far_valley, time_out. FIG. 5 illustrates exemplary temporal constraints for extracted atomic events, according to some embodiments of the present disclosure.

Referring back to FIG. 3, the sensor engine may use a Finite State Machine (FSM) 330 to characterize the acceleration transitions during a step cycle. A normal human walking cycle, albeit varying over individuals and speeds, submits to a typical template viewed from the inertial data. A step cycle includes two phases: the stance and swing phases, which can be further decomposed into seven stages. The stance phase starts with the initial heel contact of one foot and ends when the same foot's toe leaves off the ground. The swing phase follows immediately with the action of the leg swinging forward and lasts until next heel contact. Intuitively, a stride cycle includes two steps, and the stride length is accordingly defined. In one embodiment, one does not differentiate two consecutive steps and thus calculates the step length as stride length, which is, on average, half of the commonly defined stride length. Ideally, during a step, the acceleration induced by walking motion will first increase to a large value; then decreases down to negative values, and finally returns to approximately zero.

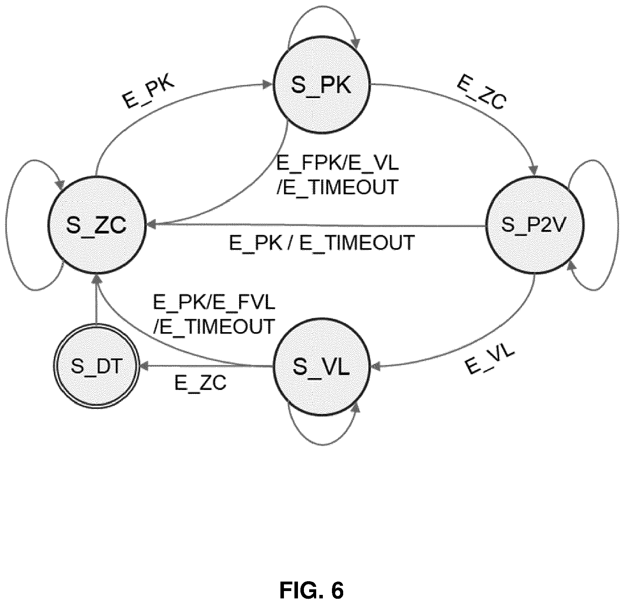

FIG. 6 illustrates an example of a Finite State Machine (FSM) for step detection, according to some embodiments of the present disclosure. As shown in FIG. 6, the FSM contains five different states: S_ZC: the initial and default state when a zero-crossing is detected; S_PK: the state when the acceleration tops a peak; S_P2V: the state that a zero-crossing occurs when the acceleration decreases from the peak to a potential valley; S_VL: the state at an acceleration valley; S_DT: the state that a step is claimed.

To determine the state transition, one can define six basic events, which are all identifiable from the inertial sensor data: E_PK: a peak is detected; E_VL: a valley is detected; E_ZC: a zero-crossing is observed; E_FPK: a far peak is detected after a previous E_PK event without any intermediate events, but with a large time difference exceeding a threshold; E_FVL: a valley similarly defined as E_FPK; E_TIMEOUT: a timeout event will trigger if the FSM stays on one state for too long.

The first three events characterize the key properties of acceleration patterns during walking, while the latter three are derived from the first three coupling with time information to combat noises and non-walking motion interference.

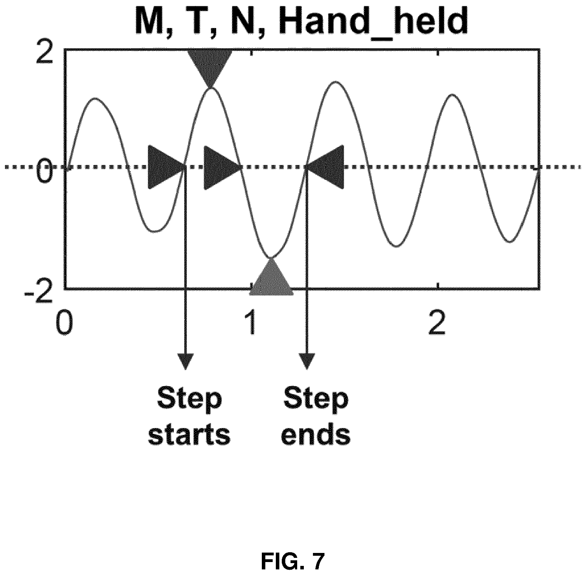

In some embodiments, by default, the algorithm stays on its current state until an event occurs, depending on which it will either transit to another state or remains unchanged. Each state only transits upon the specific events as marked in FIG. 6. All the states except for the default S_ZC is associated with a timeout event. State S_DT will return to S_ZC with any new data arriving. E_FPK and E_FVL are introduced to handle the cases of two consecutive peaks or valleys caused by noisy sensor readings and user motion interference. For example, if a subsequent peak is too close to a former one, the algorithm will treat it as distortion during walking and keep the same state; otherwise, it is more like random motion, and the state is reset to S_ZC. The design of the algorithm achieves many strong sides. For each detected step, the algorithm outputs the timing information of the detected step: The time point of the corresponding S_ZC is the starting time, while the time it enters S_DT implies the ending time. FIG. 7 illustrates an example of a step on the processed acceleration data curve, including a starting time and an ending time of the step based on step detection using the FSM.

The algorithm is efficient, with only a few states. It decomposes the relatively noisy sensor readings as several essential events, which can be identified without relying on many subject-dependent parameters, such that it does not heavily rely on the absolute accelerations.

In some embodiments, the raw sensor data are processed into a series of events-of-interests as inputs for the above FSM. A key challenge here, however, is that the ideal acceleration pattern of a step will greatly vary over different walking patterns and device locations (e.g., hand-held, in the pocket, or the backpack, etc.). Moreover, the sensor data is noisy and could drift over time. To handle various sensor patterns, one can perform a series of preprocessing steps. The accelerometer reports 3D sensor values along its x-axis, y-axis, and z-axis for every sample, denoted as a = $(a_x, a_y, a_z)$. The reported accelerations are in the device frame (rather than the earth's frame) and contain both motion-induced and gravity-forced components. One may need to compensate for gravity and transform the accelerations into the earth's reference frame. Fortunately, modern IMUs have done an excellent job in extracting the gravity component as a fusion sensor (usually named as gravity sensor) based on the accelerometer and gyroscope or magnetometer, which reports a gravity vector g = $(g_x, g_y, g_z)$. Thus, one can easily obtain the magnitude of the projected acceleration free of sensor orientation as: $a = \frac{a \cdot g}{\|g\|}$ . Given a time series of the acceleration magnitude, denoted as A = $[a(t_1), a(t_2), \cdots, a(t_M)]$ where $a(t_i)$ is the reading at time $t_i$, one can further detrend the gravity and potential sensor drifting by removing the moving average trend. Since one may not need to process the data online for stride length estimation, one can employ a relatively long window of 2 s to calculate the moving average. Afterward, one can further smooth the detrended data with a window of 0.25 s.

Then one can perform zero-crossing and peak detection to identify all the events-of-interests from the data series (valley detection is done in the same way as peak detection by multiplying the data by -1). The processing results in a time series of events, denoted as E = $[e(t_1), e(t_2), \cdots, e(t_Q)]$ where $e(t_i) \in \{E\_PK, E\_VL, E\_ZC\}$ is the event occurs at

time $t_i$. The events are sparse over the time series A since typically there are three E_ZC, one E_PK, and one E_VL within a standard step. This event series is then fed into the FSM for step detection. The other three events, i.e., E_FPK, E_FVL, E_TIMEOUT, are detected inside the FSM by examining timestamps of two consecutive E_PK, E_VL and the duration of the state itself, respectively. For example, an E_FPK occurs if $e(t_{i-1}) = e(t_i) = E\_PK$ and $|t_i - t_{i-1}| > th_{max\_gap}$, where $th_{max\_gap}$ indicates a threshold that can be determined by human walking behavior. By involving events (that is, specific relative patterns in the acceleration series) rather than absolute acceleration thresholds, the disclosed FSM is more generalized and robust to different walking patterns and sensor locations.

Referring back to FIG. 3, the sensor engine further performs step verification 340 after step detection using the FSM. In some embodiments, additional constraints are applied to validate a true step. In one example, from step detection, the system can have the step start time $t_s$, end time $t_e$, and the time series of the acceleration data A, and the corresponding peak and valley information. The system may compute step energy as $G = \sum_{t=t_s}^{t_e} |A(t)| dt$, and step residual as $R = \sum_{t=t_s}^{t_e} A(t) dt$. The verification result may be denoted with step likelihood 1 with k = 0 for a false step. The step length $\Delta d = \Delta d_0 * 1$, where $\Delta d_0$ is a default value.

After step verification 340, the system can generate step detection result, step likelihood and step length. In some embodiments, a walking detection may be performed, e.g. after the step verification. In some embodiments, the user status is detected as walking if continuous steps are observed. Otherwise, the user status will be switched to non-walking status. If the time point of one step with that of a previous step is within a maximum pause gap, then the steps are considered continuous. The walking status may be enabled if there are multiple continuous steps. The number of continuous step will be reset to 0 once the walking status is disabled. The walking status will be enabled when the very first step is detected.

As shown in FIG. 3, the sensor engine further performs parameters adaptation 350 after step verification. Parameters used for step counting and step length estimation may be dynamically adapted and personalized for individual users. With more data accumulated for a user, the model will be more accurate and reliable. In some embodiments, the parameters are adapted in an online manner with real-time streaming data. In some embodiments, denoting n as the number of steps observed, the mean step time may be updated based on: $\overline{\Delta t}(n) = \overline{\Delta t}(n - 1) + (\Delta t(n) - \overline{\Delta t}(n - 1))/n$. The mean values for peak_height, valley_height, step_energy, and step_residual can be updated similarly. The variance of step time can be updated based on: $M_2(n) = (\Delta t(n) - \mu_{\Delta t}(n))^2 * \frac{n}{n-1}$; $\sigma^2_{\Delta t}(n) = \frac{M_2(n)}{n}$. The variances of peak_height, valley_height, step_energy, and step_residual can be updated similarly. To adapt to the most recent user behavior, the algorithm may only consider the recent N steps, i.e., n=1 if n>N. New atomic events may be extracted based on the updated parameters to further track the latest object movement.

In some embodiments, the system can estimate moving direction based on a given initial direction $\theta(0)$ and calculate the direction changes from gyroscope data. In some embodiments, the gyroscope readings are first projected onto the earth reference frame, and then only the direction changes in the XY plane are considered. The direction at time t is thus estimated as $\theta(t) = \theta(0) + \int_0^t \delta(t) dt$. Although errors would accumulate over time, they will be mitigated later in the map engine 230.

In some embodiments, the system can also perform altitude estimation. The altitude changes can be detected to infer floor change. In some embodiments, the system can estimate the altitude information from the barometer data. A barometer is a scientific instrument that is used to measure the atmospheric pressure in a certain environment. In one example, at low altitudes above sea level, the pressure decreases by about 1.2 kPa for every 100 meters. A barometer is available as a low-cost sensor on modern smartphones. Although a barometer may be inadequate for absolute altitude estimation, it is sufficient for height change detection, e.g. to estimate floor transition of a moving object.

Referring back to FIG. 2, the map engine 230 may compare the moving distance within a certain window estimated by the map engine 230 and a moving distance estimated by the raw outputs of the sensor engine 220. If the two distances are too different, it is likely that the map engine 230 gets stuck at some point. When such situation is detected, the map engine 230 can increase the searching region for potential particles, iteratively for each moving step, until the region reaches a predefined maximum value. By doing so, the map engine 230 would have better probability to survive under various scenarios.

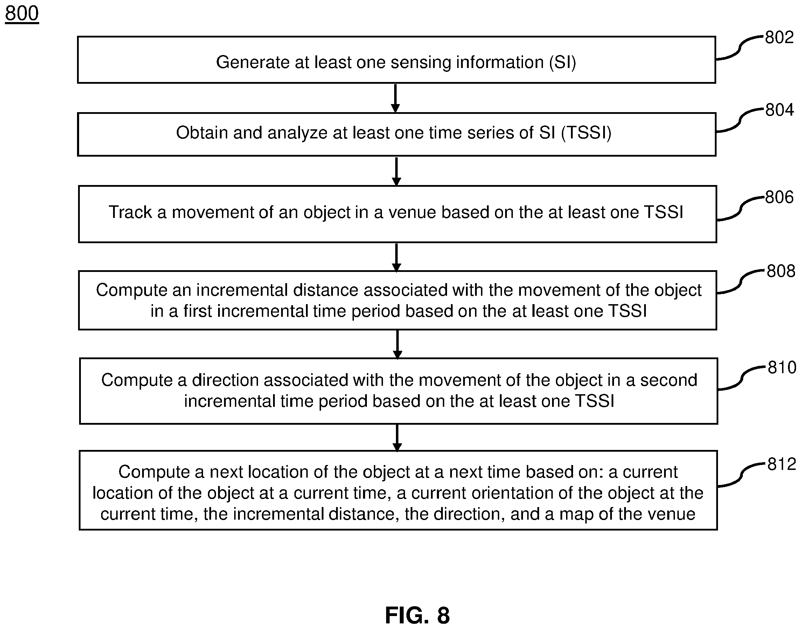

FIG. 8 illustrates a flow chart of an exemplary method 800 for movement tracking based on a sensor, according to some embodiments of the present disclosure. In various embodiments, the method 800 can be performed by the systems disclosed above. At operation 802, at least one sensing information (SI) is generated, e.g. by a sensor. At operation 804, at least one time series of SI (TSSI) is obtained, e.g. from the sensor, and analyzed by a processor, which may be communicatively and/or physically coupled to the sensor. At operation 806, a movement of an object in a venue is tracked based on the at least one TSSI. In some embodiments, the sensor may be physically coupled to the object. At operation 808, an incremental distance associated with the movement of the object in a first incremental time period is computed based on the at least one TSSI. At operation 810, a direction associated with the movement of the object in a second incremental time period is computed based on the at least one TSSI. At operation 812, a next location of the object at a next time is computed based on: a current location of the object at a current time, a current orientation of the object at the current time, the incremental distance, the direction, and a map of the venue. The order of the operations in FIG. 8 may be changed according to various embodiments of the present teaching.

The following numbered clauses provide implementation examples for movement tracking.

Clause 1. A tracking system/method/device/software, comprising: at least one sensor capable of generating at least one sensing information (SI); a processor communicatively coupled with a memory and the at least one sensor; the memory; a set of instructions stored in the memory which, when executed by the processor, cause the processor to: obtaining at least one time series of SI (TSSI) from the at least one sensor, analyzing the at least one TSSI, tracking a movement of an object in a venue based on the at least one TSSI, computing an incremental distance associated with the object movement in an incremental time period and a direction associated with the object movement in another incremental time period based on the at least one TSSI, and computing a next location of the object at a next time based on at least one of: a current location of the object at a current time, a current orientation of the object at the current time, the incremental distance, the direction, or a map of the venue.

In some embodiments, the object may be a human or a smart device with sensor(s) (e.g. IMU). The movement of the object may be the human walking or running. The sensor may be an initial measurement unit (IMU), accelerometer, gyroscope, magnetometer, or barometer. Accelerometer may give acceleration which may be analyzed to yield "steps" or "stride". Gyroscope may give direction/orientation. Magnetometer may be used to improve accuracy of direction. Barometer may be used to determine if user is moving up or down stairs.

Clause 2. The tracking system/method/device/software of clause 1: wherein the at least one sensor comprises at least one of: initial measurement unit (IMU), accelerometer, gyroscope, magnetometer, or barometer; wherein the at least one SI comprises at least one of: force, acceleration, acceleration force, acceleration in instantaneous rest frame, orientation, angle, angular velocity, an angle, magnetic field direction, magnetic field strength, magnetic field change, or air pressure.

Clause 3. The tracking system/method/device/software of clause 1 or clause 2, wherein the motion direction associated with the object motion in the another incremental time period is computed based on at least one of: a SI from a gyroscope, a SI from a magnetometer, at least one directions in the another incremental time period, a direction before the another incremental time period, a direction after the another incremental time period, a direction associated with a beginning of the another incremental time period, a direction associated with an end of the another incremental time period, a direction of the motion at the current time, a direction of the motion at the next time, a direction of the motion at another time, a weighted average of more than one directions associated with the another incremental time period, or a median of more than one directions associated with the another incremental time period.

Clause 4. The tracking system/method/device/software according to any of clauses 1-3, further comprising the set of instructions causing the processor to: determining an underlying rhythmic motion associated with the object movement; identifying a rhythmic behavior of the at least one TSSI associated with the underlying rhythmic motion; tracking the movement of the object based on the rhythmic behavior of the TSSI; computing the incremental distance based on the rhythmic behavior of the TSSI.

Clause 5. The tracking system/method/device/software of clause 4, further comprising: computing a time series of intermediate quantity (IQ) based on the at least one TSSI; identifying another rhythmic behavior of the time series of IQ (TSIQ) associated with the underlying rhythmic motion; tracking the movement of the object based on the another rhythmic behavior of the TSIQ; computing the incremental distance based on the another rhythmic behavior of the TSIQ.

Clause 6. The tracking system/method/device/software of clause 5, further comprising the set of instructions causing the processor to: identifying a time window of stable rhythmic behavior of the at least one TSSI or the TSIQ associated with stable underlying rhythmic motion associated with the object movement; adding a time stamp to the time window if at least one of the following is satisfied: a weighted average of the IQ in a sliding window around the time stamp is greater than a first threshold, a feature of an autocorrelation function of IQ around the time stamp is greater than a second threshold, and another criterion associated with the time stamp.

Clause 7. The tracking system/method/device/software of clause 5 or clause 6, further comprising the set of instructions causing the processor to: identifying at least one local characteristic point of IQ in a time window, wherein the local characteristic point comprises at least one of: local maximum, local minimum, zero crossing of IQ from positive to negative, zero crossing of IQ from negative to positive, segmenting the time window into at least one segment based on time stamps associated with the at least one local characteristic points, each segment spanning from a local characteristic point to another local characteristic point, and identifying at least one of: complete cycle, rhythm cycle, compound cycle, extended cycle, double cycle, quad cycle, partial cycle, half cycle, quarter cycle, gait cycle, stride cycle, step cycle, or hand cycle.

Clause 8. The tracking system/method/device/software according to any of clauses 5-7, further comprising the set of instructions causing the processor to: computing a time series of mean-subtracted IQ (MSIQ) by subtracting a time series of local means from the TSIQ, wherein the local means are obtained by applying a moving average filter to the TSIQ, segmenting the time series of MSIQ (TSMSIQ) in a time window into at least one preliminary segments comprising MSIQ with same polarity, identifying at least one local characteristic point of MSIQ of each preliminary segments, wherein the local characteristic point comprises at least one of: local maximum, local minimum, reflection point, zero crossing of MSIQ from positive to negative, zero crossing of MSIQ from negative to positive, centroid of preliminary segments, median, first quartile, third quartile, percentile, or mode, segmenting the TSMSIQ into at least one segment based on the at least local characteristic point, and identifying at least one of: complete cycle, rhythm cycle, compound cycle, extended cycle, double cycle, quad cycle, partial cycle, half cycle, quarter cycle, gait cycle, stride cycle, step cycle, or hand cycle.

Clause 9. The tracking system/method/device/software of clause 7 or 8, further comprising the set of instructions causing the processor to: identifying a complete cycle of the TSIQ (or the TSMSIQ or a TSSI) as at least one of: a first time period from a first local maximum of the TSIQ (or the TSMSIQ or the TSSI) to a second local maximum of the TSIQ (or the TSMSIQ or the TSSI), a second time period from a first local maximum of the TSIQ (or the TSMSIQ or the TSSI) to a local minimum of the TSIQ (or the TSMSIQ or the TSSI) to a second local maximum of the TSIQ (or the TSMSIQ or the TSSI), a third time period from a first local maximum of the TSIQ (or the TSMSIQ or the TSSI) to a zero crossing of the TSIQ (or the TSMSIQ or the TSSI) to a second local maximum of the TSIQ (or the TSMSIQ or the TSSI), a fourth time period from a first local minimum of the TSIQ (or the TSMSIQ or the TSSI) to a second local minimum of the TSIQ (or the TSMSIQ or the TSSI), a fifth time period from a first local minimum of the TSIQ (or the TSMSIQ or the TSSI) to a local maximum of the TSIQ (or the TSMSIQ or the TSSI) to a second local minimum of the TSIQ (or the TSMSIQ or the TSSI), a sixth time period from a first local minimum of the TSIQ (or the TSMSIQ or the TSSI) to a zero crossing of the TSIQ (or the TSMSIQ or the TSSI) to a second local minimum of the TSIQ (or the TSMSIQ or the TSSI), a seventh time period from a first zero crossing of the TSIQ (or the TSMSIQ or the TSSI) to a local maximum of the TSIQ (or the TSMSIQ or the TSSI) to a second zero crossing of the TSIQ (or the TSMSIQ or the TSSI) to local minimum of the TSIQ (or the TSMSIQ or the TSSI) to a third zero crossing of the TSIQ (or the TSMSIQ or the TSSI), an eighth time period from a first zero crossing to a local minimum to a second zero crossing to local maximum to a third zero crossing, a ninth time period from a first negative-to-positive zero crossing to a positive-to-negative zero crossing to a second negative-to-positive zero crossing, a tenth time period from a first positive-to-negative zero crossing to a negative-to-positive zero crossing to a second positive-to-negative zero crossing, or a cycle of a oscillatory behavior.

Clause 10. The tracking system/method/device/software of clause 9, further comprising the set of instructions causing the processor to: recognizing the complete cycle based on a finite-state machine (FSM) with local characteristic points as input for state transitions.

Clause 11. The tracking system/method/device/software of clause 9 or clause 10, further comprising the set of instructions causing the processor to perform at least one of the following: identifying a rhythm cycle as a complete cycle, identifying a compound cycle as more than one complete cycles, identifying an extended cycle as more than one complete cycles, identifying a double cycle as two consecutive cycles, identifying a quad cycle as four consecutive cycles, identifying a partial cycle as identifying at least two local characteristic points matching at least one of: the first time period, the second time period, the third time period, the fourth time period, the fifth time period, the sixth time period, the seventh time period, the eighth time period, the ninth time period, the tenth time period, or the cycle of the oscillatory behavior, identifying a step cycle as a complete cycle, recognizing a stride cycle as a double cycle, recognizing a gait cycle as either a step cycle or a stride cycle, recognizing a hand cycle as either a complete cycle or a double cycle, 12. The tracking system/method/device/software of clause 7 or 8 further comprising the set of instructions causing the processor to: computing at least one cycle feature based on at least one of: the IQ in the time window, the at least one local characteristic point of IQ, the at least one segment or the at least one cycle.

Clause 13. The tracking system/method/device/software of clause 12: wherein the at least one cycle feature to comprise at least one of the following gait-speed-related features: at least one gait speed each being associated with a time stamp in the time window, wherein the gait speed is preprocessed, at least one mean speed each being associated with a time stamp in the time window and being at least one of: an average, a weighted average and a trimmed mean, of gait speed within a subwindow around the time stamp, at least one maximum speed each being associated with a time stamp in the time window and being maximum of gait speed within a subwindow around the time stamp, at least one minimum speed each being associated with a time stamp in the time window and being minimum of gait speed within a subwindow around the time stamp, at least one speed variance each being associated with a time stamp in the time window and being variance of gait speed within a subwindow around the time stamp, at least one speed deviation each being associated with a time stamp in the time window and being a X-percentile of a sample distribution of mean-subtracted speed in a subwindow of the time window around the time stamp, wherein the mean-subtracted speed is the gait speed minus the mean speed and X is a number between 0 and 100, at least one maximum positive speed deviation each being associated with a time stamp and being the maximum of mean-subtracted speed in a subwindow of the time window around the time stamp, and at least one maximum negative speed deviation each being associated with a time stamp and being the maximum of negative of mean-subtracted speed in a subwindow of the time window around the time stamp, at least one speed peak variance each being associated with a time stamp and being variance of at least one local peak (local maximum) of gait speed in a subwindow of the time window around the time stamp, at least one speed valley variance each being associated with a time stamp and being variance of at least one local valley (minimum) of gait speed in a subwindow of the time window around the time stamp, at least one speed ACF k-th peak each being associated with a time stamp and being a k-th local peak of an autocorrelation function (ACF) of gait speed at the time stamp, wherein k is a positive integer, at least one mean speed ACF k-th peak each being associated with a time stamp and being at least one of: an average, a weighted average and a trimmed mean, of speed ACF k-th peak in a subwindow of the time window around the time stamp, at least one speed ACF k-th peak variance each being associated with a time stamp and being variance of speed ACF k-th peak in a subwindow of the time window around the time stamp, at least one speed ACF k-th peak-difference each being associated with a time stamp and being difference of k-th local peak and (k-1)-th local peak of ACF of gait speed, at the time stamp, wherein k is a positive integer, at least one mean speed ACF k-th peak-difference each being associated with a time stamp and being at least one of: an average, a weighted average and a trimmed mean, of speed ACF k-th peak-difference in a subwindow of the time window around the time stamp, at least one speed ACF k-th peak-difference variance each being associated with a time stamp and being variance of speed ACF k-th peak-difference in a subwindow of the time window around the time stamp, at least one speed ACF peak-count each being associated with a time stamp and being a count of speed ACF significant peak at the time stamp, at least one mean speed ACF k-th peak-difference each being associated with a time stamp and being at least one of: an average, a weighted average and a trimmed mean, of speed ACF peak-count in a subwindow of the time window around the time stamp, at least one speed ACF k-th peak-difference variance each being associated with a time stamp and being variance of speed ACF peak-count in a subwindow of the time window around the time stamp, at least one speed ACF peak-count-pdf each being associated with a time stamp and being a sample probability of speed ACF peak-count being k in a subwindow of the time window around the time stamp, where k is a non-negative integer, at least one recurrent plot (RP) each being associated with a time stamp and being a 2-dimensional plot of $R(i,j)$, wherein both i and j are running time index in a subwindow of the time window around the time stamp, wherein $R(i,j)$ is a scalar similarity function of a first feature vector at time i and a second feature vector at time j, wherein each of first feature vector and second feature vectors is a feature vector at a time t comprising at least one gait feature in a sliding subwindow of the time window around time t, at least one recurrent plot (RP) feature each being associated with a time stamp and comprise at least one of: recurrence rate, determinism, entropy, average diagonal line and another RP feature, at least one scaled speed-peak ACF each being a speed ACF associated with a time stamp of a local peak (local maximum) of gait speed in a subwindow of the time window, the speed ACF being scaled such that its first peak occurs at a selected time lag, at least one scaled peak ACF feature each a feature of the at least one scaled speed-peak ACF, wherein a subwindow is at least one of: the whole time window, a sliding window, at least one gait cycle, at least one step segment and another subwindow, at least one harmonic ratio each being associated with a gait cycle and being a ratio of sum of amplitude of even harmonics of Fourier transform of gait speed in the gait cycle to sum of amplitude of odd harmonics of the Fourier transform of gait speed in the gait cycle, at least one harmonic feature each being associated with a gait cycle and being computed based on a function of even terms of a frequency transform of gait speed in the gait cycle and on the function of odd terms of the frequency transform, at least one generalized harmonic feature each being associated with a gait cycle and being computed based on a first function of even terms of a transform of a gait feature in the gait cycle and a second function of odd terms of the transform of the gait feature, a function of at least one of the above features, and a function of another feature.

Clause 14. The tracking system/method/device/software of clause 12 or clause 13: wherein the at least one cycle feature to comprise at least one of the following gait-acceleration-related features: at least one gait speed each being associated with a time stamp in the time window, at least one gait acceleration each being associated with a time stamp in the time window and being a derivative of gait speed, at least one mean acceleration each being associated with a time stamp in the time window and being at least one of: an average, a weighted average and a trimmed mean, of gait acceleration in a subwindow of the time window around the time stamp, at least one maximum acceleration each being associated with a time stamp in the time window and being a maximum of gait acceleration in a subwindow of the time window around the time stamp, at least one minimum acceleration each being associated with a time stamp in the time window and being a minimum of gait acceleration in a subwindow of the time window around the time stamp, at least one acceleration variance each being associated with a time stamp in the time window and being a variance of gait acceleration in a subwindow of the time window around the time stamp, at least one acceleration deviation each being associated with a time stamp in the time window and being a X-percentile of a sample distribution of mean-subtracted acceleration in a subwindow of the time window around the time stamp, wherein the mean-subtracted acceleration is the gait acceleration minus the mean acceleration and X is a number between 0 and 100, at least one maximum acceleration deviation each being associated with a time stamp and being the maximum of mean-subtracted acceleration in a subwindow of the time window around the time stamp, and at least one maximum negative acceleration deviation each being associated with a time stamp and being the maximum of negative of mean-subtracted acceleration in a subwindow of the time window around the time stamp, at least one acceleration peak variance each being associated with a time stamp and being variance of at least one local peak (local maximum) of gait acceleration in a subwindow of the time window around the time stamp, at least one acceleration valley variance each being associated with a time stamp and being variance of at least one local valley (local minimum) of gait acceleration in a subwindow of the time window around the time stamp, at least one acceleration ACF k-th peak each being associated with a time stamp and being a k-th local peak of an autocorrelation function (ACF) of gait acceleration, at the time stamp, wherein k is a positive integer, at least one mean acceleration ACF k-th peak each being associated with a time stamp and being at least one of: an average, a weighted average and a trimmed mean, of acceleration ACF k-th peak in a subwindow of the time window around the time stamp, at least one acceleration ACF k-th peak variance each being associated with a time stamp and being variance of acceleration ACF k-th peak in a subwindow of the time window around the time stamp, at least one acceleration ACF k-th peak-difference each being associated with a time stamp and being difference of k-th local peak and (k-1)-th local peak of ACF of gait acceleration, at the time stamp, wherein k is a positive integer, at least one mean acceleration ACF k-th peak-difference each being associated with a time stamp and being at least one of: an average, a weighted average and a trimmed mean, of acceleration ACF k-th peak-difference in a subwindow of the time window around the time stamp, at least one acceleration ACF k-th peak-difference variance each being associated with a time stamp and being variance of acceleration ACF k-th peak-difference in a subwindow of the time window around the time stamp, at least one acceleration ACF peak-count each being associated with a time stamp and being a count of acceleration ACF significant peak at the time stamp, at least one mean acceleration ACF k-th peak-difference each being associated with a time stamp and being at least one of: an average, a weighted average and a trimmed mean, of acceleration ACF peak-count in a subwindow of the time window around the time stamp, at least one acceleration ACF k-th peak-difference variance each being associated with a time stamp and being variance of acceleration ACF peak-count in a subwindow of the time window around the time stamp, at least one acceleration ACF peak-count-pdf each being associated with a time stamp and being a sample probability of acceleration ACF peak-count being k in a subwindow of the time window around the time stamp, where k is a non-negative integer, at least one recurrent plot (RP) each being associated with a time stamp and being a 2-dimensional plot of R(i,j), wherein both i and j are running time index in a subwindow of the time window around the time stamp, wherein R(i,j) is a scalar similarity function of a first feature vector at time i and a second feature vector at time j, wherein each of first feature vector and second feature vectors is a feature vector at a time t comprising at least one gait feature in a sliding subwindow of the time window around time t, at least one recurrent plot (RP) feature each being associated with a time stamp and comprise at least one of: recurrence rate, determinism, entropy, average diagonal line and another RP feature, at least one scaled acceleration-peak ACF each being an acceleration ACF associated with a time stamp of a local peak (local maximum) of gait acceleration in a subwindow of the time window, the acceleration ACF being scaled such that its first peak occurs at a selected time lag, at least one scaled peak ACF feature each a feature of the at least one scaled acceleration-peak ACF, wherein a subwindow is at least one of: the whole time window, a sliding window, at least one gait cycle, at least one step segment and another subwindow, at least one harmonic ratio each being associated with a gait cycle and being a ratio of sum of amplitude of even harmonics of Fourier transform of gait acceleration in the gait cycle to sum of amplitude of odd harmonics of the Fourier transform, at least one harmonic feature each being associated with a gait cycle and being computed based on a function of even terms of a frequency transform of gait acceleration in the gait cycle and on the function of odd terms of the frequency transform, at least one generalized harmonic feature each being associated with a gait cycle and being computed based on a first function of even terms of a transform of a gait feature in the gait cycle and a second function of odd terms of the transform of the gait feature, a function of at least one of the above features, and a function of another feature.

Clause 15. The tracking system/method/device/software according to any of clauses 12-14: wherein the at least one gait feature to comprise at least one of the following step-related features: at least one gait speed each being associated with a time stamp in the time window, at least one step length each being associated with a time stamp in the time window and being an integration of gait speed over a respective step segment around the time stamp, at least one step period each being associated with a time stamp in the time window and being duration of a respective step segment around the time stamp, at least one step frequency each being associated with a time stamp in the time window and being inversely proportion to a respective step period around the time stamp, at least one step-wise mean speed each being associated with a time stamp in the time window and being at least one of: an average, a weighted average and a trimmed mean, of gait speed in a respective step segment around the time stamp, at least one step-wise max speed each being associated with a time stamp in the time window and being a maximum gait speed in a respective step segment around the time stamp, at least one step-wise min speed each being associated with a time stamp in the time window and being a minimum gait speed in a respective step segment around the time stamp, at least one step-wise speed variance each being associated with a time stamp in the time window and being a variance of gait speed in a respective step segment around the time stamp, at least one step-wise speed deviation each being associated with a time stamp in the time window and being a X-percentile of a sample distribution of mean-subtracted speed in a respective step segment around the time stamp, wherein the mean-subtracted speed is the gait speed minus a step-wise mean speed and X is a number between 0 and 100, at least one step-wise mean acceleration each being associated with a time stamp in the time window and being at least one of: an average, a weighted average and a trimmed mean, of gait acceleration in a respective step segment around the time stamp, wherein the gait acceleration is a derivative of gait speed, at least one step-wise max acceleration each being associated with a time stamp in the time window and being a maximum gait acceleration in a respective step segment around the time stamp, at least one step-wise min acceleration each being associated with a time stamp in the time window and being a minimum gait acceleration in a respective step segment around the time stamp, at least one step-wise acceleration variance each being associated with a time stamp in the time window and being a variance of gait acceleration in a respective step segment around the time stamp, at least one step-wise acceleration deviation each being associated with a time stamp in the time window and being a X-percentile of a sample distribution of mean-subtracted acceleration in a respective step segment around the time stamp, wherein the mean-subtracted acceleration is the gait acceleration minus the step-wise mean acceleration and X is a number between 0 and 100, at least one step statistics each being associated with a time stamp in the time window and being at least one of: step length, step period, step frequency, step-wise mean speed, step-wise max speed, step-wise min speed, step-wise speed variance, step-wise speed deviation, step-wise mean acceleration, step-wise max acceleration, step-wise min acceleration, step-wise acceleration variance, step-wise acceleration deviation, step-wise speed peak variance, step-wise speed valley variance, step-wise speed ACF k-th peak, step-wise mean speed ACF k-th peak, step-wise speed ACF k-th peak variance, step-wise speed ACF k-th peak-difference, step-wise mean speed ACF k-th peak-difference, step-wise speed ACF k-th peak-difference variance, step-wise speed ACF peak-count, step-wise mean speed ACF k-th peak-difference, step-wise speed ACF k-th peak-difference variance, step-wise speed ACF peak-count-pdf, step-wise recurrent plot (RP), step-wise recurrent plot (RP) feature, step-wise scaled speed-peak ACF, step-wise scaled peak ACF feature, step-wise harmonic ratio, step-wise harmonic feature, step-wise generalized harmonic feature, step-wise symmetry measure, a function of at least one of the above statistics, a function of another statistics, and a function of another step statistics, at least one mean step statistics each being associated with a time stamp in the time window and being at least one of: an average, a weighted average, and a trimmed mean, of the step statistics in a subwindow of the time window around the time stamp, at least one odd mean step statistics each being associated with a time stamp in the time window and being at least one of: an average, a weighted average, and a trimmed mean, of the step statistics of odd step segments in a subwindow of the time window around the time stamp, at least one even mean step statistics each being associated with a time stamp in the time window and being at least one of: an average, a weighted average, and a trimmed mean, of the step statistics of even step segments in a subwindow of the time window around the time stamp, at least one max step statistics each being associated with a time stamp in the time window and being a maximum of the step statistics in a subwindow of the time window around the time stamp, at least one odd max step statistics each being associated with a time stamp in the time window and being a maximum of the step statistics of odd step segments in a subwindow of the time window around the time stamp, at least one even max step statistics each being associated with a time stamp in the time window and being a maximum of the step statistics of even step segments in a subwindow of the time window around the time stamp, at least one min step statistics each being associated with a time stamp in the time window and being a minimum of the step statistics in a subwindow of the time window around the time stamp, at least one odd min step statistics each being associated with a time stamp in the time window and being a minimum of the step statistics of odd step segments in a subwindow of the time window around the time stamp, at least one even min step statistics each being associated with a time stamp in the time window and being a minimum of the step statistics of even step segments in a subwindow of the time window around the time stamp, at least one step statistics variance each being associated with a time stamp in the time window and being variance of step statistics in a subwindow of the time window around the time stamp, at least one odd step statistics variance each being associated with a time stamp in the time window and being variance of step statistics of odd step segments in a subwindow of the time window around the time stamp, at least one even step statistics variance each being associated with a time stamp in the time window and being variance of step statistics of even step segments in a subwindow of the time window around the time stamp, at least one step statistics deviation each being associated with a time stamp in the time window and being a X-percentile of a sample distribution of mean-subtracted step statistics in a subwindow of the time window around the time stamp, wherein the mean-subtracted step statistics of an odd step segment is the step statistics of the odd step segment minus odd mean step statistics and X is a number between 0 and 100, at least one odd step statistics deviation each being associated with a time stamp in the time window and being a X-percentile of a sample distribution of mean-subtracted step statistics of odd step segments in a subwindow of the time window around the time stamp, wherein the mean-subtracted step statistics of an odd step segment is the step statistics of the odd step segment minus odd mean step statistics and X is a number between 0 and 100, at least one even step statistics deviation each being associated with a time stamp in the time window and being a X-percentile of a sample distribution of mean-subtracted step statistics of even step segments in a subwindow of the time window around the time stamp, wherein the mean-subtracted step statistics of an even step segment is the step statistics of the even step segment minus even mean step statistics and X is a number between 0 and 100, at least one statistics of step statistics each being associated with a time stamp in the time window and being at least one of: mean step statistics, max step statistics, min step statistics, step statistics variance, step statistics deviation, and another statistics of step statistics, at least one odd statistics of step statistics each being associated with a time stamp in the time window and being at least one of: odd mean step statistics, odd max step statistics, odd min step statistics, odd step statistics variance, odd step statistics deviation, and another odd statistics of step statistics, at least one even statistics of step statistics each being associated with a time stamp in the time window and being at least one of: even mean step statistics, even max step statistics, even min step statistics, even step statistics variance, even step statistics deviation, and another even statistics of step statistics, a left step statistics, a right step statistics, a front left step statistics, a front right step statistics, a back left step statistics, a back right step statistics, a wavefront step statistics, an odd wavefront step statistics, an even wavefront step statistics, a ratio of even statistics of the step statistics and odd statistics of the step statistics, a difference of even statistics of the step statistics and odd statistics of the step statistics, a similarity measure of even statistics of the step statistics and odd statistics of the step statistics, a function of at least one of: statistics of step statistics, odd statistics of step statistics, and even statistics of step statistics, a ratio of a function of even statistics of the step statistics and a function of odd statistics of the step statistics, a first function of a second function of even statistics of the step statistics and a third function of odd statistics of the step statistics, and another statistics of the step statistics.

Clause 16. The tracking system/method/device/software according to any of clauses 12-15: wherein the at least one gait feature to comprise at least one of the following stride-related features: at least one gait speed each being associated with a time stamp in the time window, at least one stride length each being associated with a time stamp in the time window and being an integration of gait speed over a respective gait cycle around the time stamp, at least one stride period each being associated with a time stamp in the time window and being duration of a respective gait cycle around the time stamp, at least one stride frequency each being associated with a time stamp in the time window and being inversely proportion to a respective stride period around the time stamp, at least one stride-wise mean speed each being associated with a time stamp in the time window and being at least one of: an average, a weighted average and a trimmed mean, of gait speed in a respective gait cycle around the time stamp, at least one stride-wise max speed each being associated with a time stamp in the time window and being a maximum gait speed in a respective gait cycle around the time stamp, at least one stride-wise min speed each being associated with a time stamp in the time window and being a minimum gait speed in a respective gait cycle around the time stamp, at least one stride-wise speed variance each being associated with a time stamp in the time window and being a variance of gait speed in a respective gait cycle around the time stamp, at least one stride-wise speed deviation each being associated with a time stamp in the time window and being a X-percentile of a sample distribution of mean-subtracted speed in a respective gait cycle around the time stamp, wherein the mean-subtracted speed is the gait speed minus a stride-wise mean speed and X is a number between 0 and 100, at least one stride-wise mean acceleration each being associated with a time stamp in the time window and being at least one of: an average, a weighted average and a trimmed mean, of gait acceleration in a respective gait cycle around the time stamp, wherein the gait acceleration is a derivative of gait speed, at least one stride-wise max acceleration each being associated with a time stamp in the time window and being a maximum gait acceleration in a respective gait cycle around the time stamp, at least one stride-wise min acceleration each being associated with a time stamp in the time window and being a minimum gait acceleration in a respective gait cycle around the time stamp, at least one stride-wise acceleration variance each being associated with a time stamp in the time window and being a variance of gait acceleration in a respective gait cycle around the time stamp, at least one stride-wise acceleration deviation each being associated with a time stamp in the time window and being a X-percentile of a sample distribution of mean-subtracted acceleration in a respective gait cycle around the time stamp, wherein the mean-subtracted acceleration is the gait acceleration minus the stride-wise mean acceleration and X is a number between 0 and 100, at least one stride statistics each being associated with a time stamp in the time window and being at least one of: stride length, stride period, stride frequency, stride-wise mean speed, stride-wise max speed, stride-wise min speed, stride-wise speed variance, stride-wise speed deviation, stride-wise mean acceleration, stride-wise max acceleration, stride-wise min acceleration, stride-wise acceleration variance, stride-wise acceleration deviation, stride-wise speed peak variance, stride-wise speed valley variance, stride-wise speed ACF k-th peak, stride-wise mean speed ACF k-th peak, stride-wise speed ACF k-th peak variance, stride-wise speed ACF k-th peak-difference, stride-wise mean speed ACF k-th peak-difference, stride-wise speed ACF k-th peak-difference variance, stride-wise speed ACF peak-count, stride-wise mean speed ACF k-th peak-difference, stride-wise speed ACF k-th peak-difference variance, stride-wise speed ACF peak-count-pdf, stride-wise recurrent plot (RP), stride-wise recurrent plot (RP) feature, stride-wise scaled speed-peak ACF, stride-wise scaled peak ACF feature, stride-wise harmonic ratio, stride-wise harmonic feature, stride-wise generalized harmonic feature, stride-wise symmetry measure, a function of at least one of the above statistics, a function of another statistics, and a function of another stride statistics, at least one mean stride statistics each being associated with a time stamp in the time window and being at least one of: an average, a weighted average, and a trimmed mean, of the stride statistics in a subwindow of the time window around the time stamp, at least one odd mean stride statistics each being associated with a time stamp in the time window and being at least one of: an average, a weighted average, and a trimmed mean, of the stride statistics of odd gait cycles in a subwindow of the time window around the time stamp, at least one even mean stride statistics each being associated with a time stamp in the time window and being at least one of: an average, a weighted average, and a trimmed mean, of the stride statistics of even gait cycles in a subwindow of the time window around the time stamp, at least one max stride statistics each being associated with a time stamp in the time window and being a maximum of the stride statistics in a subwindow of the time window around the time stamp, at least one odd max stride statistics each being associated with a time stamp in the time window and being a maximum of the stride statistics of odd gait cycles in a subwindow of the time window around the time stamp, at least one even max stride statistics each being associated with a time stamp in the time window and being a maximum of the stride statistics of even gait cycles in a subwindow of the time window around the time stamp, at least one min stride statistics each being associated with a time stamp in the time window and being a minimum of the stride statistics in a subwindow of the time window around the time stamp, at least one odd min stride statistics each being associated with a time stamp in the time window and being a minimum of the stride statistics of odd gait cycles in a subwindow of the time window around the time stamp, at least one even min stride statistics each being associated with a time stamp in the time window and being a minimum of the stride statistics of even gait cycles in a subwindow of the time window around the time stamp, at least one stride statistics variance each being associated with a time stamp in the time window and being variance of stride statistics in a subwindow of the time window around the time stamp, at least one odd stride statistics variance each being associated with a time stamp in the time window and being variance of stride statistics of odd gait cycles in a subwindow of the time window around the time stamp, at least one even stride statistics variance each being associated with a time stamp in the time window and being variance of stride statistics of even gait cycles in a subwindow of the time window around the time stamp, at least one stride statistics deviation each being associated with a time stamp in the time window and being a X-percentile of a sample distribution of mean-subtracted stride statistics in a subwindow of the time window around the time stamp, wherein the mean-subtracted stride statistics of an odd gait cycle is the stride statistics of the odd gait cycle minus odd mean stride statistics and X is a number between 0 and 100, at least one odd stride statistics deviation each being associated with a time stamp in the time window and being a X-percentile of a sample distribution of mean-subtracted stride statistics of odd gait cycles in a subwindow of the time window around the time stamp, wherein the mean-subtracted stride statistics of an odd gait cycle is the stride statistics of the odd gait cycle minus odd mean stride statistics and X is a number between 0 and 100, at least one even stride statistics deviation each being associated with a time stamp in the time window and being a X-percentile of a sample distribution of mean-subtracted stride statistics of even gait cycles in a subwindow of the time window around the time stamp, wherein the mean-subtracted stride statistics of an even gait cycle is the stride statistics of the even gait cycle minus even mean stride statistics and X is a number between 0 and 100, at least one statistics of stride statistics each being associated with a time stamp in the time window and being at least one of: mean stride statistics, max stride statistics, min stride statistics, stride statistics variance, stride statistics deviation, and another statistics of stride statistics, at least one odd statistics of stride statistics each being associated with a time stamp in the time window and being at least one of: odd mean stride statistics, odd max stride statistics, odd min stride statistics, odd stride statistics variance, odd stride statistics deviation, and another odd statistics of stride statistics, at least one even statistics of stride statistics each being associated with a time stamp in the time window and being at least one of: even mean stride statistics, even max stride statistics, even min stride statistics, even stride statistics variance, even stride statistics deviation, and another even statistics of stride statistics, a left stride statistics, a right stride statistics, a front left stride statistics, a front right stride statistics, a back left stride statistics, a back right stride statistics, a wavefront stride statistics, an odd wavefront stride statistics, an even wavefront stride statistics, a ratio of even statistics of the stride statistics and odd statistics of the stride statistics, a difference of even statistics of the stride statistics and odd statistics of the stride statistics, a similarity measure of even statistics of the stride statistics and odd statistics of the stride statistics, a function of at least one of: statistics of stride statistics, odd statistics of stride statistics, and even statistics of stride statistics, a ratio of a function of even statistics of the stride statistics and a function of odd statistics of the stride statistics, a first function of a second function of even statistics of the stride statistics and a third function of odd statistics of the stride statistics, and another statistics of the stride statistics.

Clause 17. The tracking system/method/device/software according to any of clauses 12-16: wherein the at least one gait feature to comprise at least one of the following stride sequence related features: at least one gait speed each being associated with a time stamp in the time window, at least one stride sequence length each being associated with a time stamp in the time window and being an integration of gait speed over a respective extended gait cycle around the time stamp, at least one stride sequence period each being associated with a time stamp in the time window and being duration of a respective extended gait cycle around the time stamp, at least one stride sequence frequency each being associated with a time stamp in the time window and being inversely proportion to a respective stride sequence period around the time stamp, at least one stride sequence-wise mean speed each being associated with a time stamp in the time window and being at least one of: an average, a weighted average and a trimmed mean, of gait speed in a respective extended gait cycle around the time stamp, at least one stride sequence-wise max speed each being associated with a time stamp in the time window and being a maximum gait speed in a respective extended gait cycle around the time stamp, at least one stride sequence-wise min speed each being associated with a time stamp in the time window and being a minimum gait speed in a respective extended gait cycle around the time stamp, at least one stride sequence-wise speed variance each being associated with a time stamp in the time window and being a variance of gait speed in a respective extended gait cycle around the time stamp, at least one stride sequence-wise speed deviation each being associated with a time stamp in the time window and being a X-percentile of a sample distribution of mean-subtracted speed in a respective extended gait cycle around the time stamp, wherein the mean-subtracted speed is the gait speed minus a stride sequence-wise mean speed and X is a number between 0 and 100, at least one stride sequence-wise mean acceleration each being associated with a time stamp in the time window and being at least one of: an average, a weighted average and a trimmed mean, of gait acceleration in a respective extended gait cycle around the time stamp, wherein the gait acceleration is a derivative of gait speed, at least one stride sequence-wise max acceleration each being associated with a time stamp in the time window and being a maximum gait acceleration in a respective extended gait cycle around the time stamp, at least one stride sequence-wise min acceleration each being associated with a time stamp in the time window and being a minimum gait acceleration in a respective extended gait cycle around the time stamp, at least one stride sequence-wise acceleration variance each being associated with a time stamp in the time window and being a variance of gait acceleration in a respective extended gait cycle around the time stamp, at least one stride sequence-wise acceleration deviation each being associated with a time stamp in the time window and being a X-percentile of a sample distribution of mean-subtracted acceleration in a respective extended gait cycle around the time stamp, wherein the mean-subtracted acceleration is the gait acceleration minus the stride sequence-wise mean acceleration and X is a number between 0 and 100, at least one stride sequence statistics each being associated with a time stamp in the time window and being at least one of: stride sequence length, stride sequence period, stride sequence frequency, stride sequence-wise mean speed, stride sequence-wise max speed, stride sequence-wise min speed, stride sequence-wise speed variance, stride sequence-wise speed deviation, stride sequence-wise mean acceleration, stride sequence-wise max acceleration, stride sequence-wise min acceleration, stride sequence-wise acceleration variance, stride sequence-wise acceleration deviation, stride sequence-wise speed peak variance, stride sequence-wise speed valley variance, stride sequence-wise speed ACF k-th peak, stride sequence-wise mean speed ACF k-th peak, stride sequence-wise speed ACF k-th peak variance, stride sequence-wise speed ACF k-th peak-difference, stride sequence-wise mean speed ACF k-th peak-difference, stride sequence-wise speed ACF k-th peak-difference variance, stride sequence-wise speed ACF peak-count, stride sequence-wise mean speed ACF k-th peak-difference, stride sequence-wise speed ACF k-th peak-difference variance, stride sequence-wise speed ACF peak-count-pdf, stride sequence-wise recurrent plot (RP), stride sequence-wise recurrent plot (RP) feature, stride sequence-wise scaled speed-peak ACF, stride sequence-wise scaled peak ACF feature, stride sequence-wise harmonic ratio, stride sequence-wise harmonic feature, stride sequence-wise generalized harmonic feature, stride sequence-wise symmetry measure, a function of at least one of the above statistics, a function of another statistics, and a function of another stride sequence statistics, at least one mean stride sequence statistics each being associated with a time stamp in the time window and being at least one of: an average, a weighted average, and a trimmed mean, of the stride sequence statistics in a subwindow of the time window around the time stamp, at least one odd mean stride sequence statistics each being associated with a time stamp in the time window and being at least one of: an average, a weighted average, and a trimmed mean, of the stride sequence statistics of odd extended gait cycles in a subwindow of the time window around the time stamp, at least one even mean stride sequence statistics each being associated with a time stamp in the time window and being at least one of: an average, a weighted average, and a trimmed mean, of the stride sequence statistics of even extended gait cycles in a subwindow of the time window around the time stamp, at least one max stride sequence statistics each being associated with a time stamp in the time window and being a maximum of the stride sequence statistics in a subwindow of the time window around the time stamp, at least one odd max stride sequence statistics each being associated with a time stamp in the time window and being a maximum of the stride sequence statistics of odd extended gait cycles in a subwindow of the time window around the time stamp, at least one even max stride sequence statistics each being associated with a time stamp in the time window and being a maximum of the stride sequence statistics of even extended gait cycles in a subwindow of the time window around the time stamp, at least one min stride sequence statistics each being associated with a time stamp in the time window and being a minimum of the stride sequence statistics in a subwindow of the time window around the time stamp, at least one odd min stride sequence statistics each being associated with a time stamp in the time window and being a minimum of the stride sequence statistics of odd extended gait cycles in a subwindow of the time window around the time stamp, at least one even min stride sequence statistics each being associated with a time stamp in the time window and being a minimum of the stride sequence statistics of even extended gait cycles in a subwindow of the time window around the time stamp, at least one stride sequence statistics variance each being associated with a time stamp in the time window and being variance of stride sequence statistics in a subwindow of the time window around the time stamp, at least one odd stride sequence statistics variance each being associated with a time stamp in the time window and being variance of stride sequence statistics of odd extended gait cycles in a subwindow of the time window around the time stamp, at least one even stride sequence statistics variance each being associated with a time stamp in the time window and being variance of stride sequence statistics of even extended gait cycles in a subwindow of the time window around the time stamp, at least one stride sequence statistics deviation each being associated with a time stamp in the time window and being a X-percentile of a sample distribution of mean-subtracted stride sequence statistics in a subwindow of the time window around the time stamp, wherein the mean-subtracted stride sequence statistics of an odd extended gait cycle is the stride sequence statistics of the odd extended gait cycle minus odd mean stride sequence statistics and X is a number between 0 and 100, at least one odd stride sequence statistics deviation each being associated with a time stamp in the time window and being a X-percentile of a sample distribution of mean-subtracted stride sequence statistics of odd extended gait cycles in a subwindow of the time window around the time stamp, wherein the mean-subtracted stride sequence statistics of an odd extended gait cycle is the stride sequence statistics of the odd extended gait cycle minus odd mean stride sequence statistics and X is a number between 0 and 100, at least one even stride sequence statistics deviation each being associated with a time stamp in the time window and being a X-percentile of a sample distribution of mean-subtracted stride sequence statistics of even extended gait cycles in a subwindow of the time window around the time stamp, wherein the mean-subtracted stride sequence statistics of an even extended gait cycle is the stride sequence statistics of the even extended gait cycle minus even mean stride sequence statistics and X is a number between 0 and 100, at least one statistics of stride sequence statistics each being associated with a time stamp in the time window and being at least one of: mean stride sequence statistics, max stride sequence statistics, min stride sequence statistics, stride sequence statistics variance, stride sequence statistics deviation, and another statistics of stride sequence statistics, at least one odd statistics of stride sequence statistics each being associated with a time stamp in the time window and being at least one of: odd mean stride sequence statistics, odd max stride sequence statistics, odd min stride sequence statistics, odd stride sequence statistics variance, odd stride sequence statistics deviation, and another odd statistics of stride sequence statistics, at least one even statistics of stride sequence statistics each being associated with a time stamp in the time window and being at least one of: even mean stride sequence statistics, even max stride sequence statistics, even min stride sequence statistics, even stride sequence statistics variance, even stride sequence statistics deviation, and another even statistics of stride sequence statistics, a front stride sequence statistics, a back stride sequence statistics, a wavefront stride sequence statistics, a phase 1 wavefront stride sequence statistics, a phase 2 wavefront stride sequence statistics, a phase 3 wavefront stride sequence statistics, a phase 4 wavefront stride sequence statistics, a n-th phase wavefront stride sequence statistics, a ratio of even statistics of the stride sequence statistics and odd statistics of the stride sequence statistics, a difference of even statistics of the stride sequence statistics and odd statistics of the stride sequence statistics, a similarity measure of even statistics of the stride sequence statistics and odd statistics of the stride sequence statistics, a function of at least one of: statistics of stride sequence statistics, odd statistics of stride sequence statistics, and even statistics of stride sequence statistics, a ratio of a function of even statistics of the stride sequence statistics and a function of odd statistics of the stride sequence statistics, a first function of a second function of even statistics of the stride sequence statistics and a third function of odd statistics of the stride sequence statistics, and another statistics of the stride sequence statistics.

Clause 18. The tracking system/method/device/software according to any of clauses 12-17: communicating one of the at least one cycle feature to a server.

Clause 19. The tracking system/method/device/software according to any of clauses 12-18: communicating a cycle feature to a user device, generating a presentation of the cycle feature or a history of cycle feature to a user of the user device.

Clause 20. The tracking system/method/device/software of clause 1: communicating the next location of the object at the next time to a server.

Clause 21. The tracking system/method/device/software of clause 1: communicating the next location of the object to a user device, generating a presentation of at least one of: the next location, a trajectory, or a trace to a user of the user device.

Clause 22. The tracking system/method/device/software of clause 7 or 8 or 9: computing an amount of cycles in the incremental time period; computing the increment distance as a multiplicative product of the amount of cycles and a cycle distance.

In some embodiments, the cycle distance may be obtained by some training. For example, in a calibration or training process, the object (e.g. human user) may be walking while a reference distance may be obtained using another location system, which may include: e.g. GPS plus a triangulation or trilateration when the object is walking outdoor, a CSI-based locationing if available, a next generation positioning (e.g. based on 802.11ay) using WiFi signals, UWB based locationing, radar based locationing or mmWave-based locationing, etc. To compute the cycle distance, the system can analyze the rhythmic behavior of TSIQ or TSSI, count the number (amount) of cycles in a time window, then compute the cycle distance by dividing the reference distance in the time window by the number of cycles in the time window.

Clause 23. The tracking system/method/device/software of clause 22: computing the cycle distance based on at least one of: a user input, a trained value obtained in a training phase, a calibration process or a training process using "reference distance" from another locationing scheme an adaptively computed value based on a recent time period of stable rhythmic motion.

Clause 24. The tracking system/method/device/software according to any of clauses 1-23, wherein the next location of the object at the next time is computed using a particle filter.

Clause 25. The tracking system/method/device/software according to any of clauses 1-24, wherein computing the next location of the object at the next time comprises: initializing an initial number ($N\_0$) of initial candidate locations of the object at an initial time ($t=0$); computing iteratively a first dynamic number ($N\_(i+1)$) of first candidate locations of the object at the next time ($t=(i+1)$) based on a second dynamic number ($N\_i$) of second candidate locations of the object at the current time ($t=i$); and computing the next location of the object at the next time based on at least one of: the first dynamic number of first candidate locations at the next time, and the second dynamic number of second candidate locations at the current time.

Clause 26. The tracking system/method/device/software of clause 25, wherein: the object moves during the incremental time period in a region represented by the map; the map is a multi-dimensional map represented as a multi-dimensional array A, such that reachability of each location of the region is represented by a corresponding array element a which is a logical value between 0 and 1; a location of the region is unreachable and forbidden when the corresponding array element satisfies $a=0$; a location of the region is fully reachable when the corresponding array element satisfies $a=1$; a location of the region is partially reachable when the corresponding array element satisfies: $0<a<1$; each of the next location, the current location, the first dynamic number of first candidate locations, and the second dynamic number of second candidate locations, is a point in the region and is represented as a corresponding array element a, with $a>0$; and the direction of the motion of the object at any location is locally represented as one of a number of allowable directions.

In some embodiments, a map constraint (e.g. based on matrix A) may be used to reject or eliminate non-reachable candidate locations. For example, suppose there are $N\_i$ legitimate candidate locations at time $t=i$. The system can compute $N\_i$ anticipated locations for time $t=(i+1)$. Each anticipated location is checked against the matrix A. If it is unreachable, it is rejected or eliminated. The remaining anticipated locations may then become legitimate candidate locations. If the number of remaining legitimate candidate locations is too small, new legitimate candidate locations may be generated based on some stochastic model and rule. The result is that the number of candidate locations may be different in different iterations, i.e. a dynamic number. But their total number is never below a certain minimum number.

In some embodiments, the system can generate an anticipated candidate location as the sum of a displacement vector (magnitude="incremental distance" in the "direction") and the "current candidate location". Alternative, this sum may be used as a parameter of a probability distribution, e.g. Gaussian with a mean as the computed sum and a variance related to the "goodness" measure of the current candidate location. For example, the variance may be a function of the reachability value in matrix A. A high reachability (e.g. $a=1$) may correspond to a larger variance, while a low reachability (e.g. $a=0.1$) may correspond to a small variance. The next location may be computed by combining the remaining legitimate (reachable) candidate locations at time $t=(i+1)$, e.g. using weighted average with associated weights, average, median, maximum likelihood, centroid, or MAP.

Clause 27. The tracking system/method/device/software of clause 26, wherein computing the next location of the object at the next time comprises: computing the first dynamic number of weights each associated with a first candidate location, each weight being a function of at least one of: the current location, the first candidate location, a corresponding second candidate location associated with the first candidate location, the direction of the motion, and a distance between the first candidate location and a first unreachable array element a in the direction; and computing the next location of the object based on the first dynamic number of first candidate locations, and the associated first dynamic number of weights.

Clause 28. The tracking system/method/device/software of clause 27, wherein each weight is a monotonic non-decreasing function of the distance between the first candidate location and the first unreachable array element a in the direction.

Clause 29. The tracking system/method/device/software of clause 27, wherein each weight is a bounded function of the distance between the first candidate location and the first unreachable array element a in the direction.

Clause 30. The tracking system/method/device/software of clause 27, wherein the next location of the object at the next time is computed as a weighted average of the first dynamic number of first candidate locations.

Clause 31. The tracking system/method/device/software of clause 27, wherein the next location of the object at the next time is computed as one of the first candidate locations.

Clause 32. The tracking system/method/device/software of clause 27, wherein computing the next location of the object at the next time further comprises: normalizing the weights to generate normalized weights.

Clause 33. The tracking system/method/device/software of clause 32, wherein computing the next location of the object at the next time further comprises: computing a weighted cost of each first candidate location with respect to the rest of the first dynamic number of first candidate locations based on the normalized weights, wherein the weighted cost is a weighted sum of pairwise distance between the first candidate location and each of the rest of the first candidate locations; and choosing the first candidate location with a minimum weighted cost as the next location of the object.

Clause 34. The tracking system/method/device/software according to any of clauses 6-33, wherein computing the next location of the object at the next time comprises: computing a predicted value for each of the second candidate locations of the object based on at least one of: the second candidate location, the incremental distance, and the incremental time period; when the predicted value of the second candidate location is fully reachable with associated array element a=1, creating a first candidate location of the object based on the predicted value of the second candidate location; when the predicted value of the second candidate location is forbidden with associated array element a=0, labeling the second candidate location as "rejected" without creating any first candidate location; and when the predicted value of the second candidate location is partially reachable with associated array element satisfying 0<a<1, generating a random number between 0 and 1, and creating a first candidate location of the object based on the predicted value of the second candidate location when the random number is less than a.

Clause 35. The tracking system/method/device/software according to any of clauses 14-34, wherein computing the next location of the object at the next time further comprises: when a quantity of the first candidate locations is smaller than a threshold, generating a new first candidate location of the object by probabilistically taking on the predicted values of second candidate locations that are not rejected, with a probability distribution based on at least one of: weights associated with the predicted values; weights associated with the second candidate locations; array elements of the multi-dimensional array A associated with the predicted values; and array elements of the multi-dimensional array A associated with the second candidate locations.

Clause 36. The tracking system/method/device/software according to any of clauses 14-35, wherein computing the next location of the object at the next time further comprises: when a quantity of the first candidate locations is smaller than a threshold, generating a new first candidate location of the object by probabilistically taking on the second candidate locations that are not rejected, with a probability based on weights associated with the predicted values of the second candidate locations that are not rejected.

Clause 37. The tracking system/method/device/software according to any of clauses 14-36, wherein computing the next location of the object at the next time further comprises: when a quantity of the first candidate locations is smaller than a threshold, computing a tentative next location based on the first candidate locations and generating a new first candidate location of the object probabilistically in a neighborhood of the tentative next location based on a probability distribution.

Clause 38. The tracking system/method/device/software according to any of clauses 14-37, wherein computing the next location of the object at the next time further comprises: when a quantity of the first candidate locations is smaller than a threshold, generating a new first candidate location of the object probabilistically based on a predictor of a location sampled in a neighborhood of the current location based on a probability distribution.

Clause 39. The tracking system/method/device/software according to any of clauses 18-38, wherein the neighborhood comprises at least one of the second candidate locations that are not rejected.

Clause 40. The tracking system/method/device/software of according to any clauses 18-39, wherein the probability distribution is a weighted sum of a set of probability density functions, each centered at one of the second candidate locations that are not rejected.

Clause 41. The tracking system/method/device/software of according to any clauses 20-40, wherein: a weight of each pdf associated with a second candidate location in the weighted sum is a function of the array element associated with the second candidate location.

Clause 42. The tracking system/method/device/software according to any of clauses 1-41, further comprising: maintaining a dynamic number of candidate locations at any time; changing the dynamic number of candidate locations by at least one of: initializing at least one candidate location, updating at least one candidate location, adding at least one candidate location, pausing at least one candidate location, stopping at least one candidate location, resuming at least one paused candidate location, reinitializing at least one stopped candidate location, and removing at least one candidate location; and computing the next location of the object at the next time based on at least one of: the dynamic number of candidate locations at the next time, and the dynamic number of candidate locations at another time.

Clause 43. The tracking system/method/device/software according to any of clauses 22-42, wherein the dynamic number of candidate locations is bounded by at least one of: an upper limit and a lower limit.

Clause 44. The tracking system/method/device/software according to any of clauses 22-43, further comprising: adding at least one candidate location when the dynamic number of candidate locations is lower than a lower limit.

Clause 45. The method/apparatus/system of the wireless monitoring system of clause 7 or 8 or 9, further comprising: validating a complete cycle as a target type of cycle.

Clause 46. The method/apparatus/system of the wireless monitoring system of clause 45, further comprising: computing a likelihood score associated with the complete cycle based on at least one of: the TSIQ, the TSMSIQ or the TSSI; validating the complete cycle as the target cycle based on the likelihood score.

Clause 47. The method/apparatus/system of the wireless monitoring system of clause 46, further comprising: validating the complete cycle as the target cycle if the likelihood score satisfies a validation condition associated with the target cycle.

Clause 48. The method/apparatus/system of the wireless monitoring system of clause 47, further comprising: validating the complete cycle as the target cycle if the likelihood score is larger than a threshold.

Clause 49. The method/apparatus/system of the wireless monitoring system of clauses 46-48, further comprising: computing a time period associated with the complete cycle with a corresponding start-time and a corresponding end-time of the time period; computing at least one of the following features of the TSIQ or the TSMSIQ in the time period: a sum, a weighted sum, a sum of magnitude, a weighted sum of magnitude, a local maxima, a zero-crossing, a local minimum, a maximum derivative, a minimum derivative, and a zero derivative; computing at least one cycle statistics based on the computed features in the time period; computing the likelihood based on the time period, the at least one cycle statistics, the at least one features, or a function of the cycle statistics or the features.

Clause 50. The method/apparatus/system of the wireless monitoring system of clause 49, further comprising: computing the likelihood score to be zero if any of the following happens: the duration of the time period exceeds a first threshold, the cycle statistics is greater than a second threshold, the local maximum is greater than the second threshold, the cycle statistics is less than a third threshold, the local minimum is less than the third threshold, a fraction of maximum of a quantity in a recent time window over minimum of the quantity in the recent time window is greater than a fourth threshold where the quantity is one of: one of the features, a function of two or more features, a difference between a local maximum and a local minimum, in a complete cycle in the recent time window and the cycle statistics,, the cycle statistics is outside a N-sigma region around its mean in a recent time window where sigma is its standard deviation in the recent time window and N is an integer, a feature is outside a 4-sigma region around its mean in a recent time window where sigma is its standard deviation in the recent time window the sum of magnitude is outside a 4-sigma region around its mean in a recent time window where sigma is its standard deviation in the recent time window, the sum is outside a 4-sigma region around its mean in a recent time window where sigma is its standard deviation in the recent time window.

Clause 51. The method/apparatus/system of the wireless monitoring system of clause 46, further comprising: computing the incremental distance associated with the object movement in the time period associated with the complete cycle as a multiplicative product of the likelihood score and a tentative incremental distance.

Clause 52. The method/apparatus/system of the wireless monitoring system of clause 45, further comprising: wherein the object is a human; wherein the object movement is a walking motion or a running motion of the human; wherein the target type of cycle is a step cycle of the human walking or running; computing a user status as "WALKING", or "RUNNING" based on the validation of the complete cycle as a step cycle.

Clause 53. The method/apparatus/system of the wireless monitoring system of clause 52, further comprising: changing the user status from "NON-WALKING" to "WALKING", or from "NON-RUNNING" to "RUNNING", based on the validation of the complete cycle as a step cycle.

Clause 54. The method/apparatus/system of the wireless monitoring system of clauses 52 or 53, further comprising: validating consecutive complete cycles as step cycles; detecting the WALKING or RUNNING status based on the consecutive validated step cycles.

Clause 55. The method/apparatus/system of the wireless monitoring system of clause 54, further comprising: changing the user status from NON-WALKING to WALKING, or from NON-RUNNING to RUNNING based on the consecutive validated step cycles.

Clause 56. The method/apparatus/system of the wireless monitoring system according to any of clauses 52-55, further comprising: if both a current complete cycle and an immediate past complete cycle are validated as step cycles and the time gap between two step cycles is less than a threshold, the two step cycles are determined to be continuous; computing the user status as WALKING or RUNNING based on the continuous step cycles.

Clause 57. The method/apparatus/system of the wireless monitoring system of clause 56, further comprising: changing the user status from NON-WALKING to WALKING, or from NON-RUNNING to RUNNING based on the continuous step cycles.

Clause 58. The method/apparatus/system of the wireless monitoring system according to any of clauses 52-57, further comprising: determining a complete cycle as a non-step cycle because the complete cycle fails to be validated as a step cycle; changing the user status from WALKING to NOT-WALKING or from RUNNING to NON-RUNNING based on the non-step cycle.

Clause 59. The method/apparatus/system of the wireless monitoring system according to any of clauses 52-58, further comprising: incrementing a count of the target cycle.

Clause 60. The method/apparatus/system of the wireless monitoring system of clause 59, further comprising: determining that a complete cycle is not a target cycle because the complete cycle fails to be validated as a target cycle; resetting a count of the target cycle to be zero.

Clause 61. The method/apparatus/system of the wireless monitoring system according to any of clauses 1-60, further comprising: computing a statistics of an observable, wherein the observable comprises one of: intermediate quantity (IQ), a cycle feature, a local characteristic point or a feature of a time series of IQ (TSIQ) or a time series of mean-subtracted IQ (TSMSIQ).

Clause 62. The method/apparatus/system of the wireless monitoring system of clause 61, further comprising: updating the statistics by computing a current statistics based on an immediate past statistics.

Clause 63. The method/apparatus/system of the wireless monitoring system of clause 62, further comprising: wherein the immediate past statistics is computed based on (N-1) past instances of the observable; computing the current statistics based on an immediate past statistics and the current instance of the observable.

Clause 64. The method/apparatus/system of the wireless monitoring system of clause 63, further comprising: computing the current statistics by at least one of: adding an offset to the immediate past statistics, wherein the offset is at least one of: a weighted difference between the current observable and the immediate past statistics wherein both are weighted by 1/N, or a product of (a) a difference between the current observable and a current second statistics, and (b) a difference between the current observable and an immediately past current statistics, or scaling a current third statistics by 1/N.

Clause 65. The method/apparatus/system of the wireless monitoring system according to any of clauses 3-64, further comprising: projecting the SI from gyroscope onto the earth reference frame; computing the cumulative directional change; and adding the cumulative directional change to an initial direction.

Clause 66. The method/apparatus/system of the wireless monitoring system according to any of clauses 1-65, further comprising: wherein one of the sensors is a barometer; wherein the SI from the barometer is air pressure; tracking a vertical movement of the object based on the air pressure; estimating an altitude or a vertical position based on the air pressure; computing a vertical incremental distance based on the air pressure, the altitude or the vertical position.

Clause 67. The method/apparatus/system of the wireless monitoring system according to any of clauses 25-66, further comprising: computing a difference between a first increment distance computed using the particle filter with a second incremental distance computed without using the particular filter; detecting a problematic situation based on the difference.

Clause 68. The method/apparatus/system of the wireless monitoring system of clause 67, further comprising: detecting the problematic situation if the difference is greater than a threshold.

Clause 69. The method/apparatus/system of the wireless monitoring system of clause 68, further comprising: generating a number of new first candidate locations that are outside a region associated with the second candidate locations.

Clause 70. The method/apparatus/system of the wireless monitoring system of clause 68 or clause 69, further comprising: replacing a number of existing second candidate locations with corresponding new candidate locations that are outside a region associated with the existing second candidate locations.

Clause 71. The method/apparatus/system of the wireless monitoring system of according to any clauses 68-70, further comprising: eliminating a number of existing second candidate locations.

In some embodiments, a walking detection algorithm may be performed by the system using acceleration data from an IMU sensor. Assuming a person holding a device while walking or not walking, the system can obtain acceleration from IMU and project them along gravity direction. The system can perform 3 or 4 tests to determine the person is walking if majority tests are passed.

In some embodiments, a test A (Maximum) includes the following steps. At step A1, the system computes max of acceleration (maxAcc) in a testing time window (e.g. 1 second long). At step A2, if maxAcc <T1 (too small), the person is determined NOT walking. The small acceleration may be due to the person doing some normal screen-writing, swiping, pressing action on the touch screen. At step A3, if maxAcc >T2 (too large, T2>T1), the person is determined NOT walking. The large acceleration may be due to the person jumping.

In some embodiments, a test B (Percentage) includes the following steps. At step B1, the system computes percentage of acceleration over the absolute mean (mean of absolute value) within the testing time window. At step B1, if percentage <T3, the person is determined NOT walking.

In some embodiments, a test C (Periodicity) includes the following steps. At step C1, the system computes zero-crossing in testing time window. At step C2, if time difference between two adjacent zeros <T4 (e.g. 0.2s), replace both by zero at midpoint. In regular walking, time differences between adjacent pair of zeros are relatively uniform. One can define a ratio of A=max (time difference)/min (time difference). When A>2, NOT walking. Two adjacent crossing can be very close to each other due to false peak detection result. If they are closer than 0.2s, replace both by zero at midpoint.

The following numbered clauses provide implementation examples for walking detection, e.g. using IMU sensors.

Clause A1. A method/apparatus/system of a target motion detection system, comprising: obtaining a time series of sensing information (SI) from a sensor using a processor, a memory communicatively coupled with the processor and a set of instructions stored in the memory, wherein the sensor is moving with an object; monitoring a motion of the object based on the time series of SI (TSSI); and detecting the motion to be a target motion based on the monitoring.

Clause A2. The method/apparatus/system of the walking detection system of Clause A1: wherein the sensor comprises at least one of: accelerometer, gyroscope, magnetometer, proximity sensor, barometer, ambient light sensor, thermometer, microphone, fingerprint sensor, pedometer, wireless transmitter, wireless receiver, wireless transceiver, WLAN transceiver, WiFi transceiver, IEEE 802.11 compliant transceiver, mobile communication transceiver, 3G/4G/LTE/5G/6G/7G/8G transceiver, 3GPP compliant transceiver, UWB transceiver, Bluetooth transceiver, Zigbee transceiver, IEEE 802.15 compliant transceiver, and another sensor; wherein a sensing information (SI) comprises at least one of: acceleration, 3-axis acceleration, angular rate, 3-axis angular rate, inclination, 3-axis inclination, orientation, 3-axis orientation, proximity, air pressure, light intensity, temperature, sound pressure level, scanned fingerprint, step count, channel information (CI) of a wireless multipath channel comprising at least one of: channel state information (CSI), channel impulse response (CIR), channel frequency response (CFR), received signal strength indicator (RSSI), signal power, signal strength, signal intensity, signal amplitude, signal phase, signal frequency component, and signal frequency band component, and another sensing information; wherein the CI of the wireless multipath channel is extracted from a wireless signal communicated between a Type1 heterogeneous wireless device and a Type2 heterogeneous wireless device through the wireless multipath channel.

Clause A3. The method/apparatus/system of the walking detection system of Clause A1 or Clause A2: wherein the target motion comprises at least one of: a walking motion, gait, marching motion, pacing motion, running motion, galloping action, troting action, body motion, leg motion, hand motion, finger motion, trunk motion, torso motion, head motion, mouth motion, eye motion, sit-down motion, stand-up motion, creeping motion, crawling motion, swimming motion, exercise motion, dancing motion, watching-TV motion, sitting-on-sofa motion, reading-book motion, listening-to-music motion, repeated motion, complex repeated motion, robotic motion, mechanic motion, vehicle motion, wind-induced motion, curtain motion, current-induced motion, fluid motion, vibration, earthquake, tremor, shaking motion, quivering motion, trembling motion, musical motion, dancing motion, oscillation, regular motion, periodic motion, breathing motion, heartbeat motion, palpitating motion, relaxation oscillation, increasing motion, decreasing motion, expanding motion, contracting motion, pulsating motion, pumping motion, pounding motion, thuding motion, throbing motion, hammering motion, alternating motion, coordinated motion, combination of multiple repeated motion, modulated motion, mixed motion, composite motion, composite motion with at least one underlying rhythm, motion coupled to another rhythmic motion of another object, transient motion, transient motion with rhythmic details, fall-down motion, sleepy motion, vasive motion, collision, impact, crash, smash, bump, knock, impact, hit, strike, clash, wreck, smash-up, pileup, prang, shunt, and a motion coupled to a rhythm.

Clause A4. The method/apparatus/system of the walking detection system according to any of Clauses A1-A3, further comprising: computing a time series of feature (TSF), wherein each feature of the TSF comprises at least one of: a magnitude, phase, absolute value, norm, and magnitude square, of at least one of: a respective SI of the TSSI and a projection of the SI, monitoring the motion of the object based on the TSF; and detecting the motion to be the target motion based on the monitoring.

Clause A5. The method/apparatus/system of the walking detection system of Clause A4, further comprising: wherein the sensor comprises an accelerometer; wherein each SI comprises a 3-axis acceleration from the accelerometer; wherein each feature of the TSF is a projection of the 3-axis acceleration of a respective SI to the gravity direction.

Clause A6. The method/apparatus/system of the walking detection system of Clause A4 of Clause A5, further comprising: determine a sliding time window associated with a sliding time stamp; performing at least one target motion test based on the sliding time window of the TSF; detecting the motion to be the target motion in the sliding time window based on the at least one target motion test.

A test may test for different properties/characteristics associated with the target motion. E.g. periodicity, rhythm, stationarity, variability, regularity, outlier, repeatability, impulsiveness, intensity, pace, motionlessness, steadiness, direction-steadiness, > "high" may mean there is a lower bound (or lower threshold) > "low" may mean there is an upper bound (or upper threshold) > "moderate" may mean there is both a lower bound and a upper bound (or, lower threshold + upper threshold) 7. The method/apparatus/system of the walking detection system of Clause A6, further comprising: wherein at least one target motion test comprises at least one of: a test for periodicity in which the motion is tentative determined to be the target motion when a periodicity of the TSF is determined to be at least one of: "high", "moderate", and "low" based on a tendency of the target motion, a test for rhythm in which the motion is tentative determined to be the target motion when a rhythm of the TSF is determined to be "matching" and "non-matching", based on the tendency of the target motion, a test for stationarity in which the motion is tentative determined to be the target motion when a stationarity of the TSF is determined to be at least one of: "high", "moderate", and "low", based on the tendency of the target motion, a test for variability in which the motion is tentative determined to be the target motion when a variability of the TSF is determined to be at least one of: "high", "moderate", and "low", based on the tendency of the target motion, a test for regularity in which the motion is tentative determined to be the target motion when a regularity of the TSF is determined to be at least one of: "high", "moderate", and "low", based on the tendency of the target motion, a test for outlier in which the motion is tentative determined to be the target motion when an outlier measure of the TSF is determined to be at least one of: "high", "moderate", and "low", based on the tendency of the target motion, a test for repeatability in which the motion is tentative determined to be the target motion when a repeatability of the TSF is determined to be at least one of: "high", "moderate", and "low", based on the tendency of the target motion, a test for impulsiveness in which the motion is tentative determined to be the target motion when an impulsiveness of the TSF is determined to be at least one of: "high", "moderate", and "low", based on the tendency of the target motion, a test for intensity in which the motion is tentative determined to be the target motion when an intensity of the TSF is determined to be at least one of: "high", "moderate", and "low", based on the tendency of the target motion, a test for pace in which the motion is tentative determined to be the target motion when a pace of the TSF is determined to be at least one of: "high", "moderate", and "low", based on the tendency of the target motion, a test for motionlessness in which the motion is tentative determined to be the target motion when a motionlessness of the TSF is determined to be at least one of: "high", "moderate", and "low", based on the tendency of the target motion, a test for steadiness in which the motion is tentative determined to be the target motion when a steadiness of the TSF is determined to be at least one of: "high", "moderate", and "low", based on the tendency of the target motion, a test for direction-steadiness in which the motion is tentative determined to be the target motion when a direction-steadiness of the TSF is determined to be at least one of: "high", "moderate", and "low", based on the tendency of the target motion, another test for target motion characteristics, and another test for non-target motion characteristics.

Clause A8. The method/apparatus/system of the walking detection system of Clause A6 of Clause A7, further comprising: wherein the target motion is walking motion; wherein at least one target motion test comprises at least one of: a test for periodicity in which the motion is tentative determined to be the target motion when a periodicity of the TSF is determined to be "high", a test for rhythm in which the motion is tentative determined to be the target motion when a rhythm of the TSF is determined to be "matching", a test for stationarity in which the motion is tentative determined to be the target motion when a stationarity of the TSF is determined to be "high", a test for variability in which the motion is tentative determined to be the target motion when a variability of the TSF is determined to be "low", a test for regularity in which the motion is tentative determined to be the target motion when a regularity of the TSF is determined to be "high", a test for outlier in which the motion is tentative determined to be the target motion when an outlier measure of the TSF is determined to be "low", a test for repeatability in which the motion is tentative determined to be the target motion when a repeatability of the TSF is determined to be "high", a test for impulsiveness in which the motion is tentative determined to be the target motion when an impulsiveness of the TSF is determined to be "low", a test for intensity in which the motion is tentative determined to be the target motion when an intensity of the TSF is determined to be "moderate", a test for pace in which the motion is tentative determined to be the target motion when a pace of the TSF is determined to be "moderate", a test for motionlessness in which the motion is tentative determined to be the target motion when a motionlessness of the TSF is determined to be "low", a test for steadiness in which the motion is tentative determined to be the target motion when a steadiness of the TSF is determined to be "high", a test for direction-steadiness in which the motion is tentative determined to be the target motion when a direction-steadiness of the TSF is determined to be "low", another test for target motion characteristics, and another test for non-target motion characteristic.

Clause A9. The method/apparatus/system of the walking detection system according to any of Clauses A6-A8, further comprising: wherein the target motion is a fall-down motion; wherein at least one target motion test comprises at least one of: a test for periodicity in which the motion is tentative determined to be the target motion when a periodicity of the TSF is determined to be "low", a test for rhythm in which the motion is tentative determined to be the target motion when a rhythm of the TSF is determined to be "matching", based on a tendency of the fall-down motion, a test for stationarity in which the motion is tentative determined to be the target motion when a stationarity of the TSF is determined to be "low", a test for variability in which the motion is tentative determined to be the target motion when a variability of the TSF is determined to be "high", a test for regularity in which the motion is tentative determined to be the target motion when a regularity of the TSF is determined to be "low", a test for outlier in which the motion is tentative determined to be the target motion when an outlier measure of the TSF is determined to be "high", a test for repeatability in which the motion is tentative determined to be the target motion when a repeatability of the TSF is determined to be "low", a test for impulsiveness in which the motion is tentative determined to be the target motion when an impulsiveness of the TSF is determined to be "high", a test for intensity in which the motion is tentative determined to be the target motion when an intensity of the TSF is determined to be "high", a test for pace in which the motion is tentative determined to be the target motion when a pace of the TSF is determined to be "high", a test for motionlessness in which the motion is tentative determined to be the target motion when a motionlessness of the TSF is determined to be "low", a test for steadiness in which the motion is tentative determined to be the target motion when a steadiness of the TSF is determined to be "low", a test for direction-steadiness in which the motion is tentative determined to be the target motion when a direction-steadiness of the TSF is determined to be "high", another test for target motion characteristics, and another test for non-target motion characteristic > Each test has a corresponding measure.

Clause A10. The method/apparatus/system of the walking detection system according to any of Clauses A6-A9, further comprising: wherein at least one target motion test comprises at least one of: a test for periodicity in which the motion is tentative determined to be the target motion based on a periodicity measure, a test for rhythmicity in which the motion is tentative determined to be the target motion based on a rhythmicity measure, a test for stationarity in which the motion is tentative determined to be the target motion based on a stationarity measure, a test for variability in which the motion is tentative determined to be the target motion based on a variability measure, a test for regularity in which the motion is tentative determined to be the target motion based on a regularity measure, a test for outlier in which the motion is tentative determined to be the target motion based on a outlier measure, a test for repeatability in which the motion is tentative determined to be the target motion based on a repeatability measure, a test for impulsiveness in which the motion is tentative determined to be the target motion based on a impulsiveness measure, a test for intensity in which the motion is tentative determined to be the target motion based on an intensity measure, a test for pace in which the motion is tentative determined to be the target motion based on a pace measure, a test for motionlessness in which the motion is tentative determined to be the target motion based on a motionlessness measure, a test for steadiness in which the motion is tentative determined to be the target motion based on a steadiness measure, a test for direction-steadiness in which the motion is tentative determined to be the target motion based on a direction-steadiness measure, another test for target motion characteristics in which the motion is tentative determined to be the target motion based on a respective target motion characteristics measure, and another test for non-target motion characteristic in which the motion is tentative determined to be the target motion based on a respective non-target motion characteristics measure.

Clause A11. The method/apparatus/system of the walking detection system according to any of Clauses A6-A10, further comprising: computing a test measure associated with a target motion test; determining a passing condition for the target motion test based on the test measure; if the test measure satisfies the passing condition, then considering the target motion test as "passed", else considering the target motion test as "failed".

Clause A12. The method/apparatus/system of the walking detection system according to any of Clause A9-A11, further comprising: computing another test measure; determining a partial-passing condition for the target motion test based on the another test measure; if the test measure satisfies the passing condition, then considering the target motion test as "passed", else if the another test measure satisfies the partial-passing condition, then considering the target motion test as "partially-passed", else considering the target motion test as "failed".

Clause A13. The method/apparatus/system of the walking detection system according to any of Clause A10-A12: wherein the another test measure is the test measure.

Clause A14. The method/apparatus/system of the walking detection system of Clause A13, further comprising: wherein the test measure is a scalar; wherein the passing condition is that the test measure is less than a threshold T1; wherein the partial passing condition is that the test measure is less than a threshold T2 and is not less than T1, with T2 not less than T1.

Clause A15. The method/apparatus/system of the walking detection system of Clause A13, further comprising: wherein the test measure is a scalar; wherein the passing condition is that the test measure is greater than a threshold T1; wherein the partial passing condition is that the test measure is greater than a threshold T2 and not greater than T1, with T2 not greater than T1.

Clause A16. The method/apparatus/system of the walking detection system of Clause A14 or Clause A15, further comprising: wherein T1 is equal to T2 such that the partial passing condition is bypassed.

Clause A17. The method/apparatus/system of the walking detection system according to any of Clauses A13-A16, further comprising: wherein the test measure is a scalar; wherein the passing condition is that the test measure is not less than a lower threshold T1 and not greater than a upper threshold T2, with T2>=T1; wherein the partial passing condition is that the test measure is: less than T1 but not less than another lower threshold T3, with T3<=T1, or greater than T2 but not greater than another upper threshold T4, with T4>=T2.

Clause A18. The method/apparatus/system of the walking detection system of Clause A17, further comprising: wherein T1 is equal to T3 and T2 is equal to T4 such that the partial passing condition is bypassed.

Clause A19. The method/apparatus/system of the walking detection system according to any of Clauses A13-A18, further comprising: wherein the test measure is a vector; wherein the passing condition is that the test measure is in a first "low" region of the vector space; wherein the partial passing condition is that the test measure is in a second "low" region of the vector space and is not in the first "low" region, wherein the first "low" region is a subset of the second "low" region..

Clause A20. The method/apparatus/system of the walking detection system according to any of Clauses A13-A19, further comprising: wherein the test measure is a vector; wherein the passing condition is that the test measure is in a first "high" region of the vector space; wherein the partial passing condition is that the test measure is in a second "high" region of the vector space and is not in the first "high" region, wherein the first "high" region is a subset of the second "high" region.

Clause A21. The method/apparatus/system of the walking detection system according to any of Clauses A13-A20, further comprising: wherein the test measure is a vector; wherein the passing condition is that the test measure is in a first "moderate" region of the vector space; wherein the partial passing condition is that the test measure is in a second "moderate" region of the vector space and not in the first "moderate" region, wherein the first "moderate" region is a subset of the second "moderate" region.

Clause A22. The method/apparatus/system of the walking detection system of Clause A19, Clause A20, or Clause A21, further comprising: wherein the first region is equal to the second region such that the partial passing condition is bypassed.

Clause A23. The method/apparatus/system of the walking detection system according to any of Clauses A6-A22, further comprising: choosing the at least one target motion test from a set of possible target motion tests based on the target motion, a characteristics of each possible target motion test, a computing requirement of each possible target motion test, an availability of computing resource associated with the processor, the memory and the set of instructions, a characteristics of the TSSI, a characteristics of the sensor, and a relationship between the motion of the object and a motion of the sensor.

Clause A24. The method/apparatus/system of the walking detection system of Clause A6, further comprising: detecting the motion to be the target motion in the sliding time window if a percentage of at least one target motion test being passed exceeds a threshold.

Clause A25. The method/apparatus/system of the walking detection system according to any of Clauses A6-A24, further comprising: computing an individual test score for each target motion test; computing an overall test score based on at least one of: a sum, weighted sum, product, weighted product, average, weighted average, median, mode, trimmed mean, geometric mean, harmonic mean and another quantity, of the individual test scores; detecting the motion to be the target motion in the sliding time window if the overall test score exceeds a threshold.

Clause A26. The method/apparatus/system of the walking detection system of Clause A25, further comprising: computing the respective individual test score based on a magnitude of a test statistics associated with the respective target motion test.

Clause A27. The method/apparatus/system of the walking detection system of Clause A25 of Clause A26, further comprising: determining adaptively at least one of: a time-invariant weight and a time-varying weight for each individual test score.

Clause A28. The method/apparatus/system of the walking detection system according to any of Clauses A25-A27, further comprising: wherein the threshold is determined based on at least one of: an amount of the at least one target motion test, weights associated with the overall test score computation, a fraction and a scaling factor.

Clause A29. The method/apparatus/system of the walking detection system of Clause A6, further comprising: adjusting adaptively at least one of: a threshold, weight, target motion test selection, testing order, processing order, model, model parameter, feature selection, TSSI conditioning, feature conditioning, preprocessing, processing, post-processing, computation, memory, software, configuration, test definition, testing, thresholding, score definition, aggregation, weighting, based on at least one of: an identification of the object, habitual behavior of the object, current status of the object, information associated with an environment in which the object moves, crowd behavior, terrain of the environment, roughness of terrain, landscape, obstacle, lighted path, planned route, upcoming path, background motion, behavior of a surrounding crowd, anticipated situation, scheduled situation, upcoming event, timed event, planned object behavior, navigation route, suggested motion, identification of another object associated with at least one of: the object and the motion of the object, motion of the another object, target motion of the another object, non-target motion of the another object, change of device, change of sensor, change of device setting, change of sensor setting, a user reference, a customization, and another factor.

Clause A30. The method/apparatus/system of the walking detection system according to any of Clauses A6-A29, further comprising: computing a test measure associated with a target motion test based on the features of the TSF in the sliding time window, the test measure comprising at least one of: a first function of a plurality of TSF-derived features, a second function of a plurality of second derived features, wherein the second derived features comprise the TSF-derived features and iteratively-derived features derived iteratively from a first transform of the TSF-derived features, a third function of a plurality of third derived features, wherein the third derived features comprise the second derived features, the TSF-derived features, and iteratively-derived features derived iteratively from a second transform of the second derived features, an (N+1)-th function of a plurality of (N+1)-th derived features, wherein the (N+1)-th derived feature comprises a plurality of N-th derived features, other derived features derived before the N-th derived features, and iteratively-derived features derived iteratively from an N-th transform of the N-th derived features, and another function of a set of derived features, wherein the derived features comprise another set of derived features, other derived features derived before the another set of derived features, and iteratively-derived features derived iteratively from a transform of another set of derived features, any of the plurality of TSF-derived features, and any of any iteratively-derived features; and performing the target motion test based on the measure.

Clause A31. The method/apparatus/system of the walking detection system of Clause A30: wherein the TSF-derived features comprise at least one of: the features of the TSF in a time window encompassing the sliding time window, and at least one of the following of any one of the features: a magnitude, phase, absolute value, norm, magnitude square, function, quantization, polynomial, algebraic function, logarithmic function, exponential function, monotonic function, composite function, and function of functions.

Clause A32. The method/apparatus/system of the walking detection system of Clause A30 or Clause A31: wherein any transform comprises at least one of: filtering, linear filtering, lowpass/bandpass/highpass filtering, FIR/IIR filtering, convolution, matched filtering, Kalman filtering, particle filtering, moving average (MA), autoregressive (AR) filtering, ARMA filtering, nonlinear filtering, mean filtering, median filtering, mode filtering, rank filtering, quartile filtering, percentile filtering, selective filtering, adaptive filtering, computation of at least one of the following quantities: absolute value, sign, magnitude, phase, historgram, statistics, maximum (max), minimum (min), local maxima, local minima, zero-crossings, max after mean subtraction, min after mean subtraction, zero-crossings after mean subtraction, timing difference, time difference between any two of: local maxima, local minima, and zero-crossings, moving sum, sliding weighted sum, moving mean, sliding average, moving weighted average, sliding trimmed mean, moving median, sliding mode, moving geometric mean, sliding harmonic mean, moving max, sliding min, moving zero-crossings, sliding max after mean subtraction, moving min after mean subtraction, sliding zero-crossings after mean-subtraction, sliding count, moving histogram, sliding statistics, moving variance, sliding standard deviation, auto-correlation function (ACF), auto-covariance function, cross-correlation function, cross-covariance function, moving ACF matrix, moment generating function, sliding function of at least one quantity, function of functions of the at least one quantity, linear mapping, scaling, nonlinear mapping, companding, folding, grouping, sorting, thresholding, soft thresholding, hard thresholding, clipping, soft clipping, quantization, vector quantization, interpolation, decimation, subsampling, upsampling, resampling, time correction, timebase correction, phase/magnitude correction or cleaning, enhancement, restoration, denoising, smoothing, signal conditioning, magnitude feature extraction, magnitude/phase/energy extraction, key-point detection, local max/local min/zero-crossing extraction, peak detection, valley detection, reflection point detection, zero-cross detection, false-peak detection/removal, false valley detection/removal, false zero-crossing detection/removal, spectral analysis, linear transform, nonlinear transform, inverse transform, frequency transform, Fourier transform (FT), discrete time FT (DTFT), discrete FT (DFT), fast FT (FFT), wavelet transform, discrete wavelet transform (DWT), cosine transform, DCT, sine transform, DST, trigonometric transform, Laplace transform, Hilbert transform, Hadamard transform, slant transform, power-of-2 transform, sparse transform, graph-based transform, graph signal processing, fast transform, padding, zero padding, cyclic padding, decomposition, projection, orthogonal projection, non-orthogonal projection, over-complete projection, eigen-decomposition, singular value decomposition (SVD), principle component analysis (PCA), independent component analysis (ICA), first order derivative, second order derivative, higher order derivative, regression, spline fitting, B-spline fitting, approximation, optimization, constrained optimization, maximization, minimization, local maximization, local minimization, optimization of a cost function, least mean square error, recursive least square, constrainted least square, batch least square, error, mean square error, mean absolute error, regression error, spline error, B-spline error, approximation error, least absolute error, least mean square deviation, least absolute deviation, neural network, recognition, training, clustering, machine learning, supervised/ unsupervised/semi-supervised learning, comparison with another TSCI, similarity score computation, distance computation, matching pursuit, compression, encryption, coding, storing, transmitting, normalization, temporal normalization, frequency domain normalization, classification, labeling, tagging, learning, detection, estimation, learning network, mapping, remapping, expansion, storing, retrieving, transmitting, receiving, representing, merging, combining, splitting, tracking, monitoring, intrapolation, extrapolation, histogram estimation, importance sampling, Monte Carlo sampling, compressive sensing, representing, merging, combining, splitting, scrambling, error protection, forward error correction, doing nothing, addition, subtraction, multiplication, division, vector addition, vector subtraction, vector multiplication, vector division, mean subtraction, mean removal, centroid subtraction, DC adjustment, norm, conditioning averaging, weighted averaging, arithmetic mean, geometric mean, harmonic mean, averaging over selected frequency, averaging over antenna links, logical operation, permutation, combination, rearrangement, re-order, time varying processing, logical transform, AND, OR, XOR, union, intersection, morphological operation, inverse operation, a combination of transforms, more than one transforms, and another operation.

Clause A33. The method/apparatus/system of the walking detection system according to any of Clauses A30-A32: wherein deriving the iteratively-derived features iteratively from a set of data comprise computing at least one of: an intensity feature, representative feature, typical feature, central tendency measure, sum, weighted sum, average, weighted average, mean, arithmeic mean, geometric mean, harmonic mean, weighted mean, trimmed mean, median, weighted median, mode, dominant feature, impulsiveness measure, outlier measure, impulsiveness measure, maximum (max), minimum (min), local max, local min, mean-removed max, mean-removed min, median-removed max, median-removed min, mode-removed max, mode-removed min,local-max-to-local-min range, local-max-to-local-min ratio, local-max-to-local-min difference, max-to-min range, max-to-min ratio, max-to-min difference, max-to-mean range, max-to-mean ratio, max-to-mean difference, max-to-median range, max-to-median ratio, max-to-median difference, max-to-mode range, max-to-mode ratio, max-to-mode difference, maximum likelihood (ML) feature, maximum aposterior probability (MAP) feature, percentage over mean, percentage over absolute mean, percentage over median, percentage of data over absolute median, percentage over mode, periodicity measure, pace measure, time, timing, timing separation, timing difference, mean timing separation, mean timing difference, timing of max, timing of min, timing of zero-crossing, timing of mean-removed max, timing of mean-removed min, timing of mean-removed zero-crossing, time difference between successive max, time difference between successive min, time difference between successive max and min, time difference between successive zero-crossing, duration, sum of time difference, average of time difference, variance of time difference, variability of time difference, regularity measure, rhythmicty measure, steadiness measure, direction-steadiness measure, repeatibility measure, similarity measure, variability measure, variation measure, stationarity measure, variance, standard deviation, variation, variation ratio, derivative, slope, total variation, absolute variation, square variation, spread, dispersion, variability, deviation, absolute deviation, square deviation, total deviation, divergence, range, interquartile range, L-moment, coefficient of variation, quartile coefficient of dispersion, mean absolute difference, Gini coefficient, relative mean difference, median absolute deviation, average absolute deviation, distance standard deviation, coefficient of dispersion, entropy, variance-to-mean ratio, maximum-to-minimum ratio, likelihood, probability distribution function, sample distribution, moment generating function, expected value, expected function, distance, norm, projection, inner product, dot product, outer product, similarity score, auto-correlation, auto-covariance, cross-correlation, cross-covariance, symmetry measure, distortion measure, skewness, tail measure, kurtosis, a function of any of the above, and another feature.

Clause A34. The method/apparatus/system of the walking detection system according to any of Clauses A30-A33: wherein the SI of TSSI comprises a 3-axis acceleration; wherein each of the features of the TSF comprises a magnitude of a projection of each 3-axis acceleration to a gravity direction; computing a test measure associated with a target motion test as a maximum of the features in the sliding time window; performing the target motion test based on the test measure; determining the target motion test as "passed" if the test measure is less than an upper threshold and greater than a lower threshold.

Clause A35. The method/apparatus/system of the walking detection system according to any of Clauses A30-A34: wherein the SI of TSSI comprises a 3-axis acceleration; wherein each of the features of the TSF comprises a magnitude of a projection of each 3-axis acceleration to a gravity direction; computing a plurality of local maxima of the features in the sliding time window; computing a test measure associated with a target motion test as at least one of: mean, weighted average, trimmed mean, median, mode, maximum, and minimum, of the plurality of local maxima; performing the target motion test based on the test measure; determining the target motion test as "passed" if the test measure is less than an upper threshold and greater than a lower threshold.

Clause A36. The method/apparatus/system of the walking detection system according to any of Clauses A30-A35: wherein the SI of TSSI comprises a 3-axis acceleration; wherein each of the features of the TSF comprises a magnitude of a projection of each 3-axis acceleration to a gravity direction; computing a plurality of local maxima of the features in the sliding time window; computing a plurality of local minima of the features in the sliding time window; computing a plurality of negated local minima by negating each of the plurality of local minima; computing a plurality of absolute local minima by computing absolute value of each of the plurality of local minima; computing a test measure associated with a target motion test as at least one of: mean, weighted average, trimmed mean, median, mode, maximum, and minimum, of at least one of: the plurality of local maxima, the plurality of minima, the plurality of negated minima and the plurality of absolute local minima; performing the target motion test based on the test measure; determining the target motion test as "passed" if the test measure is less than an upper threshold and greater than a lower threshold.

Clause A37. The method/apparatus/system of the walking detection system according to any of Clauses A30-A36: wherein the SI of TSSI comprises a 3-axis acceleration; wherein each of the features of the TSF comprises a magnitude of a projection of each 3-axis acceleration to a gravity direction; computing a first threshold as at least one of: mean, weighted average, trimmed mean, median, mode, a scaled maximum, a sum of the mean and a scaled standard deviation, of at least one of: the features in the sliding time window, and absolute values of the features in the sliding time window; computing a test measure associated with a target motion test as a percentage of the features in the sliding time window that are greater than the first threshold; performing the target motion test based on the test measure; determining the target motion test as "passed" if the test measure is greater than a second threshold.

Clause A38. The method/apparatus/system of the walking detection system according to any of Clauses A30-A37: wherein the SI of TSSI comprises a 3-axis acceleration; wherein each of the features of the TSF comprises a magnitude of a projection of each 3-axis acceleration to a gravity direction; computing a histogram of the features of the TSF in the slide time window; computing a test measure associated with a target motion test as at least one of: a X-percentile of the features, and a sum of top (100-X) percent of the features based on the histogram, X being a preselected value between 0 and 100; computing a threshold as at least one of: mean, weighted average, trimmed mean, median, mode, a scaled maximum, a sum of the mean and a scaled standard deviation, of at least one of: the features in the sliding time window, and absolute values of the features in the sliding time window; performing the target motion test based on the test measure; determining the target motion test as "passed" if the test measure is greater than the threshold.

Clause A39. The method/apparatus/system of the walking detection system according to any of Clauses A30-A38: wherein the SI of TSSI comprises a 3-axis acceleration; wherein each of the features of the TSF comprises a magnitude of a projection of each 3-axis acceleration to a gravity direction; computing a time series of reference features, each reference feature being at least one of: average, weighted average, moving mean, moving weighted mean, moving trimmed mean, moving median, moving mode, and average of moving maximum and moving minimum, of the features of the TSF; computing a time series of reference-subtracted feature (RSF), each RSF being a difference between the features of the TSF and the corresponding reference features; computing a test measure associated with a target motion test as at least one of: a percentage of RSF in the sliding window greater than a first threshold, an X-percentile of RSF in the sliding window, and at least one of: mean, weighted mean, trimmed mean, median, mode, maximum and minimum, of the top (100-X)-percent of RSF in the sliding window; performing the target motion test based on the test measure; determining the target motion test as "passed" if the test measure is greater than a second threshold.

Clause A40. The method/apparatus/system of the walking detection system of Clause A39, further comprising: normalizing the reference-subtracted features.

Clause A41. The method/apparatus/system of the walking detection system according to any of Clauses A6-A40: wherein the SI of TSSI comprises a 3-axis acceleration; wherein each of the features of the TSF comprises a magnitude of a projection of each 3-axis acceleration to a gravity direction; computing zero-crossings of the features of the TSF associated with the sliding time window; computing a plurality of time differences, each being time difference between a pair of adjacent zero-crossings associated with the sliding time window; computing a test measure associated with a target motion test as a ratio of a maximum time difference associated with the sliding time window to a minimum time difference associated with the sliding time window; performing the target motion test based on the test measure; determining the target motion test as "passed" if the test measure is less than a threshold.

Clause A42. The method/apparatus/system of the walking detection system according to any of Clauses A6-A41: wherein the SI of TSSI comprises a 3-axis acceleration; wherein each of the features of the TSF comprises a magnitude of a projection of each 3-axis acceleration to a gravity direction; computing zero-crossings of the features of the TSF associated with the sliding time window; computing a plurality of time differences, each being time difference between a pair of adjacent zero-crossings associated with the sliding time window; computing a test measure associated with a target motion test as at least one of: variance, standard deviation, variation, variation ratio, derivative, total variation, absolute variation, square variation, spread, dispersion, variability, deviation, absolute deviation, square deviation, total deviation, divergence, range, skewness, kurtosis, interquartile range, L-moment, coefficient of variation, quartile coefficient of dispersion, mean absolute difference, Gini coefficient, relative mean difference, median absolute deviation, average absolute deviation, distance standard deviation, coefficient of dispersion, entropy, variance-to-mean ratio, and likelihood, of the plurality of time difference; performing the target motion test based on the test measure; determining the target motion test as "passed" if the test measure is less than a threshold.

Clause A43. The method/apparatus/system of the walking detection system according to any of Clauses A6-A42: wherein the SI of TSSI comprises a 3-axis acceleration; wherein each of the features of the TSF comprises a magnitude of a projection of each 3-axis acceleration to a gravity direction; determining a subdivision of the sliding time window into a number of overlapping segments; computing a number of autocorrelation functions (ACFs) of the features of the TSF, each associated with one of the overlapping segments; smoothing each ACF; computing at least one local maximum for each smoothed ACF; determining a respective local maximum associated with a respective time lag for each smoothed ACF, wherein all the respective time lags are close to each other; computing a first test measure associated with a target motion test as at least one of: a sum, weighted average, trimmed mean, median, mode, maximum, minimum, of the respective local maximum of each smoothed ACF at the respective time lag; computing a second test measure associate with the target motion test as at least one of: variance, standard deviation, variation, variation ratio, derivative, total variation, absolute variation, square variation, spread, dispersion, variability, deviation, absolute deviation, square deviation, total deviation, divergence, range, skewness, kurtosis, interquartile range, L-moment, coefficient of variation, quartile coefficient of dispersion, mean absolute difference, Gini coefficient, relative mean difference, median absolute deviation, average absolute deviation, distance standard deviation, coefficient of dispersion, entropy, variance-to-mean ratio, and likelihood, of the respective time lag of each smoothed ACF; computing a third test measure associated with a target motion test as at least one of: a sum, weighted average, trimmed mean, median, mode, maximum, minimum, of the respective local maximum of each smoothed ACF at a common time lag, wherein the common time lag is at least one of: an average, weighted average, trimmed mean, median, mode, maximum, minimum, and a particular one, of the respective time lag; performing the target motion test based on the test measure; determining the target motion test as "passed" if at least one of: the first test measure is at least one of: greater than a first threshold T1, and less than a second threshold T2, the second test measure is less than a third threshold T3, and the third test measure is greater than a fourth threshold T4.

Clause A44. The method/apparatus/system of the walking detection system of Clause A43: computing the common time lag by optimizing a weighted sum of the number of ACF.

Clause A45. The method/apparatus/system of the walking detection system according to any of Clauses A6-A44: wherein the SI of TSSI comprises a 3-axis acceleration; wherein each of the features of the TSF comprises a magnitude of a projection of each 3-axis acceleration to a gravity direction; determining a subdivision of the sliding time window into a number of overlapping segments; computing a number of frequency transform (FT) of the features of the TSF, each associated with one of the overlapping segments; smoothing each FT; computing at least one local maximum for each smoothed FT; determining a respective local maximum associated with a respective frequency for each smoothed FT, wherein all the respective frequency are close to each other; computing a first test measure associated with a target motion test as at least one of: a sum, weighted average, trimmed mean, median, mode, maximum, minimum, of the respective local maximum of each smoothed ACF at the respective frequency; computing a second test measure associate with the target motion test as at least one of: variance, standard deviation, variation, variation ratio, derivative, total variation, absolute variation, square variation, spread, dispersion, variability, deviation, absolute deviation, square deviation, total deviation, divergence, range, skewness, kurtosis, interquartile range, L-moment, coefficient of variation, quartile coefficient of dispersion, mean absolute difference, Gini coefficient, relative mean difference, median absolute deviation, average absolute deviation, distance standard deviation, coefficient of dispersion, entropy, variance-to-mean ratio, and likelihood, of the respective frequency of each smoothed ACF; computing a third test measure associated with a target motion test as at least one of: a sum, weighted average, trimmed mean, median, mode, maximum, and minimum, of the respective local maximum of each smoothed ACF at a common frequency, wherein the common frequency is at least one of: an average, weighted average, trimmed mean, median, mode, maximum, minimum, and a particular one, of the respective frequency; performing the target motion test based on the test measure; determining the target motion test as "passed" if at least one of: the first test measure is at least one of: greater than a first threshold T1 and smaller than a second threshold T2, the second test measure is less than a third threshold T3, and the third test measure is greater than a fourth threshold T4.

Clause A46. The method/apparatus/system of the walking detection system of Clause A45, further comprising: computing the common time lag by optimizing a weighted sum of the number of FT.

Clause A47. The method/apparatus/system of the walking detection system of Clause A45 of Clause A46: wherein the FT comprises at least one of: Fourier transform (FT), discrete time FT (DTFT), discrete FT (DFT), fast FT (FFT), wavelet transform, discrete wavelet transform (DWT), cosine transform, DCT, sine transform, DST, trigonometric transform, Laplace transform, Hilbert transform, Hadamard transform, slant transform, power-of-2 transform, sparse transform, graph-based transform, graph signal processing, fast transform, padding, zero padding, cyclic padding.

The following numbered clauses provide implementation examples for movement tracking.

Clause B1. A system for movement tracking, comprising: at least one sensor configured to generate at least one sensing information (SI); a memory; a processor communicatively coupled to the memory and the at least one sensor; and a set of instructions stored in the memory which, when executed by the processor, cause the processor to: obtain at least one time series of SI (TSSI) from the at least one sensor, analyze the at least one TSSI, track a movement of an object in a venue based on the at least one TSSI, compute an incremental distance associated with the movement of the object in a first incremental time period based on the at least one TSSI, compute a direction associated with the movement of the object in a second incremental time period based on the at least one TSSI, and compute a next location of the object at a next time based on: a current location of the object at a current time, a current orientation of the object at the current time, the incremental distance, the direction, and a map of the venue.

Clause B2. The system of Clause B1, wherein: the at least one sensor comprises at least one of: an initial measurement unit (IMU), accelerometer, gyroscope, magnetometer, or barometer; the at least one SI comprises information about at least one of: force, acceleration, acceleration force, acceleration in instantaneous rest frame, orientation, angle, angular velocity, an angle, magnetic field direction, magnetic field strength, magnetic field change, or air pressure; and the direction is computed based on at least one of: a SI from a gyroscope, a SI from a magnetometer, at least one direction in the second incremental time period, a direction before the second incremental time period, a direction after the second incremental time period, a weighted average of multiple directions associated with the second incremental time period, a direction of the movement at the current time, or a direction of the movement at the next time.

Clause B3. The system of Clause B2, wherein the set of instructions stored in the memory, when executed by the processor, further cause the processor to: determine an underlying rhythmic motion associated with the movement; identify a rhythmic behavior of the at least one TSSI associated with the underlying rhythmic motion; track the movement of the object based on the rhythmic behavior of the at least one TSSI; and compute the incremental distance based on the rhythmic behavior of the at least one TSSI.

Clause B4. The system of Clause B3, wherein the set of instructions stored in the memory, when executed by the processor, further cause the processor to: compute a time series of intermediate quantity (IQ) based on the at least one TSSI; identify an additional rhythmic behavior of the time series of IQ (TSIQ) associated with the underlying rhythmic motion; track the movement of the object based on the additional rhythmic behavior of the TSIQ; and compute the incremental distance based on the additional rhythmic behavior of the TSIQ.

Clause B5. The system of Clause B4, wherein the set of instructions stored in the memory, when executed by the processor, further cause the processor to: identify a time window of stable rhythmic behavior of the at least one TSSI or the TSIQ associated with stable underlying rhythmic motion associated with the movement of the object; and add a time stamp to the time window when at least one of the following is satisfied: a weighted average of the IQ in a sliding window around the time stamp is greater than a first threshold, a feature of an autocorrelation function of IQ around the time stamp is greater than a second threshold, or another criterion associated with the time stamp.

Clause B6. The system of Clause B5, wherein the set of instructions stored in the memory, when executed by the processor, further cause the processor to: identify at least one local characteristic point of IQ in the time window, wherein the at least one local characteristic point comprises at least one of: local maximum, local minimum, zero crossing of IQ from positive to negative, zero crossing of IQ from negative to positive; segment the time window into segments based on time stamps associated with the at least one local characteristic point, each segment spanning from a local characteristic point to another local characteristic point; and identify at least one of: complete cycle, rhythm cycle, compound cycle, extended cycle, double cycle, quad cycle, partial cycle, half cycle, quarter cycle, gait cycle, stride cycle, step cycle, or hand cycle.

Clause B7. The system according to any of Clauses B4-V6, wherein the set of instructions stored in the memory, when executed by the processor, further cause the processor to: compute a time series of mean-subtracted IQ (MSIQ) by subtracting a time series of local means from the TSIQ, wherein the local means are obtained by applying a moving average filter to the TSIQ; segment the time series of MSIQ (TSMSIQ) in a time window into preliminary segments comprising MSIQ with same polarity; identify at least one local characteristic point of MSIQ of each preliminary segment, wherein the at least one local characteristic point comprises at least one of: local maximum, local minimum, reflection point, zero crossing of MSIQ from positive to negative, zero crossing of MSIQ from negative to positive, centroid of preliminary segments, median, first quartile, third quartile, percentile, or mode; segment the TSMSIQ into segments based on the at least local characteristic point; and identify at least one of: complete cycle, rhythm cycle, compound cycle, extended cycle, double cycle, quad cycle, partial cycle, half cycle, quarter cycle, gait cycle, stride cycle, step cycle, or hand cycle 8. The system of Clause B6, wherein the set of instructions stored in the memory, when executed by the processor, further cause the processor to: identify a complete cycle of the TSIQ as at least one of: a first time period from a first local maximum of the TSIQ to a second local maximum of the TSIQ, a second time period from a first local maximum of the TSIQ to a local minimum of the TSIQ to a second local maximum of the TSIQ, a third time period from a first local maximum of the TSIQ to a zero crossing of the TSIQ to a second local maximum of the TSIQ, or a fourth time period from a first zero crossing to a local minimum to a second zero crossing to a local maximum to a third zero crossing; and recognize the complete cycle based on a finite-state machine (FSM) with local characteristic points as input for state transitions.

Clause B9. The system of Clause B8, wherein the set of instructions stored in the memory, when executed by the processor, further cause the processor to perform at least one of: identifying a rhythm cycle as a complete cycle; identifying a compound cycle as multiple complete cycles; identifying an extended cycle as multiple complete cycles; identifying a double cycle as two consecutive cycles; identifying a quad cycle as four consecutive cycles; identifying a step cycle as a complete cycle; recognizing a stride cycle as a double cycle; recognizing a gait cycle as either a step cycle or a stride cycle; or recognizing a hand cycle as either a complete cycle or a double cycle.

Clause B10. The system according to any of Clauses B6-B9, wherein the set of instructions stored in the memory, when executed by the processor, further cause the processor to: compute at least one cycle feature based on at least one of: the IQ in the time window, the at least one local characteristic point of IQ, the segments or the at least one cycle, wherein the at least one cycle feature comprises: at least one gait speed each being associated with a time stamp in the time window, at least one gait acceleration each being associated with the time stamp in the time window and being a derivative of gait speed, at least one step length each being associated with the time stamp in the time window and being an integration of gait speed over a respective step segment around the time stamp, at least one step period each being associated with the time stamp in the time window and being duration of a respective step segment around the time stamp, and at least one step frequency each being associated with the time stamp in the time window and being inversely proportion to a respective step period around the time stamp.

Clause B11. The system of Clause B10, wherein the set of instructions stored in the memory, when executed by the processor, further cause the processor to: communicate one of the at least one cycle feature to a server; communicate a cycle feature to a user device; communicate the next location of the object at the next time to the server; communicate the next location of the object to the user device; and generate a presentation of at least one of: the cycle feature, a history of cycle features, the next location, a trajectory, or a trace to a user of the user device.

Clause B12. The system according to any of Clause B6-B11, wherein the set of instructions stored in the memory, when executed by the processor, further cause the processor to: compute an amount of cycles in the first incremental time period; and compute the incremental distance as a multiplicative product of the amount of cycles and a cycle distance, wherein the cycle distance is computed based on at least one of: a user input, a trained value obtained in a training phase, a calibration process or a training process using a reference distance from a locationing scheme, an adaptively computed value based on a recent time period of stable rhythmic motion.

Clause B13. The system of Clause B12, wherein: the next location of the object at the next time is computed using a particle filter; and the next location of the object at the next time is computed based on: initializing an initial number $(N\_0)$ of initial candidate locations of the object at an initial time $(t=0)$; computing iteratively a first dynamic number $(N\_(i+1))$ of first candidate locations of the object at the next time $(t=(i+1))$ based on a second dynamic number $(N\_i)$ of second candidate locations of the object at the current time $(t=i)$; and computing the next location of the object at the next time based on at least one of: the first dynamic number of first candidate locations at the next time, or the second dynamic number of second candidate locations at the current time.

Clause B14. The system of Clause B13, wherein: the object moves during the first incremental time period in a region represented by the map; the map is a multi-dimensional map represented as a multi-dimensional array A, such that reachability of each location of the region is represented by a corresponding array element a which is a logical value between 0 and 1; a location of the region is unreachable and forbidden when the corresponding array element satisfies $a = 0$; a location of the region is fully reachable when the corresponding array element satisfies $a = 1$; a location of the region is partially reachable when the corresponding array element satisfies: $0 < a < 1$; each of the next location, the current location, the first dynamic number of first candidate locations, and the second dynamic number of second candidate locations, is a point in the region and is represented as a corresponding array element a, with a > 0; and the direction of the movement of the object at any location is locally represented as one of a number of allowable directions.

Clause B15. The system of Clause B14, wherein the next location of the object at the next time is computed based on: computing the first dynamic number of weights each associated with a first candidate location, each weight being a function of at least one of: the current location, the first candidate location, a corresponding second candidate location associated with the first candidate location, the direction of the movement, or a distance between the first candidate location and a first unreachable array element a in the direction; and computing the next location of the object based on the first dynamic number of first candidate locations, and the associated first dynamic number of weights.

Clause B16. The system of Clause B15, wherein: each weight is at least one of: a monotonic non-decreasing function of the distance between the first candidate location and the first unreachable array element a in the direction, or a bounded function of the distance between the first candidate location and the first unreachable array element a in the direction; the next location of the object at the next time is computed as at least one of: a weighted average of the first dynamic number of first candidate locations, or one of the first candidate locations.

Clause B17. The system of Clause B16, wherein the next location of the object at the next time is computed based on: normalizing the weights to generate normalized weights; computing a weighted cost of each first candidate location with respect to the rest of the first dynamic number of first candidate locations based on the normalized weights, wherein the weighted cost is a weighted sum of pairwise distance between the first candidate location and each of the rest of the first candidate locations; and choosing the first candidate location with a minimum weighted cost as the next location of the object.

Clause B18. The system according to any of Clause B14-B17, wherein the next location of the object at the next time is computed based on: computing a predicted value for each of the second candidate locations of the object based on at least one of: the second candidate location, the incremental distance, or the incremental time period; when the predicted value of the second candidate location is fully reachable with associated array element a=1, creating a first candidate location of the object based on the predicted value of the second candidate location; when the predicted value of the second candidate location is forbidden with associated array element a=0, labeling the second candidate location as "rejected" without creating any first candidate location; when the predicted value of the second candidate location is partially reachable with associated array element satisfying 0<a<1, generating a random number between 0 and 1, and creating a first candidate location of the object based on the predicted value of the second candidate location when the random number is less than a; and when a quantity of the first candidate locations is smaller than a threshold, generating a new first candidate location of the object by probabilistically taking on the predicted values of second candidate locations that are not rejected, with a probability distribution based on at least one of: weights associated with the predicted values, weights associated with the second candidate locations, array elements of the multi-dimensional array A associated with the predicted values, or array elements of the multi-dimensional array A associated with the second candidate locations.

Clause B19. The system of Clause B18, wherein the set of instructions stored in the memory, when executed by the processor, further cause the processor to: maintain a dynamic number of candidate locations at any time; change the dynamic number of candidate locations by at least one of: initializing at least one candidate location, updating at least one candidate location, adding at least one candidate location, pausing at least one candidate location, stopping at least one candidate location, resuming at least one paused candidate location, reinitializing at least one stopped candidate location, or removing at least one candidate location; compute the next location of the object at the next time based on: the dynamic number of candidate locations at the next time, and the dynamic number of candidate locations at another time, wherein the dynamic number of candidate locations is bounded by an upper limit and a lower limit; and add at least one candidate location when the dynamic number of candidate locations is lower than the lower limit.

Clause B20. The system of Clause B19, wherein the set of instructions stored in the memory, when executed by the processor, further cause the processor to: compute a likelihood score associated with the complete cycle based on at least one of: the TSIQ, the TSMSIQ or the TSSI; and validate a complete cycle as a target type of cycle when the likelihood score is larger than a threshold, wherein the likelihood score is computed based on: computing a time period associated with the complete cycle with a corresponding start-time and a corresponding end-time of the time period; computing at least one of the following features of the TSIQ or the TSMSIQ in the time period: a sum, a weighted sum, a sum of magnitude, a weighted sum of magnitude, a local maxima, a zero-crossing, a local minimum, a maximum derivative, a minimum derivative, or a zero derivative; computing at least one cycle statistic based on the computed features in the time period; and computing the likelihood score based on the time period, the at least one cycle statistic, the at least one feature, or a function of the at least one cycle statistic or the at least one feature.

Clause B21. The system of Clause B20, wherein the set of instructions stored in the memory, when executed by the processor, further cause the processor to: compute the incremental distance associated with the movement of the object in the time period associated with the complete cycle as a multiplicative product of the likelihood score and a tentative incremental distance.

Clause B22. The system of Clause B21, wherein: the object is a human; the movement is a walking motion or a running motion of the human; the target type of cycle is a step cycle of the human walking or running; and the set of instructions stored in the memory, when executed by the processor, further cause the processor to: compute a user status of the human as WALKING or RUNNING, based on validating the complete cycle as the step cycle.

Clause B23. The system of Clause B22, wherein the set of instructions stored in the memory, when executed by the processor, further cause the processor to: increment a count of the target cycle based on the validated step cycle; change the user status from NON-WALKING to WALKING, or from NON-RUNNING to RUNNING, based on at least one of: the validated step cycle, consecutive validated step cycles, or continuous validated step cycles; determine that a complete cycle is a non-step cycle because the complete cycle fails to be validated as a target cycle; reset the count of the target cycle to be zero; and change the user status from WALKING to NOT-WALKING or from RUNNING to NON-RUNNING based on the non-step cycle.

Clause B24. The system of Clause B23, wherein the set of instructions stored in the memory, when executed by the processor, further cause the processor to: compute a statistics of an observable, wherein the observable comprises one of intermediate quantity (IQ), a cycle feature, a local characteristic point or a feature of a time series of IQ (TSIQ) or a time series of mean-subtracted IQ (TSMSIQ); and update the statistics by computing a current statistics based on an immediate past statistics and/or a current instance of the observable.

Clause B25. The system of Clause B24, wherein the set of instructions stored in the memory, when executed by the processor, further cause the processor to: project the at least one SI from a gyroscope onto the earth reference frame; compute a cumulative directional change; and add the cumulative directional change to an initial direction of the movement.

Clause B26. The system of Clause B25, wherein: the at least one sensor comprises a barometer; the at least one SI from the barometer is air pressure; and the set of instructions stored in the memory, when executed by the processor, further cause the processor to track a vertical movement of the object based on the air pressure, estimate an altitude or a vertical position based on the air pressure, and compute a vertical incremental distance based on the air pressure, the altitude or the vertical position.

Clause B27. The system of Clause B26, wherein the set of instructions stored in the memory, when executed by the processor, further cause the processor to: compute a difference between a first increment distance computed using the particle filter to a second incremental distance computed without using the particular filter; detect a problematic situation when the difference is greater than a threshold.

Clause B28. The system of Clause B27, wherein the set of instructions stored in the memory, when executed by the processor, further cause the processor to: generate a number of new first candidate locations that are outside a region associated with the second candidate locations; replace a number of existing second candidate locations with corresponding new candidate locations that are outside a region associated with the existing second candidate locations; and eliminate a number of existing second candidate locations.

Clause B29. A device of a movement tracking system, comprising: a processor; a memory communicatively coupled to the processor; and a sensor communicatively coupled to the processor, wherein: the sensor is configured to generate at least one sensing information (SI), and the processor is configured to: obtain at least one time series of SI (TSSI) from the sensor, analyze the at least one TSSI, track a movement of an object in a venue based on the at least one TSSI, compute an incremental distance associated with the movement of the object in a first incremental time period based on the at least one TSSI, compute a direction associated with the movement of the object in a second incremental time period based on the at least one TSSI, and compute a next location of the object at a next time based on at least one of: a current location of the object at a current time, a current orientation of the object at the current time, the incremental distance, the direction, or a map of the venue.

Clause B30. A method of a movement tracking system, comprising: generating at least one sensing information (SI); obtaining at least one time series of SI (TSSI); analyzing the at least one TSSI; tracking a movement of an object in a venue based on the at least one TSSI; computing an incremental distance associated with the movement of the object in a first incremental time period based on the at least one TSSI; computing a direction associated with the movement of the object in a second incremental time period based on the at least one TSSI; and computing a next location of the object at a next time based on at least one of: a current location of the object at a current time, a current orientation of the object at the current time, the incremental distance, the direction, or a map of the venue.

Driver arrival sensing which enables a car to detect an approaching driver has been playing an important role in the evolving smart car system. The present teaching discloses a driver arrival sensing scheme based on the fine time measurement (FTM) released in the IEEE 802.11mc protocol. When the initiating station (ISTA), such as a mobile phone or WiFi client, keeps moving towards the response station (RSTA), usually a WiFi access-point (AP), there exists a knee point of the WiFi-FTM range estimation after which the variation of the WiFi-FTM range estimations follows a stable trend regardless of the environment. As such, the present teaching discloses a joint knee point detection and driver arrival time estimation algorithm based on the trend of WiFi-FTM range estimations. Given the arrival time, the car (RSTA) can determine the right time to start the service requested by the driver. One can implement the disclosed method using commercial 802.11mc WiFi chipsets and conduct extensive experiments in different parking lots with different testers. Some results show that the scheme can achieve ≥ 92.5% accuracy with less than Is arrival time estimation error.

With the proliferation of WiFi devices in the past several decades, many WiFi-based applications for smart car systems such as activity recognition, driver authentication and Advanced Driver Assistance Systems (ADAS) have emerged. While these applications are mainly for in-car use, there have not been many out-car applications such as driver arrival sensing that needs to be further explored. Driver arrival sensing is often used in remote control including locking/unlocking the door, opening/closing the window/convertible tops and remote ignition key. While these applications focus more on the driver's presence sensing, there are many other applications which need to estimate the accurate arrival time of the driver (AToD). For example, a car needs to sense the AToD so that the air conditioner (AC) system can be turned on at a right time. Turning on the AC too early will cause extra energy consumption while turning on the AC too late may lead to an uncomfortable temperature when the driver arrives. In the future, the car system may consist of many service systems such as driver identification to make it more intelligent. As a result, a smart car needs to sense the AToD so that it can manage multiple services properly such as starting a time-consuming service (e.g., driver identification) earlier while responding to a time-saving service (e.g., door close/open) later on. On the other hand, the current driver sensing system mainly applies a digital code matching and rolling scheme by wireless transponders, which has a serious security issue. As a result, security needs to be enhanced in the AToD sensing system as well. To address the aforementioned challenges, the present teach discloses an AToD sensing algorithm by leveraging the WiFi-FTM protocol introduced in IEEE 802.11mc. There are two main advantages by using WiFi than the traditional low-power transponders. First, the larger coverage of WiFi devices enables an earlier detection of the AToD. Second, WiFi provides more secure encryptions such as Wired Equivalent Privacy (WEP) and Wi-Fi Protected Access (WPA) than the present digital code identification and rolling systems. In addition, a new released app to measure the distance to nearby FTM-capable Wi-Fi access points (APs) makes the WiFi-FTM more available.

One can evaluate the accuracy of the WiFi-FTM range estimations in the practical parking lots by using the commercial 802.11mc WiFi chipsets. There always exists a knee point after which the WiFi-FTM range estimations show a stable trend when the ISTA (driver/client) keeps moving towards the RSTA (fixed on a car). Based on such an observation, a novel algorithm is disclosed to detect the knee point and estimate the AToD. Experiment results show that the disclosed system can achieve ≥ 92.5% accuracy with less than Is error of the AToD estimation.

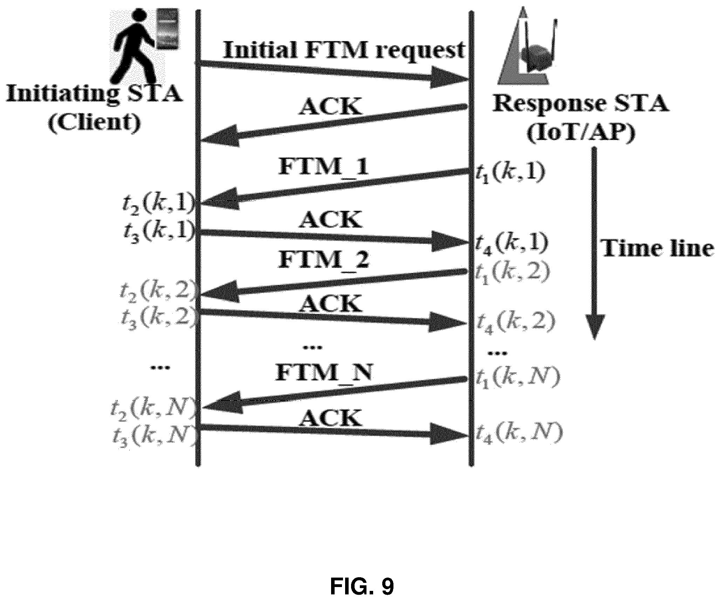

WiFi-FTM was released in IEEE 802.11mc to enable the range estimations between two WiFi cards by using the round trip time (RTT). As shown in FIG. 9, N FTMs in a single burst can be averaged to get more accurate RTT estimations. The distance estimation RIS(k) at burst k between the ISTA and RSTA is given by

$$R_{IS}(k) = \frac{1}{2N}\sum_{n=1}^{N}\left[\left(t_4(k,n) - t_1(k,n)\right) - \left(t_3(k,n) - t_2(k,n)\right)\right] \cdot c \qquad (1)$$

where $c = 3 \times 10^8 m/s$ is the light speed, $t1(k; n)$ and $t4(k; n)$ denotes the departure and arrival time measured by the RSTA at burst k, pulse n. Similarly, $t2(k; n)$ and $t3(k; n)$ are the arrival and departure time recorded by the ISTA. Generally, $t1(k; n)$ and $t4(k; n)$ are sent back to ISTA for range estimations between the ISTA and RSTA. Note that the exchange of the FTMs and its acknowledgment frame (ACK) is usually finished within a very short period. Hence, the clocks of the two stations do not drift significantly.

However, impacted by the multipath propagation and blockage in non-line-of-sight (NLOS) scenarios, the range estimation provided by Eqn. (1) may not be accurate. In one example, where a user equipped with an ISTA is walking towards his car equipped with an RSTA. The user may approach the car along Route 1 (A→B→D→E) or Route 2 (A→C→G→D→E) or other routes. Taking Route 1 as an example, at the starting point 'A', the WiFi-FTM-based distance estimations may be inaccurate due to NLOS of point A. However, as the user gets closer to the car, e.g., passing point 'B' (or point 'G' in Route 2), the LOS signal starts to dominate and the WiFi-FTM-based distance estimations become more accurate. It is expected that the distance estimations when the user approaches his car should exhibit a knee-point after which distance estimation becomes reliable.

To verify the existence of the knee point in distance estimation, one can conduct multiple experiments with settings as follows. One can implement the WiFi-FTM using commercial 802.11mc WiFi chipsets. One WiFi chipset may be integrated with a control board to work as an RSTA which is fixed on top of a car during the test. Another WiFi chipset is installed on a board to work as an ISTA. To build a mobile client, the ISTA is put in a box (named as TestBox) and carried by a tester in the test. The ISTA board runs Linux OS and receives instructions from a smart tablet through an Ethernet cable. The smart tablet works as a GUI through which one can control the ISTA such as sending/stopping request and get real time WiFi-FTM range estimations from the ISTA board.

In the experiment, the RSTA is fixed on top of a car in the parking lot, and a tester holds the TestBox while moving towards the car from different directions and initial distances. The initial distance means the distance between the ISTA and RSTA when the tester starts to move. Once the tester arrives at the car, he/she records the WiFi-FTM range estimation showing on the GUI of the smart tablet manually as the ground truth of the arrival time TAM. Different testers are invited to walk at different speeds. Extensive experiments can be conducted in different parking lots and garages on weekdays where the test car is surrounded by different cars during the data collection.

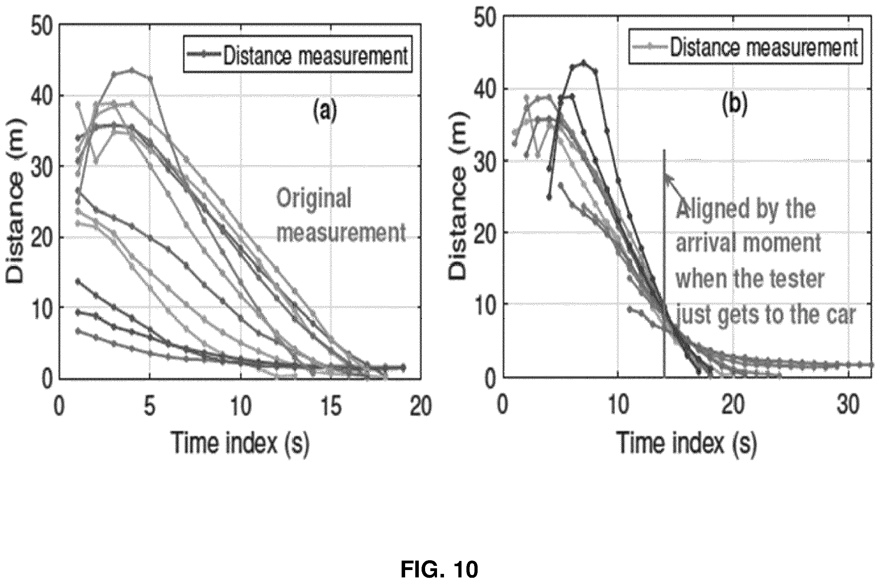

FIG. 10 shows the distance measurements with different initial distances and different directions, i.e., different routes R1, R2 ... Rn. Results when a tester is running (about 3m/s) and walking slowly (about 1m/s) to the car can be obtained to test the impact of the moving speed of the ISTA. The range estimations variate irregularly at the beginning and show a stationary trend passing a Knee Point. From FIG. 10, one can denote the moment when the tester gets to the car as Arrival Time TAM which is labeled every time manually. At the beginning, the distance measurement changes randomly versus the walking time due to the random errors brought by the serious multipaths. As the ISTA keeps moving close to the RSTA, the distance measurements begin to decay linearly w.r.t. walking time. For example, in FIG. 10, if one aligns the distance measurements according to the TAM, the decaying trend is very consistent near TAM. If one can detect such a knee point and estimate the accurate distance between the ISTA and RSTA as early as possible, the RSTA can predict the arrival time of the ISTA and response to the request from the ISTA properly. A novel knee point detection and driver arrival time estimation method will be described later based on the aforementioned observations.

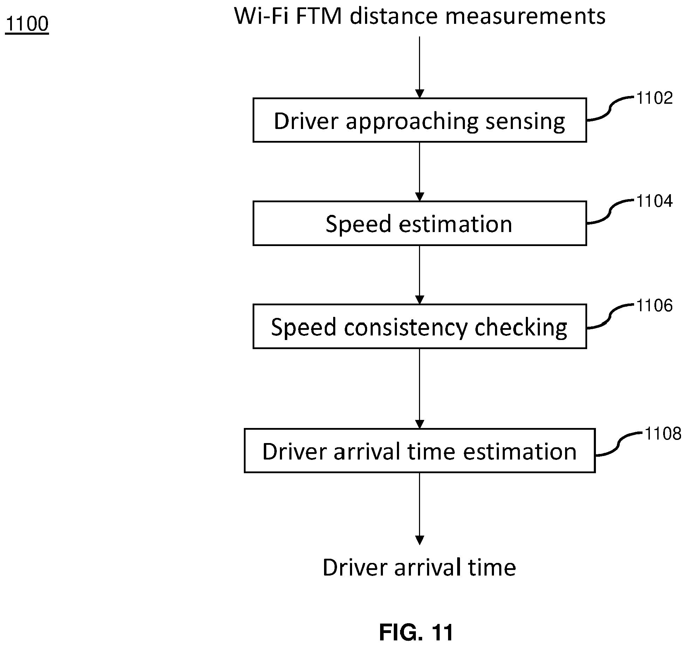

FIG. 11 illustrates a flow chart of an exemplary method 1100 for driver arrival sensing based on fine time measurement (FTM), according to some embodiments of the present disclosure. At operation 1102, driver approaching sensing is performed based on distance measurements obtained based on WiFi FTM. At operation 1104, speed estimation is performed after sensing the driver approaching, e.g. a car. At operation 1106, speed consistency checking is performed. At operation 1108, driver arrival time estimation is performed to determine an arrival time of the driver.

To detect a knee point, one can have WiFi-FTM distance sequence $D_n = [d_n, d_{n-1}, ... d_2, d_1]$ at time $t_n$, the instant speed of the ISTA at time $t_n$ can be written as

$$q_n = \frac{d_{n-1} - d_n}{t_n - t_{n-1}}. \qquad (2)$$

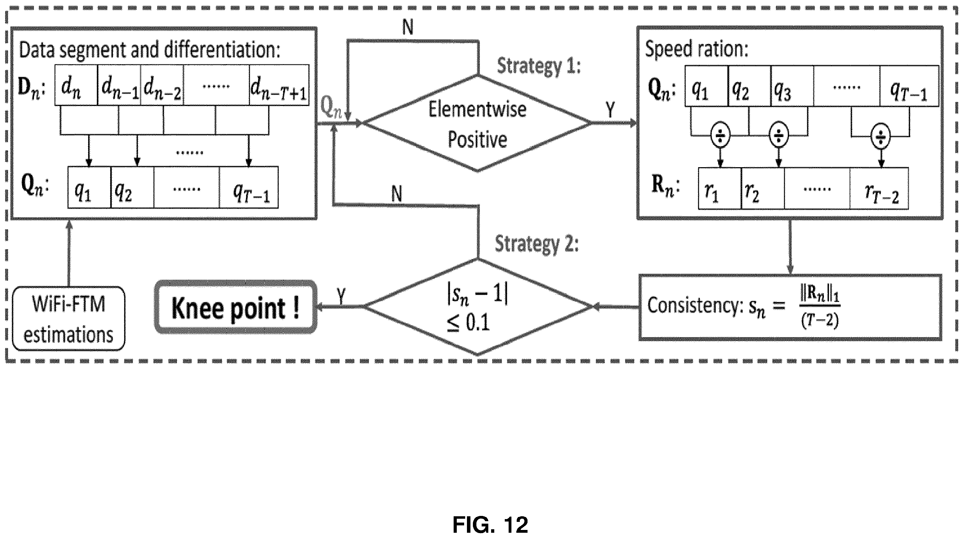

where $t_n$ and $d_n$ denote the sample time and the WiFi-FTM-based distance estimation at time $t_n$, respectively. To get an averaged/reliable speed estimation, one can take the latest T distance points, i.e., $[d_n, d_{n-1}, ... d_{n-T+1}]$, where T is termed as a window length as shown in FIG. 12, which shows key steps of a knee point detection for driver arrival sensing, according to some embodiments of the present disclosure. If the ISTA has stepped into the area where the LOS dominates, $D_n$ is monotonically decreasing. As a result, every element in the instant speed estimation sequence $Q_n = [q_1, q_2, ... q_{T-1}]$ should be positive, corresponding to strategy 1 in FIG. 12, since the distance $d_n$ gets smaller and smaller with ISTA approaching the RSTA.

In addition, the natural walking speed of a driver can be assumed as a constant during the whole journey when the driver walks towards his/her car. As a result, the speed estimations within $Q_n$ should be consistent while small deviations are allowed because of the measurement errors. To quantify the speed consistency, one can define the average of speed ratios within a window of length T as the speed consistency $s_n$, which is given by

$$s_n = \frac{\|R_n\|_1}{T-2} = \frac{1}{T-2} \sum_{n=1}^{T-2} \frac{q_n}{q_{n+1}}, \qquad (3)$$

where $R_n = [r_1, r_2, ... r_{T-2}]$ represents the speed ratio with $r_i = q_{i+1}/q_i (i = 1,2,...,T-2)$. Operation $\|.\|_1$ denotes the $l_1$-norm. In strategy 2 of FIG. 12, if $|s_n - 1| \leq 0.1$, the speed estimation sequence $Q_n$ is regarded as a consistent speed estimation sequence and the knee point $d_n$ is detected.

To estimate the arrival time, one can first define a LOS-Area which is centered around the location of RSTA. Within the LOS-Area, the LOS signal component dominates and the WiFi-FTM range estimations are accurate. Generally, the LOS-Area has different radii in different directions w.r.t. the RSTA due to the impact of multipaths.

To be a knee point, there are two main constraints. First, the knee point should lie on the edge of LOS-Area. If the ISTA goes further away than the knee point, the distance estimation accuracy will degrade. Second, once the ISTA passes through the knee point and keeps approaching to the RSTA, the WiFi-FTM distance measurements should be accurate. To meet the two constraints, the knee point should be no further and closer. Assume that the ISTA is $d_k$ distance away from the RSTA at the knee point and the natural walking speed of a tester is relatively constant, the arrival time can be expressed as

$$\hat{T}_{AM}^k = \frac{d_k}{v_k}, v_k = \frac{1}{T-1} \sum_{n=1}^{T-1} q_n. \qquad (4)$$

Note that the accuracy of the arrival time $\hat{}T_{AM}$ can be evaluated based on the recording of the true arrival time $T_{AM}$ once the ISTA arrives at the car.

To summarize the arrival time estimation method, in some embodiments, given the RTT readings, the system may estimate the distances based on Eqn. (1):

$$R_{IS}(k) = \frac{1}{2N} \sum_{n=1}^{N} \left[ \left( t_4(k,n) - t_1(k,n) \right) - \left( t_3(k,n) - t_2(k,n) \right) \right] \cdot c$$

from the user (TX) to the RX (response STA, or RSTA) as he walks towards the RX. The time series of speed can be estimated by Eqn. (2): $q_n = \frac{d_{n-1} - d_n}{t_n - t_{n-1}}$ . If the speed becomes element-wise positive, it means the user has started to step into the LOS area and the distance/range estimation has shown a stationary trend based on which the system can estimate the distance or speed reliably. Natural walking speed is assumed to be constant when the user walks to his car. Then, after the user stepping into the LOS area, the system may check the speed consistency by the radio of consecutive speed estimates in Eqn. (3): $S_n = \frac{\|R_n\|_1}{T-2} = \frac{1}{T-2} \sum_{n=1}^{T-2} \frac{q_n}{q_{n+1}}$ , or other metrics, such as the variance, span, etc. If consistency condition is satisfied, the estimated speed after consistency checking is the user walking speed. One can assume that the user is $d_k$ distance away from the RSTA at the knee point and the natural walking speed of a tester is relatively constant, the arrival time from at the knee point to the car can be expressed as Eqn. (4):

$$\hat{T}_{AM}^k = \frac{d_k}{v_k}, v_k = \frac{1}{T-1} \sum_{n=1}^{T-1} q_n$$

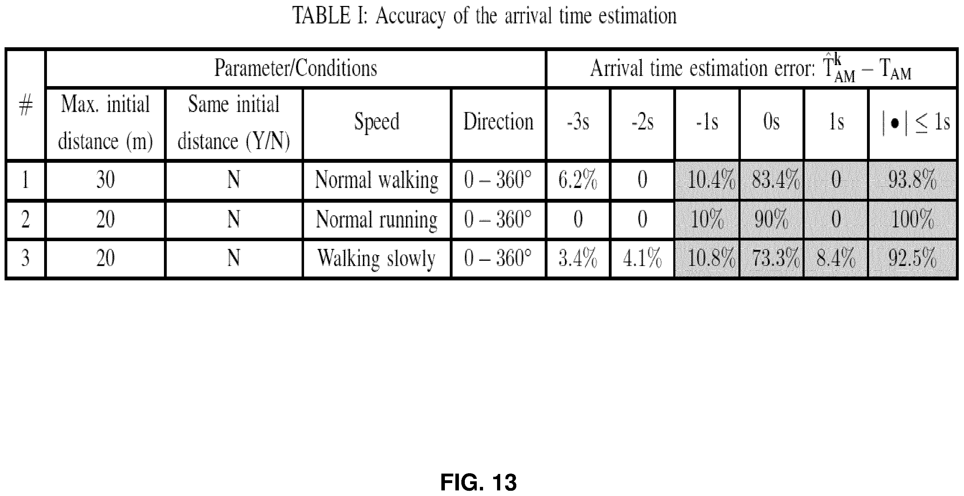

To evaluate the estimation accuracy of the arrival time TAM, one may conduct multiple experiments where a tester walks at different speeds including normal walking at about 1.2m/s, running at about 3m/s and walking very slowly at about 1m/s. For each test, the tester can be asked to walk close to the car (RSTA) in 30 different routes and different directions. The initial distance varies from 20m to 30m. One does not need to set all the initial distances as 30m since some specific locations may be occupied by other cars. One can repeat the experiment in different parking lots and different testers. Results about the arrival time estimation are given in Table I shown in FIG. 13. Clearly, the disclosed method can achieve more than 92% percentile accuracy with no greater than Is error. From Table I, the estimated arrival time $\hat{T}_{AM}^k$ is more likely to be underestimated than the true arrival time $T_{AM}^k$ . This is because that the WiFi-FTM range measurements correspond to the straight line between the ISTA and RSTA in theory. However, in practice, a tester/ISTA cannot approach to the car/RSTA along the straight line because of obstacles such as other cars. In this sense, the distance measurement is usually shorter than the real walking distance, thus causing underestimation of the arrival time $\hat{T}_{AM}^k$ .

The present teaching thus disclosed a driver arrival time sensing method by using the WiFi-FTM range estimations which are proved to show a stable changing-trend after a knee point when the ISTA keeps moving close to the RSTA. The present teaching disclosed a knee point detection and a driver arrival time estimation scheme. Experimental evaluations using commercial 802.11mc WiFi chipsets show that the disclosed system can achieve ≥ 92.5% accuracy with ≤ 1s arrival time estimation error regardless of the environments and users.

Monitoring and identifying gait has recently emerged as a promising solution candidate for unobtrusive human recognition. A gait recognition system should satisfy the following conditions in order to enable practical applications: (1) Accurate: the system should be able to recognize users accurately; (2) Fast registration and response: the system should require minimal training effort to register a new user, and recognition should be accomplished with short delays, i.e. a few steps (short period) of walking should be sufficient to achieve accurate and reliable recognition; (3) Environment-independent: the system should be able to operate at different time and days and locations without requiring tailored calibration or recalibration, and should not be affected by changes in lighting, furnishing, or any other environmental factor; (4) Contactless: the system should operate in a contactless manner, without asking the user to carry any device or using any user cooperation; (5) Privacy-preserving: even though the system can identify users, it should not reveal sensitive information about the person and surroundings.

WiFi-based systems provide an attractive solution by exploiting ambient WiFi signals for contactless recognition, but they usually require calibration for each location, as the multipath profile changes. More importantly, many of the existing systems train and test on the data collected at the same time and/or locations, imposing a high risk of performance loss when generalizing to different locations and time in practical deployment.

To achieve the criteria above, the present teaching discloses "GaitCube," a high-accuracy gait recognition system with minimal training requirement using a single commodity millimeter wave (mmWave) radio. To reduce the training overhead, the system utilizes a gait data cube, which is a novel 3D joint-feature representation of micro-Doppler and micro-Range signatures over time that can comprehensively embody the physical relevant features of a person's gait. With a pipeline of signal processing, GaitCube can automatically detect and segment human walking and effectively extract the gait data cubes. GaitCube has been implemented and evaluated through experiments conducted at 6 different locations in a typical indoor space with 10 subjects over a month, resulting in >50,000 gait instances. In one embodiment, the results show that GaitCube achieves an accuracy of 96.1% with a single gait cycle using one receive antenna; and the accuracy increases to 98.3% when combining all the receive antennas. In one embodiment, GaitCube achieves an average recognition accuracy of 79.1% for testing over different locations and times by using only 2 minutes of data in one location, enabling a practical and ubiquitous gait-based identification. Using a mmWave radar for sensing brings multifold advantages thanks to its shorter wavelength, larger bandwidth, and phased array processing, while still sharing the favorable characteristics of WiFi-based systems (e.g., contactless, privacy-preserving, etc.), promising an ideal solution for feasible and practical gait recognition with minimal infrastructure support (e.g., a single mmWave radio).

In some embodiments, GaitCube uses a single mmWave radar and combines the power of signal processing and deep learning. GaitCube introduces a three-dimensional joint-variable representation of micro-Doppler ($\mu$D) and micro-range ($\mu$R) signatures over time (T), termed as gait data cube, to comprehensively embody physical relevant features of a person's gait, which is then fed into a neural network for effective learning. With that, GaitCube can register a user with minimal walking data, and can recognize a user with high accuracy from only a couple of steps. Combining the proposed gait data cube with neural networks also allows GaitCube, trained once, to generalize to different locations and time with little performance loss. To deliver a practical system, GaitCube further incorporates modules to detect and track human walking automatically and segment gait cycles effectively.

GaitCube addresses multiple challenges to achieve all these properties in one system. First, even using a mmWave radar, it is non-trivial to extract fine-grained $\mu$R and $\mu$D signatures efficiently and effectively, accounting for the inadequate range resolution, specular reflection, multipath effects, and computational burden. Second, it is usually difficult to build a learning-based gait recognition system that can operate over different locations at different times, as neural networks can easily over-fit or learn features related to environment, but not human gait, especially when the training dataset is limited.

To combat these challenges, GaitCube detects and tracks human motion with a simple yet effective algorithm, triggers $\mu$D-$\mu$R spectrogram estimation only at interested distances and times, and extracts gait information from human walking automatically. To assemble the gait data cubes that maximize gait information, the system reshapes $\mu$D signatures at all the distances the human body spans, which are then aligned in range domain with respect to human torso, segmented in time domain with respect to walking cycles, and cropped in frequency domain. GaitCube then identifies environment-independent and physically relevant features from the gait data cubes in tandem with a convolutional neural network (CNN). To boost training and generalize the trained networks, the system exploits spatial diversity attributed by multiple receiving antennas, which not only increases the training dataset considerably but also mitigates specular reflection issue by capturing more spatially independent snapshots of human walk.

In one embodiment, GaitCube is implemented using a commercial mmWave radar to conduct experiments in an office space over different locations and times used for training and testing. With 10 volunteers and 11 sessions of data collected, GaitCube performed at six different locations over a month. During each session, the users walk for two minutes in each location to collect a total of two hours of walking data, which results in more than 50000 steps. The results demonstrate that GaitCube achieves an accuracy of 96.1% using a single gait cycle (two steps) with one receiving antenna, and this accuracy further improves to 98% by aggregating all the antennas or combining multiple walking steps. In the extreme case of using a single session (only two minutes of data) for training, GaitCube achieves an average accuracy of 79.1% tested at various locations over different times, promising a practical application of gait recognition with minimal training requirement.

In some embodiments, GaitCube is a human recognition system that learns from gait data cubes, a 3D joint-feature representation of micro-Doppler, micro-range, and time for radar signals, allowing it to achieve remarkable accuracy with a single gait cycle while needing minimal data for training. In some embodiments, GaitCube utilizes novel gait cube processing algorithms to form the gait cubes that can detect and segment human walking automatically and extract the $\mu$R-$\mu$D-T gait cubes effectively, and a deep learning model for classification. In some embodiments, GaitCube can be implemented on a commercial mmWave radar to validate its performance with 10 people over different environments, locations and time.

In some embodiments, GaitCube inputs raw radar data, and outputs identification results at time instances that correspond to gait cycles. To register a user, the system collects a minimal amount of walking data (e.g., two minutes) from the user. Then one can be recognized by GaitCube when she/he walks normally in front of the radar.

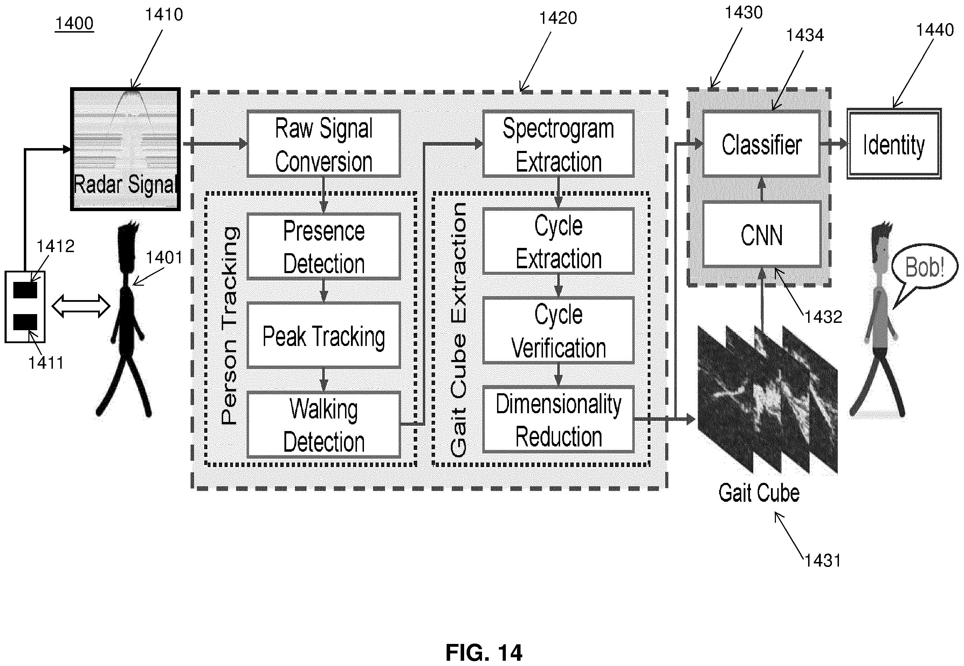

FIG. 14 illustrates a diagram of an exemplary human recognition system 1400, e.g. GaitCube, based on gait cube data using millimeter wave (mmWave) radio, according to some embodiments of the present disclosure. As shown in FIG. 14, the human recognition system 1400 includes a device with a transmitter (Tx) antenna array 1411 and a receiver (Rx) antenna array 1412. In some embodiments, each of the transmitter (Tx) and receiver (Rx) arrays has multiple antennas. To recognize a person, the Tx 1411 can transmit mmWave signals, which may be received by different Rx antennas 1412 sequentially after reflected by a person 1401 in a venue and other objects in the same venue.

In some embodiments, the Tx 1411 is a Bot as described above; and the Rx 1412 is an Origin as described above. While the Tx 1411 and the Rx 1412 are physically coupled to each other in FIG. 14, they may be separated in different devices in other embodiments. In some embodiments, the device including the Tx 1411 and the Rx 1412 serves like a radar, and the person 1401 may be moving towards or away from the radar.

In some embodiments, the human recognition system 1400 also includes a processor to process the received radar signal 1410 at the Rx 1412. In various embodiments, the processor may be physically coupled to the Tx 1411, the Rx 1412, both, or neither. As shown in FIG. 14 the processor includes two main modules: gait cube extraction 1420 and classification module 1430. In some embodiments, the gait cube extraction module 1420 receives raw radar signal 1410, which may be a millimeter wave (mmWave) wireless signal impacted by the person 1401 walking in a venue. The gait cube extraction module 1420 can convert the radar signal into raw radar data, e.g. channel information, and extract the gait data cubes 1431 based on the raw radar data. The gait cube extraction module 1420 first tracks the person's walking trace by three submodules: presence detection, peak tracking, and walking detection. The presence detection module detects a presence of the person based on the channel information, e.g. by calculating a time-range-variance signal or a 3D radar spectrogram. The peak tracking module determines peaks in the time-range-variance signal or the 3D radar spectrogram. The walking detection module detects walking of the person 1401 by extracting the trace of the person 1401.

Then the gait cube extraction module 1420 can extract the spectrogram around the person 1401 and therefore constructs the Doppler (or speed) dimension of the gait cubes for cycle extraction. Further, the gait cube extraction module 1420 segments the data in time domain, with respect to the extracted gait cycles each with a single step, and removes unstable walking data by gait cycle validation or verification. Consecutive valid steps are aligned together to construct the μR-μD-T gait cubes. In some embodiments, dimensionality reduction is performed on the gait cube data to remove unnecessary and redundant information for gait recognition. The resulted gait cube 1431 represents the reshaped μD and μR signatures at different distances from the transmitter and/or the receiver, which are aligned in range domain with respect to human torso, segmented in time domain with respect to walking cycles (steps), and cropped in frequency domain to include maximum signal content.

The output gait cubes 1431 are fed into the classification module 1430 that outputs the user identity 1440. The classification module 1430 includes a CNN 1432 to extract useful features from the gait cubes, and a fully connected layer that concatenates some other hand-crafted features to augment the output representation. The classification module 1430 also includes a classifier to determine the identity 1440 based on the outputs of the CNN 1432 and the gait cube data generated by the gait cube extraction module 1420.

In some embodiments, during a training process, the CNN 1432 extracts useful gait features from the output gait cubes 1431 related to a known user, associates the extracted gait features with the known user, and stores the associated information as a template into a database. In some embodiments, during a recognition process, the output gait cubes 1431 may be directly fed into the classifier 1434, which compares the output gait cubes 1431 with templates stored by the CNN 1432 to classify the person 1401 as the identity 1440. In some embodiments, when the classifier 1434 cannot classify the person 1401 to any known identity based on the comparison, the CNN 1432 may be further trained to register the person 1401 as a new user.

In some embodiments, the system relies on a frequency-modulated continuous wave (FMCW) radar, which transmits a signal with linearly increasing frequency. The distance from an object to the radar is measured by calculating the frequency shift between the transmitted and received signal. This single transmission is called a chirp, and the range resolution is determined by the bandwidth. When there is no multipath, and a single rigid object is placed at a distance R, the received signal is given as:

$$y(t) = A_{rx}\sin\left(2\pi\left(f_0(t-\tau) + \frac{\beta}{2}(t-\tau)^2\right) + \theta_{rx}\right), \tag{5}$$

for $t \in [0, T)$, where y(t) is the received signal at time t, $\tau$ represents the time duration of an electromagnetic wave from object to radar, $\beta$ is the frequency slope of the linear chirp, $\theta_{rx}$ is the phase offset at the receiver, and $A_{rx}$ is the amplitude of the returned signal. A single chirp is sent and received repeatedly, and one can denote the received signal for chirp k as $y_k(t) \doteq y(t - kT)$, for $k = \lfloor \tau/T \rfloor$, where T is the chirp duration. For simplicity, one can assume t to be discrete, as the reported signal is sampled and digitized and drop the subscript k. $A_{rx}$ is given as:

$$A_{rx} = \frac{G_{ant}\lambda\sqrt{P\sigma}}{4\pi^{1.5}R^2\sqrt{L}}, \tag{6}$$

where $G_{ant}$ represents antenna gain, $\lambda$ is the wavelength, $\sigma$ is the target cross-radar section, and L represents other losses. This equation is given for rigid objects, under no multipath assumption, and does not necessarily apply to indoor environments. When there is multipath, Eqn. (5) is modified as:

$$y(t) = \sum_{k=1}^{N} h_k A_{rx} \sin\left(2\pi(f_0(t - \tau_k) + \frac{\beta}{2}(t - \tau_k)^2) + \theta_{rx}\right),\tag{7}$$

where $h_k$ denotes the scaling of the returned signal for time instance $\tau_k$, arising from multipath. As the frequency shift is equivalent to time difference, this information can be converted to range information by Fourier transform of y(t), a.k.a Range-FFT. Time-range signal, a.k.a. Channel Impulse Response (CIR), is sampled at certain time indices, and denoted as:

$$Y(r,k) = \sum_{n=0}^{N-1} y_k(n)\exp(-2j\pi rn/N),\tag{8}$$

where N is the number of FFT points. Range-Doppler spectrogram is calculated by taking FFT of the time domain signal for a frame over long time. One can define the number of samples per frame as $N_f$, the amount of overlap between frames as $N_{ov}$, and long time indices for frame k with $n_k(i) \triangleq ((k-1)(N_f - N_{ov}) + i)$ for $i \in \{1,...,N_f - 1\}$. Consequently, range-Doppler spectrogram can be defined as

$$G(f,r,k) = |\sum_{i=0}^{N_f-1} W(i)Y(r,n_k(i))\exp(2j\pi iTf/N_f)|^2,\tag{9}$$

where $W(i)$ represents a finite length windowing function that affects the time-frequency resolution. In some embodiments, instead of calculating the spectrogram for all range bins (r), GaitCube can first locate the human body, and only calculate the spectrogram of nearby distances that contain body motions to reduce computational complexity.

GaitCube can track the user's locations, which will be used to construct the range dimension of gait cubes. The received time-range signal can be modeled as:

$$Y(r,n) = Y_b(r,n) + Y_d(r,n) + \varepsilon(r,n),\tag{10}$$

where $Y_b$ represents the background reflection from surrounding objects, $Y_d$ stands for the reflection from a moving subject, and $\varepsilon$ denotes the additive noise. To track human body, one can extract the variance for each range bin as:

$$\mathbf{Z}_Y(r,k) = \frac{1}{N_f}\sum_{i=1}^{N_f} (Y(r,n_k(i)) - \bar{Y}(r,n_k))^2,\tag{11}$$

where $Z_Y(r, k)$ denotes the variance of Y at range r and time-frame k, and $\bar{Y}(r,k) \triangleq \frac{1}{N_f}\sum_i Y(r,n_k(i))$ , denotes the average value of the CIR for frame k. Assuming the noise to be uncorrelated with motion, and assuming the motion and noise to be zero mean, the following relation can be established:

$$\mathbf{Z}_Y(r,k) \approx \frac{1}{N_f}\sum_{i=1}^{N_f} |(Y_d(r,n_k(i)))|^2 + \sigma_\varepsilon^2,\tag{12}$$

which suggests that, dominant motion could be detected by maximizing $Z_Y(r, k)$ over range dimension.

Experiments show that time-variance plot of Y reduces background noises significantly; and the maximum-variance trace demonstrates that the variances at range bins with the presence of a person are several orders of magnitude higher than the background variance. Extracting this maximum-variance trace, however, does not allow one to immediately detect and track motion, as there are impulse noises, discontinuities and multipath effects in the environment. Thus the system applies several additional steps to person tracking submodule to detect human presence and motion, and extract the walking trace.

In some embodiments, GaitCube detects the presence of a subject by thresholding the amplitude of a smoothed maximum-variance trace. GaitCube smooths maximum-variance trace with a median filter before thresholding. In addition, short presence intervals are filtered out by combining with longer intervals, to reduce false alarms. Even with a stationary person or motion perpendicular to radar axis, presence detection robustly detects a person, due to minute body motions caused by breathing and heart pulses.

For time instances with presence, GaitCube extracts the subject trace in range-time domain. An arbitrary trace on $Z_Y(r, k)$ is defined as:

$$\mathbf{p} = \{(p(i), i)\}_{i=1}^{L},$$ (13)

where $p(i)$ denotes the distance (range bin) of the person from the radar at timestep i, and L is the total length of the trace. Note that $p(i)$ only includes the range information, and the system cannot determine exact location of the person. In some embodiments, the person trace requirement has two objectives, extracting high variance bins (dominant motion), while preserving a smooth trace. First, one can define $E(p) \triangleq \sum_{i=1}^{L} Z_Y(p(i), i)$ as the total energy of the trace, and C(p) $\triangleq \sum_{i=1}^{L-1} P(p(i+1), p(i))$ as the cost function for overall smoothness of the trace, where the cost function P controls the change between two consecutive indices of the trace. For example, one can define P as:

$$P(m, n) = \begin{pmatrix} \varepsilon(|m - n|) & |m - n| < T_{th} \\ \infty & \text{otherwise} \end{pmatrix},$$ (14)

where the maximum amount of deviation is limited by forcing $|p(i + 1) - p(i)| < T_{th}$. $T_{th}$ could be selected based on maximum speed of an object, and $\varepsilon$ controls the cost for deviation from a direct path. Based on these cost functions, one can define the person trace as:

$$\mathbf{p}^* = arg\ max_{\mathbf{p}} E(\mathbf{p}) + C(\mathbf{p}),$$ (15)

which is solved by dynamic programming. p* is the output of the peak tracking module, and used by walking detection module to segment the data with respect to walking time instances. Some of the distant paths are affected by the nearby human body, because of the blockage, yet these are easily avoided by the peak tracking algorithm of the system.

Then GaitCube utilizes a walking detection module to extract time indices with inbound or outbound walking with respect to the radar in order to reduce signal processing overhead. The walking detection algorithm is applied on the speed estimates, to extract stationary and non-stationary periods.

One can estimate the approximate body speed as:

$$v(i) = \begin{pmatrix} \frac{1}{D}(\mathbf{p}^*(i) - \mathbf{p}^*(i - D)) & i > D \\ 0 & \text{otherwise} \end{pmatrix},$$ (16)

where D is simply the time offset for calculating the speed, and chosen to be greater than 1 to reduce the variance in the speed estimation. From the speed estimate, GaitCube extracts the walking segments with the following decision rule:

$$m(t) = \begin{pmatrix} 1, & |v(t)| > v_{walk} \\ 0, & |v(t)| < v_{stat}\ \text{or}\ t = 0, \\ m(t-1) & \text{otherwise} \end{pmatrix}$$ (17)

where $v_{walk}$ is the speed thresholds for detecting walking, and $v_{stat}$ is the stationary threshold for the magnitude of speed. Note v(t) could be positive or negative since walking inbound and outbound introduces positive and negative Doppler shifts, respectively. This detector allows amplitude of the input signal to swing between $(v_{stat}, v_{walk})$ to preserve previous decisions. As the speed v(i) is defined with respect to the change of distance between the radar and the device, GaitCube can remove most of the walking that does not traverse multiple range bins, by selecting a high amplitude for $v_{walk}$.

In some embodiments, GaitCube extracts the spectrograms at and around the trace of the person by using short time Fourier transform (STFT), as given in Eqn. (9). Since only the range values nearby the human torso are of interest for calculation, one can denote this aligned spectrogram cube as $G_{align}$ which is given by:

$$G_{align}(f, r, n) = \{G(f, p(n) - N_{body} + r, n)\},$$ (18)

$$1 \leq r \leq 2N_{body} + 1,$$

where $N_{body}$ denotes the number of leading and trailing range bins, centered at the range of human torso. Consequently, $G_{align} \in \mathbb{R}^{N_{frame}} \times \mathbb{R}^{2N_{body}+1} \times \mathbb{R}^{N_{time}}$. Spectrogram-range cube reveals Doppler frequency shifts caused by multiple limbs of motion, referred as μ-Doppler phenomenon. Different limbs, such as arms, legs and feet move at different speeds during walk, and the received spectrograms are superposition of all these effects, which are expected to reserve more information than a single snapshot at the human torso.

The relationship between frequency shift and speed is given as:

$$\Delta f = \frac{2v}{\lambda}, \tag{19}$$

where $v$, $\Delta f$ and $\lambda$ denotes speed of the object, frequency shift, and wavelength, respectively. As noted by earlier research, human motion induces both μD and μR signatures, which could be captured by a high-bandwidth (fine-range-resolution) radar and μD signatures only cannot capture the rich spatial information.

Next, $G_{align}$ is fed to the gait cycle estimation submodule, in order to segment with respect to the walking cycles.

GaitCube can then extract gait cycles from the estimated gait cubes. Energy of spectrogram images (in this case, $G_{align}$) corresponding to human torso could be used for extracting periods. At the same time, as given in Eqn. (6), the energy of the reflected signal also depends on the range and multipath profile, and one cannot use it directly to estimate gait cycles. In addition, FFT or autocorrelation based methods are not preferable, as they only provide average period of walk.

By using the detrended log-energy of the spectrum, GaitCube can successfully extract individual steps and gait cycles. In order to remove erroneous peaks, a criterion based on minimum distance between peaks is used. Then GaitCube retrieves the peaks with higher amplitudes.

In order to use these gait cubes as representative samples of human gait, GaitCube extracts valid walking steps and gait cycles (i.e., cycles with full walking speed) out of all periods. Unstable walking periods, e.g., initial and final steps of a walking segment, need to be removed. To do so, GaitCube utilizes two criteria.

The first criterion is about walking distance and duration extracted from variance-range plot. This is because acceleration and deceleration steps traverse shorter distance, and can be distinguished by thresholding on distance and duration.

The second criterion is about variations in the torso speed. In some embodiments, after thresholding, GaitCube extracts the median speed of each step and gait cycle, and removes those cycles with a speed variation exceeding 25% of median speed.

The first criterion validates a full gait cycle, and the second one removes acceleration and deceleration cycles, while leaving room for speed differences between left and right steps.

In addition, GaitCube can reduce the dimensions of the gait cube before feeding it into the CNN. For range domain, GaitCube can perform downsampling $G_{align}$ in range dimension. In various embodiments, GaitCube can use various combining methods such as maximum, mean and median, as the signal is correlated between consecutive range bins. In some embodiments, extracting maximum effectively smooths person trace and results in higher SNRs, and can be used in GaitCube.

For frequency domain, GaitCube removes frequency bands with very little speed information. Walking inbound and outbound introduces positive and negative Doppler shifts, respectively; and the other half spectrum (frequency bins) does not have any useful signal content. GaitCube can extract frequencies that correspond to walking speeds of $[v_{min}, v_{max}]$.

Further, GaitCube may reduce dimensionality in time domain by resizing the data cube to a fixed size. As each cube has time-series information that relates to the same stages of a gait cycle, resizing preserves the signature.

Within the current processing pipeline, two procedures may cause loss of useful information related to human gait. Extracting aligned gait cubes removes range information, whereas resizing in time domain throws away valuable speed information. In some embodiments, to alleviate their effect, GaitCube extracts several additional features from the gait cubes. Specifically, GaitCube extracts trace length (i.e. stride length) and cycle duration, which are readily available, as well as the mean and the variance of the speed, which can also be calculated easily. These features provide additional information to the classifier, as they are related to the mechanics of human walk.

In some embodiments, GaitCube uses a deep learning model CNN coupled with several convolutional layers, followed with batch normalization and pooling layers with ReLU nonlinearity. CNN is used for feature extraction from gait cubes and its output is combined with the aforementioned additional features by concatenation and fed through a few fully connected layers, followed by a softmax layer to extract output probabilities of each class, whose details can be seen in Table II. One can further apply dropout to the outputs of the fully connected layers with probability p = 0.5, as this reduces overfitting.

Table II: Neural Network Layers

| Layer Name | Filter (Kernel) | Output Size |
|---|---|---|
| Conv. Layer 1 | (5,5), stride:(2,2) | (12,112,48) |
| Pooling Layer 1 | (2,2), stride:(2,2) | (12,56,24) |
| Conv. Layer 2 | (5,3), stride:(3,1) | (24,18,22) |
| Batch Norm. | | |
| Pooling Layer 2 | (2,2), stride:(2,2) | (48,9,11) |
| Conv. Layer 3 | (3,3), stride:(2,2) | (48,4,5) |
| Batch Norm. + Flatten | | (1,960) |
| Fully Conn. (FC) | | (1,120) |
| FC with additional features | (1,126) | (1,60) |
| Softmax | | (1,10) |

In some embodiments, in order to use CNN model with the outputs of previous module, one can resize gait cubes in the time domain to have a fixed size. The typical human walking speed is around 1 m/s (3.6 km/h), with two steps per second. Therefore, the input size to the CNN may be set to be (5,227,99), with dimensions (range $\times$ frequency $\times$ time), where n = 99 corresponds to 506 ms chosen with respect to the empirical walking speed.

The imbalance between the right and left steps can also provide useful information for identifying people. To exploit this phenomenon, the system can merge two consecutive gait cubes prior to feeding into the CNN. As merging two cubes with respect to the time dimension increases the size of gait cubes, the system can resize these merged gait cubes to the CNN input size again. As GaitCube cannot directly distinguish the left and the right foot, the classifier is trained with both sequences, using overlapping full gait cycles, whereas further evaluation on using single step is also done.

In some embodiments, the system uses cross entropy-loss, combined with $L_2$ regularization on the weights to train the classification module. The cost function is given as:

$$\mathcal{L} = -\frac{1}{N} \sum_{n=1}^{N} \sum_{c=1}^{N_c} z_{n,c} \log \hat{z}_{n,c} + \alpha \parallel w \parallel^2, \qquad (20)$$

where $N_c$ is number of identities ( i.e. classes), N is the total number of samples, $z_{n,c}$ is the one-hot encoding for sample n, $\hat{z}_{n,c}$ are the outputs of the network at softmax layer, $\alpha$ is the regularization parameters, and w are weights of the network. In some embodiments, one can train the network with stochastic gradient descent, with a batch size of 80, and a learning rate of $10^{-2}$ and reduce the learning rate gradually. The maximum number of epochs is set to 50. In some embodiments, one can implement deep learning module of GaitCube, where the training procedure takes less than 15 minutes, whereas testing a single sample takes 0.1ms on average.

In some embodiments, GaitCube is implemented using a commodity off-the-shelf (COTS) mmWave radar. The radar operates at 77GHz and has 3 transmitter and 4 receiver antennas. One can configure the device to use two transmitter antennas in time-domain multiplexing mode, and capture the received signal on all antennas simultaneously. Placement of the transmitter antennas enables to exploit virtual antenna array concept, and therefore obtain less-dependent measurements of the physical environment, and capture specular reflection from different limbs.

In some embodiments, the implementation of GaitCube exploits receiver diversity by treating each antenna as spatially independent in order to boost dataset size for training and thus reduce data collection effort for each user. In other embodiments, one can also evaluate GaitCube by combining the receiver predictions together via majority voting.

In some embodiments, there are 10 users (4 female, 6 male) for experimentation, where each user walks in six different setups at two to four days, with at least a week in between consecutive data collection. The overall data collection takes more than 1 month, with a total of 11 sessions, as some users were available at different days. Users ages vary from 23 to 59, with weights varying from 50kg to 77kg and heights varying from 160cm to 174cm. During data collection sessions, users wear arbitrary clothes and accessories, and without being asked for any specific requirement.

In some embodiments, data collection is performed under different experimental setups. In each setup, one can place the radar on a cart, with an approximate height of 1m. The users can walk 5 times in each way in all setups, where the path length is approximately 10-12 meters. The algorithm of the system segments walking instances and directions automatically. In some embodiments, the total duration of the walk per user per setup is around 2 minutes, depending on walking speed and distance. Some of these data is collected in open space; whereas others are collected in corridors with a width of 1.5 meters.

In some embodiments, the data collection procedure results in a total of about 52000 non-overlapping gait cubes from 10 people, at six setups. The number of samples in each setup vary less than +3%. The data distribution between walking inbound and outbound are quite uniform, at 51.1% and 48.9%, respectively.

In some embodiments, one can evaluate the performance of GaitCube under different setups. One can implement 6-fold cross validation on the dataset, with separation based on data collection setup to ensure independence among realizations, and show its performance over different time and locations. One can report the testing accuracies with interpreting each receiver's decision independently.

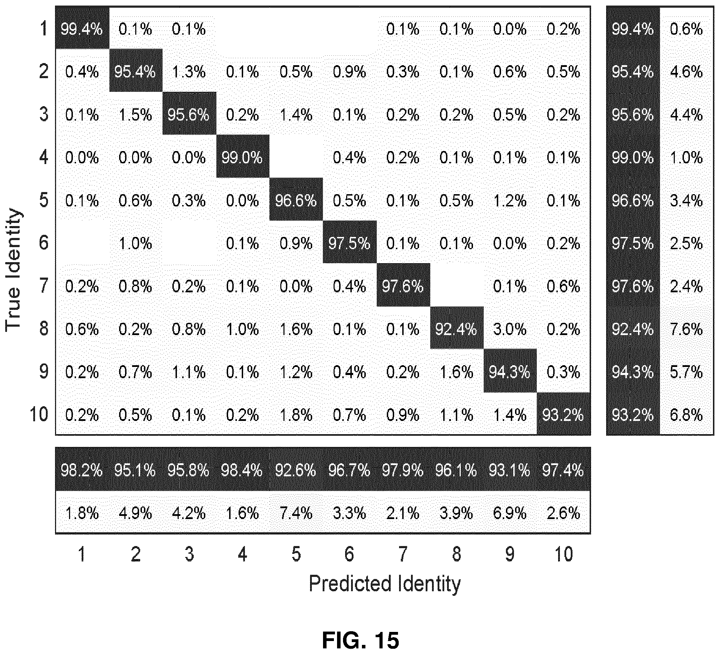

In some embodiments, to evaluate the overall accuracy, one can use a full gait cycle for training and testing and illustrate the confusion matrix for person identification in FIG. 15. As seen, GaitCube achieves a mean accuracy of 96.1%, with accuracy higher than 92.4% and both recall and precision higher than 92.4% for all users.

In some embodiments, one can investigate the effect of the distance from the radar, by extracting accuracy for different range values, and observe a lower accuracy at short and long distances. As the distance from the radar increases, the received signal has a lower SNR which reduces the performance. On the other hand, when the object is very close to the radar, the gait cube gets distorted because of the radiation pattern from a point source, and the performance of the system decreases slightly. As the system treats the receiving antennas independently, and even with an equal gain combining scheme with 8 antennas, the system can obtain an SNR improvement of 9dB. This scheme can possibly improve the identification accuracy at longer distances significantly.

In some embodiments, as GaitCube resizes gait cubes during preprocessing, one can also evaluate the performance based on the duration of the gait cycle. In some embodiments, most of the gait cycles have a duration in between (0.4,0.6)s and the performance in these regions are the highest. In some embodiments, the gait-cube extraction sometimes falsely outputs long half gait cycles (up to 1.1s), which is tolerated by the classification module to some extent. Longer gait cubes decrease overall performance of GaitCube; yet the number of those samples are at least an order of magnitude lower, and do not contribute to the overall error significantly.

In some embodiments, one can train the algorithm on both walking directions. In some embodiments, the system does not favor one particular direction, and inbound and outbound accuracies are within 1% difference. In some embodiments, one can also try training on one direction and testing on another, but may not obtain meaningful results, even with reflecting gait cubes with respect to frequency and range. This is because changing walking direction affects reflection surface and range-Doppler signature is distorted significantly. Thus, in practice, in order to recognize a user regardless one is coming or leaving, one need to train on both directions.

In some embodiments, one can also evaluate the performance with a varying number of steps involved in one sample. To that end, one can train the system with half cycles (single step) and combine the scores of consecutive samples to construct a decision rule. One can average softmax scores (e.g. probabilities) over several steps and extract the decision based on the combined score. In some embodiments, GaitCube achieves an accuracy of 98.3% with three steps, which slightly decreases to 97.3% using a single cycle of two steps, yet still maintains as high as 94.5% even using a single step. The remarkable performance allows GaitCube to recognize a user with minimal delay, e.g., one single step.

In some embodiments, to further investigate low training data requirement, one can vary the number of instances per each setup from 1 to 5 for training and show the accuracy in the testing setup. In some embodiments, even with using only one single round-trip walk at each environment for training (≈20s), GaitCube achieves a minimum accuracy of 84.8%, and a mean accuracy of 89.6%. In this evaluation, one may not test the model against the remaining data in the setup trained, as this would artificially improve the accuracy.

In some embodiments, one can also conduct a basic ablation study to investigate the improvement stemming from additional features and/or 3D data cubes. In some embodiments, one can investigate using the proposed gait cube, using front or behind slices only, or having single center slice of the cube. One can also compare the performance with and without the additional hand-crafted features. In some embodiments, using full gait cubes plus additional features provides a better performance than the other methods. This is caused by the multipath effect, as the trailing range bins are affected more than leading ranges, whereas capturing all of the information seems more useful. Nevertheless, even using a single slice, an accuracy of over 90% can be achieved thanks to the many building blocks of GaitCube. On the other hand, although the hand-crafted features provide an accuracy gain of 0.6%, GaitCube actually learns the gait signatures well, as the performance gain is marginal, and high accuracy is preserved even with long duration cycles.

In practice, the system only needs to make a single decision at a time, allowing to fuse all the receiving antennas for a better performance. In some embodiments, using a single step, with a simple majority voting scheme, the system can combine softmax scores of each receiving antenna for an overall output. In some embodiments, the performance increases by 1.3% on average, and by 3.1% in some setup.

In some embodiments, one can train GaitCube with just two minutes of walking data at one location and generalize it over time and locations. This use case is particularly challenging, as it neither allows multiple locations nor different time instances for training data. In some embodiments, one can investigate the performance with respect to the number of setups used for training, to provide the mean accuracy obtained by training at varying number of locations, as well as the error bars representing the deviation from the mean value for different testing setups. In some embodiments, the system achieves 79.1% mean accuracy with one-shot learning, and using two setups further boosts the accuracy to 87.2%. In these two cases, the minimum accuracy is 72.5% and 82.7%, which could be acceptable for a practical application. As such, GaitCube can learn generalized gait signatures by less than 2 minutes of data at one location.

The system supports a single person tracking and identification at a time. This would be useful for many applications that usually authorize a single person at a time, e.g., an entrance system, or an IoT customization scheme. If multiple users are present at different distances from the radar, a simple extension of looking at different ranges separately would enable multi-user support for GaitCube.

In some embodiments, the system requires a user to walk towards or away from the device to ensure successful construction of the gait cube. Although this somewhat imposes some limitations, GaitCube can recognize a user with good accuracy even with only one step. Therefore, GaitCube is a practical system even with this limitation. In some embodiments, one can relax the constraints by relying on point clouds and collecting data with different walking directions or with multiple devices.

Therefore, the disclosed GaitCube is a practical gait recognition system. In some embodiments, it requires minimal data for training (e.g., less than two minutes of data) and testing (e.g., a single gait cycle) while maintaining high performance over different locations and times. In some embodiments, GaitCube learns from a distinct gait cube processing with a neural network. Experiment with 10 users at different locations and time show that GaitCube achieves an accuracy of 96.1% with a single walking cycle and further improves to 98.8% with two cycles, and the accuracy maintains 79.1% even with on only two minutes of training data at a single location, promising it a practical solution for real applications. Different from previous works, GaitCube shows its high performance generalized to different locations and time, and more importantly, can register and recognize a user rapidly with minimal data required, rendering it a more practical gait recognition system.

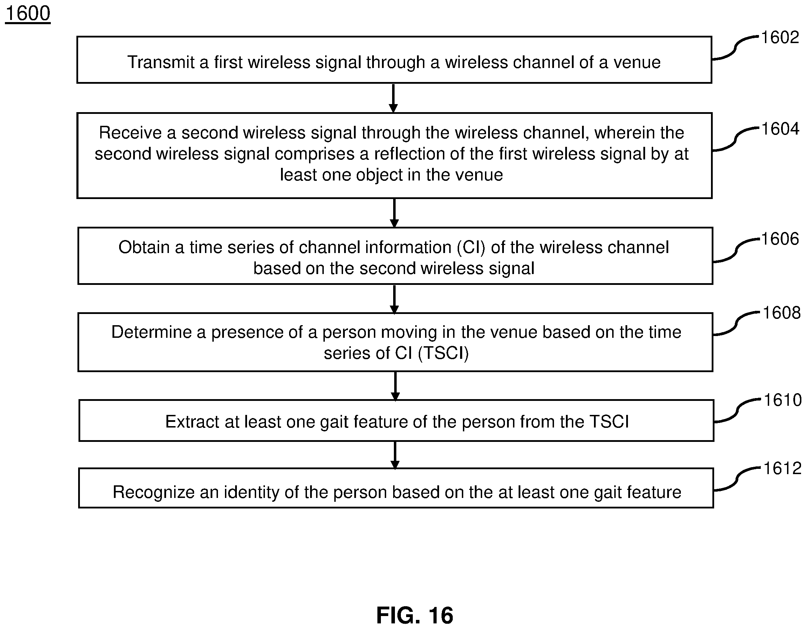

FIG. 16 illustrates a flow chart of an exemplary method 1600 for human recognition based on gait cube feature using mmWave signal, according to some embodiments of the present disclosure. In various embodiments, the method 1600 can be performed by the systems disclosed above. At operation 1602, a first wireless signal, e.g. a mmWave signal, is transmitted through a wireless channel of a venue. At operation 1604, a second wireless signal is received through the wireless channel, wherein the second wireless signal comprises a reflection of the first wireless signal by at least one object in the venue. At operation 1606, a time series of channel information (CI) of the wireless channel is obtained based on the second wireless signal. At operation 1608, a presence of a person moving in the venue is determined based on the time series of CI (TSCI). At operation 1610, at least one gait feature of the person is extracted from the TSCI. At operation 1612, an identity of the person is recognized based on the at least one gait feature, e.g. using a deep learning model. The order of the operations in FIG. 16 may be changed according to various embodiments of the present teaching.

In some embodiments, a method of a human recognition system includes steps s1 to s12 as described below.

At step s1: the system captures reflected signals from objects and/or sources, e.g. using a mmWave radio device including multiple transmit (Tx) and multiple receive (Rx) antennas. The signals are received using frequency modulated carrier wave (FMCW) waveforms, where a signal from a particular distance is defined as $g(t, \tau)$, $g(t, \tau) = \alpha_1(t)\exp(-j2\pi f_c \tau_1(t))$, with t denoting long-time, and $\tau$ denoting short time.

At step s2: the system converts the FMCW waveforms into channel impulse response (CIR) by applying Fast Fourier Transform (FFT) on the short-time index $\tau$ for all different $\tau$ within a period of time. The resulting CIR is denoted as $Y(r,k)$.

At step s3: the system detects the presence of a person based on the following. Time frame k is represented by $n_k(i) \doteq ((k-1)(N_f - N_{ov}) + i)$ for $i \in (1,...,N_f - 1)$, where $N_f$ represents the number of samples per frame and $N_{ov}$ represents the amount of overlap between frames. For each time frame, the system calculates the variance of $Y(r, k)$, and denotes the variance with $Z_Y(r, k)$, which is called a time-range-variance signal. In some embodiments, the system extracts peaks on the time-range-variance signal to detect the presence of a body. In other embodiments, the system extracts outliers on the time-range-variance signal to detect the presence of a body, where the outlier detection can be based on absolute deviation, variance within a frame, or any other method. In other embodiments, the system detects the presence of a body on the time-range-variance signal by applying a predetermined hard threshold $T^*$, where $T^*$ can vary based on distance from the receiver. In other words, $Z_Y(r, k)$ is compared with a $T^*(r)$ for each r.

In other embodiments, step s3 can be performed by applying constant false alarm rate (CFAR) detection rule on a 3D radar spectrogram, which is the short-time Fourier Transform of $Y(r,k)$, for each time frame $n_k(1,...N_{ov})$. For

example, the 3D radar spectrogram may be defined as $G(f,r,k) = |\sum_{i=0}^{N_f-1} W(i)Y(r,n_k(i))\exp(2j\pi i Tf/N_f)|^2$, where $W(i)$ is a windowing function to balance between time and frequency resolution. This step results in detected locations of the person.

At step s4, in order to ensure continuity of person traces, and remove background noise and erroneous detections, the system extracts the trace of a person with certain considerations.

In some embodiments, step s4 includes the following. The system defines a trace on $Y(r,k)$ as $p$, and construct the optimum $p$ based on multiple criteria. These criteria may include: i) cost function based on smoothness of a trace, ii) cost function based on detection results and strength on $Z_Y(r,k)$ or $G(f,r,k)$. A smoothness cost function can include a measurement of displacement between the two consecutive time indices calculated, and can be based on hard thresholding (e.g. the cost would be infinite beyond a threshold), or soft thresholding (e.g. exponentially increasing cost beyond a threshold). A cost function based on detection results and strength can again be based on soft thresholding using peak heights/variance/energy in spectrogram, or detection results (0/1). The cost functions can also be distance dependent, similar to $T*(r)$ in step s3.

In other embodiments, step s4 includes using the spectrogram for each time index to calculate the peak and Doppler shift for each time index. These results can be used to estimate the speed of a person for each potential index. A cost function on the person trace can be calculated. This cost function can also include smoothness, a consistency between the estimated speed and the speed based on the trace, peak heights, or detection results on the spectrogram.

At step s5, using the estimated traces of a person, which could also be stationary, the system can extract time indices when the person is actually moving. This detection may be based on hard thresholding of the speed estimates and based on the person's trace. Step s5 may include sub-steps s5a and s5b.

At sub-step s5a, the system can estimate the speed based on the trace. As the person's trace is quantized with respect to possible range index, this estimation requires calculating the difference of the trace with multiple steps. In other words, the location at time index (i) is subtracted from location at time index (i+D), where D is the difference to ensure smoothness.

At sub-step s5b, based on the speed estimates, the system can determine time index with walking towards or away from the device. In some embodiments, the speed estimates are compared with two thresholds, and has a memory block, in order to reduce false alarms/speed deviations. Namely, motion index for time t, $m(t)$ is calculated as:

$$m(t) = \begin{cases} 1, & |v(t)| > v_{walk} \\ 0, & |v(t)| < v_{stat} \text{ or } t = 0. \\ m(t-1) & \text{otherwise} \end{cases}$$

Here, two thresholds, $v_{walk}$ and $v_{stat}$ enables the estimated speed to fluctuate between ($v_{walk}$, $v_{stat}$) without changing any decision. Furthermore, arbitrary motion that is not related to walking can be eliminated by selecting the minimum speed estimation carefully, namely $v_{walk}$.

In other embodiments, more basic thresholding methods can be applied at sub-step s5b to detect walking time indices, although they would be more prone to false alarms.

At step s6, having extracted the location of the person with time indices that only includes walking, the system can extract the spectrogram at these locations and times, and nearby index, if not done during presence detection. This ensures a lower computational complexity, as the $G(f,r,k)$ is only calculated for the r and k of interest. One can denote this normalized spectrogram as $G_{align}(f,r,k)$, which only spans a limited range of ranges (r) and time index (k).

At step s7, in order to achieve the minimal representation of gait, which is a single step, the system can extract each step. This step may include sub-steps s7a.

At sub-step s7a, the periodicity of a step event is estimated based on the energy of $G_{align}(f,r,k)$. Since the cross-sectional area of the body changes periodically, this results in periodic changes in the reflected energy.

In some embodiments, sub-step s7a includes smoothing the energy curve, combining the energy components from nearby range bins, and extracting peaks on the energy curve. This extracts each walking step on the trace. This sub-step may require detrending the energy function, as it also depends on the range.

In some embodiments, sub-step s7a includes calculating Fourier transform of the energy and extracting the peak location to find the average periodicity of walk.

In other embodiments, sub-step s7a includes calculating autocorrelation function on the energy function, and finding the first peak. This gives the average periodicity of the walk.

In other embodiments, sub-step s7a includes estimating the periodicity on the $G_{align}(f,r,k)$ by calculating autocorrelation function with respect to the time index.

At step s8, using the extracted steps, and walking cycles, the system can verify validity of each step. Gait cycle validation may use multiple static and dynamic thresholds to remove acceleration and deceleration steps. This may include sub-steps s8a and s8b.

In some embodiments, sub-step s8a includes using a static minimum threshold based on gait duration and stride length. Final and/or beginning steps usually have much less distance travelled with shorter period of time, and this sub-step s8a removes some of them.

In some embodiments, sub-step s8b includes extracting a mean or median gait duration, speed and stride length, and removing steps based on these parameters, if any of them are lower than 75% of these three parameters.

In other embodiments, sub-step s8b includes extracting first/final steps based on other outlier based criterion, by comparing them with the bulk/mean of the multiple step observations, since the first/final steps are different when compared to the other steps.

At step s9, the system performs dimensionality reduction. Since there is a lot of redundancy with respect to multiple dimensions, the system removes unnecessary information for gait and human recognition. This includes sub-steps s9a to s9c.

In some embodiments, sub-step s9a includes reducing dimensionality of frequency component of $G_{align}$ (f, r, k) by removing speeds/frequencies that are not part of the moving body. For example, for a body moving towards the radar, all of the Doppler shifts will be positive, and the signature of walk will be observed for f > 0, since only positive is needed. The system can use hard thresholds on minimum and maximum frequencies to remove unnecessary signal component(s).

In some embodiments, sub-step s9b includes reducing dimensionality of range component of $G_{align}$ (f, r, k) by downsampling. Nearby ranges are highly correlated and can be removed without losing much information. Furthermore, sub-step s9b may include removing time indices with $r < T_r$, for walking away from the device, as these correspond to the body parts behind torso, and affected by multipath components.

In some embodiments, sub-step s9c includes reducing dimensionality of time component of $G_{align}$ (f, r, k) by resampling into a fixed dimension. Other methods, such as down sampling can also be used.

At step s10, the system can extract physical features. For example, using the trace of the person, and walking time indices extracted in step s7, the system can extract average and variance of stride length, gait duration and speed of the person.

At step s11, the system can use a deep learning based classifier. This may include sub-steps s11a and s11b.

In some embodiments, sub-step s11a includes using dimension reduction output of $G_{align}$ (f, r, k) to train a basic CNN module to register each user. The classifier may receive the output of CNN and the features extracted in step s10, as inputs to the classifier. In other embodiments, the classifier can be trained without the $G_{align}$ (f, r, k) or the physical features in step s10 as well.

In some embodiments, sub-step s11b includes synthetically boosting the dataset size by using each antenna as a separate realization of the same walk, and therefore improving robustness.

At step s12, the system can classify the person as one of registered users, e.g. based on the output of the CNN and the extracted gait feature of the person.

The following numbered clauses provide implementation examples for wirelessly recognizing a person based on gait feature of the person.

Clause C1. A system for human recognition, comprising: a transmitter configured to transmit a first wireless signal through a wireless channel of a venue; a receiver configured to receive a second wireless signal through the wireless channel, wherein the second wireless signal comprises a reflection of the first wireless signal by at least one object in the venue; and a processor configured for: obtaining a time series of channel information (CI) of the wireless channel based on the second wireless signal, determining a presence of a person moving in the venue based on the time series of CI (TSCI), extracting at least one gait feature of the person from the TSCI, and recognizing an identity of the person based on the at least one gait feature.

Clause C2. The system of clause C1, wherein: each CI comprises a CIR calculated based on frequency modulated carrier wave (FMCW) waveforms; the TSCI is a function of a time frame and a distance range from the receiver; and the first wireless signal is carried on a millimeter wave.

Clause C3. The system of clause C2, wherein determining the presence of the person comprises: calculating a time-range variance signal based on variances of the TSCI for each time frame; and detecting the presence of the person based on at least one of: extracting peaks on the time-range variance signal, extracting outliers on the time-range variance signal, or comparing, for each distance range from the receiver, the time-range variance signal with a threshold that varies based on the distance range.

Clause C4. The system of clause C3, wherein determining the presence of the person comprises: calculating a radar spectrogram based on a short-time Fourier transform of the TSCI for each time frame; and applying a constant false alarm rate (CFAR) detection rule on the radar spectrogram to detect the presence of the person.

Clause C5. The system of clause C4, wherein the processor is further configured for: estimating a moving trace of the person based on a cost function and a threshold, wherein the cost function is calculated based on at least one of: a measurement of discrepancy of the time-range variance signal between every two consecutive time frames, a measurement of discrepancy of the radar spectrogram between every two consecutive time frames, peak heights in the radar spectrogram, peak heights in the time-range variance signal, or a variance of the radar spectrogram.

Clause C6. The system of clause C5, wherein the cost function is dependent on the distance from the receiver.

Clause C7. The system of clause C6, wherein the processor is further configured for: estimating, for each time frame, a speed of the person based on peaks in the radar spectrogram and a Doppler shift; and estimating the moving trace of the person based on a cost function calculated based on a measurement of discrepancy of the speed between every two consecutive time frames.

Clause C8. The system of clause C6 or clause C7, wherein the processor is further configured for: estimating, for each time frame, a speed of the person based on the moving trace of the person; comparing, for each time frame, the estimated speed of the person with two thresholds to generate comparison results; and extracting a subset of time frames during which the person is moving towards or away from the receiver, based on the comparison results at each time frame.

Clause C9. The system of clause C8, wherein the processor is further configured for: extracting a subset of locations of the person at the subset of time frames from the moving trace of the person; and calculating a normalized spectrogram based on the subset of locations and the subset of time frames, wherein the normalized spectrogram is a function of: a frequency, a time frame and a distance range from the receiver.

Clause C10. The system of clause C9, wherein extracting the at least one gait feature of the person from the TSCI comprises: extracting steps of the person based on the normalized spectrogram; and determining an average moving periodicity of the person.

Clause C11. The system of clause C10, wherein the average moving periodicity is determined based on: calculating an energy function of the normalized spectrogram; and extracting peak locations of the energy function to determine the average moving periodicity.

Clause C12. The system of clause C10, wherein the average moving periodicity is determined based on: calculating a Fourier transform of an energy function of the normalized spectrogram; and extracting peak locations of the Fourier transform to determine the average moving periodicity.

Clause C13. The system of clause C10, wherein the average moving periodicity is determined based on: calculating an autocorrelation function of an energy function of the normalized spectrogram; and extracting a location of the first peak of the autocorrelation function to determine the average moving periodicity.

Clause C14. The system of clause C10, wherein the average moving periodicity is determined based on: calculating an autocorrelation function of the normalized spectrogram; and determining the average moving periodicity based on the autocorrelation function.

Clause C15. The system according to any of clauses C10 to C14, wherein extracting the at least one gait feature of the person from the TSCI comprises: removing, from the extracted steps of the person, each step having a gait duration below a duration threshold and/or each step having a stride length below a length threshold.

Clause C16. The system of clause C15, wherein extracting the at least one gait feature of the person from the TSCI comprises: calculating a mean or median of parameters of the extracted steps, wherein the parameters include at least one of: the gait duration, the speed or the stride length; and removing each step that has any of the parameters lower than 75% of the mean or median.

Clause C17. The system of clause C16, wherein extracting the at least one gait feature of the person from the TSCI comprises: removing, from the extracted steps of the person, first one or more steps after the person starts moving; and removing, from the extracted steps of the person, last one or more steps before the person stops moving.

Clause C18. The system of clause C17, wherein extracting the at least one gait feature of the person from the TSCI comprises: determining a moving direction of the person based on the moving trace of the person; and removing, from the normalized spectrogram, each frequency component that is not part of the moving body of the person based on the moving direction of the person.

Clause C19. The system of clause C18, wherein extracting the at least one gait feature of the person from the TSCI comprises: reducing dimensionality of distance range components of the normalized spectrogram by downsampling the normalized spectrogram with respect to the distance range from the receiver.

Clause C20. The system of clause C19, wherein extracting the at least one gait feature of the person from the TSCI comprises: removing, from the normalized spectrogram, each distance range component that corresponds to a distance range less than a threshold from the receiver, when the person is walking away from the receiver.

Clause C21. The system of clause C20, wherein extracting the at least one gait feature of the person from the TSCI comprises: extracting, from the moving trace of the person, the at least one gait feature of the person based on left components of the normalized spectrogram after reducing dimensionality.

Clause C22. The system of clause C21, wherein the at least one gait feature includes an average and/or variance of at least one of: stride length, gait duration or speed of the person.

Clause C23. The system of clause C22, wherein recognizing the identity of the person comprises: classifying the person as one of known users or an unknown identity, based on a deep learning model and the at least one gait feature of the person.

Clause C24. The system of clause C23, wherein the deep learning model is pre-trained to register each of the known users based on a fixed and same size of normalized spectrogram for each user.

Clause C25. The system of clause C24, wherein the processor is further configured for: registering the person as a new user by training the deep learning model based on the left components of the normalized spectrogram with reduced dimensionality, when the person is classified as an unknown identity.

Clause C26. The system of clause C25, wherein the normalized spectrogram with reduced dimensionality has a same dimensionality as that of each trained user.

Clause C27. A wireless device of a human recognition system, comprising: a processor; a memory communicatively coupled to the processor; and a receiver communicatively coupled to the processor, wherein: an additional wireless device of the human recognition system is configured to transmit a first wireless signal through a wireless channel of a venue, the receiver is configured to receive a second wireless signal through the wireless channel, the second wireless signal comprises a reflection of the first wireless signal by at least one object in the venue, and the processor is configured for: obtaining a time series of channel information (CI) of the wireless channel based on the second wireless signal, determining a presence of a person moving in the venue based on the time series of CI (TSCI), extracting at least one gait feature of the person from the TSCI, and recognizing an identity of the person based on the at least one gait feature.

Clause C28. The wireless device of clause C27, wherein: each CI comprises a CIR; the TSCI is a function of a time frame and a distance range from the receiver; and the first wireless signal is carried on a millimeter wave.

Clause C29. The wireless device of clause C28, wherein determining the presence of the person comprises: calculating a time-range variance signal based on variances of the TSCI for each time frame; and detecting the presence of the person based on at least one of: extracting peaks on the time-range variance signal, extracting outliers on the time-range variance signal, comparing, for each distance range from the receiver, the time-range variance signal with a threshold that varies based on the distance range, or applying a constant false alarm rate (CFAR) detection rule on a radar spectrogram calculated based on a short-time Fourier transform of the TSCI for each time frame.

Clause C30. A method of a human recognition system, comprising: transmitting a first wireless signal through a wireless channel of a venue; receiving a second wireless signal through the wireless channel, wherein the second wireless signal comprises a reflection of the first wireless signal by at least one object in the venue; obtaining a time series of channel information (CI) of the wireless channel based on the second wireless signal; determining a presence of a person moving in the venue based on the time series of CI (TSCI); extracting at least one gait feature of the person from the TSCI; and recognizing an identity of the person based on the at least one gait feature.

Various sound-enabled applications acutely demand a next-generation sound sensing modality with more advanced features: robust sound separation, noise-resistant, through-the-wall recovery, sound liveness detection against side attacks, etc. For example, robust sound separation can enable a smart voice assistant to have sustained performance over noisy environments. Being able to identify animate subjects accurately and quickly would improve the security of voice control systems against demonstrated audio attacks. Sensing behind an insulation can increase the operational range of a smart device to multiple rooms, and allows to retain sound-awareness of outside environments even in a soundproof space.

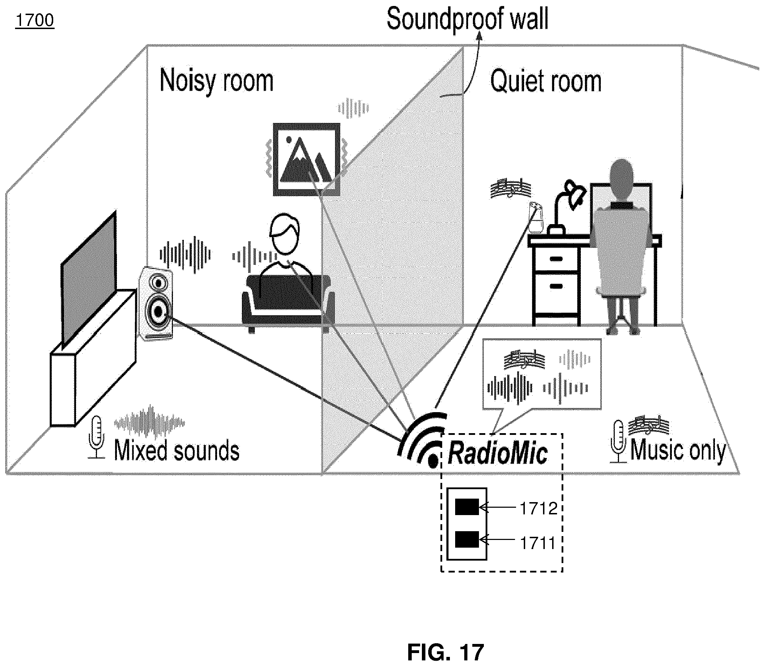

In order to enable the above advanced features holistically, the present teaching discloses "RadioMic," a sensing system that can capture sound and beyond based on radio signals, e.g. millimeter wave (mmWave). As illustrated in FIG. 17, RadioMic can detect, recover and classify sound from sources in multiple environments. It can recover various types of sounds, such as music, speech, and environmental sound, from both active sources (e.g., speakers or human throats) and passive sources (e.g., daily objects like a paper bag). When multiple sources present, RadioMic can reconstruct the sounds separately with respect to distance, which could not be achieved by classical beamforming in microphone arrays, while being immune to motion interference. RadioMic can also sense sound through walls and even soundproof materials as RF signals have different propagation characteristics than sound. In some embodiments, RadioMic, located in an insulated room (or in a room with active noise cancellation), can be used to monitor and detect acoustic events outside the room, offering both soundproof and awareness in the same time. Besides, RadioMic can also detect liveliness of a recorded speech and tell whether it is from a human subject or inanimate sources, providing an extra layer of security for IoT devices.

FIG. 17 illustrates an exemplary implementation environment 1700 for a sound sensing system, e.g. RadioMic, using millimeter wave (mmWave) radio, according to some embodiments of the present disclosure. As shown in FIG. 17, RadioMic can include a device with a transmitter (Tx) antenna array 1711 and a receiver (Rx) antenna array 1712. In some embodiments, each of the transmitter (Tx) and receiver (Rx) arrays has multiple antennas. To sense sound in the environment, the Tx 1711 can transmit mmWave signals, which may be received by different Rx antennas 1712 sequentially after reflected by sounding and vibrating sources in a venue and other objects in the same venue.

In some embodiments, the Tx 1711 is a Bot as described above; and the Rx 1712 is an Origin as described above. While the Tx 1711 and the Rx 1712 are physically coupled to each other in FIG. 17, they may be separated in different devices in other embodiments. In some embodiments, the device including the Tx 1711 and the Rx 1712 serves like a radar, e.g. a mmWave radar. In some embodiments, RadioMic also includes a processor to process the received radar signal at the Rx 1712. In various embodiments, the processor may be physically coupled to the Tx 1711, the Rx 1712, both, or neither.

RadioMic's design involves multiple challenges. First, sound-induced vibration is extremely weak, on the orders of $\mu$m (e.g., < 10$\mu$m on aluminum foil for source sound at ~85dB). Human ears or microphone diaphragms have sophisticated structures to maximize this micro vibration. Speaker diaphragms or daily objects, however, alter the sound vibration differently, and create severe noise, combined with noise from radio devices. Second, an arbitrary motion in the environment interferes with the sound signal, especially when the sound-induced vibration is weak. Third, wireless signals are prone to multipath, and returned signals comprise static reflections, sound vibration, and/or its multiple copies. Four, due to the material properties, sounds captured from daily objects are fully attenuated on high frequencies beyond 2 kHz, which significantly impairs the intelligibility of the sensed sounds.

RadioMic can overcome these challenges in multiple distinct ways. In some embodiments, RadioMic uses a novel radio acoustics model that relates radio signals and acoustic signals. On this basis, it detects sound with a training-free module that utilizes fundamental differences between a sound and any other motion. In some embodiments, to reduce the effect of background, RadioMic filters and projects the signal in the complex plane, which reduces noise while preserving the signal's content, and further benefits from multipath and receiver diversities to boost the recovered sound quality. In some embodiments, RadioMic can also employ a radio acoustics neural network to solve the extremely ill-posed high-frequency reconstruction problem, which may leverage massive online audio datasets and require minimal RF data for training.

In some embodiments, RadioMic is implemented using a commercial off-the-shelf (COTS) mmWave radar. RadioMic can recover sounds from active sources such as speakers and human throats, and passive objects like aluminum foil, paper bag, or bag of chips. Based on a performance comparison with other works in different environments using diverse sound files at varying sound levels, RadioMic outperforms latest approaches in sound detection and reconstruction under various criteria. Furthermore, RadioMic can achieve multiple source separation and sound liveness detection.

In some embodiments, RadioMic is an RF-based sound sensing system that separates multiple sounds and operates through the walls. RadioMic can recover sound from passive objects and also detect liveness of the source. RadioMic uses a radio acoustics model from the perspective of Channel Impulse Response, which can be obtained from underlying RF signals and support training-free robust sound detection and high-fidelity sound reconstruction.

In some embodiments, RadioMic trains a radio acoustics neural network, requiring minimal RF training data, to enhance the sensed sound by expanding the recoverable frequencies and denoising. In some embodiments, RadioMic is implemented on low-cost COTS hardware to demonstrate multiple attractive applications.

Mechanics of the sound sensing using radio signals, which are named as radio acoustics, are described below. Sound is basically modulation of medium pressure through various mechanisms. In some embodiment, sound is generated by a vibrating surface, and the modulation signal travels through in place motion of air molecules. A vibrating surface could be a speaker diaphragm, human throat, strings of musical instrument such as a guitar, and many daily objects like a paper bag. In the case of speakers, motion on the speaker diaphragm modulates the signal, whereas in human throat, vocal cords create the vibration, with the mouth and lips operating as additional filters, based on the source-filter model. To sense the sound, the same mechanism is employed at the microphones to convert the changes in the air pressure into electrical signal, via suitable diaphragms and electrical circuitry. Microphone diaphragms are designed to be sensitive to air vibration and optimized to capture the range of audible frequencies (about 20Hz to 2kHz), and even beyond.

In some embodiments, mechanics of extracting sound from radio signals rely on the Doppler phenomenon and the relationship between the object vibration and the reflected signals. The vibration alters how the signals are reflected off the object surface propagate. Therefore, the reflection signals can be used to measure the tiny vibrations of an object surface in terms of Doppler shifts, from which the system can recover the sound.

In some embodiments, the vibration not only occurs at the source where sound is generated, but also on intermediary objects that are incited by the air. Most commonly, sound-modulated air molecules can cause $\mu$m level or smaller vibration on any object surface. The vibration amplitude may depend on material properties and various factors. Generally, sound vibrations are stronger at the source where they are generated (referred as active vibration sources), and much weaker at the intermediary objects (referred as passive vibration sources). Microphones typically only sense sound from active sources, as the air-modulated passive sound is too weak to further propagate to the microphone diaphragms. Differently, as radio acoustics sense sound directly at the source, the disclosed system RadioMic can reconstruct sound from both active sources and passive sources.

To illustrate the concept, one can place a radar in front of a guitar, and play the string G3 repeatedly, to provide the radio and microphone spectrograms. When the string is hit, it continues to vibrate (or move back and forth) in place to create the changes in the air pressure, and therefore create the sound. The radar senses the sound by capturing the motion of the strings, whereas the microphone captures the modulated air pressure at the diaphragm. Although the sensing mechanisms of microphones and radio are completely different in their nature, they can capture the same phenomenon, and the resulting signals are similar.

Starting with the mechanics of sound vibration, one can build the radio acoustics model. As explained previously, sound creates vibration (motion) on objects, which is proportional to the transmitted energy of sound from the air to the object and depends on multiple factors, such as inertia and signal frequency. Denoting the acoustic signal with a(t), one can model the displacement due to sound as:

$$x(t) = h \star a(t), \qquad (21)$$

where h denotes vibration generation mechanism for an active source or the impulse response of the air-to-object interface for a passive object, and * represents convolution.

From the point view of physics, sound-induced vibration is identical to machinery vibration, except that sound vibration is generally of magnitude weaker. To model the sound vibration from RF signals, one could follow a model assuming the knowledge of the signal model and thus depending on the specific radio devices being used. In some embodiments, RadioMic establishes a model based on the Channel Impulse Response (CIR) of RF signals, which is independent of the underlying signals. By doing so, in principle, the model applies to any radio device that outputs high-resolution CIR, e.g. a frequency modulated carrier wave (FMCW) radar, an impulse radar, or others.

A CIR of an RF signal can be given as

$$g(t, \tau) = \sum_{l=0}^{L-1} \alpha_l(t)\delta(\tau - \tau_l(t)), (22)$$

where t and $\tau$ are referred as long time and short time respectively, L denotes number of range bins (sampling w.r.t. distance), $\alpha_l$ denotes complex scaling factor, $\tau_l$ is the roundtrip duration from range bin 1, and $\delta(\cdot)$ represents dirac delta function, indicating presence of an object. Assuming no multipath, and an object of interest at range bin l*, corresponding to time delay $\tau$*, CIR of that range bin can be given as:

$$g(t, \tau^*) = \alpha_{l^*}(t)\exp(-j2\pi f_c\tau_l^*(t)), (23)$$

where $f_c$ denotes the carrier frequency. Assuming the object to remain stationary in range bin l*, one can drop the variables $\tau$*, and l*, convert time delay into range, and rewrite the CIR as:

$$g(t) = \alpha(t)\exp\left(-\frac{j2\pi R(t)}{\lambda}\right), (24)$$

where R(t) denotes the actual distance of the object, and $\lambda$ denotes the wavelength.

Considering a vibrating object (i.e., sound source), one can decompose the range value into the static and vibrating part as R(t) = $R_0$ + x(t). As can be seen, there is a direct relationship between the CIR g(t) and the phase of the returned signal. By extracting the phase, g(t) could be used to derive R(t), and therefore, the vibration signal, x(t). One can further omit the temporal dependency of $\alpha$, assuming the object to be stationary, and the effect of displacement due to vibration on path loss to be negligible.

The above description assumes to have the vibrating object in the line of the radar solely, and does not account for other reflections from the environment. As suggested by Eqn. (24)**equ:vibrationmodel,** g(t) lies on a circle in the in-phase and quadrature (IQ) plane with center at the origin. However, due to various background reflections, g(t) is actually superimposed with a background vector, and the circle center is shifted from the origin. Thus, g(t) can be written as:

$$g(t) = \alpha\exp(-j2\pi R(t)/\lambda) + \alpha_B(t)\exp(j\gamma(t)) + w(t), (25)$$

where $\alpha_B(t)$ and $\gamma(t)$ are the amplitude and phase shift caused by the sum of all background reflections and vibrations, and w(t) is the additive white noise term. Eqn. (25) explains the received signal model and will be used to build a reconstruction block of RadioMic.

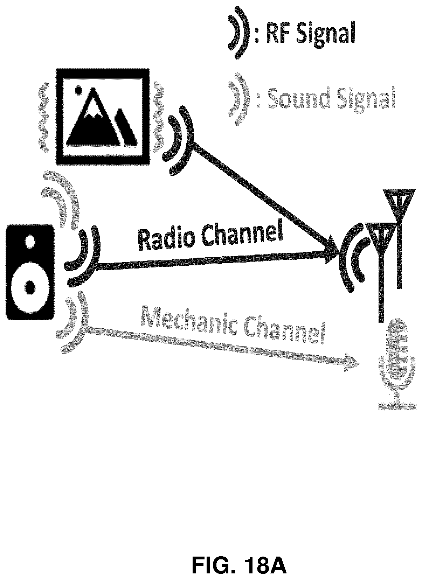

As shown in FIGS. 18A-18D, RadioMic could benefit various applications, including many that have not been easily achieved before. By overcoming limitations of today's microphone, RadioMic can enhance performance of popular smart speakers in noisy environments.

As shown in FIG. 18A, RadioMic can sense sound from both active and passive sources. Collecting spatially-separated audio helps to better understand acoustic events of human activities, appliance functions, machine states, etc.

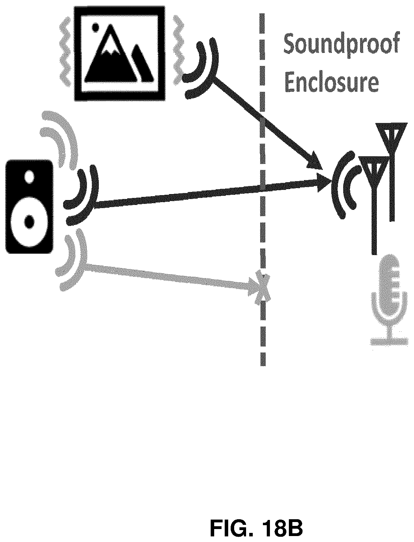

As shown in FIG. 18B, RadioMic can sense sound through soundproof materials, which will provide awareness of outside contexts while preserving the quiet space, which would be useful, for example, to monitor kid activities while working from home in a closed room.

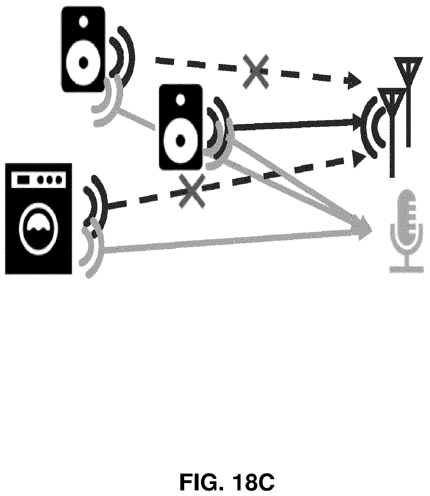

As shown in FIG. 18C, RadioMic can separate sound from multiple sources, which cannot be done by a microphone.

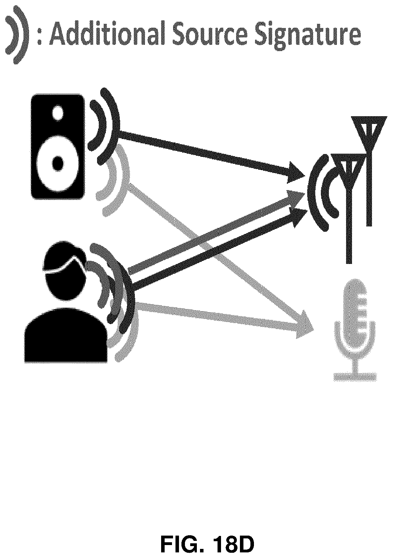

As shown in FIG. 18D, RadioMic can detect liveness of a sound source, e.g. with additional source signature, which can protect voice control systems from being attacked by inaudible voice or replayed audio.

In some embodiments, with mmWave entering more smart devices, RadioMic could also be combined with a microphone to leverage mutual advantages.

In some embodiments, RadioMic can be integrated with other existing wireless sensing applications. For example, a sleep monitoring currently employs microphone to detect coughs and snore, which may pose privacy concerns. This issue can be resolved when RadioMic is used. While remarkable progress has been achieved in RF-based imaging, RadioMic could offer a channel of the accompanying audio there.

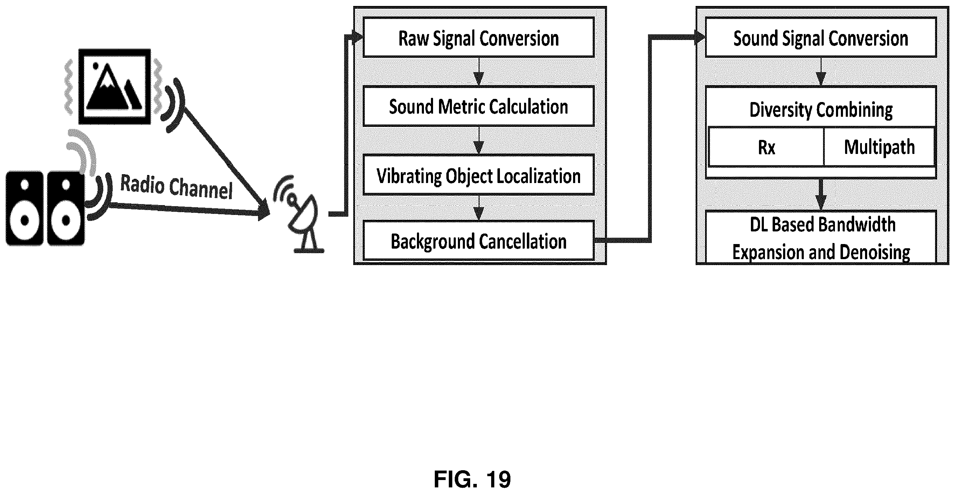

In some embodiments, RadioMic first extracts CIR from raw RF signals. In some embodiments, RadioMic detects sound vibration and recovers the sound, while rejecting non-interest motion. In addition, RadioMic feeds the recovered sound into a neural network for enhancement. FIG. 19 shows an overall pipeline of operations performed by RadioMic, according to some embodiments.

In some embodiments, RadioMic is implemented mainly using a COTS FMCW mmWave radar, although RadioMic can work with other mmWave radios that report high-resolution CIR such as an impulse radar as well. In some embodiments, CIR on impulse radar can also been exploited.

In some embodiments, an FMCW radar transmits a single tone signal with linearly increasing frequency, called a chirp, and captures the echoes from the environment. Time delay of the echoes could be extracted by calculating the amount of frequency shift between the transmitted and received signals, which can be converted to a range information. This range information is used to differentiate an object from the other reflectors in the environment. In order to obtain the range information, the frequency shifts between transmitted and received signals are calculated by applying FFT, which can be called Range-FFT. The output of Range-FFT can be considered as CIR, $g(t, \tau)$, and the above modeling could be applicable.

In some embodiments, RadioMic further obtains the so-called range-Doppler spectrogram from the CIR, which can be extracted by a short-time Fourier Transform (STFT) operation. STFT is basically FFT operations applied in the t dimension in $g(t, \tau)$ for subsets of long-time indices, called frames. One can denote the output range-Doppler spectrograms as $G(f, r, k)$, where $f \in (-N_s/2, N_s/2)$ denotes frequency shift, r corresponds to range bins (equivalent to $\tau_l$), and k is the frame index. G is defined for both positive and negative frequencies, corresponding to different motion directions of the objects.

As any range bin can have sound vibration, it is critical to have a robust detection module that can label both range bins and time indices effectively. Methods such as constant false alarm rate (CFAR) or Herfindahl-Hirschman Index (HHI) may not be robust, as the system should be triggered only by sound vibration but not arbitrary motion.

In some embodiments, RadioMic leverages the physical properties of sound vibration. Mainly, RadioMic relies on the fact that a vibration signal creates both positive and negative Doppler shifts, as it entails consequent displacement in both directions. This forward and backward motion is expected to have the same amplitudes at the same frequency bins, but with the opposite signs as the total displacement is zero. This would result in symmetric spectrograms. RadioMic exploits this observation with a novel metric for robust sound detection.

To define a sound metric, let $G^+(f, r, k)$ denote the magnitude of the positive frequencies of range-Doppler spectrogram $G(f, r, k)$, i.e., $G^+(f, r, k) = |G(f, r, k)|$ for $f \in (0, N_s/2)$. Similarly, one can define $G^-(f, r, k)$ as $G^-(f, r, k) = |G(f, r, k)|$ for negative frequencies $f \in (-N_s/2, 0)$. Note that the values of $G^+$ and $G^-$ are always positive, as they are defined as magnitudes, and would have non-zero mean even when there is no signal, due to the additive noise. Calculating the cosine distance or correlation coefficient would result in high values, even if there is only background reflection. In order to provide a more robust metric, one can subtract the noise floor from both $G^+$ and $G^-$ and denote the resulting matrices with $\hat{G}^+$ and $\hat{G}^-$. Then, instead of using standard cosine distance, one can change the definition to enforce similarity of the amplitude in $\hat{G}^+$ and $\hat{G}^-$:

$$m(r,k) = \frac{\sum_f \left|\hat{G}^+(f,r,k)\hat{G}^-(f,r,k)\right|^2}{\max\left(\sum_f \left|\hat{G}^+(f,r,k)\right|^2, \sum_f \left|\hat{G}^-(f,r,k)\right|^2\right)} . \quad (26)$$

In some embodiments, RadioMic calculates the sound metric as in Eqn. (26) for each range bin r, and for each time-frame k, resulting in a sound metric map, music sound results in high values of the sound metric, whereas arbitrary motion is suppressed significantly, due to asymmetry in the Doppler signature and power mismatches. This shows the responsiveness of sound metric to vibration, while keeping comparatively lower values for random motion.

In some embodiments, to detect vibration, RadioMic uses a median absolute deviation based outlier detection algorithm, and only extracts outliers with positive deviation. In some embodiments, an outlier based scheme outperforms a fixed threshold. Additionally, this approach also adapts to various motion and sounds of diverse amplitudes, including those from active sources and passive sources.

As the sound detection algorithm runs on the range bins, it can detect multiple range bins with sound. The radio signals in these range bins may be processed separately by RadioMic. This enables detection of multiple sources and reconstruction of each sound signal separately. As a byproduct, it also locates at which bin does the sound occur, and reduces interference.

In some embodiments, having extracted the time indices and the range information about active or passive vibration sources in the environment, RadioMic extracts raw sound signals. Using the signal model in Eqn. (25), RadioMic recovers the acoustic signal by first filtering out the interference and background and approximating the remaining signal with a line fit to further reduce noise.

In some embodiments, the system can apply an FIR high-pass filter as the changes in the background usually have much lower frequencies. The resulting signal, $\hat{g}(t)$ can be given as:

$$\hat{g}(t) \approx \alpha\exp(-j2\pi R(t)/\lambda) - \alpha\exp(j\gamma_R) + \hat{w}(t), (27)$$

where $\hat{w}(t)$ is the filtered noise term, and $\alpha\exp(j\gamma_R) \approx \alpha\exp(-j2\pi R_0/\lambda)$ is the center of a circle.

The signal component, $\exp(-jg\pi R(t)/\lambda)$, remains mostly unchanged, due to the frequencies of interest with sound signals, and this operation moves the arc of the vibration circle to the origin in the in-phase and quadrature (IQ) plane. Furthermore, this operation reduces any drifting in IQ plane, caused by the hardware.

In some embodiments, the curvature of the arc of the vibration circle is in the order of 1° for $\mu$m displacement with a mmWave device, by projecting the arc, $\alpha\exp(-j2\pi R(t)/\lambda)$, onto the tangent line at $\alpha\exp(-j2\pi R_0/\lambda)$, one can approximate $\hat{g}(t)$ as

$$\hat{y}(t) = m + nx(t) + \hat{w}(t) - \alpha\exp(j\gamma_R), (28)$$

where

$$m = \exp(-2\pi R_0/\lambda), \text{ and } n = \alpha -2\pi/\lambda \exp\left(-j(\pi/2 + 2\pi R_0/\lambda)\right).$$

Because $\alpha_R\exp(j\gamma_R) \approx \alpha\exp(-j2\pi R_0/\lambda)$, $\hat{g}(t)$ can be further simplified as

$$\hat{g}(t) \approx nx(t) + \hat{w}(t), (29)$$

which suggests that, $\hat{g}(t)$ already has the real-valued sound signal x(t), scaled and projected in complex plane, with an additional noise. Because the projection onto an arbitrary line does not change noise variance, one can estimate x(t) with minimum mean squared error (MMSE) criteria. The estimate is given as:

$$\hat{x}(t) = \mathcal{R}\left\{\hat{g}(t)\exp\left(-j\hat{\theta}\right)\right\}, (30)$$

where $R$ is the real value operator. Angle $\hat{\theta}$ can be found as:

$$\hat{\theta} = \arg\min_{\theta} \| \hat{g}(t) - \mathcal{R}\{\hat{g}(t)\exp(-j\theta)\}\exp(j\theta) \|^2. \, (31)$$

In order to mitigate any arbitrary motion and reject noise, the disclosed system can first project the samples on the optimum line, then calculate spectrogram. Afterwards, the disclosed system can extract the maximum of two spectrograms (i.e. max{G⁺, G⁻}) and apply inverse-STFT to construct real-valued sound signal. This is different than extracting maximum of the two spectrograms immediately, or extracting one side only, as the system first reduces the noise variance by projection. This also ensures a valid sound spectrogram, as the inverse spectrogram needs to result in a real-valued sound signal.

In some embodiments, the raw sound output does not directly result in very high quality sound, due to various noise sources and the extremely small displacement on the object surface. To mitigate these issues, one can utilize two physical redundancies in the system: 1) receiver diversity offered by multiple antennas that can be found in many radar arrays, and 2) multipath diversity. Multiple receivers or receive antennas can sense the same vibration signal from slightly different locations, and combination of these signals could enable a higher signal-to-noise ratio (SNR). In addition, multipath environment enables to observe a similar sound signal in multiple range bins, which could be used to further reduce the noise levels. To exploit these multiple diversities, one can employ a selection combining scheme. Mainly, silent moments are used to get an estimate for each multipath component and receiver (or receive antenna). When sound is detected, the signal with the highest SNR is extracted. One may only consider nearby bins when combining multipath components, in order to recover sound from multiple sources.

Even though the aforementioned process reduces multiple noise sources, and optimally creates a sound signal from radio signals, the recovered sound signals face two issues. First, the above process cannot recover frequencies beyond 2 kHz, noted as high-frequency deficiency, which is a problem as the articulation index, a measure of the amount of intelligible sound, is less than 50% for 2kHz band-limited speech. Second, the recovered sound is a noisy copy of the original sound. As the vibration on object surfaces is on the order of μm, phase noise and other additive noises still exist.

High frequencies beyond 2 kHz are attenuated fully in the recovered sound, as the channel h in Eqn. (21) removes useful information in those bands. Referring back to the above modeling of the signal, the output signal $\hat{x}(t)$ is a noisy copy of x(t), which could be written as:

$$\hat{x}(t) \approx x(t) + \hat{w}(t) = h \star a(t) + \hat{w}(t), \, (32)$$

from Eqn. (21). This shows the output of the air pressure-to-object vibration channel (or mechanical response of a speaker). In order to recover a(t) fully, one needs to invert the effect of h. However, classical signal processing techniques like spectral subtraction or equalization cannot recover the entire band, as the information at the high frequencies have been lost.

To overcome these issues, namely, to reduce the remaining noise and reconstruct the high frequency part, the disclosed system uses deep learning. In some embodiments, the disclosed system builds an auto-encoder-based neural network model, named as radio acoustics networks (RANet). Theoretical limitations are strict in RadioMic, as there is severer noise, and stronger band-limit constraints on the recovered speech (expanding 2 kHz to 4 kHz), in addition to the need for solving both problems together.

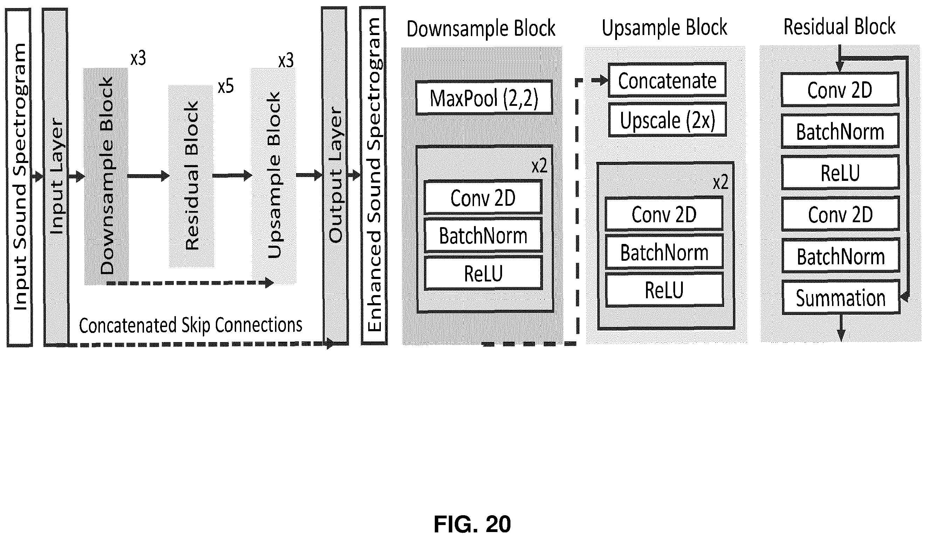

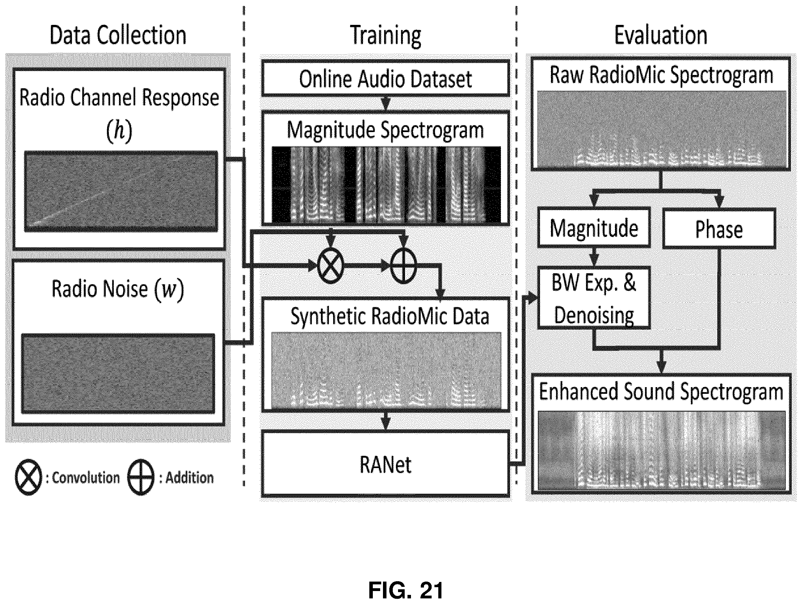

FIG. 20 illustrates the structure of RANet, with the entire processing flow of data augmentation, training, and evaluation illustrated in FIG. 21. As shown in FIG. 20, RANet comprises downsampling, residual and upsampling blocks, which are connected sequentially, along with some residual and skip connections. On a high level, the encoding layers (downsampling blocks) are used to estimate a latent representation of the input spectrograms (e.g. similar to images); and decoding layers (upsampling blocks) are expected to reconstruct high-fidelity sound. Residual layers in the middle are added to capture more temporal and spatial dependencies by increasing the receptive field of the convolutional layers, and to improve model complexity. In some embodiments, RANet takes input spectrograms of size (128 × 128), as grayscale images, and uses (3 × 3) strided convolutions, with number of kernels doubling in each layer of downsampling blocks, starting from 32. In the upsampling blocks, the number of kernels is progressively reduced by half, to ensure a symmetry between the encoder and decoder. In the residual blocks, the number of kernels does not change, and outputs of each double convolutional layer are combined with their input. One can use residual and skip connections to build RANet, as these are shown to make the training procedure easier, especially for deep neural networks.

As this is a relatively deep neural network for an extremely challenging inverse problem, a successful training process requires extensive data collection. However, collecting massive RF data is costly, which is a practical limitation of many learning-based sensing systems. On the other hand, there have seen a growing, massive audio datasets becoming available online. In some embodiments, instead of going through an extensive data collection procedure, RadioMic exploits the disclosed radio acoustics model and translates massive open-source datasets to synthetically simulated radio sound for training. In some embodiments, two parameters are particularly needed to imitate radio sound with an audio dataset, i.e., the channel h and noise w as in Eqn. (32)**eq:recoveryestimate**. The system can use multiple estimates for these parameters to cover different scenarios, and artificially create radar sound at different noise levels and for various frequency responses, thus allowing the system to train RANet efficiently with very little data collection overhead. Furthermore, this procedure ensures a rigorous system evaluation, as only the evaluation dataset includes the real radio speech.

In some embodiments, using the trained model, RANet uses raw radar sound as input, extracts magnitude spectrograms that will be used for denoising and bandwidth expansion. Output magnitude spectrograms of RANet is combined with the phase of the input spectrograms, the time-domain waveform of the speech is constructed. In some embodiments, in order to reduce the effect of padding on the edges, and capture long-time dependencies, only the center parts of the estimated spectrograms are used, and inputs are taken as overlapping frames with appropriate paddings in two sides.

While RadioMic is not limited to a specific type of radar, one can use an FMCW mmWave radar for implementation, e.g. a COTS mmWave radar with a real-time data capture board. In some embodiments, it works on 77GHz with a bandwidth of 3.52GHz. In some embodiments, the radar device has 3 transmitter (Tx) and 4 receiver (Rx) antennas, with a sampling rate set at 6.25 kHz, which enables to sense up to 3.125 kHz, close to human sound range, while avoiding too high duty cycle on the radar. One can use two Tx antennas of the device. This enables 8 virtual receivers, due to the placement of antennas. The range resolution in the setting is 4.19cm, and different objects placed apart by 4.19 cm with respect to the radar axis could be separated by RadioMic.

In some embodiments, applying Range-FFT, extracted CIR results in $(8 \times 256 \times 6250)$ samples per second. The system can extract range-Doppler spectrograms using frame lengths of 256 samples ($\approx$ 40 ms) with 75% overlap, and periodic-Hanning window. The selection of window function ensures perfect reconstruction, and has good sidelobe suppression properties, to ensure reduced effect of DC sidelobes on symmetry of range-Doppler spectrograms.

In some embodiments, to create synthetic data for training RANet, one can play a frequency sweep at various locations, and extract the radio channel response h. To account for fluctuations, one can apply a piecewise linear fit to the measured h, and apply added randomness to capture fluctuations. To capture noise characteristics, one can collect data in an empty room without any movement. Noise from each range bin is extracted, which are then added to the synthetic data, with varying scaling levels to account for different locations.

In some embodiments, the system downsamples the input audio files to 8kHz, and calculates spectrograms using 40ms windows (256 samples). When using the radar sounds as input, the system upsamples those audio files to 8kHz prior to extracting the outputs. In some embodiments, inputs to the neural network are taken as 128 samples ($\approx$ 1s), where only the middle 32 samples ($\approx$ 0.25s) are used for reconstruction and error calculation.

In some embodiments, the system can use L2 loss between the real and estimated spectrograms. Prior to calculating the error, the system can apply a mapping of log(1 + G), where G denotes a spectrogram. The system can randomly select 2.56 million spectrograms for creating synthetic input/output data, and train the network for 10 epochs.

Different modules of RadioMic can be placed in multiple places, such as office space, home and an acoustically insulated chamber. It is non-trivial to evaluate the quality of sound. While there are quite many different metrics in the speech processing literature, one can adopt perceptual evaluation of speech quality (PESQ), log-likelihood ratio (LLR) and short-time intelligibility index (STOI). PESQ tries to extract a quantitative metric that can be mapped to mean-opinion-score, without the need for user study, and reports values from 1 (worst) to 5 (best). LLR measures the distance between two signals, and estimates values in 0 (best) to 2 (worst). STOI is another measure of intelligibility of the sound, and reports values in (0,1) with 1 the best. One can avoid reporting SNR between the reference and reconstructed sound, as it does not correlate with human perception. Rather, one can report SNR using the noise energy estimated from silent moments, as it is used by RadioMic during raw sound data extraction and it gives a relative idea on the amount of noise suppression.

In some embodiments, the data collection for detection analysis includes random motions, such as standing up and sitting repeatedly, walking, running, and rotating in place, as well as static reflectors in the environment, and human bodies in front of the radar. On the other hand, the system can also collect data using multiple sound and music files with active and passive sources. More importantly, one can collect motion and sound data at the same time to see if RadioMic can reject these interferences successfully.

To illustrate the gains coming from the disclosed sound metric, one can implement and compare with other methods: 1) HHI (UWHear), which uses HHI and requires some training to select an appropriate threshold; and 2) CFAR (mmVib), which requires knowing the number of vibration sources a prior, and extracts the highest peaks. To imitate this approach and provide a reasonable comparison, one can apply CFAR detection rule at various threshold levels, and remove the detections around DC to have a fairer comparison. Additionally, one can also compare hard thresholding (RadioMic-T) with the outlier-based detector (RadioMic-O). Based on the comparison results, while RadioMic-T is slightly worse than RadioMic-O, the other methods fail to distinguish random motion from the vibration robustly, which prevents them from practical applications as there would be arbitrary motion in the environment.

One can investigate the detection performance of RadioMic at different distances azimuth angles (with respect to the radar) using an active source (a pair of speakers) and a passive source (aluminum foil of size 4 × 6 inches). In some embodiments, one can use 5 different sound files for each location, three of which are music files, and two are human speech. In some embodiments, RadioMic can robustly detect sound up to 4m in an active case with 91% mean accuracy, and up to 2m in the passive source case with %70 accuracy, both with a field of view of 90°. Passive source performance is expected to be lower, as the vibration is much weaker.

To further evaluate detection performance of RadioMic with passive materials, one can conduct experiments with additional daily materials, such as picture frames, paper bags, or bag of chips. Many different materials enable sound detection using RadioMic. Even at a lower rate, some sound signal is detected for particular instances as the evaluation is done with frames with 40ms duration. The performance could be improved by temporal smoothing, if the application scenario requires a lower miss-detection ratio.

In some embodiments, one can also investigate the effect of sound amplitude on the detection ratio from a passive object. One can reduce the amplitude of the test files from 85 dB to 60 dB, with a 5 dB step, and measure the detection rates. The results show that RadioMic outperforms existing approaches, especially when the amplitude is lower. Detecting sound at even lower levels is a common challenge for non-microphone sensing due to the extremely weak vibrations.

In some embodiments, the sound signal could be approximated with a linear projection on IQ plane, where the optimum angle could be obtained by signal-to-noise maximizing projection. Although this approach maximizes the signal SNR, it may not result in perceptually higher quality sound, as SNR does not relate to the human perception. To that end, one can test multiple projection angles deviated from the RadioMic's optimum angle, and generate results using LLR and STOI for these angles. In some embodiments, the results indicate the best results for projecting at 0°, and the worst at 90° with a monotonic decrease in between, which is consistent with the line model. This further indicates that an optimal scheme can achieve higher performance than an arbitrary axis.

In some embodiments, to compare the disclosed method with other works, one may employ only the raw reconstruction without RANet. For this comparison, one can use an active speaker at 1m away, with various azimuth angles as further distances sometimes report unstable performance metrics. Overall, RadioMic outperforms both UWHear and mmVib, for just the raw sound reconstruction, and it further improves the quality of the sound with additional processing blocks. With gains from diversity combining and deep learning, one can investigate the effect of each component on a dataset using a passive source. Overall, each of the additional diversity combining schemes improves the performance with respect to all metrics. At the same time, RANet reduces the total noise levels significantly and increases PESQ. RANet yields a worse value with LLR, which is due to the channel inversion operation of h applied on the radar signal. While an optimal channel recovery operation is demanded, RANet is trained on multiple channel responses and only approximates to h. Consequently, the channel inversion applied by RANet is expected to be sub-optimal. Then STOI metric shows a higher variation, which is due to high levels of noise in the sample audio files in the input. In case of large noise, RANet learns to combat the effect of noise w, instead of inverting h, and outputs mostly empty signals. When there is enough signal content, RANet improves the intelligibility further.

To investigate sound recovery from varying locations and angles, one can investigate the raw SNR output for active and passive sources. In some embodiments, nearby locations have higher SNR, allowing better sound recovery, and the dependency with respect to the angle is rather weak. Increasing distance reduces the vibration SNR strongly, (e.g., from 20 dB at 1m to 14 dB at 2m for an active source) possibly due to the large beamwidth of the radar device and high propagation loss.

In some embodiments, one can test both active and passive sources at various sound levels, by investigating the SNR with respect to sound amplitude, where the calibration is done by measuring the sound amplitude at 0.5m away from the speakers, at 300Hz. Generally, the SNR decreases with respect to decreasing sound levels. At similar sound levels, a passive source, aluminum foil, can lose up to 10 dB compared to an active source. In some embodiments, RadioMic retains a better SNR with decreasing sound levels than increasing distance, which indicates that the limiting factor for large distances is not the propagation loss, but the reflection loss, due to relatively smaller surface areas. Hence, with more directional beams (e.g. transmit beamforming, or directional antennas), effective range of the RadioMic could be improved, as low sound amplitudes also look promising for some recovery.

In some embodiments, two different synthesized audio files are used in order to show potential differences between the nature of active and passive sources. In this setting, the passive source (aluminum foil) is placed at 0.5m away and active source is located at 1m. The results show that active source (speaker diaphragm) have more content in the lower frequency bands, whereas passive sound results in more high frequency content, due to the aggressive channel compensation operation on h. More detailed comparisons are provided in Table III.

One can further validate RadioMic in NLOS operations. To that end, in addition to the office area, one can conduct experiments in an insulated chamber, which has a double glass layer on its side. This scenario is representative of expanding the range of an IoT system to outside rooms from a quiet environment. In this particular scenario, one can test both the passive source (e.g. aluminum foil), and the active source (e.g. speaker). As additional layers would attenuate the RF reflection signals further, one can test NLOS setup at slightly closer distances, with active speaker at 80 cm and the passive source at 35 cm away. Detailed results are in Table III. As seen, insulation layers do not affect RadioMic much, and LOS and NLOS settings perform quite similar. Some metrics even show improvement in NLOS case due to shorter distances.

*Table III: Active vs. Passive Source Comparison*

| Setup | SNR | PESQ | LLR | STOI |
|---|---|---|---|---|
| LOS, Active | 24.7 | 0.84 | 1.61 | 0.55 |
| LOS, Passive | 10.4 | 1.20 | 1.57 | 0.61 |
| NLOS, Active | 29.4 | 1.12 | 1.52 | 0.58 |
| NLOS, Passive | 8.8 | 1.36 | 1.57 | 0.64 |

In some embodiments, RadioMic can also capture vocal folds vibration from human throat, as another active source. Starting with humming in front of the speaker at a quiet 60 dB level, one can collect multiple recordings from a user. Although RadioMic is not trained with a frequency response h from human throat, it can still capture some useful signal content. On the other hand, intelligibility of such speech is rather low, comparing to other sources, and RANet sometimes does not estimate the actual speech. The performance of RadioMic regarding human throat could be improved as well with a massive RF data from human throat.

In some embodiments, RadioMic can also be used for multiple source separation and to classify sound sources.

Separation of multiple sound sources would enable multi-person sensing, or improved robustness against interfering noise sources. In order to illustrate feasibility, one can play two different speech files simultaneously from left and right channels of the stereo speakers. For example, one can place right speaker at 0.75m, and left speaker at 1.25m. This results in two spectrograms extracted by RadioMic, along with a microphone spectrogram. The microphone spectrogram extracts mixture of multiple sources, and is prone to significant interference. In contrast, RadioMic signals show much higher fidelity, and two person's speech can be separated from each other well. RadioMic can achieve more features in one system, in addition to the source separation capability. Higher fidelity may be pursued by using RadioMic in tandem with a single microphone.

As another application, one can investigate feasibility of sound source classification. As RadioMic senses at source of the sound, it captures the additional physical characteristics of the sound generation mechanism simultaneously. It turns out the disclosed system RadioMic can differentiate the source of a sound between a human and an inanimate source like a speaker. This is a critical application as it is well-known that today's microphones all suffer from inaudible attacks and replay attacks due to the hardware defects. The results show that RadioMic can enable sound liveliness detection, with unprecedented response times. In one experiment, a user recites five different sentences, in two different languages, and the speech is recorded using a condenser microphone. Afterwards, the same sound is played through speakers at the same distance, at a similar sound level, to capture RadioMic output.

Based on the results, the human throat shows a weaker amplitude around DC component. This is because the reflection coefficients of speakers and human throat vary significantly, a phenomenon utilized for material sensing. Due to minute body motions and the movement of the vocal tract, the reflection energy of human throat varies more over time and has stronger sidelobes. Due to skin layer between vocal cords and the radar, human throat applies stronger low-pass filtering on the vibration compared to speakers, which relates to the frequencies of interest for sound. In some embodiments, to enable RadioMic for liveness detection, one can implement a basic classifier based on these results. In some embodiments, the system can use the ratio of the energy in motion affected bands (35-60 Hz) over the entire radar spectrogram as an indicator for liveness. In some embodiments, RadioMic can classify the sources with 95% accuracy with only 40 ms of data, which increases to 99.2% by increasing to 320ms. RadioMic promises a valuable application here as it can sense the sound and classify the source at the same time.

The present teaching thus discloses RadioMic, a mmWave radar based sound sensing system, which can reconstruct sound from sound sources and passive objects in the environment.

Using the tiny vibrations that occur on active sources (e.g., a speaker or human throat) or object surfaces (e.g., paper bag) due to ambient sound, RadioMic can detect and recover sound as well as identify sound sources using a novel radio acoustics model and neural network. RadioMic can work through walls, even a soundproof one. To convert the extremely weak sound vibration in the radio signals into sound signals, RadioMic uses radio acoustics, and training-free approaches for robust sound detection and high-fidelity sound recovery. It exploits a neural network to further enhance the recovered sound by expanding the recoverable frequencies and reducing the noises. RadioMic can translate massive online audios to synthesized data to train the network, and thus minimize the need of RF data. Extensive experiments in various settings show that RadioMic outperforms existing approaches significantly and benefits many applications.

In some embodiments, more advanced hardware and sophisticated beamforming could underpin better performance of RadioMic. In some embodiments, RANet mitigates the fundamental limit of high-frequency deficiency, which uses 1-second window with limited RF training data. In some embodiments, better quality could be achieved by exploiting long-term temporal dependencies with a more complex model, given more available RF data. More RF data from human throat can lead to a better performance for human speech sensing.

In some embodiments, RadioMic and microphones are complementary. Using suitable deep learning techniques, the side information from RadioMic could be used in tandem with microphone to achieve better performance of sound separation and noise mitigation than microphone alone. With RadioMic, one can build a security system for sound liveness detection against side-channel attacks, or explore RadioMic with mmWave imaging and other sensing.

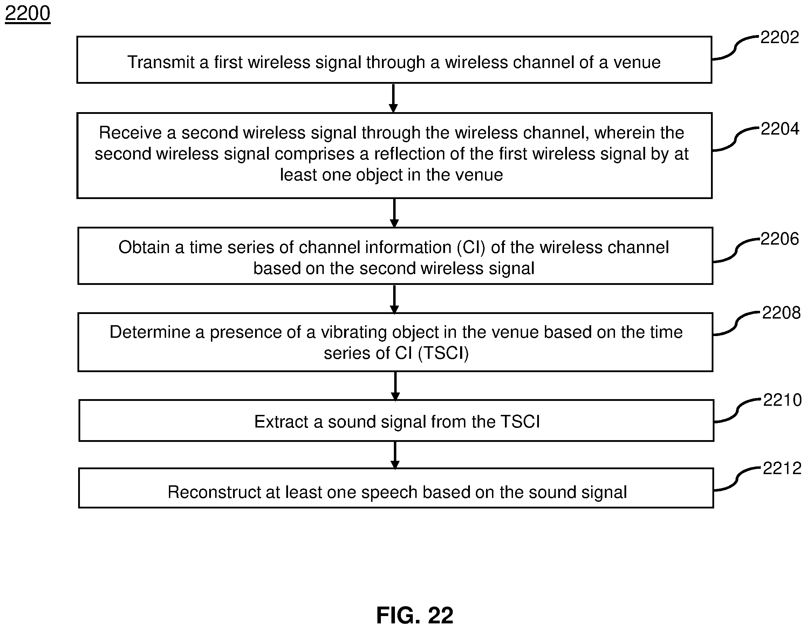

FIG. 22 illustrates a flow chart of an exemplary method 2200 for sound sensing based on mmWave signal, according to some embodiments of the present disclosure. In various embodiments, the method 2200 can be performed by the systems disclosed above. At operation 2202, a first wireless signal, e.g. a mmWave signal, is transmitted through a wireless channel of a venue. At operation 2204, a second wireless signal is received through the wireless channel, wherein the second wireless signal comprises a reflection of the first wireless signal by at least one object in the venue. At operation 2206, a time series of channel information (CI) of the wireless channel is obtained based on the second wireless signal. At operation 2208, a presence of a vibrating object in the venue is determined based on the time series of CI (TSCI). At operation 2210, a sound signal is extracted from the TSCI. At operation 2212, at least one speech is reconstructed based on the sound signal, e.g. using a deep learning model. The order of the operations in FIG. 22 may be changed according to various embodiments of the present teaching.

In some embodiments, a method of a sound sensing system includes steps s1 to s8 as described below.

At step s1: the system captures reflected signals from sound objects and/or sources by an mmWave radio device, using multiple transmit (Tx) and multiple receive (Rx) antennas, using frequency modulated carrier wave (FMCW) waveforms. The signal from a particular distance is defined as $g(t, \tau)$, with t denoting long-time, and $\tau$ denoting short time:

$$g(t, \tau) = \alpha_l(t)\exp\left(-j2\pi f_c \tau_l(t)\right),$$

At step s2: the system converts the FMCW waveforms into channel impulse response (CIR) by applying Fast Fourier Transform (FFT) on the short-time index $\tau$ for all different $\tau$ within a period of time.

At step s3: the system apply Short-time Fourier-Transform on channel impulse response to construct Range-Doppler-Time radar datacubes, denoted by G(f, r, k), where f, r, k represent Doppler shift, range, and long time-index, respectively.

At step s4: the system detects and localizes vibrating objects. This may include sub-steps s4a to s4d.

In some embodiments, at sub-step s4a, the system separates radar datacubes into positive and negative parts, i.e. $G^+(f, r, k) = |G(f, r, k)|$ for $f \in (0, N_s/2)$, and $G^-(f, r, k)$ similarly, but with the negative Doppler frequencies.

In some embodiments, at sub-step s4b, the system calculates sound metric for each time-index (k), and range index (r), which is a measure of similarity between $G^+$ and $G^-$. In one example, the sound metric is determined by calculating a cosine distance between $G^+$ and $G^-$. In another example, the sound metric is determined by calculating other distance metrics between the two, such as L0, L1, L2, L_inf. In another example, the sound metric is determined by calculating a modified cosine distance, as follows:
$$m(r, k) = \frac{\sum_f |\hat{G}^+(f,r,k)\hat{G}^-(f,r,k)|^2}{\max\left(\sum_f |\hat{G}^+(f,r,k)|^2, \sum_f |\hat{G}^-(f,r,k)|^2\right)}$$
, where the summation is limited w.r.t. certain frequencies for more robust detection.

In some embodiments, at sub-step s4c, the system subtracts background from sound metric to make the system more robust against static background reflections. In one example, assuming a stationary background, the system can calculate time average of m(r, k), for each distance, and subtract the values from the actual value. Time average can be calculated by taking any first order statistics, such as mean, median or trimmed mean.

In some embodiments, at sub-step s4d, the system detects and localizes objects based on the sound metric. In one example, the system detects the object by thresholding sound metric values, using a predefined threshold T*. In another example, the system extracts outliers in the sound metric m(r,k) to detect the object, by using an outlier detection method. Outlier detection can be done by frame variance, or absolute deviation from mean, or any other method.

In some embodiments, other object detection metrics can be used at step s4, such as CFAR detection, or peak detection to detect the presence of vibration and find the location of it.

In some embodiments, at step s5, the system extracts a real-valued vibration signal from the complex valued radar baseband signal. This may include sub-steps s5a to s5e.

In some embodiments, at sub-step s5a, the system filters out background motion and low-speed motion by a low-pass filter on CIR. In other embodiments, at sub-step s5a, the system can zero out frequencies near 0 Hz on spectrogram.

In some embodiments, at sub-step s5b, the system projects the complex signal (with Real/Imag) part onto a line in complex domain, and therefore represents complex values with a scalar. In other embodiments, at sub-step s5b, instead of projection onto an axis, the system can extract the Real or Imaginary part of the signal, which is also another projection.

In some embodiments, at sub-step s5c, the system can recalculate the spectrogram of the signal after projection.

In some embodiments, at sub-step s5d, the system can extract maximum of $G^+$, and $G^-$ to improve the quality of the sound reconstructed.

In some embodiments, at sub-step s5e, the system can apply an inverse-short time Fourier Transform to extract the real-valued sound signal

At step s6, the system may apply signal enhancement using multiple diversities. This may include sub-steps s6a and s6b.

In some embodiments, at sub-step s6a, the system can apply antenna selection to extract the best antenna from each distance. In other embodiments, at sub-step s6a, the system can apply beamforming to reduce noise.

In some embodiments, at sub-step s6b, the system can apply multipath selection to extract the best signal. For example, the system can calculate signal-to-noise ratio when the venue is empty without any object, and select the best antenna/multipath when there is reflected signal.

At step s7, the system can train a deep learning module for signal enhancement that applies denoising and bandwidth expansion at the same time to the output of the previous steps. In the output of the previous stage, high frequency components of the reconstructed speech are lost due to the nature of object vibration, and background clutter creates additional noise. In order to reconstruct high-quality, intelligible speech, the alterations due to object surface and object vibration properties needs to be reversed, which includes denoising, and reconstruction of high frequency components. Deep learning module requires training data, which could be achieved by different methods.

In some embodiments, to obtain the training data, the system can capture frequency response of different types of objects in the environment, and background noise for multiple rooms and environments. In addition, the system can obtain simulated synthetic data by using online datasets. Assuming a frequency response of $h_i$ captured from the surface of object i, and noise signals $n_j$ for realization j , synthetic/noisy mixture of input signal x is denoted by $\hat{x}$ and is given as $\hat{x} = h_i * x + n_j$ for different i's and j's.

In other embodiments, to obtain the training data, the system can perform extensive data collection of radio and audio signals simultaneously in the venue. As such, the system can be used to train a deep learning module for signal enhancement for denoising and bandwidth expansion. Degraded speech may be used as an input to a neural network, and high-quality speech is used as the target for the estimation by the neural network.

At step s8, the system may use the deep learning module with the output radio signals to enhance noisy, and bandwidth limited radio sound, so as to reconstruct a speech based on the sound signal.

The following numbered clauses provide implementation examples for sound sensing based on radio signals.

Clause D1. A system for sound sensing, comprising: a transmitter configured to transmit a first wireless signal through a wireless channel of a venue; a receiver configured to receive a second wireless signal through the wireless channel, wherein the second wireless signal comprises a reflection of the first wireless signal by at least one object in the venue; and a processor configured for: obtaining a time series of channel information (CI) of the wireless channel based on the second wireless signal, determining a presence of a vibrating object in the venue based on the time series of CI (TSCI), extracting a sound signal from the TSCI, and reconstructing at least one speech based on the sound signal.

Clause D2. The system of Clause D1, wherein: each CI comprises a CIR; and the first wireless signal is carried on a millimeter wave.

Clause D3. The system of Clause D2, wherein the vibrating object is at least one of: a person actively giving the at least one speech; a device actively outputting the at least one speech; or an object passively vibrating according to the at least one speech.

Clause D4. The system of Clause D3, wherein obtaining the TSCI comprises: applying a fast Fourier transform on frequency modulated carrier wave (FMCW) waveforms carried by the second wireless signal with respect to a short-time index.

Clause D5. The system of Clause D4, wherein obtaining the TSCI comprises: applying a short-time Fourier transform on the TSCI to construct a radar spectrogram, wherein the radar spectrogram is a function having: a frequency index representing Doppler frequency shift, a long-time index representing time frames, and a distance range index representing distance ranges from the receiver.

Clause D6. The system of Clause D5, wherein determining the presence of the vibrating object comprises: determining a first magnitude of the radar spectrogram for positive frequencies; determining a second magnitude of the radar spectrogram for negative frequencies; and calculating a sound metric based on a similarity between the first magnitude and the second magnitude, with respect to each time frame and each distance range from the receiver.

Clause D7. The system of Clause D6, wherein calculating the sound metric comprises: calculating a distance function between the first magnitude and the second magnitude, with respect to each time frame and each distance range from the receiver, wherein the distance function comprises at least one of: a cosine distance, L0 distance, L1 distance, L2 distance, or L_inf distance.

Clause D8. The system of Clause D6, wherein determining the presence of the vibrating object comprises: calculating a time average of the sound metric for each distance range from the receiver; and subtracting the time average from the sound metric to generate sound metric values at each time frame and each distance range from the receiver.

Clause D9. The system of Clause D8, wherein determining the presence of the vibrating object comprises: determining the presence of the vibrating object by applying a predetermined threshold on the sound metric values; and localizing the vibrating object.

Clause D10. The system of Clause D8, wherein determining the presence of the vibrating object comprises: determining the presence of the vibrating object by detecting outliers in the sound metric values based on time frame variance or absolute deviation from mean; and localizing the vibrating object.

Clause D11. The system of Clause D8, wherein determining the presence of the vibrating object comprises: determining the presence of the vibrating object by extracting peaks of the radar spectrogram along the long-time index and/or the distance range index; and localizing the vibrating object.

Clause D12. The system of Clause D8, wherein determining the presence of the vibrating object comprises: determining the presence of the vibrating object by applying a constant false alarm rate (CFAR) detection rule on the radar spectrogram; and localizing the vibrating object.

Clause D13. The system of Clause D8, wherein extracting the sound signal from the TSCI comprises: filtering out background motion and low-speed motion to generate a filtered signal, wherein the filtering comprises at least one of: applying a low-pass filter on the TSCI; or removing frequency components in a proximity of zero frequency on the radar spectrogram.

Clause D14. The system of Clause D13, wherein extracting the sound signal from the TSCI comprises: generating a projected signal based on the filtered signal, wherein the projected signal is generated by at least one of: projecting the filtered signal onto a line in complex domain to represent complex values of the filtered signal with scalars; or extracting a real part or an imaginary part of the filtered signal.

Clause D15. The system of Clause D14, wherein extracting the sound signal from the TSCI comprises: recalculating the radio spectrogram based on the projected signal.

Clause D16. The system of Clause D15, wherein extracting the sound signal from the TSCI comprises: extracting a positive magnitude spectrogram of the recalculated radar spectrogram for positive frequencies; extracting a negative magnitude spectrogram of the recalculated radar spectrogram for negative frequencies; and determining a sound spectrogram based on a maximum of the positive magnitude spectrogram and the negative magnitude spectrogram.

Clause D17. The system of Clause D16, wherein extracting the sound signal from the TSCI comprises: applying an inverse short-time Fourier transform on the sound spectrogram to extract a real-valued sound signal.

Clause D18. The system of Clause D17, wherein extracting the sound signal from the TSCI comprises: generating an enhanced sound signal from the real-valued sound signal based on receiver diversity, wherein the second wireless signal is received by multiple antennas on the receiver, the receiver diversity is obtained by selecting a best antenna on the receiver for each distance range from the receiver, and the best antenna is predetermined based on calculating signal-to-noise ratio (SNR) for each antenna when there is no sound in the venue.

Clause D19. The system of Clause D17, wherein extracting the sound signal from the TSCI comprises: generating an enhanced sound signal from the real-valued sound signal based on beamforming.

Clause D20. The system of Clause D17, wherein extracting the sound signal from the TSCI comprises: generating an enhanced sound signal from the real-valued sound signal based on multipath diversity, wherein the wireless channel includes a plurality of multipath components, the multipath diversity is obtained by selecting a best multipath component of the wireless channel for each distance range from the receiver, and the best multipath component is predetermined based on calculating signal-to-noise ratio (SNR) for each multipath component when there is no sound in the venue.

Clause D21. The system of Clause D20, wherein reconstructing the at least one speech based on the sound signal comprises: applying a deep learning model on an input spectrogram to extract a magnitude spectrogram, wherein the input spectrogram is generated based on the enhanced sound signal; and reconstructing time domain waveforms of the at least one speech based on the magnitude spectrogram and phase information of the input spectrogram.

Clause D22. The system of Clause D21, wherein the deep learning model is pre-trained to enhance input signals by denoising and bandwidth expansion at the same time.

Clause D23. The system of Clause D22, wherein the processor is further configured for: training the deep learning model based on a training data set, wherein the training data set includes: frequency responses of different types of objects in the venue, background noise in the venue, and synthetic audio signals simulated based on open-source data.

Clause D24. The system of Clause D22, wherein the processor is further configured for: training the deep learning model based on a training data set, wherein the training data set includes: radio signals and audio signals collected at the same time in the venue, and background noise in the venue.

Clause D25. The system of Clause D22, wherein: the sound signal includes sound information from multiple sources at different locations in the venue; and the processor is further configured for separating, based on the radar spectrogram, an individual spectrogram of sound information from each of the multiple sources, and reconstructing a speech based on each individual spectrogram.

Clause D26. The system of Clause D25, wherein the processor is further configured for obtaining physical characteristics of each individual spectrogram; and classifying, based on the physical characteristics of each individual spectrogram, each respective one of the multiple sources as a human or an inanimate source.

Clause D27. A wireless device of a sound sensing system, comprising: a processor; a memory communicatively coupled to the processor; and a receiver communicatively coupled to the processor, wherein: an additional wireless device of the sound sensing system is configured to transmit a first wireless signal through a wireless channel of a venue, the receiver is configured to receive a second wireless signal through the wireless channel, the second wireless signal comprises a reflection of the first wireless signal by at least one object in the venue, and the processor is configured for: obtaining a time series of channel information (CI) of the wireless channel based on the second wireless signal, determining a presence of a vibrating object in the venue based on the time series of CI (TSCI), extracting a sound signal from the TSCI, and reconstructing at least one speech based on the sound signal.

Clause D28. The wireless device of Clause D27, wherein obtaining the TSCI comprises: applying a fast Fourier transform on frequency modulated carrier wave (FMCW) waveforms carried by the second wireless signal with respect to a short-time index; and applying a short-time Fourier transform on the TSCI to construct a radar spectrogram, wherein the radar spectrogram is a function having: a frequency index representing Doppler frequency shift, a long-time index representing time frames, and a distance range index representing distance ranges from the receiver.

Clause D29. The wireless device of Clause D28, wherein determining the presence of the vibrating object comprises: determining a first magnitude of the radar spectrogram for positive frequencies; determining a second magnitude of the radar spectrogram for negative frequencies; calculating a sound metric based on a similarity between the first magnitude and the second magnitude, with respect to each time frame and each distance range from the receiver; calculating a time average of the sound metric for each distance range from the receiver; and subtracting the time average from the sound metric to generate sound metric values at each time frame and each distance range from the receiver.

Clause D30. A method of a sound sensing system, comprising: transmitting a first wireless signal through a wireless channel of a venue; receiving a second wireless signal through the wireless channel, wherein the second wireless signal comprises a reflection of the first wireless signal by at least one object in the venue; obtaining a time series of channel information (CI) of the wireless channel based on the second wireless signal; determining a presence of a vibrating object in the venue based on the time series of CI (TSCI); extracting a sound signal from the TSCI; and reconstructing at least one speech based on the sound signal.

The symbol "/" disclosed herein means "and/or". For example, "A/B" means "A and/or B." The present teaching is about a method, apparatus, device, system and/or software of a wireless monitoring system. In one embodiment, the system comprises a number of wireless devices placed in respective positions of a venue working together to monitor a motion of an object in the venue based on wireless signals.

Among the wireless devices, there are at least two types of devices: Type1 and Type2. Devices of the same type may be heterogeneous, with possibly different hardware configuration (including but not limited to processor, memory, circuits, layout, board, module, assembly, housing, manufacturing, clock rate, radio, antennas, bus, connectors, etc.), or software/firmware, or manufacturer/brand, etc). Some device may be both Type1 and Type2 (e.g. alternately or simultaneously or contemporaneously or asynchronously). In the network, a Type1 heterogeneous wireless devices is configured to transmit a wireless signal in a wireless multipath channel of the venue to a Type2 heterogeneous wireless device. The Type2 device is configured to receive the wireless signal and obtain a time series of channel information (CI) of the wireless multipath channel. The time series of CI (TSCI) may be extracted from the wireless signal. A characteristics (e.g. at least one series of characteristics) and/or a spatial-temporal information (STI, e.g. motion information or at least one series of STI) of either the object and/or of the motion of the object may be computed based on the TSCI. A task may be performed in cooperation with a server (e.g. cloud server, local server) based on an analysis and/or processing (e.g. storage, transmission, machine learning, artificial intelligence (AI), preprocessing, postprocessing) of the characteristics and/or STI. A presentation (e.g. text, visual, audio, audio-visual, animation) associated with the task may be generated on a user-interface (UI) of a user-device of a user of the system.

The system may have at least one operating mode. Each wireless device may have a corresponding operating mode. There may be one or more "Away" mode or an "Armed" mode in which no one is expected to be in the venue. The modes may be called "Away" mode or "Armed" mode, or "Guard" mode. The task may be a security task to monitor if there are any "intruder(s)" who may be an authorized/legitimate user or an actual intruder, and/or to detect any suspicious activities in the venue. If "intruder"/suspicious activity is detected, some response may be triggered, such as entering an "Identification Friend-or-Foe" (IFF) mode/ "Interrogation" mode/ "Alarm" mode (e.g. finite state machine or FSM), detecting/monitoring pet in venue, sounding a siren, controlling some connected device (e.g. in the venue), opening the door/ window/ garage door/ gate (e.g. to attract attention of neighbors), locking the door/ window/ garage door/ gate (to trap intruder), conducting a dialog with "intruder", capture video/ image/ sound of "intruder", giving warning message(s) to "intruder", turning on/off illumination/lighting, activating/coordinating with another alarm system, sending warning message(s) to user(s)/designated contact(s) using some communication system to the user device, notifying the user/guardian/designated contacts/police/first responder.

In particular, in a first mode (e.g. "Away" mode) with an assumption that the user is not present in the venue such that no object motion is expected, the task of the system may be to monitor any presence of "intruder" or suspicious activity (e.g. object motion) in the venue (e.g. door open, window open, intruder movement) based on the TSCI, the characteristics, the STI and/or the analysis. The system may filter out or ignore influence/effects of "forgettable" or "forgivable" or "non-target" activities (e.g. forgettable postman delivering mail outside a house, or non-target slight motion in the house due to air movement, wind, air-conditioning system or even fan movement). When "intruder" or suspicious activity is detected, the response may comprise entering a second mode (e.g. "IFF" mode).

In the second mode, "intruder" or suspicious activity may be assumed to have been detected and the system may conduct a dialog with the "intruder" using a smart speaker with microphone and challenge the "intruder" for a password or a pass code. If the "intruder" can give the password or pass code correctly within a time limit, the system may conclude that it is the user (or one of the authorized users), and may enter a third mode (e.g. "in-venue" mode) without any siren sounding or notification. If the "intruder" cannot give the password or pass code correctly within the time limit, the system may conclude that the "intruder" is a genuine intruder and may sound the siren and notify the user/ guardian/ designated contacts. If a primary contact does not respond within a certain time, a secondary contact may be contacted, and so on.

In the third mode (e.g. "in-venue" mode or "Home" mode), the user (or other authorized users) may be assumed to be in the venue and the task of the system may be to monitor the user's daily activity, motion, presence, location, movement, gait, gesture, toilet visits timing/frequency, hygiene timing/frequency, breathing, heart-beat, well-being, sleep, health, irregularity, signs of problem, dangerous motion, fall down, etc., based on the TSCI, the characteristics, the STI and/or the analysis. The response in the third mode may NOT have any siren sounding. Depending on what is being monitored, the response may or may not comprise any notification of user/designated contacts.

In the fourth mode, the system may sound the siren and notify the user/ guardian/ designated contacts. If a primary contact does not respond within a certain time, a secondary contact may be contacted, and so on.

In another mode (e.g. "Guard" mode) different from the first mode, the system may perform the same monitoring as the first mode but with a different response. For example, if "intruder" or suspicious activity is detected in the first mode, the response may comprise entering the fourth mode directly without going through the second mode.

In particular, the response for one mode (e.g. "Away" mode) may comprise both sounding the siren and notifying the user or designated contact or both. The response for another mode (e.g. "Guard" mode) may comprise notifying the user/designated contact but not sounding the siren.

Conducting dialog with "intruder" may comprise at least one of: request password/ pass code/ identification/ verification, interrogate/ question/ probe/ challenge, using real-time generated discourse/ dialog, synthesized speech, utterance/ speech recognition, text, and/or pre-recorded/ pre-planned media content, etc. Giving warning message(s) to "intruder" may comprise at least one of: using text on some display/screen, verbal warning using some speaker, and/or animation using some connected devices with UI, etc.

The connected device may comprise at least one of: motion sensor, cameras, displays, microphones, speakers, siren, instruments, lighting, illumination, light, lamp, TV, consumer electronics, IoT devices, smart devices, smart appliance, refrigerator, cooking devices, stove, smoke detector, bell, access control, alarm clock, moveable components, fan, air conditioner, door, window, blind, curtain, garage door, gate, and/or lawn watering system, etc. Designated contact(s) may comprise at least one of: primary contact, secondary contact, and/or backup contact. The communication system may comprise at least one of: network, internet, telephone, internet service provider, mobile service provider, broadcaster, cable provider, content streaming provider, conferencing system, SMS, EMS, MMS, email, instant messaging system, enterprise messaging system, personal messaging system, Facebook Messenger, Face Time, Line, etc.

There may be an "in-venue" or "Home" mode in which the user and/or other people (e.g. house mate, colleague, office mate, roommate, family, partner, friends, pets) are present in the venue. The task may be to monitor their activities.

The system may have a siren button or a panic button so that the user can trigger the siren in his home by holding down the button for a certain time, e.g. 5 seconds. An emergency message may be sent out after the operation of the siren button. The siren will go off for a default time (e.g. 3 minutes) unless the user clicks the Cancel button in the dashboard. Pressing the button enables emergency dispatch to the user's home address to protect the home and property. The siren button can be implemented through a dedicated hardware, e.g. a physical button located on the device so that the user can trigger the siren by pressing the button. It can also be implemented through an app with user interface (UI) on a mobile device so that the user can trigger the siren by clicking the button icon on the UI. There may be other activation methods on the UI, e.g., press and hold on the UI object, swipe the button, or another customized pattern. The system may enable the reception of the emergency message via a network, local area network, broadband network, internet, cloud network, wireless local area network, WiFi, Bluetooth, BLE, Zigbee, Z-Wave, text messaging system, instant messaging system, conferencing system, notification system, announcement system, bulletin board, email, SMS, MMS, Apple Facetime, Facebook Messenger, Google Hangout, Line, Instagram, Zoom, Google Hangout, WebEx, etc.

In some embodiments, the system may be switched from one mode to another mode, based on user input, motion detection, no-motion detection, and/or another condition. In one embodiment, the system is in a Home mode, and there is no motion detected in the venue for 10 minutes. Then, the system checks the existence for each of the registered and selected items (e.g. key fobs). If none of the registered and selected items is in presence and the system is still in Home mode, the system may perform at least one of the following based on a pre-setting by the user: sending a notification to the user including e.g. a message of "Looks like no one is at home, arm the house?", automatically transitioning the system into an Away mode, and/or doing nothing. For example, based on a user setting, if there is no motion detected in the venue for 10 minutes from 08:30 am to 05:00 pm during weekdays, the system may either sending a notification to the user for the user to confirm mode transition to Away mode, or directly transitioning the system into the Away mode without checking with the user.

In another embodiment, the system is in the Away mode already, and the system senses the change from a first state where none of the registered and selected items is in presence in the venue to a second state where any one of the registered and selected items becomes in proximity to or into the venue. Then the system may perform at least one of the following based on a pre-setting by the user: sending a notification to the user including e.g. a message of "Welcome home, disable the Away mode?", automatically transitioning the system into the Home mode, and/or doing nothing.

In another embodiment, when the system detects that one of the registered and selected items (e.g. key fob K) leaves or enters the venue (e.g. a home building), the system may present a notification to one or more designated users, e.g. presenting a message like "key fob K left home @ xx:xx," or "key fob K arrived back home @ yy:yy.

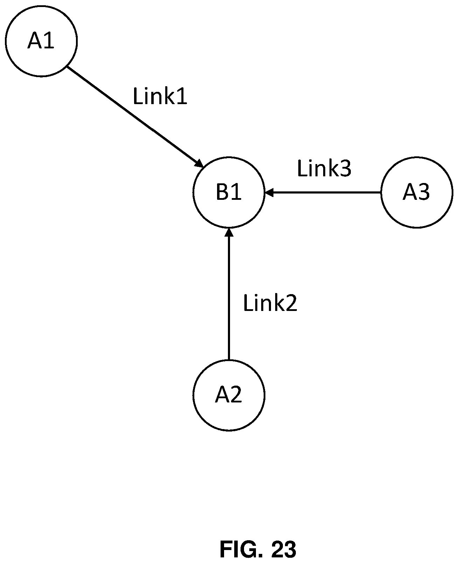

In one embodiment, the system may employ an architecture of a star topology as shown in FIG. 23. Multiple transmitters A1, A2, and A3 may transmit probe signals to a single receiver B1 which computes linkwise analytics.

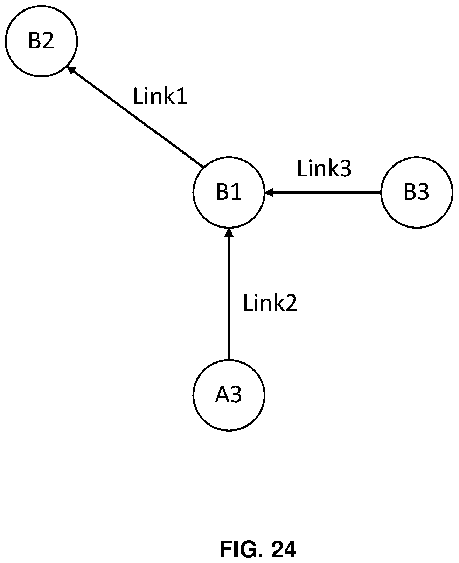

In one embodiment, the system may employ an architecture of a "daisy chain" as shown in FIG. 24. When a pairwise link Link1 comprises of two Type B devices (i.e. when both the first device and the second device are Type B devices), something special happened, as shown in FIG. 24. Let B1 be the first device (Tx, transmit probe signal) and B2 be the second device (Rx, obtain TSCI, compute linkwise analytics) in the current link. In addition to the current link, B1 may be in addition links (e.g. a Link2 connecting B1 to a Type A device called A3, a Link3 connecting B1 to another Type B device called B3). In Link2, A3 is Tx and transmits a probe signal, while B1 is Rx and computes linkwise analytics. This linkwise analytics will be transmitted from B1 to B2 in Link1. In Link3, B3 is Tx and transmits a probe signal, while B1 is Rx and computes linkwise analytics. This linkwise analytics will be transmitted from B1 to B2 in Link1. Furthermore, B3 may have obtained some linkwise analytics and may transmit/pass along to B1 in Link3. These linkwise analytics may be sent from B1 to B2 in Link1.

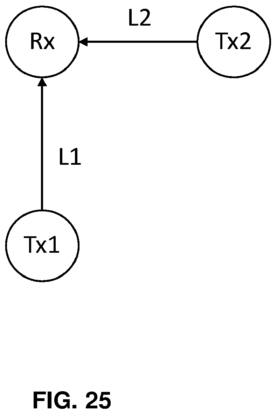

Another exemplary system having a mesh network topology is shown in FIG. 25. Two Type 1 devices (transmitter, or Tx, or Bot) are linked to one Type 2 device (receiver, or Rx, or Origin) via some radio interface links L1 and L2. The routing format may be like "TxID:ifname:hwaddr", where "TxId" is the identifier (that may be unique) of the device, "ifname" is the interface name, and "hwaddr" is the MAC address used for communication. Then, the routing table for the topology shown in FIG. 25 may be routing = {Tx1:L1:Tx1_mac, Tx2:L2:Tx2_mac}.

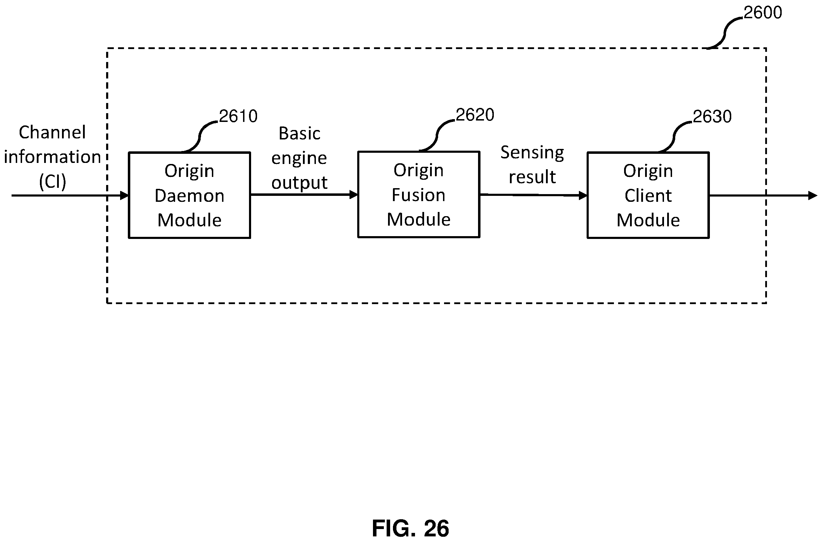

Additional functionalities may be associated with the Rx in order to pass the sensing outputs to the cloud. In this case, the Rx may be a "Master Origin" 2600 as shown in FIG. 26. For example, as in FIG. 26, the Master Origin (MO) 2600 may be composed of a daemon module 2610, a fusion module 2620, and a client module 2630. The daemon module 2610 may receive channel state information (CSI)/ channel information (CI) sent from other devices, e.g., Bots, for sensing. The MOs may comprise basic engines that support different applications, such as motion engine, breathing engine, etc., which may output motion statistics, breathing rates, etc. These outputs may also be called "radio analytics", because they are analytics calculated based on the CSI extracted from radio signals. These outputs are then fed into the fusion module 2620 for the different applications, such as home security, sleep monitoring, wellbeing monitoring, child presence detection, etc. Final results may be determined in the fusion module 2620, and fed into the client module 2630 to be sent to the cloud via Ethernet connection through a hub. Another cloud fusion module may be run in the cloud.

FIG. 25 shows an example of only one daemon module existing in the mesh network. In certain cases, more than one daemon module may be required to boost calculation capability. The reason for multiple origin daemons is to perform basic engine sensing on the links that do not have direct link to the master origin (MO). One needs to have Origin daemon module to receive the channel state information (CSI) from the local wireless LAN (WLAN) driver and calculate the basic engine output that consumes CSI. One may do the fusion of the basic engine results in the Origin fusion module in a MO.

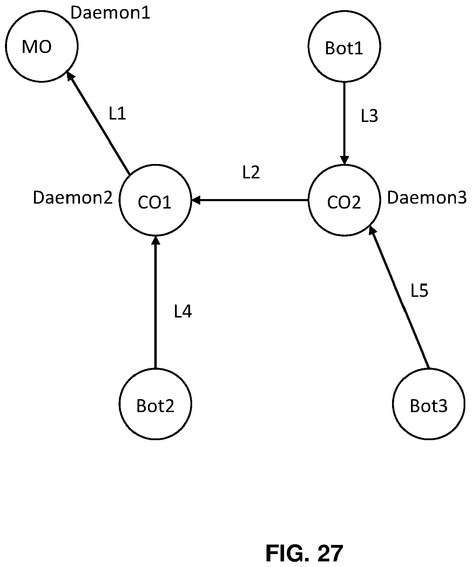

Another example with more than one daemon module is shown in FIG. 27. There is one Master Origin (MO), two Child Origins (CO), and three Bots. Different from the MO, the CO may not have the fusion and client modules, and may include only the daemon module. The MO connects every local device to cloud through a client module. Here, L1, L2, L3, L4, L5 are radio interface links connecting two devices. In some embodiments, the routing format may be like "TxID:origindaemon_IP:ifname:hwaddr", where "TxId" is the identifier (that is unique) of the transmitting device, "origindaemon_IP" is the local area network (LAN) IP address of the receiving node running the local origin daemon, "ifname" is the interface name of the radio link to the TxID device, and "hwaddr" is the MAC address used to identify the device in the wireless LAN (WLAN) driver. The routing table for this topology becomes {CO1:MO_IP:L1:CO1_mac, CO2:CO1_IP:L2:CO2_mac, B1:CO2_IP:L3:B1_mac, B2:CO1_IP:L4:B2_mac, B3:CO2_IP:L5:B3_mac}. The IP addresses may be used to open UDP socket connections between the MO and all daemon modules on the local LAN

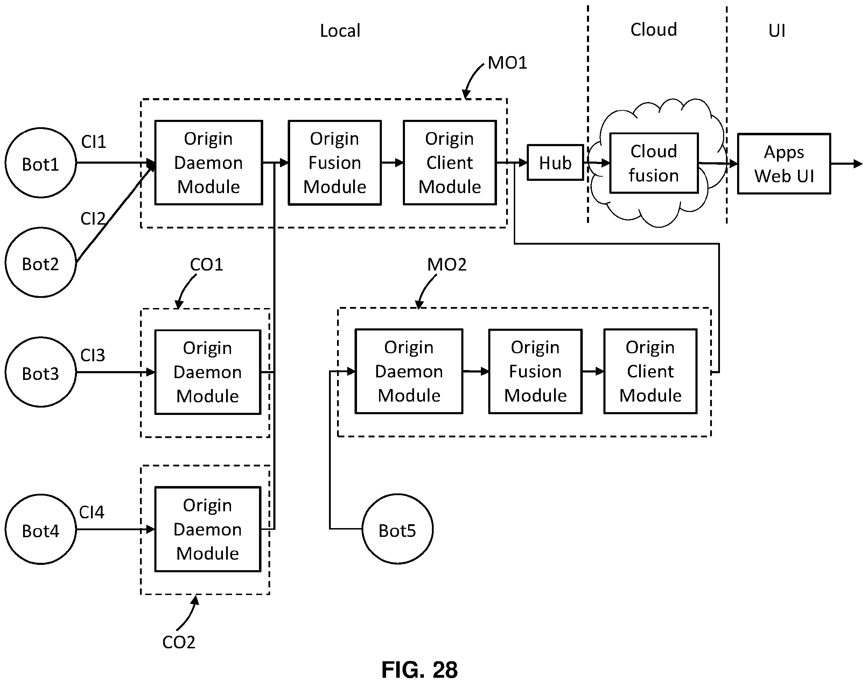

Another exemplary network topology is shown in FIG. 28, where there are two MOs {MO1, MO2}, two COs {CO1, CO2}, and five Bots B1-B5. Both MO1 and MO2 may send final results from the local devices to the cloud through a Hub. The output from the cloud may be sent to some user interface (UI) in user apps or web UI.

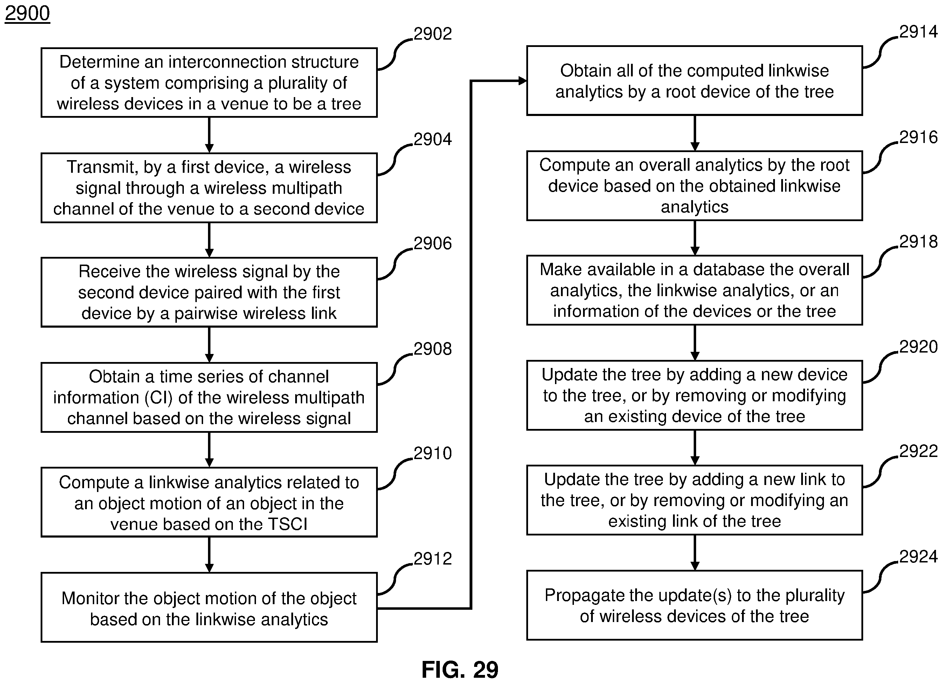

FIG. 29 illustrates a flow chart of an exemplary method 2900 for analyzing and improving network topology, according to some embodiments of the present teaching. At operation 2902, an interconnection structure of a wireless sensing system comprising a plurality of wireless devices in a venue is determined to be a tree. At operation 2904, a wireless signal is transmitted by a first device through a wireless multipath channel of the venue to a second device. At operation 2906, the wireless signal is received by the second device paired with the first device by a pairwise wireless link. At operation 2908, a time series of channel information (CI) of the wireless multipath channel is obtained based on the wireless signal. At operation 2910, a linkwise analytics related to an object motion of an object in the venue is computed based on the TSCI. At operation 2912, the object motion of the object is monitored based on the linkwise analytics.

At operation 2914, all of the computed linkwise analytics are obtained by a root device of the tree. At operation 2916, an overall analytics is computed by the root device based on the obtained linkwise analytics. At operation 2918, the overall analytics, the linkwise analytics, or an information of the devices or the tree is made available in a database. Optionally at operation 2920, the tree is updated by adding a new device to the tree, or by removing or modifying an existing device of the tree. Optionally at operation 2922, the tree is updated by adding a new link to the tree, or by removing or modifying an existing link of the tree. At operation 2924, the update(s) are propagated to the plurality of wireless devices of the tree. The order of the operations in FIG. 29 may be changed in various embodiments of the present teaching.

The hardware devices may be added/enabled in the architecture. The hardware devices may be removed/disabled from the architecture. In particular, the topology/architecture is modified based on at least one of: modifying the at least one pairwise wireless link without adding any new wireless device or removing any existing wireless device, rearranging the at least one pairwise wireless link among a set of the plurality of wireless devices while keeping compositions of the set unchanged, adding a new wireless device, wherein the new wireless device is at least one of: a Type A device, a Type B device, a leaf node, a non-leaf node, or a root node, removing an existing wireless device, wherein the existing wireless device is at least one of: a Type A device, a Type B device, a leaf node, a non-leaf node, or a root node, replacing the root device with another device of the plurality of wireless devices, changing the at least one pairwise wireless link, adding a new pairwise wireless link, removing an existing pairwise wireless link, removing an existing pairwise wireless link of the tree without removing any wireless device of the tree, removing an existing pairwise wireless link of the tree by removing a wireless device of the tree, adding a new pairwise wireless link of the tree without adding any new wireless device to the tree, or adding a new pairwise wireless link of the tree by adding a new wireless device to the tree; and updating the information of the plurality of wireless devices and the tree in the database.

The management of the system architecture may be done at various levels, e.g., individual device level, group level, and overall system level. At the device level, each individual device can control its operation and make decisions. At group level management, multiple devices, e.g., in close vicinity or on the same floor, can form a group, and coordinate their decisions. At system level, all the devices in the system coordinate their decisions.

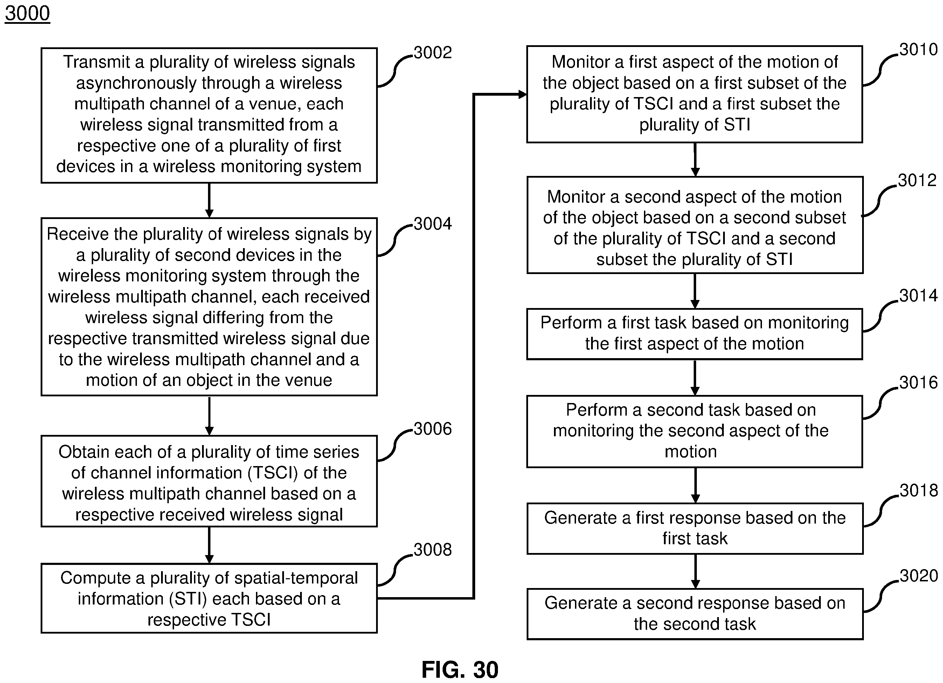

FIG. 30 illustrates a flow chart of an exemplary method 3000 for wireless motion monitoring, according to some embodiments of the present disclosure. At operation 3002, a plurality of wireless signals are transmitted asynchronously through a wireless multipath channel of a venue, where each wireless signal is transmitted from a respective one of a plurality of first devices in a wireless monitoring system. At operation 3004, the plurality of wireless signals are received by a plurality of second devices in the wireless monitoring system through the wireless multipath channel, where each received wireless signal differs from the respective transmitted wireless signal due to the wireless multipath channel and a motion of an object in the venue. At operation 3006, each of a plurality of time series of channel information (TSCI) of the wireless multipath channel is obtained based on a respective received wireless signal. At operation 3008, each of a plurality of spatial-temporal information (STI) is computed based on a respective TSCI. At operation 3010, a first aspect of the motion of the object is monitored based on a first subset of the plurality of TSCI and a first subset the plurality of STI. At operation 3012, a second aspect of the motion of the object is monitored based on a second subset of the plurality of TSCI and a second subset the plurality of STI. At operation 3014, a first task is performed based on monitoring the first aspect of the motion. At operation 3016, a second task is performed based on monitoring the second aspect of the motion. At operation 3018, a first response is generated based on the first task. At operation 3020, a second response is generated based on the second task. The order of the operations in FIG. 30 may be changed according to various embodiments of the present teaching.

The following numbered clauses provide implementation examples for wirelessly monitoring object motion.

Clause E1. A method/system/software/device of a wireless monitoring system, comprising: transmitting a wireless signal from a Type1 heterogeneous wireless device through a wireless multipath channel of a venue, wherein the wireless multipath channel is impacted by a motion of an object in the venue, receiving the wireless signal by a Type2 heterogeneous wireless device through the wireless multipath channel based on a processor, a memory and a set of instructions, wherein the received wireless signal differs from the transmitted wireless signal due to the wireless multipath channel of the venue and the object motion; obtaining a time series of channel information (TSCI) of the wireless multipath channel based on the received wireless signal using a processor, a memory communicatively coupled with the processor and a set of instructions stored in the memory; computing a spatial-temporal information (STI) based on the TSCI; monitoring the object motion based on the TSCI and the STI; performing a task based on the monitoring; and generating a response based on the task.

Clause E2. The method/system/software/device of the wireless monitoring system of Clause E1, further comprising: wherein there are a plurality of Type1 heterogeneous wireless devices; transmitting a plurality of wireless signals asynchronously through the wireless multipath channel of the venue, each wireless signal from a respective Type1 heterogeneous wireless device, receiving the plurality of wireless signals by the Type2 device through the wireless multipath channel, wherein each received wireless signal differs from the respective transmitted wireless signal due to the wireless multipath channel of the venue and the object motion; obtaining a plurality of TSCI of the wireless multipath channel each based on a respective received wireless signal; computing a plurality of STI each based on a respective TSCI; and performing at least one of: monitoring the object motion in the venue individually (individual monitoring) based on at least one of: a TSCI and the associated STI, performing the task based on individual monitoring applied to at least one TSCI, monitoring the object motion jointly (joint monitoring) based on at least one of: a subset of the plurality of TSCI comprising more than one TSCI, the STI associated with the subset of TSCI, a first joint STI computed based on the subset of TSCI, or a second joint STI computed based on at least two of any STI, performing the task based on joint monitoring applied to at least one subset of the TSCI each comprising more than one TSCI, monitoring the object motion based on a combination of individual monitoring and joint monitoring, performing the task based on a combination of individual monitoring and joint monitoring, sharing at least one of: a TSCI, a processed TSCI, a part of a TSCI, a feature of a TSCI, a STI, a joint STI, or an analytics computed based on any of these, monitoring a first aspect of the object motion based on a first subset of the TSCI and a second aspect of the object motion based on a second subset of the TSCI, performing a first subtask of the task based on monitoring the first aspect of the object motion and a second subtask of the task based on monitoring the second aspect of the object motion, or performing a first task based on monitoring the first aspect of the object motion and a second task based on monitoring the second aspect of the object motion.

Clause E3. The method/system/software/device of the wireless monitoring system of Clause E1 or Clause E2, further comprising: wherein there are a plurality of Type2 heterogeneous wireless devices; receiving the wireless signal by each Type2 device through the wireless multipath channel, wherein each received wireless signal differs from the respective transmitted wireless signal due to the wireless multipath channel of the venue and the object motion; obtaining a plurality of TSCI of the wireless multipath channel each by a respective Type2 device based on the respective received wireless signal; computing a plurality of STI each based on a respective TSCI; and perform at least one of: monitoring the object motion in the venue individually (individual monitoring) based on at least one of: a TSCI and the associated STI, performing the task based on individual monitoring applied to at least one TSCI, monitoring the object motion jointly (joint monitoring) based on at least one of: a subset of TSCI comprising more than one TSCI, the STI associated with the subset of TSCI, a first joint STI computed based on the subset of TSCI, or a second joint STI computed based on at least two of any STI, performing the task based on joint monitoring applied to at least one subset of the TSCI each comprising more than one TSCI, monitoring the object motion based on a combination of individual monitoring and joint monitoring, performing the task based on a combination of individual monitoring and joint monitoring, sharing at least one of: a TSCI, a processed TSCI, a part of a TSCI, a feature of a TSCI, a STI, a joint STI, or an analytics computed based on any of these, monitoring a first aspect of the object motion based on a first subset of the TSCI and a second aspect of the object motion based on a second subset of the TSCI, performing a first subtask of the task based on monitoring the first aspect of the object motion and a second subtask of the task based on monitoring the second aspect of the object motion.

Clause E4. The method/system/software/device of the wireless monitoring system according to any of Clauses E1-E3, further comprising: wherein there are a plurality of heterogeneous wireless devices each being: Type1, Type2, or both; transmitting a plurality of wireless signals asynchronously through the wireless multipath channel of the venue, each wireless signal from a respective Type1 device, receiving the plurality of wireless signals by the Type2 devices through the wireless multipath channel, wherein each received wireless signal by a Type2 device differs from the respective transmitted wireless signal due to the wireless multipath channel of the venue and the object motion; obtaining a plurality of TSCI of the wireless multipath channel each based on a respective received wireless signal; computing a plurality of STI each based on a respective TSCI; and perform at least one of: monitoring the object motion in the venue individually (individual monitoring) based on at least one of: a TSCI and the associated STI, performing the task based on individual monitoring applied to at least one TSCI, monitoring the object motion jointly (joint monitoring) based on at least one of: a subset of TSCI comprising more than one TSCI, the STI associated with the subset of TSCI, a first joint STI computed based on the subset of TSCI, or a second joint STI computed based on at least two of any STI, performing the task based on joint monitoring applied to at least one subset of the TSCI each comprising more than one TSCI, monitoring the object motion based on a combination of individual monitoring and joint monitoring, performing the task based on a combination of individual monitoring and joint monitoring, sharing at least one of: a TSCI, a processed TSCI, a part of a TSCI, a feature of a TSCI, a STI, a joint STI, or an analytics computed based on any of these, monitoring a first aspect of the object motion based on a first subset of the TSCI and a second aspect of the object motion based on a second subset of the TSCI, performing a first subtask of the task based on monitoring the first aspect of the object motion and a second subtask of the task based on monitoring the second aspect of the object motion.

Clause E5. The method/system/software/device of the wireless monitoring system of Clause E1 or 2 or 3 or 4, further comprising: wherein each TSCI is associated with a respective Type1 device and a respective Type2 device; associating the respective Type1 device with the respective Type2 device based on at least one of: an instruction of a user, a command from a user device of the user, a user directive from a software of the user device, a QR code on any one of the heterogeneous wireless devices, an identification of each device, a code associated with each device, attributes of the devices comprising at least one of: their types, hardware configuration, processor, memory, computing power, antennas, housing, enclosure, power supply, software configuration, capabilities, supported tasks, supported subtasks, supported sounding, supported signaling, supported wireless signals, supported communication protocols, power rating, or location, installation locations relative to a map of the venue, a mesh network associated with the user, a mesh network comprising the heterogeneous wireless devices, a mesh network constructed by at least one of: the user, a server, a software or an optimization procedure, a mesh network associated with at least one of: a tree structure, a linked list, an arrow tree structure, an ordered link list, a tree structure in which each node is associated with a respective heterogeneous wireless device, a tree structure in which each branch is associated with a respective TSCI, an arrow tree structure in which each directed branch (arrow) is associated with a respective TSCI, a tree structure with all outer nodes (leaf nodes) being associated with Type1 devices, a tree structure with all outer nodes being associated with Type2 devices, a tree structure with at least one inner node (branch node) being associated a device that is both Type1 and Type2, a tree structure with at least one internal branch associated with two devices each of which is both Type1 and Type2, or a linked list with each link being associated with a respective TSCI, etc.

Clause E6. The method/system/software/device of the wireless monitoring system of Clause E1 or 2 or 3 or 4, further comprises: wherein there are at least one supported operating modes associated with the task; choosing an operating mode of the task to a current mode, wherein the current mode is one of the supported operating modes; monitoring at least one aspect of the object based on the TSCI based on the current operating mode; generating the response based on the current operating mode of the task.

Clause E7. The method/system/software/device of the wireless monitoring system of Clause E6, further comprises: changing the operating mode of the task from the current mode to a next mode which is another one of the supported operating modes based on at least one of: a choice of a user of the system, a preference of the user, an input on a user device by the user, a selection on a user-interface (UI) by the user, a button press on the UI by the user, a verbal selection by the user, a finite state machine (FSM) comprising at least one state each associated with a respective supported operating mode, a finite state machine (FSM) comprising a state associated with a sequence of supported operating modes, the at least one aspect of the object being monitored in the current mode, a time table associated with at least one of: the task, the user, the object, or the venue, a presence or absence of the user in the venue, a communication with another system, a power-on, a power interruption, a system reset, or a power saving need of the system.

Clause E8. The method/system/software/device of the wireless monitoring system according to any of Clauses E6-E7, further comprises: in an operating mode for monitoring the venue when a user of the system is not present in the venue: performing at least one of the following configuration for the object motion monitoring for the operating mode, with the object being an intruder: configuring a sensitivity setting of the object motion monitoring, enabling or disabling at least one of: the Type1 device or at least one other Type1 device, configuring time table for the operating mode with respective configurations associated with respective time periods of the time table, configuring parameters, thresholds and timings for the operating mode, configuring a method and mode of notification for the user, or configuring the object motion monitoring to monitor an aspect of the object mode associated with the operating mode; monitoring the TSCI and the STI for patterns pointing to a presence of the intruder; configuring the response to comprise at least one of: sending a notification to a designated user, generating an alarm, generating an alarm animation, playing a warning message, conducting a dialog with the intruder, requesting the intruder to produce an identification of the authorized user, sounding a siren of the system, or securing the venue.

Clause E9. The method/system/software/device of the wireless monitoring system according to any of Clauses E6-E8, further comprises: in an operating mode for monitoring the venue when a user is present in the venue: performing at least one of the following configuration for the object motion monitoring for the operating mode, with the object being the user: configuring a sensitivity setting of the object motion monitoring, enabling or disabling at least one of: the Type1 device or at least one other Type1 device, configuring time table for the operating mode with respective configurations associated with respective time periods of the time table, configuring parameters, thresholds and timings for the operating mode, configuring a method and mode of notification for the user, or configuring the object motion monitoring to monitor an aspect of the object mode associated with the operating mode; monitoring activities of the user in the venue based on the TSCI and the STI; configuring the response to comprise at least one of: locating the user, monitoring movement of the user, monitoring at least one of: a daily routine, a habit or a behavior, of the user, monitoring any deviation from at least one of: the daily routine, the habit or the behavior, of the user, detecting an additional user.

Clause E10. The method/system/software/device of the wireless monitoring system according to any of Clauses E6-E9, further comprises: in an operating mode for monitoring the venue when a user of the system is not present in the venue and the user does not want siren: performing at least one of the following configuration for the object motion monitoring for the operating mode, with the object being an intruder: configuring a sensitivity setting of the object motion monitoring, enabling or disabling at least one of: the Type1 device or at least one other Type1 device, configuring time table for the operating mode with respective configurations associated with respective time periods of the time table, configuring parameters, thresholds and timings for the operating mode, configuring a method and mode of notification for the user, or configuring the object motion monitoring to monitor an aspect of the object mode associated with the operating mode; monitoring the TSCI and the STI for patterns pointing to a presence of the intruder, wherein the response to comprise at least one of: sending a notification to a designated user, generating an alarm, generating an alarm animation, playing a warning message, conducting a dialog with the intruder, requesting the intruder to produce an identification of the authorized user, sounding a siren of the system, or securing the venue; configuring the response to exclude at least one of: generating an alarm, generating an alarm animation, playing a warning message, conducting a dialog with the intruder, requesting the intruder to produce an identification of the authorized user, sounding a siren of the system, or securing the venue.

Clause E11. The method/system/software/device of the wireless monitoring system according to any of Clauses E6-E10, further comprises: in an operating mode for monitoring the venue when a user of the system is not present in the venue and the user wants to be notified of any detected object motion: performing at least one of the following configuration for the object motion monitoring for the operating mode, with the object being an intruder: configuring a sensitivity setting of the object motion monitoring, enabling or disabling at least one of: the Type1 device or at least one other Type1 device, configuring a time table associated with the operating mode with respective configurations associated with respective time periods of the time table, configuring parameters, thresholds and timings for the operating mode, configuring a method and mode of notification for the user, or configuring the object motion monitoring to monitor an aspect of the object mode associated with the operating mode; monitoring the TSCI and the STI for patterns pointing to a presence of the intruder; configuring the response to comprise at least one of: sending a notification to the user, taking further action upon a confirmation of the user, switching to another operating mode.

Clause E12. The method/system/software/device of the wireless monitoring system according to any of Clauses E6-E11, further comprises: in an operating mode for monitoring the venue, pausing or stopping at least one of: the transmitting of the wireless signal from the Type1 device, the receiving of the wireless signal by the Type2 device, the obtaining of the TSCI based on the received wireless signal, the computing of the STI based on the TSCI, the monitoring of the object motion based on the TSCI and the STI, the performing of the task, or the generating of the response based on the task.

Clause E13. The method/system/software/device of the wireless monitoring system according to any of Clauses E6-E12, further comprises: in an operating mode for monitoring the venue when object motion is detected in the venue and the object is unidentified: configuring the response to comprise at least one of: sending a notification to a designated user, generating an alarm, generating an alarm animation, playing a warning message, conducting a dialog with the intruder, requesting the intruder to produce an identification of the authorized user, securing the venue, or switching to another operating mode; monitoring the object motion in reaction to the response.

Clause E14. The method/system/software/device of the wireless monitoring system of Clause E1 or 2 or 3 or 4, further comprises: receiving an emergency message; performing at least one of the following emergency actions based on the emergency message: initiating an evacuation, actuating emergency warning system, mobilizing emergency response system, turning on emergency lighting, triggering emergency broadcasting system, setting off emergency messaging system, activating priority notification system, sounding a siren, sounding an audio alarm, displaying a visual alarm, animating an animated alarm, generating notification or personalized alarm to at least one of: the user, one or more designated contact person, requesting emergency service, or requesting dispatch of at least one first responder (e.g. police, fireman, ambulance, paramedic) to at least one of: the venue, a designated location, a home address of the user, or a current location of the user.

Clause E15. The method/system/software/device of the wireless monitoring system of Clause E14, further comprises: receiving an emergency-cancellation message within a time window after emergency message is received; terminating an emergency action based on the emergency-cancellation message.

Clause E16. The method/system/software/device of the wireless monitoring system of Clause E14, further comprises: generating the emergency message based on at least one of: pressing a dedicated hardware button, pressing a dedicated hardware siren button, pressing a dedicated hardware panic button, an input device comprising at least one of: a user device of a user of the system or a dedicated hardware, a user interface (UI) of the input device, a pressing and holding down of a UI-object on the input device for a period of time, an extended depression of a button on the input device, a swipe on the input device, a customized pattern drawn on the input device by the user, a gesture of the user near the input device, a confirmed pressing of a button on the input device, a confirmed selection of an object in a user software on the input device.

Clause E17. The method/system/software/device of the wireless monitoring system according to any of Clauses E14-E16, further comprises: receiving the emergency message via at least one of: a network, local area network, broadband network, internet, cloud network, wireless local area network, WiFi, Bluetooth, BLE, Zigbee, Z-Wave, mobile communication network, 2G, 3G, 4G, LTE, 5G, 6G, 7G, 8G, text messaging system, instant messaging system, conferencing system, notification system, announcement system, bulletin board, email, SMS, MMS, Apple Facetime, Facebook Messenger, Google Hangout, Line, Instagram, Zoom, Google Hangout, WebEx, etc.

Clause E18. The method/system/software/device of the wireless monitoring system of Clause E1 or 2 or 3 or 4, further comprises: receiving an emergency message; performing at least one of the following emergency actions based on the emergency message.

Clause E19. The method/system/software/device of the wireless monitoring system of Clause E1 or 2 or 3 or 4: wherein at least one of the Type1 device or the Type2 device is a single-purpose device with the sole purpose being to perform its role in the wireless monitoring system.

Clause E20. The method/system/software/device of the wireless monitoring system of Clause E19, further comprising: changing its role in the wireless monitoring system based on at least one of: a software update, firmware update, software upgrade, or over-the-air software upgrade.

Clause E21. The method/system/software/device of the wireless monitoring system of Clause E20, further comprising: wherein the device is configured for a first functionality in its role in the wireless monitoring system initially; changing its role in the wireless monitoring system by at least one of: introducing additional devices to the system and configuring the device to interact with the additional devices in the wireless monitoring system, changing the first functionality, adjusting the first functionality, replacing the first functionality by a second functionality, or adding the second functionality.

Clause E22. The method/system/software/device of the wireless monitoring system according to any of Clauses E1-E21: wherein at least one of the Type1 device or the Type2 device is a multi-purpose device with a first purpose being to perform its role in the wireless monitoring system and a second purpose unrelated to the wireless monitoring.

Clause E23. The method/system/software/device of the wireless monitoring system of Clause E22: wherein the second purpose is the primary purpose of the device.

Clause E24. The method/system/software/device of the wireless monitoring system of Clause E22 or Clause E23, further comprising: wherein the device is initially configured for the second purpose without the first purpose; upgrading the configuration of the device to add the second purpose.

Clause E25. The method/system/software/device of the wireless monitoring system according to any of Clauses E22-E24: wherein between the Type1 device and the Type2 device, one device is a single-purpose device and the other device is a multi-purpose device.

Clause E26. The method/system/software/device of the wireless monitoring system according to any of Clause E1-E25: wherein at least one of the Type1 device or the Type2 device is attached to an accessory based on at least one of: a locking mechanism, bayonet coupling, screw coupling, push-pull coupling, breakaway coupling, push-and-press-to-release coupling, coupling locked by screw, push-push locked coupling, magnetic coupling, electro-magnet, magnet, attachable mechanism, detachable mechanism, linking mechanism, binding mechanism, coupling, connector, network connector, Ethernet connector, bus connector, USB connector, Firewire connector, Lightning connector, mechanical holder, suction feature, suction cup, peg, clip, staple, ring, pin, hook, loop, snap-lock hook, snap-on hook, bracket, hanger, mount, chain, track-and-trolley, screw, nut-and-screw, nut-and-bolt, velcro, hook-and-loop, adhesive, pressure sensitive adhesive (PSA), self-adhesive tape, adhesive tape, double-side adhesive tape, sticky tape, fastener, dual-lock fastener, self-mating fastener, reclosable fastener, resting on top by at least one of: gravity, weight, and friction, and another attachment mechanism.

Clause E27. The method/system/software/device of the wireless monitoring system of Clause E26: wherein the accessory has no power source.

Clause E28. The method/system/software/device of the wireless monitoring system of Clause E26: wherein the accessory comprises at least one power source.

Clause E29. The method/system/software/device of the wireless monitoring system of Clause E28: wherein the at least one Type1 or Type2 is powered by obtaining power from the accessory.

Clause E30. The method/system/software/device of the wireless monitoring system according to any of Clauses E1-E29: wherein at last one of the Type1 device or the Type2 device is communicatively coupled with at least one of: a wired network or a wireless network.

Clause E31. The method/system/software/device of the wireless monitoring system according to any of Clause E1-E30: wherein at least one of the Type1 device or the Type2 has a power source comprising at least one of: AC power source, DC power source, power from another device, use-once power source, reusable power source, rechargeable power source, battery, rechargeable battery, non-rechargeable battery, replaceable battery, irreplaceable battery, use-once battery, disposable battery, solar power source, solar panel, chemical power source, electro-chemical energy source, thermal energy storage, electro-thermal energy source, magnetic energy storage, electro-magnetic energy source, mechanical energy source, electro-mechanical energy source, gravitational energy source, hydraulic energy source, pneumatic energy, capacitor, inductor, flywheel, generator, compressed air, energy storage, and another power source.

Clause E32. The method/system/software/device of the wireless monitoring system according to any of Clauses E1-E31: setting up the Type1 device and the Type2 device, where at least one of: the Type2 device is set up before the Type1 device, the Type1 device is set up before the Type2 device, or the Type1 device and Type2 device are set up together.

Clause E33. The method/system/software/device of the wireless monitoring system of Clause E32: setting up the Type2 device by performing at least one of: (to get the Type2 device to access local network) scanning a QR code associated with the Type2 device, scanning a QR code printed on a surface of the Type2 device, configuring the Type2 device to function as an access point (AP) to establish a first network with a first network identification (ID), associating with the Type2 device in the first network, handshaking with the Type2 device in the first network, performing probe request-and-response handshake with the Type2 device in the first network, performing authentication request-and-response handshake with the Type2 device in the first network, performing association request-and-response handshake with the Type2 device in the first network, accessing a particular network address and a particular network port, accessing a webpage at a particular web address in the first network, directing the Type2 device to connect to a second network with a second network ID in the venue as a client using a particular access procedure and a particular access code, rebooting the Type2 device, (to get the Type2 device to access cloud server using the local network) configuring the Type2 device to gain access to internet through the second network, configuring the Type2 device to access a cloud server through at least one of: the second network or the internet, registering at least one of: the Type2 device, its hardware, its software configuration, its capabilities or its limitations in a database of the wireless monitoring system, associating the Type2 device with the task, associating the Type2 device with the monitoring of the object motion in the venue, associating the Type2 device with at least one of: a user, a user account, the venue, an address of the venue, an address of the user, a location of the user, a location of the Type2 device in the venue, a map of the venue, a name of the Type2 device, or an identification (ID) of the Type2 device, propagating an information of the Type2 device to the rest of the wireless monitoring system, (to get the Type2 device to function as Type2 device to receive/obtain/analyze wireless signals or TSCI from wireless signals and monitor object motion based on TSCI extracted from wireless signals, and to possibly cooperate/coordinate with other devices/Type2 devices) configuring the Type2 device to receive the wireless signals from at least one Type1 device in a network, wherein the wireless signals are subjected to at least one requirement or specification associated with the monitoring and/or the task, configuring the Type2 device to extract TSCI from the wireless signals from any Type1 device in a network, configuring the Type2 device based on at least one of: a security protocol, a software update protocol, a firmware update protocol, a hardware/software configuration of the Type2 device (e.g. an integrated circuit (IC) of the Type2 device, processor, memory, clock frequency, hardware/software/firmware version, capability of hardware/firmware/ software, etc.), an accessory of the Type2 device, a realization of the Type2 device, a housing of the Type2 device, a power source of the Type2 device, an antenna of the Type2 device, an installation of the Type2 device, a placement of the Type2 device, a planning of network traffic, a network requirement, and/or a user preference, configuring the Type2 device to function as at least one of: an access point (AP), a station (STA), a client, or a peer, in a third network with a third network ID in which the Type1 device transmits the wireless signal to the Type2 device in the wireless multipath channel of the venue, directing the Type2 device to cooperate or coordinate with at least one of: at least one other Type2 device of the wireless monitoring system, at least one other Type2 device of another wireless monitoring system, another monitoring system, and/or another system, directing the Type2 device to coordinate with at least one other Type2 device regarding the transmission of wireless signals received by the Type2 devices, coordinate at least one of: timing, frequency, phase, synchronization, timing offset, delay, frequency bands, frequency hopping, signaling, transmission settings, transmitting antennas, receiving antennas, signal choices, signal strength, protocols, sounding mechanism, sounding frequency, and/or sounding timing, associated with the wireless signals received by the Type2 device and the at least one other Type2 device, organizing the Type2 device and at least one other Type2 device into at least one of: a daisy chain, a mesh network, or a network of networks, computing a best way to organize the Type2 device and the at least one other Type2 device, registering at least one of: the organization or the coordination of the Type2 device and the at least one Type2 device in the database of the wireless monitoring system, propagating an information of the organization or the coordination to the rest of the wireless monitoring system, (to get the Type2 device to discover and pair with the Type1 device or other Type1 devices) directing the Type2 device to discover and pair with any Type1 devices in the third network, directing the Type2 device to be discoverable in the third network, pairing the Type2 device with another device in order for the another device to transmit some wireless signal to the Type2 device for wireless monitoring purpose, registering the pairing in the database of the wireless monitoring system, registering at least one of: the paired Type1 device, its hardware configuration, its software configuration, its capabilities and/or its limitations in the database of the wireless monitoring system, propagating an information of the pairing to the rest of the wireless monitoring system, configuring the Type2 device to pair or authenticate or associate with at least one of: the Type1 device, at least one other Type1 device, and/or another Type2 device, cooperating or coordinating with the paired device(s) so that wireless signal(s) subjected to a requirement or a specification are transmitted to the Type2 device for wireless monitoring purpose, providing feedback and/or instructions to the paired devices, transmitting at least one of: an identification, a status, a data, a probe, a request, a response, an acknowledge, a notification, a handshake to a paired device, obtaining at least one of: an identification, a status, a data, a probe, a request, a response, an acknowledge, a notification, a handshake from a paired device, computing a best way to organize all the Type1 device(s) and all the Type2 device(s), wherein the organization comprises the pairwise pairings between one of the Type1 devices and one of the Type2 devices, and the settings associated with wireless signal transmitted from any Type1 device to any Type2 device, registering the organization in the database of the wireless monitoring system, propagating an information of the organization to the rest of the wireless monitoring system, sharing information with other device(s) and/or other system(s), sharing information with at least one of: a Type1 device, sharing information with the paired device, and/or another configuration of the Type2 device.

Clause E34. The method/system/software/device of the wireless monitoring system of Clause E32 or Clause E31: setting up the Type1 device by performing at least one of: directing the Type2 device to discover and pair the Type1 device, directing the Type2 device to be discoverable, directing the Type1 device to discover and pair with the Type2 device, directing the Type1 device to discover and pair with the Type2 device in a third network associated with the Type2 device, directing the Type1 device to discover and pair with another Type2 devices, directing the Type1 device to discover and pair with another Type2 device in another network associated with another Type2 device, directing the Type1 device to be discoverable, directing the Type1 device to be discoverable in a third network associated with the Type2 device, pairing the Type1 device with at least one of: the Type2 device or another Type2 device to transmit respective wireless signal to the respective Type2 device for wireless monitoring purpose, cooperating or coordinating or negotiating or handshaking with the Type2 device in the transmission of the wireless signal from the Type1 device to the Type2 device, cooperating or coordinating or negotiating or handshaking with a paired Type2 device(s) or an unpaired Type2 device(s) in the transmission of any wireless signals from any Type1 device(s) to the Type2 device(s), cooperating or coordinating or negotiating or handshaking with at least one other Type1 device in the transmission of wireless signals by any Type1 devices to a paired Type2 device, or an unpaired Type2 device, cooperating or coordinating or negotiating or handshaking regarding at least one of: timing, frequency, phase, synchronization, timing offset, delay, frequency bands, frequency hopping, signaling, transmission settings, transmitting antennas, receiving antennas, signal choices, signal strength, protocols, sounding mechanism, sounding frequency, and/or sounding timing, associated with the wireless signals received by the paired Type2 device or the another Type2 device, or another configuration of the Type1 device.

Clause E35. The method/system/software/device of the wireless monitoring system according to any of Clauses E32-E34: labeling at least one of: the Type1 device, a location associated with the Type1 device, a region associated with the Type1 device, the Type2 device, a location associated with the Type2 device, a region associated with the Type2 device, the pair of the Type1 device and the Type2 device, a location associated with the pair, or a region associated with the pair.

Clause E36. The method/system/software/device of the wireless monitoring system of Clause E35: generating the label during a set-up stage based on an input of the user.

Clause E37. The method/system/software/device of the wireless monitoring system of Clause E35: generating the label after a set-up stage based on at least one of: the TSCI, the STI, the task, the response, at least one analytics computed based on at least one of: the TSCI or the STI, at least one location analytics, motion analytics, statistics, and/or motion statistics computed based on the TSCI and the STI, a history of the at least one analytics, or an analysis of at least one of: the TSCI, the STI, the at least one analytics over time, or the history of analytics.

Clause E38. The method/system/software/device of the wireless monitoring system according to any of Clauses E35-E37: wherein one of the Type1 device and the Type2 device is a multi-purpose device with a second purpose unrelated to the wireless monitoring; wherein an auxiliary data is generated by the device for the second purpose; generating the label after a set-up stage based on the auxiliary data.

Clause E39. The method/system/software/device of the wireless monitoring system according to any of Clauses E1-E38: wherein the venue comprises at least one of: a floor of a multi-floor structure, more than one floors of the multi-floor structure, an interior space of a structure, or an immediate neighboring exterior space of the structure.

Clause E40. The method/system/software/device of the wireless monitoring system according to any of Clauses E2-E39: wherein the Type2 device and the plurality of Type1 device form a star configuration.

Clause E41. The method/system/software/device of the wireless monitoring system according to any of Clauses E3-E40: wherein the Type1 device and the plurality of Type2 device form a star configuration.

Clause E42. The method/system/software/device of the wireless monitoring system according to any of Clauses E4-E41: wherein each Type2 device is paired with at least one associated Type1 device each transmitting a respective wireless signal to the Type2 device, the Type2 device and the at least one associated Type1 device forming a star topology.

Clause E43. The method/system/software/device of the wireless monitoring system of Clause E42: wherein a particular Type2 device is further paired with at least one associated Type2 device that is both Type1 and Type2, each associated Type2 device transmitting a respective wireless signal to the Type2 device; wherein the particular Type2 device together with the at least one associated Type1 device and the at least one associated Type2 device form a star topology.

Clause E44. The method/system/software/device of the wireless monitoring system according to any of Clauses E4-E43: wherein a first Type2 device is further paired with a second Type2 device which is both Type1 and Type2, the second Type2 device transmitting a respective wireless signal to the first Type2 device; wherein the second Type2 device is further paired with a third Type2 device which is both Type1 and Type2, the third Type2 device transmitting a respective wireless signal to the second Type2 device; wherein the first, second and third Type2 devices form a daisy chain.

Clause E45. The method/system/software/device of the wireless monitoring system of Clause E1 or 2 or 3 or 4, further comprising: adding another Type1 heterogeneous wireless device to the system; pairing the another Type1 device with an existing Type2 device in the system; transmitting another wireless signal from the another Type1 device through the wireless multipath channel of the venue, receiving the another wireless signal by the existing Type2 device through the wireless multipath channel, wherein the received another wireless signal differs from the transmitted another wireless signal due to the wireless multipath channel of the venue and the object motion; obtaining another TSCI of the wireless multipath channel based on the received another wireless signal; computing another spatial-temporal information (STI) based on the another TSCI; monitoring the object motion based on the another TSCI and the another STI; performing the task based on the monitoring; and generating the response based on the task.

Clause E46. The method/system/software/device of the wireless monitoring system of Clause E45, further comprising: setting up the another Type1 device by at least one of: directing the existing Type2 device to discover and pair with the another Type1 device, directing the existing Type2 device to be discoverable, directing the another Type1 device to discover and pair with the existing Type2 device, directing the another Type1 device to be discoverable, pairing the another Type1 device with the existing Type2 device, registering the another Type1 device and its pairing with the existing Type2 device in a database of the wireless monitoring system, propagate an information of the another Type1 device and the pairing to the rest of the wireless monitoring system, cooperating or coordinating or negotiating or handshaking with the existing Type2 device in the transmission of the another wireless signal from the another Type1 device to the existing Type2 device, coordinate at least one of: timing, frequency, phase, synchronization, timing offset, delay, frequency bands, frequency hopping, signaling, transmission settings, transmitting antennas, receiving antennas, signal choices, signal strength, protocols, sounding mechanism, sounding frequency, and/or sounding timing, associated with the another wireless signal transmitted by the another Type1 device to the existing Type2 device, computing a best way to organize all the Type1 and Type2 devices, adding a label associated with at least one of: the another Type1 device, and the pair of another Type1 device and the existing Type2 device, associating the another Type1 device with at least one of: a user, a user account, the venue, an address of the venue, an address of the user, a location of the user, a location of the another Type1 device in the venue, a map of the venue, a name of the another Type1 device, or an identification (ID) of the another Type1 device, etc.

Clause E47. The method/system/software/device of the wireless monitoring system of Clause E1 or 2 or 3 or 4, further comprising: removing a Type1 device currently paired with a Type2 device.

Clause E48. The method/system/software/device of the wireless monitoring system of Clause E47, further comprising: setting up the system for the removal of the Type1 device; adjust the monitoring of the object motion so that it is performed without the TSCI extracted from the wireless signal transmitted from the Type1 device to the Type2 device; de-registering the Type1 device from the database of the wireless monitoring system, propagating an information of the de-registration to the rest of the system.

Clause E49. The method/system/software/device of the wireless monitoring system of Clause E1 or 2 or 3 or 4, further comprising: adding a new Type2 heterogeneous wireless device to the system; and performing at least one of the following: registering the new Type2 device in the database of the wireless monitoring system; propagating an information of the new Type2 device to the rest of the system; adding a new Type1 heterogeneous wireless device; pairing the new Type1 device with the new Type2 device; redirecting an existing Type1 device originally paired with another Type2 device to pair with the new Type2 device; adding the Type2 device to at least one of: a daisy-chain topology, a star topology, a ring topology, a hybrid topology or another topology of the system; pairing the new Type2 device with another Type2 device such that one of the two functions as a Type1 device to transmit a wireless signal to the other of the two; registering any pairing in the database; propagating an information of any pairing to the rest of the system.

Clause E50. The method/system/software/device of the wireless monitoring system of Clause E49, further comprising: setting up the system for the addition of the new Type2 device.

Clause E51. The method/system/software/device of the wireless monitoring system according to any of Clauses E4-E50, further comprising: removing a Type2 heterogeneous wireless device from the system.

Clause E52. The method/system/software/device of the wireless monitoring system of Clause E51, further comprising: setting up the system for the removal of the Type2 device; directing a subset of Type1 devices originally paired with the Type2 device to pair with another Type2 device instead; directing the another Type2 device to pair with the subset of Type1 devices; directing the another Type2 device to cooperating or coordinate or negotiate with each of the subset of Type1 device; de-register the removed Type2 device in the database of the wireless monitoring system; propagating an information of the removal to the rest of the system; register the new organization in the database of the wireless monitoring system; propagating an information of the new organization to the rest of the system.

Clause E53. The method/system/software/device of the wireless monitoring system of Clause E1 or 2 or 3 or 4, further comprising: managing a set of devices together, wherein the set of devices comprises one of the following: an individual Type1 device, an individual Type2 device, a Type2 device together with the set of its paired Type1 devices, a Type1 device together with the set of its paired Type2 devices, a set of Type2 devices interconnected in a topology together with the sets of their paired Type1 devices, (wherein the topology comprises at least one of: star, daisy chain, tree, ring, hybrid topology), or all the Type1 and Type2 devices together.

Clause E54. The method/system/software/device of the wireless monitoring system according to any of Clauses E1-E53, further comprising: generating a presentation on a user-interface (UI) of a user device of a user; obtaining a user input from the UI.

Clause E55. The method/system/software/device of the wireless monitoring system according to any of Clauses E1-E54, further comprising: wherein the UI comprises at least one of: a hierarchical style, a flat style, a hierarchical structure, or a flat structure.

Clause E56. The method/system/software/device of the wireless monitoring system according to any of Clauses E1-E55, further comprising: wherein the wireless monitoring system is at least one of: a stand-alone system, an add-on to another system, or an integrated subsystem of yet another system.

Clause E57. The method/system/software/device of the wireless monitoring system according to any of Clauses E1-E56, further comprising: wherein at least one of the Type1 device or the Type2 device comprises at least one of: an audible alarm generator, a dialogue generator, a conversation engine, a siren, a bell, a speaker, a status indicator, a pathway sound indicator, a location sound indicator, a light, a pathway light for safety, a colored light, an alarm light, a warning light, a timed light.

Clause E58. The method/system/software/device of the wireless monitoring system according to any of Clause E1-E57: wherein the task comprises at least one of: generating a reminder based on at least one of: a scheduled event, an unread message, an unread news item, a schedule, a time table, subscribed channel news, a user setting, generating a notification based on an event, an alarm clock, a situation, changing a mode of the system based on at least one of: the object motion being monitored, the STI, a plan, a time table, a condition, a detected event, a recognized situation, or a triggering event.

Clause E59. The method/system/software/device of the wireless monitoring system of Clause E58: wherein at least one of: the reminder, or the notification, is communicated to at least one of: a user device of a user, a smart phone of the user, a tablet of the user, a computer of the user, a smart speaker, a smart device with a display, a smart device with a speaker, a key fob, a smart watch, a smart wearable, a smart display, a smart appliance, a smart device, a smart smoke detector, a smart door bell, a smart TV, a small surveillance camera, etc.

Clause E60. The method/system/software/device of the wireless monitoring system according to any of Clauses E1-E59: wherein at least one of: the reminder, or the notification is generated based on a time of the day, a day of the week, a day of the month, a day of the year, a location of a user device, a status of the system, an analysis of a historical record of at least one of: the TSCI, the STI and an analytics computed based on the STI, or a prediction based on machine learning.

Clause E61. The method/system/software/device of the wireless monitoring system according to any of Clauses E7-E60, further comprising: wherein at least one registered wirelessly detectable item is associated with the wireless monitoring system; generating a query, in a user-in-venue mode, if no motion is detected for a period of time and none of registered wirelessly detectable item is detected, a query is generated and communicated to a user device to ask whether the user wants to switch to a user-not-in-venue mode; if the user confirms, changing the operating mode from the user-in-venue mode to a user-not-in-venue mode.

Clause E62. The method/system/software/device of the wireless monitoring system according to any of Clauses E7-E61, further comprising: in a user-in-venue mode, changing the operating mode from the user-in-venue mode to a user-not-in-venue mode if no motion is detected for a period of time.

Clause E63. The method/system/software/device of the wireless monitoring system according to any of Clauses E7-E62, further comprising: in a user-in-venue mode, doing nothing if no motion is detected.

Clause E64. The method/system/software/device of the wireless monitoring system according to any of Clauses E7-E63, further comprising: wherein at least one registered wirelessly detectable item is associated with the wireless monitoring system; in a user-not-in-venue mode, if any registered wirelessly detectable item is detected, generate a notification to welcome the user.

Clause E65. The method/system/software/device of the wireless monitoring system according to any of Clauses E7-E64, further comprising: wherein at least one registered wirelessly detectable item is associated with the wireless monitoring system; in a user-not-in-venue mode, if any registered wirelessly detectable item is detected, changing the operating mode from the user-not-in-venue mode to a user-in-venue mode.

Clause E66. The method/system/software/device of the wireless monitoring system according to any of Clauses E7-E65, further comprising: wherein at least one registered wirelessly detectable item is associated with the wireless monitoring system; notifying the user if any registered wirelessly detectable item is detected.

Clause E67. The method/system/software/device of the wireless monitoring system of Clause E1 or 2 or 3 or 4, further comprising: generating a notification if motion is detected and a motion satisfies an amplitude criterion and a duration criterion.

Clause E68. The method/system/software/device of the wireless monitoring system of Clause E1 or 2 or 3 or 4, further comprising: generating a notification if motion is not detected and a motion satisfies an amplitude criterion and a duration criterion.

Clause E69. The method/system/software/device of the wireless monitoring system of Clause E1 or 2 or 3 or 4, further comprising: generating a notification if motion is detected at a particular location.

Clause E70. The method/system/software/device of the wireless monitoring system of Clause E1 or 2 or 3 or 4, further comprising: generating a notification to a set of designated users in the wireless monitoring system, except those who choose not to receive the notification.

Clause E71. The method/system/software/device of the wireless monitoring system of Clause E1 or 2 or 3 or 4, further comprising: generating a notification to a set of designated users in the wireless monitoring system, except those who choose not to receive the notification.

Clause E72. The method/system/software/device of the wireless monitoring system of Clause E1 or 2 or 3 or 4, further comprising: generating a notification to a set of designated users in the wireless monitoring system who choose receive the notification.

Clause E73. The method/system/software/device of the wireless monitoring system of Clause E1 or 2 or 3 or 4, further comprising: in a user-not-in-venue mode, if motion is detected, waiting a delay time before raising an alarm.

Clause E74. The method/system/software/device of the wireless monitoring system of Clause E1 or 2 or 3 or 4, further comprising: in a user-in-venue mode, if user elects to change to user-not-in-venue mode, waiting a delay time before changing the operating mode to the user-not-in-venue mode.

Clause E75. The method/system/software/device of the wireless monitoring system of Clause E1 or 2 or 3 or 4, further comprising: in a user-in-venue mode, if user elects to change to user-not-in-venue mode, waiting a delay time before changing the operating mode to the user-not-in-venue mode.

Clause E76. The method/system/software/device of the wireless monitoring system of Clause E1 or 2 or 3 or 4, further comprising: in a user-in-venue mode, if user elects to change to user-not-in-venue mode but fails to leave the venue with a delay time, waiting another delay time before changing the operating mode to the user-not-in-venue mode.

For any of clauses 73-76, the delay time may be adjustable by the user. There may be associated sound or light display during the delay time. The pattern of the sound or light is also adjustable.

Clause E77. The method/system/software/device of the wireless monitoring system of Clause E1 or 2 or 3 or 4, further comprising: filtering at least one of: the TSCI, the STI, or an analytics computed based on the TSCI or the STI, based on at least one of: a threshold or a parameter.

Clause E78. The method/system/software/device of the wireless monitoring system of Clause E1 or 2 or 3 or 4, further comprising: recognizing a pattern based on the TSCI or the STI.

Clause E79. The method/system/software/device of the wireless monitoring system of Clause E1 or 2 or 3 or 4, further comprising: controlling and managing the wireless monitoring system by a super user (SU) through a SU account of the system with highest authority levels and rights; creating and managing a number of regular user (RU) accounts for regular users by the SU through the SU account; configuring each RU account by the SU by at least one of: entering information of the regular user associated with the regular user account, assigning to the regular user account respective authority levels and rights with respect to the monitoring of the object motion based on the TSCI and the STI, wherein the respective authority levels and rights are less than or equal to the highest authority and rights of the SU, or assigning access to the task or a sub-task of the task.

Clause E80. The method/system/software/device of the wireless monitoring system of Clause E79, further comprising: activating a particular regular user (RU) account for a particular RU by: sending an invitation to the particular RU based on the associated RU information entered by the SU, wherein the invitation is in the form of at least one of: an email to an email account of the particular RU, a message to a message account of the particular RU, an in-app message to an application (app) of the RU in a user device of the RU, wherein the application comprises at least one of: a text messaging app, a voice messaging app, a video messaging app, a conferencing app, an online chat app, an instant messaging app, an electronic mail app, a web based messaging system accessible by a web browser, a webpage providing text, voice, or video based messaging, a software with messaging capability in the form of at least one of: text, voice, image or video, a software with integrated text, voice or video messaging capability, or a software with conferencing capability, a text message to the user device of the RU, SMS, or MMS, receiving a response to the invitation from the RU, and activating the particular RU account based on the response.

Clause E81. The method/system/software/device of the wireless monitoring system of Clause E80, further comprising: sending the invitation to the particular RU with a link to an account activation webpage, and accessing the account activation webpage by the particular RU using the link to enter required activation information of the particular RU.

Clause E82. The method/system/software/device of the wireless monitoring system according to any of Clauses E79-E81, further comprising: generating a particular response for a particular regular user (RU) to a third party based on the authority levels and rights of the particular RU.

Clause E83. The method/system/software/device of the wireless monitoring system according to any of Clauses E79-E82, further comprising: generating a particular response to a particular regular user (RU) based on the authority levels and rights of the particular RU.

Clause E84. The method/system/software/device of the wireless monitoring system of Clause E83, further comprising: presenting at least a part of the particular response on a user device of the particular RU in accordance with the authority levels and rights associated with the particular RU.

Clause E85. The method/system/software/device of the wireless monitoring system according to any of Clauses E79-E84, further comprising: updating or terminating a particular RU account associated with a particular RU.

Clause E86. The method/system/software/device of the wireless monitoring system of Clause E79, further comprising: enabling a particular regular user (RU) account to create, manage, update and terminate a limited number of dependent user (DU) accounts for dependent users associated with the particular RU, wherein the authority levels and rights of the DU accounts are less than or equal to that of the particular RU.

Clause E87. The method/system/software/device of the wireless monitoring system of Clause E86, further comprising: managing any dependent user accounts created by the particular RU by the super user (SU), superseding the particular RU.

Clause E88. The method/system/software/device of the wireless monitoring system according to any of Clauses E79-E87, further comprising: upgrading a regular user (RU) account to be another super user (SU) account.

Clause E89. The method/system/software/device of the wireless monitoring system of Clause E88, further comprising: downgrading a super user (SU) account to be a regular user (RU) account.

Clause E90. The method/system/software/device of the wireless monitoring system of Clause E1 or 2 or 3 or 4: wherein the wireless monitoring system is interoperable with a third party system.

Clause E91. The method/system/software/device of the wireless monitoring system of Clause E90: sharing at least one of: the STI, the monitoring of the object motion, an information of the task, and the response with the third party system.

Clause E92. The method/system/software/device of the wireless monitoring system of Clause E90 or Clause E91: enabling or configuring a device of the third party system to serve as another Type1 device to transmit another wireless signal to the Type2 device.

Clause E93. The method/system/software/device of the wireless monitoring system of Clause E92: wherein the another wireless signal is transmitted by the device of the third party system in a manner compatible with the wireless monitoring system.

Clause E94. The method/system/software/device of the wireless monitoring system according to any of Clauses E90-E93: enabling or configuring a device of the third party system to serve as another Type2 device to receiving the wireless signal from the Type1 device.

Clause E95. The method/system/software/device of the wireless monitoring system of Clause E94: enabling or configuring the device of the third party system to obtain another TSCI based on the received wireless signals; monitoring the object motion based on the another TSCI.

Clause E96. The method/system/software/device of the wireless monitoring system of Clause E95: computing the STI based also on the another TSCI.

Clause E97. The method/system/software/device of the wireless monitoring system of Clause E95: computing another STI based on the another TSCI; monitoring the object motion based on the another STI.

Clause E98. The method/system/software/device of the wireless monitoring system according to any of Clauses E90-E97: enabling or configuring a first device of the third party system to serve as another Type1 device to transmit another wireless signal.

Clause E98.1 enabling or configuring a second device of the third party system to serve as another Type2 device to receiving the another wireless signal from the another Type1 device.

Clause E99. The method/system/software/device of the wireless monitoring system of Clause E98: obtaining another TSCI based on the another wireless signal; monitoring the object motion based on the another TSCI.

Clause E100. The method/system/software/device of the wireless monitoring system of Clause E99: computing the STI based also on the another TSCI.

Clause E101. The method/system/software/device of the wireless monitoring system of Clause E99: computing another STI based on the another TSCI; monitoring the object motion based on the another STI.

Clause E102. The method/system/software/device of the wireless monitoring system according to any of Clauses E90-E101: enabling a device of the third party system to assist in the computation of the STI based on the TSCI.

Clause E103. The method/system/software/device of the wireless monitoring system according to any of Clauses E90-E102: enabling a device of the third party system to assist in monitoring the object motion based on the TSCI and the STI.

Clause E104. The method/system/software/device of the wireless monitoring system according to any of Clauses E90-E103: enabling a device of the third party system to assist in performing the task based on the monitoring.

Clause E105. The method/system/software/device of the wireless monitoring system according to any of Clauses E90-E104: enabling a device of the third party system to assist in performing the task based on the monitoring.

Clause E106. The method/system/software/device of the wireless monitoring system according to any of Clauses E90-E105: enabling a device of the third party system to assist in generating the response based on the task.

Clause E107. The method/system/software/device of the wireless monitoring system of Clause E1 or 2 or 3 or 4: computing the STI based on the TSCI in real time; monitoring the object motion based on the TSCI and the STI in real time; performing the task based on the monitoring in real time; and generating the response based on the task in real time.

Clause E108. The method/system/software/device of the wireless monitoring system of Clause E1 or 2 or 3 or 4: computing a location of the object motion based on the TSCI and the STI.

Clause E109. The method/system/software/device of the wireless monitoring system of Clause E1 or 2 or 3 or 4: determining based on the TSCI and the STI whether there is object motion or no object motion in real time.

Clause E110. The method/system/software/device of the wireless monitoring system of Clause E1 or 2 or 3 or 4: generating a presentation of a history, a trend or a temporal summary of at least one of: the STI, the monitoring of object motion, a location of the object motion, an information of the object motion, a motion analytics computed based on the STI or the TSCI, the task or the response, associated with a time period.

Clause E111. The method/system/software/device of the wireless monitoring system of Clause E1 or 2 or 3 or 4: wherein the first wireless signal is transmitted and the second wireless signal is received based on a standard, format/frame/protocol of the standard, field/format of the frame, data frame, control frame, management frame, physical layer protocol data unit (PPDU), MAC protocol data unit (MPDU/A-MPDU), sounding frame, beacon frame, probe frame, notification frame, request frame, response frame, acknowledgement frame, excitation frame, null data frame, null data packet (NDP), response to an NDP, response to null data frame, international standard, national standard, industry standard, defacto standard, protocol, handshake, signaling, data communication standard, wireless local/wide area network standard, mesh network standard, mobile communication standard, cellular standard, ultra-wide band (UWB) standard, Wi-Fi standard, IEEE 802.11/15/16 standard, IEEE 802. 11n/ac/ax/be/bf standard, 3G/4G/LTE/5G/6G/7G/8G standard, Bluetooth, BLE, ZigBee, NFC, or WiMax. A wireless signal from a Type1 device to a Type 2 device may be a response to another signal (e.g. a triggering signal) from the Type2 device to the Type1 device.

In some embodiments, there may be a number of candidate wireless signals (with corresponding system settings such as carrier frequency, bandwidth, signal type, signal characteristics, PHY/MAC level signaling, modulation, data rate, signaling timing, sounding frequency, spatial streams, feedback, etc) that can be transmitted from the Type1 device to the Type2 device such that the TSCI (e.g. of sufficient quality for the STI, object motion monitoring and/or task) can be obtained/extracted from the candidate wireless signal. A qualification test between the Type1 device and the Type2 device may be performed on the number of candidate wireless signals to ensure they are satisfactory or qualified for the task, the monitoring of object motion based on STI, and/or the computation of STI based on TSCI. The qualification test may comprise more than one sub-tests, e.g. a sub-test on signal-to-noise ratio/SNR of wireless signal, a sub-test on SNR of STI, a sub-test on time consistency or variability of STI, or a sub-test on a behavior of TSCI/STI when the object motion is a certain testing object motion, etc. One of the candidate wireless signals may be chosen as the wireless signal. If there are more than one tasks, there may be more than one qualification tests, one for each task. Some tasks may share the same qualification test. Alternatively, the tasks may be classified into some task classes (categories), each associated with a corresponding qualification test. A pair of Type1 device and Type2 device with associated wireless signal may be qualified for one task, but not (necessarily) qualified for another task.

More than one wireless signals may be transmitted/received in a synchronous, simultaneous, contemporaneous, asynchronous, dependent, independent, coordinated, un-coordinated, cooperative, uncooperative manner, possibly in accordance with the standard or the protocol (e.g. by more than one Type1 devices, and/or more than one Type2 devices). The more than one wireless signals may be of the same or different signal types (e.g. one may be an enquiry, or announcement while another one may be an acknowledge; it may be point-to-point/unicast, point-to-multipoint/multicast/broadcast/, multipoint-to-point, multipoint-to-multipoint, OFDMA, MU-MIMO, or BSS coloring)/frame structure (e.g. various data/control/management frame structures) /signal characteristics (e.g. various carrier frequency, bandwidth, modulation, header/preamble structure, sounding timing/frequency).

Clause E112. The method/system/software/device of the wireless monitoring system of Clause E1 or 2 or 3 or 4: wherein any wireless signal is transmitted by the respective Type1 device and received by respective Type2 device in a sensing session. The sensing session may be in accordance to a standard or a protocol.

Clause E113. The system/software/device of the wireless monitoring system of Clause E112: wherein the sensing session is initiated by an initiating device which may be any Type1 device, Type2 device or another device. The sensing session may be initiated by the initiating device (e.g. sensing initiator) in accordance to the standard or the protocol. The initiating device may send or broadcast an initiating request to the Type1 devices or Type2 devices. All (responding) Type1 or Type2 devices joining the sensing session may respond to the initiating request to join the sensing session.

Clause E114. The system/software/device of the wireless monitoring system of Clause E113: wherein a number of responding devices respond to an initiation request from the initiating device to join the sensing session. All Type2 devices may respond to join. One, some or all of the Type1 device(s) may respond to join. A sensing responder may be any device (e.g. Type1 or Type2 device) that responds to the initiation request and joins the sensing session.

One (or more) particularType1 device may not respond to the initiation request (e.g. because it does not support 802.11bf) to join the session formally. The particular (non-responding) Type1 device may still contribute in the session by being "guided" by a particular Type2 device (that responded to the initiation request and joined the session) to send the wireless signal to the particular Type2 device, in response to a triggering wireless signal from the particular Type2 device (e.g. the triggering signal may be a data/control/management frame signal, and the wireless signal may be an acknowledge to the triggering signal). The particular Type2 device may obtain/extract TSCI based on/from the wireless signal, compute the STI, monitor the object motion based on the TSCI/STI, perform the task based on the monitoring and generate the response based on the task. The particular (non-responding) Type1 device may be a contributing device in the session.

The particular Type1 device and the particular Type2 device may be authenticated or associated (e.g. the particular Type2 device may be a wireless access point/router/repeater and the particular Type1 device may be associated or authenticated in a wireless network of the particular Type2 device). The particular Type2 device may determine/comprise at least one candidate triggering signal(s) with associated system settings (e.g. carrier frequency, bandwidth, sounding rate). The at least one candidate triggering signal may be compliant to a wireless standard or protocol. The Type2 device may test the Type1 device in response to the initiating request. The Type2 device may perform a qualification test of the Type1 device (or any authenticated or associated devices) for the task and each of the candidate triggering signals/settings to see if any/all of the candidate triggering signals/settings are qualified, and to see if the Type1 device is qualified. The Type2 device may send the at least one candidate triggering signal(s) to the Type1 device. The Type2 device may receive at least one response signal from the Type1 device, each in response to a respective candidate triggering signal.

The Type2 device may choose one of the candidate triggering signal(s) with a received response signal as the triggering signal. The Type2 device may make the choice based on a requirement or criteria (e.g. with respect to timing, frequency, sounding frequency, period, delay/lag, signal strength, bandwidth, number of antenna, channel condition/congestion/traffic, successful/unsuccessful reception of the wireless signal, time delay between the transmitted candidate signal and the received wireless signal) associated with at least one of: the object motion, the monitoring of the object motion or the task. It may report the existence of the Type1 device that can function as a possible contributing device (a contributing Type1 device) in the session.

The Type2 device may maintain a list of possible contributing device(s) for each of a number of tasks (e.g. motion detection, presence detection, breathing monitoring, heartbeat monitoring, fall-down detection, motion localization, tracking, activity monitoring, gesture/gait/activity recognition, a first task using a first feature/statistics/algorithm/approach w.r.t. the TSCI, a second task with the same goal as the first task but using a second feature/statistics/algorithm/approach w.r.t. the TSCI). The Type2 device may obtain information of the tasks and the requirement/criteria associated with each task, from a server.

There may be a number of tasks classified into a number of task classes/categories. The Type2 device may maintain a list of possible contributing device(s) for each of the number of task classes/categories. A requirement or criteria may be associated with each task class/category.

Clause E115. The system/software/device of the wireless monitoring system of Clause E114: wherein the responding devices comprise all Type2 devices in the session.

The computation of the STI, the monitoring of an object motion and/or the performance of the task may be in a separate, individual, or independent manner based on a TSCI associated with a pair of Type1 device and Type2 device, or may be in a jointed, combined, fused, hybrid, or inter-dependent manner based on more than one TSCI associated with more than one pair of Type1 and Type2 devices. Any Type1 device may be a responding device (responded to initiating request to join the session) or a contributing device (did not respond to initiating request to join the session but was guided by the Type2 device to transmit the wireless signal). Joint monitoring may be based on more than one individual STI each computed individually based on TSCI associated with one pair of Type1 and Type2 devices, or a joint STI computed jointly based on multiple TSCI associated with multiple pairs of Type1 and Type2 devices, or a combination of individual STI and joint STI. In the computation of a joint STI in the joint monitoring, TSCI associated with a contributing Type1 device (e.g. smaller weight) may be weighted differently from TSCI associated with a responding Type1 device (e.g. larger weight). In the joint monitoring, individual STI associated with a contributing Type1 device (e.g. smaller weight) may be weighted differently from individual STI associated with a responding Type1 device (e.g. larger weight).

Clause E116. The system/software/device of the wireless monitoring system of Clause E114 or Clause E115: wherein the responding devices comprise zero, one, more than one, or all, of the Type1 devices. The responding devices may comprise additional devices that are not Type1 or Type2 devices. The additional device may perform computation, storage, processing or some role/subtask for/in the wireless monitoring.

Any wireless signal(s) may be a train of wireless probe signals transmitted/received for sensing measurement. Each CI may be any sensing measurement obtained based on a respective received probe signal. Each Type1 device may be a sensing transmitter. Each Type2 device may be a sensing receiver. A device may take on multiple roles (e.g. both as a Type1 device and a Type2 device) in a sensing session. The initiating device may be a Type1 device, or Type2 device, or both, or neither.

Clause E117. The system/software/device of the wireless monitoring system according to any of Clauses E112-E116: wherein the sensing session comprises one or more instances of pause period in which the wireless signal has zero transmission. The wireless signal is not active/transmitted from the Type1 device to the Type2 device during the pause period(s). Different pause periods may have different time durations. A pause period can be an extended period of time (e.g. magnitude in the order of century, decade, year, month, week, day, hour, minute, second or fraction of a second).

Clause E118. The system/software/device of the wireless monitoring system according to any of Clauses E112-E117: wherein the sensing session comprises one or more burst instances of active sensing measurements. In other words, in a sensing session, sensing measurements may be performed for a first period of time, suspended/paused/stopped for a second period of time, then resumed/restarted for a third period of time, and so on.

Clause E119. The system/software/device of the wireless monitoring system according to any of Clauses E112-E118: wherein the sensing session comprises at least one of: a setup phase, an operating phase, and a termination phase. The sensing session may be in response to a sensing request for the task by a user or user device.

Clause E120. The system/software/device of the wireless monitoring system of Clause E119 further comprising at least one of the following in the set up phase: establishing or re-establishing the sensing session by the initiating device; communicating an initiating request by an initiating device to each Type1 device or Type2 device; transmitting a response by a Type1 device or a Type2 device to the respective initiating request to join the session; communicating supported operational parameters of the Type1 device or the Type2 device; performing a qualification test of the Type1 device, the Type2 device or both; reporting by the Type2 device the existence of the Type1 device and the suitability and capability of the Type1 device to transmit the wireless signal to the Type2 device to generate TSCI; pairing/associating/linking the Type1 device and the Type2 device for the transmission and reception of the wireless signal in the sensing session; negotiating/choosing/defining operational parameters of the Type1 device or the Type2 device associated with the sensing session based on the communicated supported operational parameters and the qualification test; or configuring each Type1 device or Type2 device based on the chosen operational parameters.

The operational parameters may include any of: carrier frequency, bandwidth, choice of the wireless signal from a number of candidate wireless signals, system settings, signal power, signaling timing, sounding frequency, choice/precision/quantity of CI, etc. The supported operational parameters may be communicated between the Type1 device and Type2 device, or between each Type1 (or Type2) device and the initiating device.

Clause E121. The system/software/device of the wireless monitoring system of Clause E119 or Clause E120 further comprising at least one of the following in the operating phase: (i) transmitting the wireless signal from the Type1 device to the Type2 device; (ii) obtaining the TSCI from the wireless signal; (iii) reporting the TSCI obtained from the wireless signal; (iv) computing the STI based on the TSCI; (v) reporting the STI; (vi) monitoring the object motion based on the STI; (vii) performing the task based on the monitoring of the object motion; (viii) generating the response based on the task; reporting the response. Steps (i) and (ii) may be considered as a low-level measurement phase or sub-phase. Step (iii) may be considered a low-level reporting phase or sub-phase (e.g. from low-level to another low-level, or from low-level to high-level). Steps (iv) to (viii) may be considered high-level processing phase or sub-phase.

In one example, the TSCI may be extracted/obtained in Step (ii) by the Type2 device (e.g. a wireless integrated circuit/IC/semiconductor of the Type2 device) from the wireless signal. The reporting in Step (iii) may comprise a transmission (wireless or wired) of the TSCI (in a certain form; perhaps with a certain precision; perhaps compressed) from the Type2 device to another device (e.g. Type1 device, or initiating device). If it is wireless transmission in Step (iii), it may be transmitted from the wireless IC of the Type2 device (using antennas of the Type2 device) to another wireless IC of the another device (using its antennas) - which may be a low-level to low-level reporting, at PHY level or MAC level. Steps (iv) to (viii) may be performed by the another device or yet another device. Step (v) may/may not be skipped.

In another example, the TSCI may be extracted/obtained in Step (ii) by the Type2 device (e.g. a wireless integrated circuit/IC/semiconductor of the Type2 device) from the wireless signal. The reporting in Step (iii) may be done internally in the Type2 device. It may be a low-level to high-level reporting: from a low level (e.g. PHY/MAC layer, firmware) to an upper level (e.g. Application layer, user application/software). Step (iii) may be skipped. Step (iv) may be done in the Type2 device (e.g. at Application layer, or PHY/MAC layer). In Step (v), the STI may be reported by the Type2 device to another device (e.g. the initiating device, Type1 device or a server). Steps (vi) to (viii) may be performed by the Type2 device, another device or yet another device in a separate, joint or cooperative manner.

Clause E122. The system/software/device of the wireless monitoring system of Clause E121 further comprising at least one of the following in the termination phase: stopping the transmission of the wireless signal; stopping the obtaining of TSCI from the wireless signal; stopping the computation of STI based on TSCI; stopping the monitoring of object motion based on STI/TSCI; stopping the task; or stopping the response.

The following numbered clauses provide implementation examples for wirelessly monitoring object motion.

Clause F1. A system for wireless motion monitoring, comprising: a transmitter configured for transmitting a first wireless signal through a wireless multipath channel of a venue; a receiver configured for receiving a second wireless signal through the wireless multipath channel, wherein the second wireless signal differs from the first wireless signal due to the wireless multipath channel and a motion of an object in the venue; and a processor configured for: obtaining a time series of channel information (TSCI) of the wireless multipath channel based on the second wireless signal, computing a spatial-temporal information (STI) based on the TSCI, monitoring the motion of the object based on the TSCI and the STI, performing a task based on the monitoring, and generating a response based on the task.

Clause F2. The system of Clause F1, wherein the processor is further configured for: choosing, from a plurality of supported operating modes associated with the task, an operating mode to be a current operating mode of the task; and monitoring at least one aspect of the object based on the TSCI and the current operating mode, wherein the response is generated based on the current operating mode of the task.

Clause F3. The system of Clause F2, wherein: the current operating mode is a user-away mode for monitoring the venue when a user of the system is not present in the venue; and the processor is further configured for: performing at least one of the following under the user-away mode, with the object being an intruder: configuring a sensitivity setting for monitoring the motion of the object, enabling or disabling at least one of: the transmitter or at least one other receiver of the system, configuring a time table for the user-away mode with respective configurations associated with respective time periods of the time table, configuring parameters, thresholds and timings for the user-away mode, configuring a method and a mode of notification for the user, or configuring the monitoring of the at least one aspect of the object to be associated with the user-away mode; monitoring the TSCI and the STI for patterns pointing to a presence of the intruder; and configuring the response to comprise at least one of: sending a notification to a designated user, generating an alarm, generating an alarm animation, playing a warning message, conducting a dialog with the intruder, requesting the intruder to produce an identification of any authorized user, sounding a siren of the system, or securing the venue.

Clause F4. The system of Clause F2 or Clause F3, wherein: the current operating mode is a user-in-venue mode for monitoring the venue when a user of the system is present in the venue; and the processor is further configured for: performing at least one of the following under the user-in-venue mode, with the object being the user: configuring a sensitivity setting for monitoring the motion of the object, enabling or disabling at least one of: the transmitter or at least one other receiver of the system, configuring a time table for the user-in-venue mode with respective configurations associated with respective time periods of the time table, configuring parameters, thresholds and timings for the user-in-venue mode, configuring a method and a mode of notification for the user, or configuring the monitoring of the at least one aspect of the object to be associated with the user-in-venue mode; monitoring activities of the user in the venue based on the TSCI and the STI; and configuring the response to comprise at least one of: locating the user, monitoring movement of the user, monitoring at least one of: a daily routine, a habit or a behavior, of the user, monitoring any deviation from at least one of: the daily routine, the habit or the behavior, of the user, detecting an additional user, monitoring movement of the additional user, monitoring a behavior of the additional user, monitoring interaction between the user and the additional user, detecting dangerous motion of the user, detecting a fall-down motion of the user, monitoring a vital sign of the user, monitoring at least one of: a breathing or a heartbeat, of the user, monitoring a sleeping of the user, monitoring at least one of: a motion sequence, a dancing, an exercising, a pacing, a pause, or a resting, of the user, detecting a gesture of the user, conducting a dialog, an exchange or an interaction with the user, conducting a notification, a report or a reminder to the user, directing at least one user device to conduct the dialog, exchange, interaction, notification, report or reminder, generating at least one presentation or user-interface on the at least one user device in the dialog, exchange, interaction, notification, report or reminder, verifying a danger, a fall-down, an event, a situation, a condition, a gesture, a command of the user based on the dialog, exchange, or interaction, or communicating an information of the activities of the user to at least one of: another user, another user device of the another user, a server, a cloud server, a local server, a storage, a network storage, a distributed storage, a block chain, a database, or an analysis module.

Clause F5. The system according to any of Clauses F2-F4, wherein: the current operating mode is a vigilant mode for monitoring the venue when a user of the system is not present in the venue and the user does not want siren; and the processor is further configured for: performing at least one of the following under the vigilant mode, with the object being an intruder: configuring a sensitivity setting for monitoring the motion of the object, enabling or disabling at least one of: the transmitter or at least one other receiver of the system, configuring a time table for the vigilant mode with respective configurations associated with respective time periods of the time table, configuring parameters, thresholds and timings for the vigilant mode, configuring a method and a mode of notification for the user, or configuring the monitoring of the at least one aspect of the object to be associated with the vigilant mode; monitoring the TSCI and the STI for patterns pointing to a presence of the intruder, wherein the response comprises at least one of: sending a notification to a designated user, generating an alarm, generating an alarm animation, playing a warning message, conducting a dialog with the intruder, requesting the intruder to produce an identification of the authorized user, sounding a siren of the system, or securing the venue; and configuring the response to exclude at least one of: generating an alarm, generating an alarm animation, playing a warning message, conducting a dialog with the intruder, requesting the intruder to produce an identification of any authorized user, sounding a siren of the system, or securing the venue.

Clause F6. The system according to any of Clauses F2-F5, wherein: the current operating mode is a guard mode for monitoring the venue when a user of the system is not present in the venue and the user wants to be notified of any detected object motion; and the processor is further configured for: performing at least one of the following under the guard mode, with the object being an intruder: configuring a sensitivity setting for monitoring the motion of the object, enabling or disabling at least one of: the transmitter or at least one other receiver of the system, configuring a time table for the guard mode with respective configurations associated with respective time periods of the time table, configuring parameters, thresholds and timings for the guard mode, configuring a method and a mode of notification for the user, or configuring the monitoring of the at least one aspect of the object to be associated with the guard mode; monitoring the TSCI and the STI for patterns pointing to a presence of the intruder; and configuring the response to comprise at least one of: sending a notification to the user, taking further action upon a confirmation from the user, or switching to another operating mode.

Clause F7. The system according to any of Clauses F2-F6, wherein: the current operating mode is a power-saving mode for monitoring the venue; and the processor is further configured for pausing or stopping at least one of: the transmitting of the first wireless signal from the transmitter, the receiving of the second wireless signal by the receiver, the obtaining of the TSCI based on the second wireless signal, the computing of the STI based on the TSCI, the monitoring of the motion of the object based on the TSCI and the STI, the performing of the task, or the generating of the response based on the task.

Clause F8. The system according to any of Clauses F2-F7, wherein: the current operating mode is: (a) a user-challenge mode for monitoring the venue when the motion of the object is detected in the venue and the object is unidentified or (b) a user-interactive mode for monitoring the venue when the object is a user; and the processor is further configured for: configuring the response in the user-challenge mode to comprise at least one of: sending a notification to a designated user, generating an alarm, generating an alarm animation, playing a warning message, conducting a dialog with the intruder, requesting the object to produce an identification of any authorized user, securing the venue, or switching to another operating mode; configuring the response in the user-interactive mode to comprise at least one of: conducting a dialog, an exchange or an interaction with the user, conducting a notification, a report or a reminder to the user, directing at least one user device to conduct the dialog, exchange, interaction, notification, report or reminder, generating at least one presentation or user-interface on the at least one user device in the dialog, exchange, interaction, notification, report or reminder, verifying at least one of: a danger, a fall-down, an event, a situation, a condition, a sleep-related condition, an activity, a dancing, an exercising, a pacing, a resting, a deviation from at least one of: a daily routine, a habit or a behavior, a movement, a gesture, or a command of the user based on the dialog, exchange, or interaction, or communicating an information of the activities of the user to at least one of: another user, another user device of the another user, a server, a cloud server, a local server, a storage, a network storage, a distributed storage, a block chain, a database, or an analysis module; and monitoring the motion of the object in reaction to the response.

Clause F9. The system according to any of Clauses F2-F8, wherein the processor is further configured for changing the current operating mode of the task from the operating mode to a different operating mode of the supported operating modes based on at least one of: a choice of a user of the system, a preference of the user, an input on a user device by the user, a selection on a user-interface (UI) by the user, a button press on the UI by the user, a verbal selection by the user, a presentation to the user, a presentation on the UI, a dialog, an exchange or an interaction with the user, the dialog, exchange or interaction based on the user device, a finite state machine (FSM) comprising at least one state each associated with a respective supported operating mode, a finite state machine (FSM) comprising a state associated with a sequence of supported operating modes, the at least one aspect of the object being monitored, a time table associated with at least one of: the task, the user, the object, or the venue, a presence or absence of the user in the venue, a communication with another system, a power-on, a power interruption, a system reset, or a power saving need of the system.

Clause F10. The system of Clause F9, wherein the processor is further configured for: associating at least one registered wirelessly detectable item with the system; generating at least one of: a query, a presentation, a notification, a dialog, an exchange, or an interaction in a user-in-venue mode, when no motion is detected for a period of time and none of the at least one registered wirelessly detectable item is detected, wherein the query is communicated to the user device to ask whether the user has an intent of switching to a user-away mode; and changing the current operating mode of the task from the user-in-venue mode to the user-away mode after the user confirms the switching or after the user fails to decline the switching within a time-out period.

Clause F11. The system of Clause F9 of Clause F10, wherein the processor is further configured for: in a user-in-venue mode, changing the current operating mode of the task from the user-in-venue mode to a user-away mode after no motion is detected for a period of time.

Clause F12. The system according to any of Clause F9-F11, wherein the processor is further configured for: associating at least one registered wirelessly detectable item with the system; generating a notification, a greeting, a dialog, an exchange, an interaction, or a presentation to welcome the user in a user-away mode, when any of the at least one registered wirelessly detectable item is detected; and changing the current operating mode of the task from the user-away mode to a user-in-venue mode, when any of the at least one registered wirelessly detectable item is detected.

Clause F13. The system according to any of Clause F9-F12, wherein the processor is further configured for: when a motion is detected in a user-away mode, waiting for a predetermined time period before raising an alarm.

Clause F14. The system according to any of Clauses F9-F13, wherein the processor is further configured for: when the user chooses to switch the current operating mode from a user-in-venue mode to a user-away mode, waiting for a predetermined time period before changing the current operating mode to the user-away mode.

Clause F15. The system according to any of Clause F9-F14, wherein the processor is further configured for: when the user chooses to switch the current operating mode from a user-in-venue mode to a user-away mode but fails to leave the venue within a predetermined time period, waiting for an additional predetermined time period before changing the current operating mode to the user-away mode.

Clause F16. The system according to any of Clauses F1-F15, wherein the processor is further configured for: receiving an emergency message; and performing at least one of the following emergency actions based on the emergency message: conducting a dialog, an exchange or an interaction with a user of the system, conducting a notification, a report or a reminder to the user, directing at least one user device of the user to conduct the dialog, exchange, interaction, notification, report or reminder, generating at least one presentation or user-interface on the at least one user device in the dialog, exchange, interaction, notification, report or reminder, verifying an emergency associated with the emergency message, a danger, a fall-down, an event, a situation, a condition, a gesture, a command of the user based on the dialog, exchange, or interaction, initiating an evacuation, actuating an emergency warning system, mobilizing an emergency response system, turning on an emergency lighting, triggering an emergency broadcasting system, setting off an emergency messaging system, activating a priority notification system, sounding a siren, sounding an audio alarm, displaying a visual alarm, animating an animated alarm, generating a notification or personalized alarm to at least one of: a user of the system, one or more designated contact person, requesting an emergency service, or requesting a dispatch of at least one first responder to at least one of: the venue, a designated location, a home address of the user, or a current location of the user.

Clause F17. The system according to any of Clauses F1-F16, wherein: the transmitter is located at a first device; the receiver is located at a second device; at least one of the first device or the second device is a device having a single role in the system; and the processor is further configured for changing one of the first device and the second device in the system based on at least one of: a software update, firmware update, software upgrade, or over-the-air software upgrade.

Clause F18. The system of Clause F17, wherein: at least one of the first device or the second device is communicatively coupled with at least one of: a wired network or a wireless network; at least one of the first device or the second device comprises at least one of: an audible alarm generator, a dialogue generator, a conversation engine, a siren, a bell, a speaker, a status indicator, a pathway sound indicator, a location sound indicator, a light, a pathway light for safety, a colored light, an alarm light, a warning light, or a timed light; and the processor is further configured for setting up the first device and the second device according to one of the following manners: the second device is set up before the first device, the first device is set up before the second device, or the first device and the second device are set up at the same time.

Clause F19. The system of Clause F17 of Clause F18, wherein: the processor is further configured for generating a label for at least one of: the first device, a location associated with the first device, a region associated with the first device, the second device, a location associated with the second device, a region associated with the second device, a pair of the first device and the second device, a location associated with the pair, or a region associated with the pair; and the label is generated based on at least one of: an input of a user of the system during a set-up stage of the system, the TSCI, the STI, the task, or the response after the set-up stage.

Clause F20. The system according to any of Clauses F1-F19, wherein: the venue comprises at least one of: a floor of a multi-floor structure, a plurality of floors of the multi-floor structure, an interior space of a structure, or an immediate neighboring exterior space of the structure; and the processor is further configured for: generating a presentation related to the monitoring for a user-interface (UI) of a user device of a user of the system; and obtaining a user input from the user via the UI.

Clause F21. The system according to any of Clauses F1-F20, wherein the task comprises at least one of: generating at least one of: a presentation, a reminder, a notification, a report, a dialog, an exchange or an interaction based on at least one of: a scheduled event, an unread message, an unread news item, a schedule, a time table, subscribed channel news, a user setting, an event, an alarm clock, or a situation; or changing a mode of the system based on at least one of: the motion of the object, the STI, a plan, a time table, a condition, a detected event, a recognized situation, or a triggering event.

Clause F22. The system of Clause F21, wherein: at least one of the presentation, the reminder, the notification, the report, the dialog, the exchange, the interaction, or the mode is communicated to at least one of: a user device of a user, a smart phone of the user, a tablet of the user, a computer of the user, a smart speaker, a smart device with a display, a smart device with a speaker, a key fob, a smart watch, a smart wearable, a smart display, a smart appliance, a smart device, a smart smoke detector, a smart door bell, a smart TV, or a small surveillance camera; and at least one of the reminder, the notification, the report, the dialog, the exchange, the interaction, or the mode is determined based on at least one of: a time in a day, a day in a week, a day in a month, a day in a year, a location of a user device, a status of the system, a prediction based on machine learning, or an analysis of a historical record of at least one of: the TSCI, the STI or an analytics computed based on the STI.

Clause F23. The system according to any of Clauses F1-F22, wherein the processor is further configured for generating a reminder, a notification, a report, a dialog, an exchange, or an interaction to/with at least one designated user, based on at least one of: a motion is detected and satisfies an amplitude criterion and a duration criterion; or a motion is detected at a predetermined location in the venue.

Clause F24. The system according to any of Clauses F1-F23, wherein the processor is further configured for: filtering at least one of: the TSCI, the STI, or an analytics computed based on the TSCI or the STI, based on at least one of: a threshold or a parameter; and recognizing a pattern based on the TSCI or the STI.

Clause F25. The system according to any of Clauses F1-F24, wherein the processor is further configured for: generating a super user (SU) account for a SU to control and manage the system with highest authority levels and rights; generating a plurality of regular user (RU) accounts each for a respective RU to control and manage the system; and configuring each RU account based on at least one of the following performed by the SU: entering information of the RU associated with the RU account, assigning to the RU account respective authority levels and rights with respect to monitoring the motion of the object based on the TSCI and the STI, wherein the respective authority levels and rights are less than or equal to the highest authority levels and rights of the SU, or assigning to the RU account an access to the task or a sub-task of the task.

Clause F26. The system according to any of Clauses F1-F25, wherein: the system is interoperable with a third party system; and the processor is further configured for: sharing with the third party system at least one of: the STI, the monitoring of the motion of the object, an information of the task, or the response; and enabling or configuring a device in the third party system to serve as an additional transmitter to transmit an additional wireless signal to the receiver in the system.

Clause F27. The system according to any of Clauses F1-F26, wherein the processor is further configured for: computing a location of the motion of the object based on the TSCI and the STI; determining, based on the TSCI and the STI, whether there is object motion in real time; and generating a presentation of a history, a trend or a temporal summary of at least one of: the STI, the task or the response, the monitoring of the motion, a location of the motion, a motion analytics computed based on the STI or the TSCI, associated with a time period.

Clause F28. A method of a wireless monitoring system, comprising: transmitting a plurality of wireless signals asynchronously through a wireless multipath channel of a venue, wherein each wireless signal is transmitted from a respective one of a plurality of first devices in the wireless monitoring system; receiving the plurality of wireless signals by a plurality of second devices in the wireless monitoring system through the wireless multipath channel, wherein each received wireless signal differs from the respective transmitted wireless signal due to the wireless multipath channel and a motion of an object in the venue; obtaining each of a plurality of time series of channel information (TSCI) of the wireless multipath channel based on a respective received wireless signal; computing a plurality of spatial-temporal information (STI) each based on a respective TSCI; monitoring a first aspect of the motion of the object based on a first subset of the plurality of TSCI and a first subset the plurality of STI; monitoring a second aspect of the motion of the object based on a second subset of the plurality of TSCI and a second subset the plurality of STI; performing a first task based on monitoring the first aspect of the motion; performing a second task based on monitoring the second aspect of the motion; generating a first response based on the first task; and generating a second response based on the second task.

Clause F29. The method of Clause F28, wherein: each second device is paired with at least one first device each transmitting a respective wireless signal to the second device; and at least one second device and its paired at least one first device form a star topology.

Clause F30. A wireless device of a wireless monitoring system, comprising: a processor; a memory communicatively coupled to the processor; and a receiver communicatively coupled to the processor, wherein: an additional wireless device of the wireless monitoring system is configured for transmitting a first wireless signal through a wireless multipath channel of a venue in accordance with a current operating mode, the receiver is configured for receiving a second wireless signal through the wireless multipath channel in accordance with the current operating mode, the second wireless signal differs from the first wireless signal due to the wireless multipath channel and a motion of an object in the venue, and the processor is configured for: choosing the current operating mode from a plurality of supported operating modes associated with a task and the motion of the object, obtaining a time series of channel information (TSCI) of the wireless multipath channel based on the second wireless signal, computing a spatial-temporal information (STI) based on the TSCI, monitoring the motion of the object based on the TSCI and the STI, performing the task based on the monitoring, and generating a response based on the task.

The present teaching discloses methods and systems for using special antenna arrangement with a physical barrier to make transmit and receive antennas co-located in the same device to improve quality of wireless monitoring. In various embodiments, the antenna arrangement can help detecting a fall in a house, e.g. in a bathroom. Without the physical barrier, falls may not be detected, or can only be detected in a small coverage area.

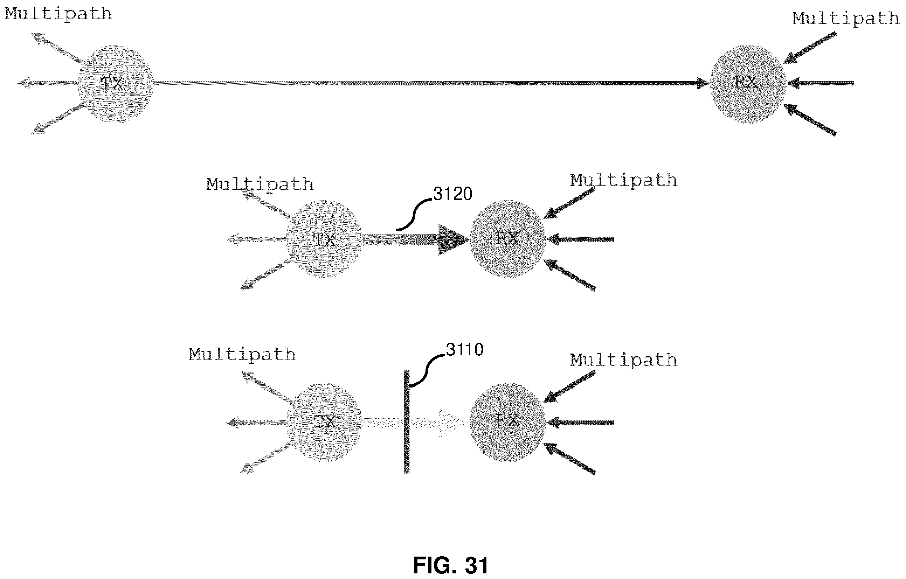

FIG. 31 illustrates a method for wireless monitoring based on a physical barrier arranged between a transmitter and a receiver, according to some embodiments of the present disclosure. As shown in FIG. 31, the barrier 3110 between the Tx and Rx may help to attenuate the LOS component 3120 of the wireless signal so as to prevent the LOS component 3110 from dominating or overpowering over the other components of the wireless signal in the sensing task. As such, more multipath components of the wireless signal can be utilized for wireless motion monitoring, wireless sensing or detection. In some embodiments, the barrier may be arranged between a Tx antenna and a Rx antenna.

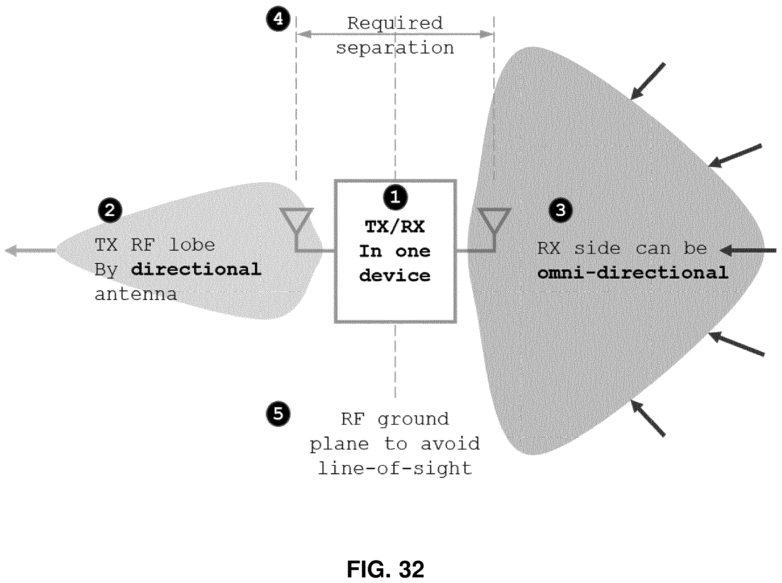

FIG. 32 illustrates a method for wireless monitoring based on at least one directional antenna, according to some embodiments of the present disclosure. In a wireless monitoring system, the Tx and the Rx (or the Tx and Rx antennas) can be collocated in one device with a certain separation distance and a barrier placed in between. In some embodiments, as shown in FIG. 32, the Tx may use a directional antenna and the Rx may use an omni-directional antenna. An RF ground plan can avoid LOS, as LOS sometimes is not useful (or even harmful) for sensing tasks.

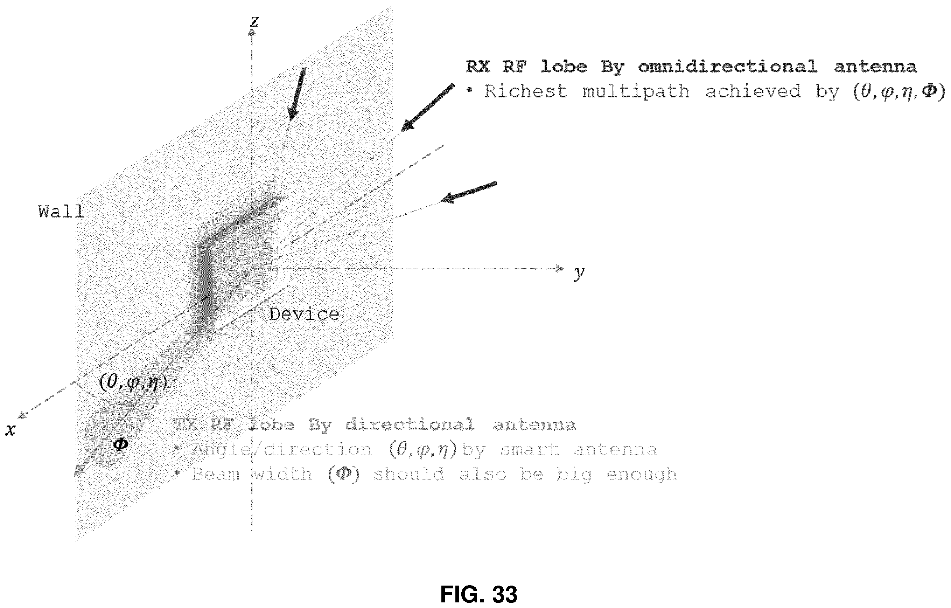

FIG. 33 illustrates an exemplary device plugged in a wall-plug for fall detection, according to some embodiments of the present disclosure. The device is plugged in a wall-plug for fall detection, e.g. in a bathroom. In some embodiments, the device has a Tx to transmit RF lobes by a directional antenna, with a beamwidth big enough. The device may also have a Rx to receive RF lobes by an omni-directional antenna, to detect a fall down event in the bathroom, e.g. by extracting a richest multipath component from the received RF signal.

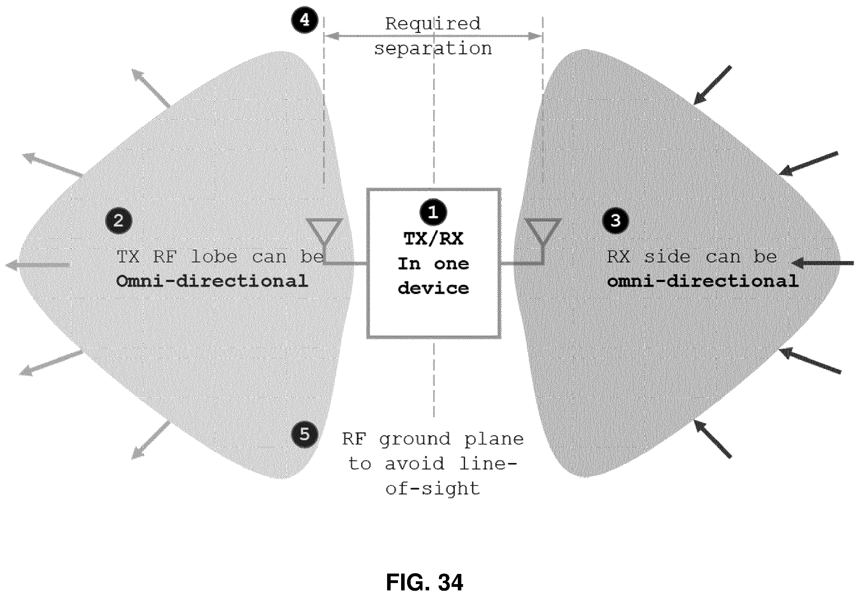

FIG. 34 illustrates a method for wireless monitoring based on a physical barrier arranged between a transmitter and a receiver, according to some embodiments of the present disclosure. In this example, the Tx and the Rx (or the Tx and Rx antennas) are collocated in one device with a certain separation distance and a barrier placed in between. In some embodiments, as shown in FIG. 34, the Tx may use an omni-directional antenna and the Rx may use an omni-directional antenna as well. Although both Tx and Rx use omni-directional antenna, the distance separation and the barrier arranged in between can help reduce or eliminate the impact of LOS component in the received wireless signal. An RF ground plan can avoid LOS, as LOS sometimes is not useful (or even harmful) for sensing tasks.

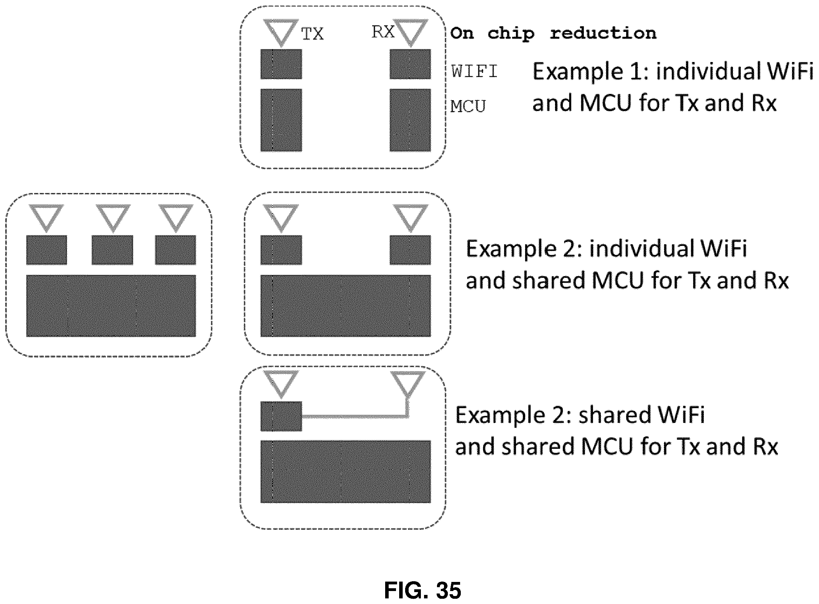

FIG. 35 illustrates examples for hardware configurations of a transmitter and a receiver in a wireless monitoring system, according to some embodiments of the present disclosure. In example 1, the Tx and the Rx in a wireless monitoring system use individual WiFi chips and individual MCU chips. In example 2, the Tx and the Rx in a wireless monitoring system use individual WiFi chips but one shared MCU chip to reduce chip cost. In example 3, the Tx and the Rx in a wireless monitoring system use one shared WiFi chip and one shared MCU chip to further reduce chip cost.

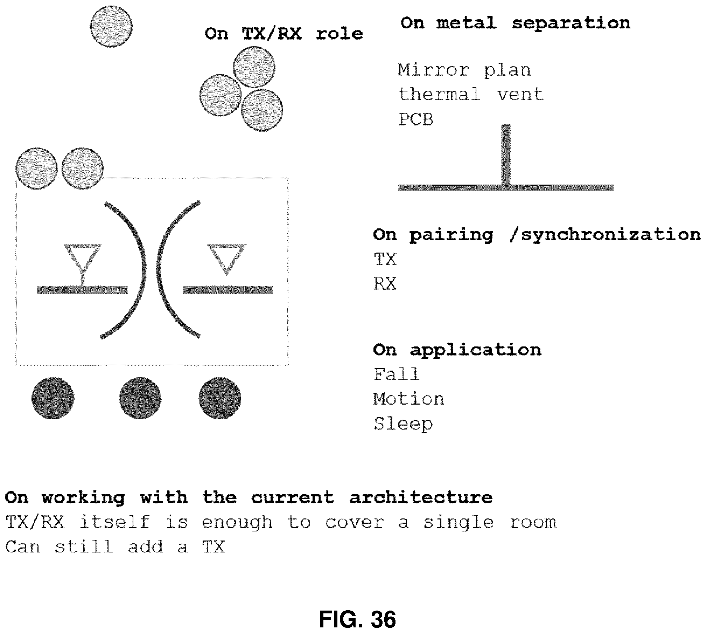

FIG. 36 illustrates examples of different aspects of transmitters and receivers in a wireless monitoring system, according to some embodiments of the present disclosure. The barrier may be made of metal. With a pairing and/or synchronization between the Tx and the Rx in a wireless monitoring system, the system can be used to detect: fall

**EP 3 978 949 A2**

events, motion, sleep status, etc. While a pair of Tx and Rx can be enough to cover a single room, additional Tx may be added to the system to improve performance or upon application requirement.

The following numbered clauses provide examples for wireless monitoring based on antenna arrangement with a physical barrier to enlarge the coverage area.

Clause G1. A method/system/software/device of a wireless monitoring system, comprising: transmitting a wireless signal from a Type1 heterogeneous wireless device through a wireless multipath channel of a venue based on a first processor, a first memory and a first set of instructions of the Type1 device, wherein the wireless multipath channel is impacted by a motion of an object in the venue; receiving the wireless signal by a Type2 heterogeneous wireless device through the wireless multipath channel based on a second processor, a second memory and a second set of instructions of the Type2 device, wherein the received wireless signal differs from the transmitted wireless signal due to the wireless multipath channel of the venue and the object motion, wherein the Type1 device and the Type2 device are in close proximity to each other, wherein a first antenna of the Type1 device and the Type2 device are separated by a physical barrier which interrupts a direct line-of-sight between the two devices; obtaining a time series of channel information (TSCI) of the wireless multipath channel based on the received wireless signal; computing a spatial-temporal information (STI) based on the TSCI; monitoring the object motion based on the TSCI and the STI; performing a task based on the monitoring; and generating a response based on the task.

Clause G2. The method/system/software/device of the wireless monitoring system of Clause G1: wherein the Type1 device and the Type2 device are communicatively coupled by at least one of: a wired communication link, a wired network connection, a communication port, a wired data link, an expansion bus, a bus connection, a parallel bus, a serial bus, a synchronous bus, an asynchronous bus, a bus connector, an interconnect, an internal bus, a computing bus, a memory bus, a system bus, a data bus, an address bus, and a control bus.

Clause G3. The method/system/software/device of the wireless monitoring system of Clause G1 of Clause G2: wherein the Type1 device and the Type2 device share at least one of: a shared memory device, a physical memory, a virtual memory, a random-access memory (RAM), a read-only memory (ROM), the first memory, the second memory, a volatile memory, a non-volatile memory, a non-removable memory, a removable memory, a network memory, a storage network, and a cloud memory.

Clause G4. The method/system/software/device of the wireless monitoring system of Clause G3: wherein the first memory and the second memory are the same memory.

Clause G5. The method/system/software/device of the wireless monitoring system according to any of Clauses G1-G4: wherein the Type1 device and the Type2 device share at least one of: a shared hardware, a circuit board, a hardware module, an integrated circuit (IC), an application specific IC (ASIC), a processor, a microprocessor, a central processing unit (CPU), a graphical processor, a graphics processing unit (GPU), a micro-controller, a microcontroller unit (MCU), a memory, a bus, a local area network (LAN) circuitry, an Ethernet controller, a wireless LAN circuitry, a wireless controller, a radio controller, a WiFi chip, a radio, an antenna, a mobile communication circuitry, or a 3G/4G/LTE/5G/6G/7G/8G chip.

Clause G6. The method/system/software/device of the wireless monitoring system of Clause G5: wherein a MCU of the Type1 device and a MCU of the Type2 device are the same MCU.

Clause G7. The method/system/software/device of the wireless monitoring system of Clause G6: wherein a wireless chip of the Type1 device and a wireless chip of the Type2 device are the same wireless chip.

Clause G8. The method/system/software/device of the wireless monitoring system of Clause G7: wherein an antenna of the Type1 device and an antenna of the Type2 device are the same antenna.

Clause G9. The method/system/software/device of the wireless monitoring system of Clause G7: wherein an enclosure of the Type1 device and an enclosure of the Type2 device are the same enclosure.

Clause G10. The method/system/software/device of the wireless monitoring system of Clause G9: wherein the Type1 device and the Type2 device are the same common device with a set of antennas; wherein a first antenna of the Type1 device and a second antenna of the Type2 device are separated by the physical barrier which interrupts the direct line-of-sight between the first and second antennas.

Clause G11. The method/system/software/device of the wireless monitoring system of Clause G10: wherein the second antenna of the Type2 device and a third antenna are separated by a second physical barrier which interrupts a direct line-of-sight between the second and third antennas.

Clause G12. The method/system/software/device of the wireless monitoring system of Clause G11: wherein the third antenna is associated with at least one of: the Type1 device, the Type2 device, another Type2 device receiving the wireless signal from the Type1 device, another Type1 device transmitting another wireless signal to the Type2 device, another wireless device communicating wirelessly with yet another wireless device, and a switchable source.

Clause G13. The method/system/software/device of the wireless monitoring system of Clause G11 of Clause G12: wherein five items comprising the first antenna, the second antenna, the third antenna, the physical barrier and the second physical barrier are arranged along a geometric line.

Clause G14. The method/system/software/device of the wireless monitoring system of Clause G13: wherein

111

an arrangement order of the five items along the geometric line is: the first antenna, the physical barrier, the second antenna, the second physical barrier, the third antenna.

Clause G15. The method/system/software/device of the wireless monitoring system of Clause G13: wherein an arrangement order of the five items along the geometric line is: the third antenna, the second physical barrier, the first antenna, the physical barrier, the second antenna.

Clause G16. The method/system/software/device of the wireless monitoring system of Clause G13: wherein an arrangement order of the five items along the geometric line is: the first antenna, the physical barrier, the third antenna, the second physical barrier, the second antenna.

Clause G17. The method/system/software/device of the wireless monitoring system according to any of Clauses G13-G16: wherein among the five items, a barrier is positioned near a mid-point between two adjacent devices along the geometric line.

Clause G18. The method/system/software/device of the wireless monitoring system according to any of Clauses G13-G17: wherein among the five items, a device is positioned near a mid-point between two adjacent barriers along the geometric line.

Clause G19. The method/system/software/device of the wireless monitoring system according to any of Clauses G13-G18: wherein the geometric line comprises at least one of: a straight line, a piecewise-linear line, a curve, a 2-dimensional (2D) curve, a 3-dimensional (3D) curve, a spiral, a helix, an arc, a part of a circle, a smooth curve, or a closed curve.

Clause G20. The method/system/software/device of the wireless monitoring system of Clause G11: wherein 3 items comprising the first antenna, the second antenna, and the third antenna are arranged in a triangle in a geometric plane.

Clause G21. The method/system/software/device of the wireless monitoring system of Clause G20: wherein the geometric plane is at an angle to another geometric plane associated with at least one of: a surface for mounting at least one of: the Type1 device, the Type2 device, or a third device associated with the third antenna, an enclosure of at least one of: the Type1 device, the Type2 device, or the third device, a circuit board of at least one of: the Type1 device, the Type2 device, or the third device, G22. The method/system/software/device of the wireless monitoring system of Clause G11: wherein the third antenna is associated with the Type1 device; wherein the third antenna is positioned next to the first antenna; wherein the physical barrier and the second barrier collectively separate the second antenna of the Type2 device from the first antenna and the third antenna of the Type1 device.

Clause G23. The method/system/software/device of the wireless monitoring system of Clause G10: wherein the first antenna of the Type1 device and a third antenna are separated by a second physical barrier which interrupts a direct line-of-sight between the first and third antennas; wherein the third antenna is associated with the Type2 device; wherein the third antenna is positioned next to the second antenna; wherein the physical barrier and the second barrier collectively separate the first antenna of the Type1 device from the second antenna and the third antenna of the Type2 device.

Clause G24. The method/system/software/device of the wireless monitoring system of Clause G22 or Clause G23: wherein the physical barrier and the second barrier are physically connected.

Clause G25. The method/system/software/device of the wireless monitoring system of Clause G20: wherein the physical barrier and the second barrier are the same barrier.

Clause G26. The method/system/software/device of the wireless monitoring system of Clause G11: wherein the first antenna and the third antenna are separated by a third physical barrier which interrupts a direct line-of-sight between the first and third antennas.

Clause G27. The method/system/software/device of the wireless monitoring system of Clause G26: wherein a fourth antenna and one of the first antenna, the second antenna and the third antenna are separated by a fourth physical barrier which interrupts a direct line-of-sight between the two antennas.

Clause G28. The method/system/software/device of the wireless monitoring system of Clause G10: wherein the same common device comprises at least four antennas arranged in a 3-dimensional constellation; wherein more than one pairs of the antennas are determined among the at least four antennas; wherein each particular pair of antennas are separated by a respective physical barrier that interrupts a direct line-of-sight between the pair of antennas.

Clause G29. The method/system/software/device of the wireless monitoring system of Clause G10 or Clause G28, further comprising: wherein a first subset of the set of antennas of the common device is associated with the Type1 device; wherein a second subset of the set of antennas of the common device is associated with the Type2 device, wherein the first subset of antennas and the second subset of antennas are separated, at least partially, by at least one physical barrier which interrupt a direct line-of-sight between the two subsets of antennas.

Clause G30. The method/system/software/device of the wireless monitoring system of Clause G29, further comprising: wherein a third subset of the set of antennas of the common device is associated with at least one of: another Type1 device of the common device, another Type2 device of the common device or another device of the common device; wherein the third subset of antennas and one of the first subset or the second subset of antennas are separated, at least partially, by at least one physical barrier which interrupts a direct line-of-sight between the two subsets of antennas.

Clause G31. The method/system/software/device of the wireless monitoring system of Clause G29 of Clause G30, further comprising: wherein a first antenna of the first subset and a second antenna of the first subset of antennas are separated by a physical barrier which interrupts a direct line-of-sight between the two antennas.

Clause G32. The method/system/software/device of the wireless monitoring system according to any of Clauses G29-G31, further comprising: wherein a first antenna of the second subset and a second antenna of the second subset of antennas are separated by a physical barrier which interrupts a direct line-of-sight between the two antennas.

Clause G33. The method/system/software/device of the wireless monitoring system of Clause G11: wherein the first antenna of the device and the third antenna of the device are separated by a third physical barrier which interrupts a direct line-of-sight between the first and third antennas.

Clause G34. The method/system/software/device of the wireless monitoring system of Clause G11 of Clause G33: wherein at least two of: the physical barrier, the second physical barrier or a third physical barrier separating the first and third antennas, are physically connected.

Clause G35. The method/system/software/device of the wireless monitoring system of Clause G11: wherein at least two of: the physical barrier, the second physical barrier, or a third physical barrier separating the first and third antennas, have a similar physical characteristics.

Clause G36. The method/system/software/device of the wireless monitoring system of Clause G11: wherein at least two of: the physical barrier, the second physical barrier, or a third physical barrier separating the first and third antennas, are the same physically barrier.

Clause G37. The method/system/software/device of the wireless monitoring system of Clause G11: wherein at least one of the physical barrier, the second physical barrier or a third physical barrier separating the first and third antennas, is an extension of a structural element of the device; wherein the structural element comprises at least one of: an enclosure, a board, a circuit board, an electronic element of the circuit board, a heat sink, a bracket, a metal plate.

Clause G38. The method/system/software/device of the wireless monitoring system of Clause G36: wherein both the physical barrier and the second physical barrier are extensions of the structural element of the device.

Clause G39. The method/system/software/device of the wireless monitoring system of Clause G36: wherein the physical barrier, the second physical barrier and the third physical barrier are extensions of the structural element of the device.

Clause G40. The method/system/software/device of the wireless monitoring system according to any of Clauses G1-G39: wherein a first antenna of the Type1 device and a second antenna of the Type2 device are separated by the physical barrier which interrupts the direct line-of-sight between the first and second antennas.

Clause G41. The method/system/software/device of the wireless monitoring system according to any of Clause G1-G40: wherein at least one of the first antenna, the second antenna, or the physical barrier is either an integrated component or detachable component of at least one of: a composite device, a machine, or an integrated system of interconnected devices.

Clause G42. The method/system/software/device of the wireless monitoring system of Clause G41: wherein two of the Type1 device, the Type2 device and the physical barrier are either integrated components or detachable components of at least one of: the composite device, the machine, or the integrated system of interconnected devices.

Clause G43. The method/system/software/device of the wireless monitoring system of Clause G42: wherein all of the Type1 device, the Type2 device and the physical barrier are either integrated components or detachable components of at least one of: the composite device, the machine, or the integrated system of interconnected devices.

Clause G44. The method/system/software/device of the wireless monitoring system according to any of Clauses G1-G43: wherein the Type1 device or the Type2 device comprises at least one of: an omni-directional antenna, a directional antenna, an array of antennas, a phased array antenna, a monopole antenna, a dipole antenna, a constellation of antennas, or a collection of antennas.

Clause G45. The method/system/software/device of the wireless monitoring system of Clause G9: wherein an antenna of the Type1 device is of an antenna type same as that of an antenna of the Type2 device.

Clause G46. The method/system/software/device of the wireless monitoring system of Clause G9: wherein an antenna of the Type1 device is of an antenna type different from that of an antenna of the Type2 device.

Clause G47. The method/system/software/device of the wireless monitoring system according to any of Clauses G1-G46: wherein one of: the Type1 or the Type2 device comprises more than one antennas.

Any device (e.g., Origin 1104, Bot 1 1102A, Bot 2 1102B) may provide location information, through GPS, MAC layer, PHY layer, Wi-Fi, an IEEE 802.11 standard, 802.11a/b/g/n/ac/ad/af/ag/ah/ai/aj/aq/ax/ay, Bluetooth, Bluetooth 1.0/1.1/1.2/2.0/2.1/3.0/4.0/4.1/ 4.2/5, BLE, mesh network, an IEEE 802.16/1/1a/1b/2/2a/a/b/c/d/e/f/g/h/i/j/k/l/m/n/o/p/, standard, 802.16, Zigbee, WiMax, UWB, mobile channel, 1G/2G/3G/3.SG/4G/LTE/SG/6G/7G/NBIoT, etc.

The symbol "/" disclosed herein means "and/or". For example, "A/B" means "A and/or B." The present teaching is about a method, apparatus, device, system and/or software of a wireless monitoring system. In one embodiment, the system comprises a number of wireless devices placed in respective positions of a venue working together to monitor a motion of an object in the venue based on wireless signals.

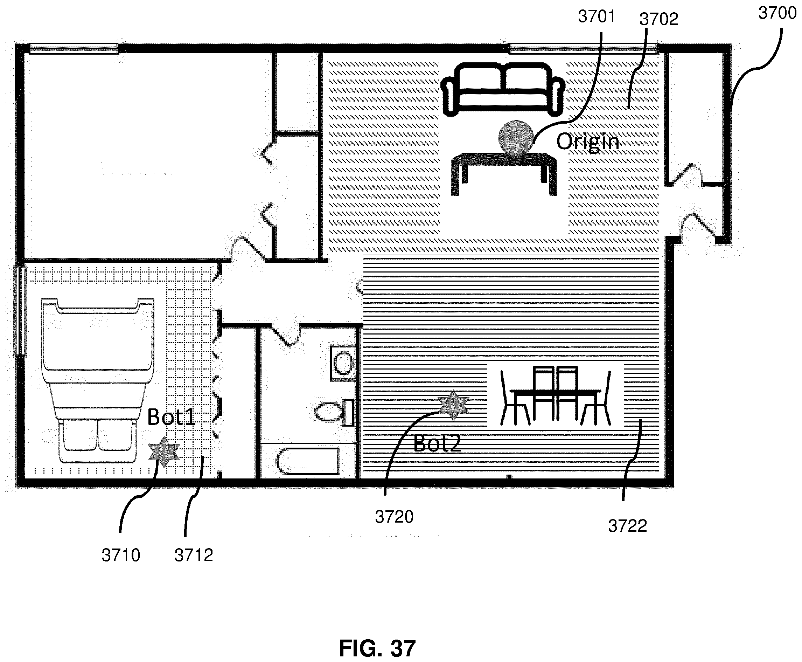

FIG. 37 illustrates an exemplary scenario where object motion is detected based on channel state information in a venue, according to one embodiment of the present teaching. For example, as shown in FIG. 37, in a 2-bedroom apartment 3700, Origin 3701 may be placed in the living-room area 3702, Bot 1 3710 may be placed in a bedroom1-area 3712, and Bot 2 3720 may be placed in the dining-room area 3722. Each of Bot 1 3710 and Bot 2 3720 can transmit a wireless signal to the Origin 3701, which can obtain channel information of a wireless multipath channel based on the wireless signal. The Origin 3701, by itself or through a third device like a motion detector, can compute motion information based on the channel information and detect object motion/activity based on the motion information. That is, the Origin 3701, by itself or through a third device like a motion detector, can detect object motion/activity based on wireless signals transmitted by Bot 1 3710 and/or Bot 2 3720.

If object motion/activity is detected based on wireless signals transmitted by both Bot 1 3710 and Bot 2 3720, the activity/motion or the object (e.g. person/user) may be in the living-room area 3702. If object motion/activity is detected based only on wireless signals transmitted by Bot 1 3710, the activity/motion or the object (e.g. person/user) may be in the bedroom-1 area 3712. If object motion/activity is detected based only on wireless signals transmitted by Bot 2 3720, the activity/motion or the object (e.g. person/user) may be in the dining-room area 3722. If object motion/activity cannot be detected based on wireless signals transmitted by either Bot 1 3710 or Bot 2 3720, then it may be determined that nobody and no object is in the apartment 3700. The corresponding area where the activity/motion/person/user is detected may be marked with a predetermined pattern.

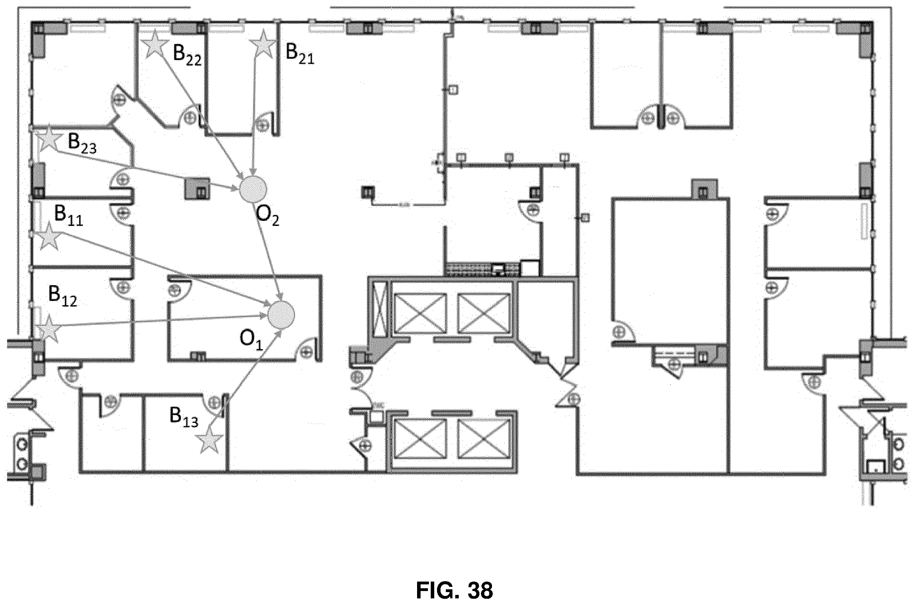

FIG. 38 illustrates an exemplary floor plan and placement of wireless devices for wireless monitoring with motion detection and localization, according to some embodiments of the present disclosure. In the example shown in FIG. 38, there are two origins O1 and O2. Each origin is associated with three bots. For example, O1 is associated with bots B11, B12, and B13; and O2 is associated with bots B21, B22, and B23. Each device of the bots and origins is fixed at a different location. In one embodiment, the origin O1 is called a master origin; and the origin O2 is called a child origin, where the child origin can transmit statistics and information to the master origin for combination.

In some embodiments, the floor plan and placement of wireless devices in FIG. 38 can be used to perform multi-person or multi-object motion localization based on motion statistics. When there are two or more origins, motion statistics measured from different links of different origins are combined to contribute together to the motion localization. For each activated bot, it is determined which origin the bot is associated with, e.g. based on a smoothed motion statistics in a time window. For example, when the smoothed motion statistics of Bot k with respect to Origin j is larger than a threshold, Bot k is determined to be associated with Origin j. The same threshold can be used for other origins. Thus, for each origin, a set of activated bots associated with the origin can be determined. A likelihood is calculated for each activated bot k to detect a motion, and is smoothed over a time window. For each origin group including an origin and its associated bots, an average motion statistics is computed for the origin group across all the associated bots. Each calculation or computation above can be performed at the origin or the bot.

When there is any motion detected in the environment, an origin group with the highest average motion statistics is chosen. When the average motion statistics of the chosen origin group is larger than a threshold, the motion is determined to be around the origin of the group. Otherwise, when the average motion statistics of the chosen origin group is not larger than a threshold, the motion is determined to be around the bot with the highest likelihood within the origin group.

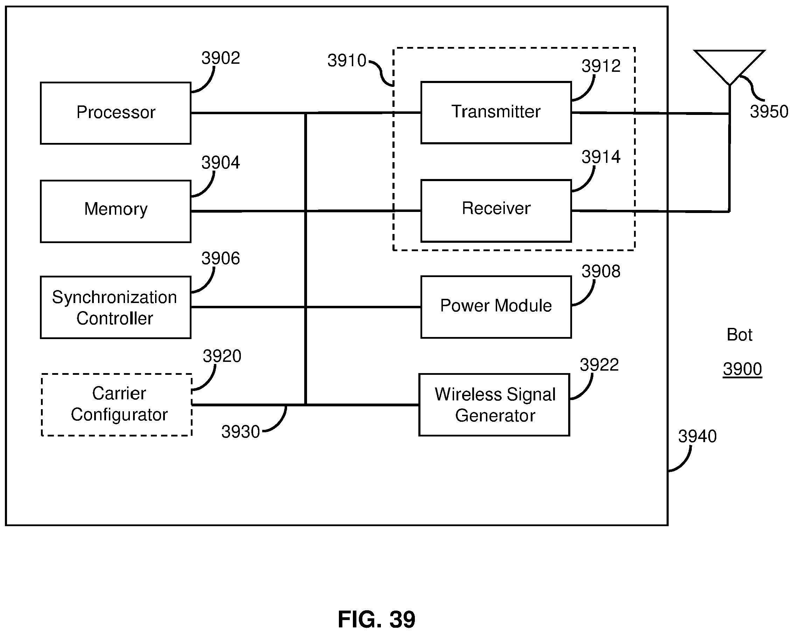

FIG. 39 illustrates an exemplary block diagram of a first wireless device, e.g. a Bot 3900, of a wireless monitoring system, according to one embodiment of the present teaching. The Bot 3900 is an example of a device that can be configured to implement the various methods described herein. As shown in FIG. 39, the Bot 3900 includes a housing 3940 containing a processor 3902, a memory 3904, a transceiver 3910 comprising a transmitter 3912 and receiver 3914, a synchronization controller 3906, a power module 3908, an optional carrier configurator 3920 and a wireless signal generator 3922.

In this embodiment, the processor 3902 controls the general operation of the Bot 3900 and can include one or more processing circuits or modules such as a central processing unit (CPU) and/or any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable circuits, devices and/or structures that can perform calculations or other manipulations of data.

The memory 3904, which can include both read-only memory (ROM) and random access memory (RAM), can provide instructions and data to the processor 3902. A portion of the memory 3904 can also include non-volatile random access memory (NVRAM). The processor 3902 typically performs logical and arithmetic operations based on program instructions stored within the memory 3904. The instructions (a.k.a., software) stored in the memory 3904 can be executed by the processor 3902 to perform the methods described herein. The processor 3902 and the memory 3904 together form a processing system that stores and executes software. As used herein, "software" means any type of instructions, whether referred to as software, firmware, middleware, microcode, etc. which can configure a machine or device to perform one or more desired functions or processes. Instructions can include code (e.g., in source code format, binary code format, executable code format, or any other suitable format of code). The instructions, when executed by the one or more processors, cause the processing system to perform the various functions described herein.

The transceiver 3910, which includes the transmitter 3912 and receiver 3914, allows the Bot 3900 to transmit and receive data to and from a remote device (e.g., an Origin or another Bot). An antenna 3950 is typically attached to the housing 3940 and electrically coupled to the transceiver 3910. In various embodiments, the Bot 3900 includes (not shown) multiple transmitters, multiple receivers, and multiple transceivers. In one embodiment, the antenna 3950 is replaced with a multi-antenna array 3950 that can form a plurality of beams each of which points in a distinct direction. The transmitter 3912 can be configured to wirelessly transmit signals having different types or functions, such signals being generated by the processor 3902. Similarly, the receiver 3914 is configured to receive wireless signals having different types or functions, and the processor 3902 is configured to process signals of a plurality of different types.

The Bot 3900 in this example may serve as a Bot or transmitter in any system disclosed herein, e.g. the Bot 1411 in FIG. 14 for recognizing a person in a venue , the Bot 1711 in FIG. 17 for sound sensing in a venue, the Bot 1 3710 or Bot 2 3720 in FIG. 37 for detecting object motion in a venue, or a transmitter, or Tx, or Bot in any one of FIGS. 23-28 for monitoring motions in a venue. For example, the wireless signal generator 3922 may generate and transmit, via the transmitter 3912, a wireless signal through a wireless multipath channel impacted by a motion of an object in the venue. The wireless signal carries information of the channel. Because the channel was impacted by the motion, the channel information includes motion information that can represent the motion of the object. As such, the motion can be indicated and detected based on the wireless signal. The generation of the wireless signal at the wireless signal generator 3922 may be based on a request for motion detection from another device, e.g. an Origin, or based on a system pre-configuration. That is, the Bot 3900 may or may not know that the wireless signal transmitted will be used to detect motion.

The synchronization controller 3906 in this example may be configured to control the operations of the Bot 3900 to be synchronized or un-synchronized with another device, e.g. an Origin or another Bot. In one embodiment, the synchronization controller 3906 may control the Bot 3900 to be synchronized with an Origin that receives the wireless signal transmitted by the Bot 3900. In another embodiment, the synchronization controller 3906 may control the Bot 3900 to transmit the wireless signal asynchronously with other Bots. In another embodiment, each of the Bot 3900 and other Bots may transmit the wireless signals individually and asynchronously.

The carrier configurator 3920 is an optional component in Bot 3900 to configure transmission resources, e.g. time and carrier, for transmitting the wireless signal generated by the wireless signal generator 3922. In one embodiment, each CI of the time series of CI has one or more components each corresponding to a carrier or sub-carrier of the transmission of the wireless signal. The detection of the motion may be based on motion detections on any one or any combination of the components.

The power module 3908 can include a power source such as one or more batteries, and a power regulator, to provide regulated power to each of the above-described modules in FIG. 39. In some embodiments, if the Bot 3900 is coupled to a dedicated external power source (e.g., a wall electrical outlet), the power module 3908 can include a transformer and a power regulator.

The various modules discussed above are coupled together by a bus system 3930. The bus system 3930 can include a data bus and, for example, a power bus, a control signal bus, and/or a status signal bus in addition to the data bus. It is understood that the modules of the Bot 3900 can be operatively coupled to one another using any suitable techniques and mediums.

Although a number of separate modules or components are illustrated in FIG. 39, persons of ordinary skill in the art will understand that one or more of the modules can be combined or commonly implemented. For example, the processor 3902 can implement not only the functionality described above with respect to the processor 3902, but also implement the functionality described above with respect to the wireless signal generator 3922. Conversely, each of the modules illustrated in FIG. 39 can be implemented using a plurality of separate components or elements.

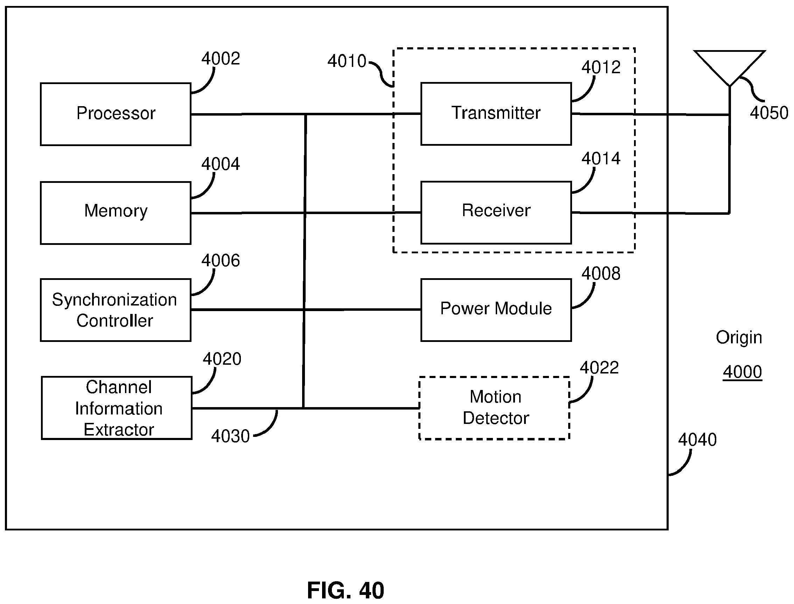

FIG. 40 illustrates an exemplary block diagram of a second wireless device, e.g. an Origin 4000, of a wireless monitoring system, according to one embodiment of the present teaching. The Origin 4000 is an example of a device that can be configured to implement the various methods described herein. The Origin 4000 in this example may serve as an Origin or receiver in any system disclosed herein, e.g. the Origin 1412 in FIG. 14 for wirelessly human recognition in a venue, the Origin 1712 in FIG. 17 for wirelessly sound sensing in a venue, the Origin 3701 in FIG. 37 for detecting object motion in a venue, or a receiver, or Rx, or Origin in any one of FIGS. 23-28 for wireless motion monitoring in a venue. As shown in FIG. 40, the Origin 4000 includes a housing 4040 containing a processor 4002, a memory 4004, a transceiver 4010 comprising a transmitter 4012 and a receiver 4014, a power module 4008, a synchronization controller 4006, a channel information extractor 4020, and an optional motion detector 4022.

In this embodiment, the processor 4002, the memory 4004, the transceiver 4010 and the power module 4008 work similarly to the processor 3902, the memory 3904, the transceiver 3910 and the power module 3908 in the Bot 3900. An antenna 4050 or a multi-antenna array 4050 is typically attached to the housing 4040 and electrically coupled to the transceiver 4010.

The Origin 4000 may be a second wireless device that has a different type from that of the first wireless device (e.g. the Bot 3900). In particular, the channel information extractor 4020 in the Origin 4000 is configured for receiving the wireless signal through the wireless multipath channel impacted by the motion of the object in the venue, and obtaining a time series of channel information (CI) of the wireless multipath channel based on the wireless signal. The channel information extractor 4020 may send the extracted CI to the optional motion detector 4022 or to a motion detector outside the Origin 4000 for detecting object motion in the venue.

The motion detector 4022 is an optional component in the Origin 4000. In one embodiment, it is within the Origin 4000 as shown in FIG. 40. In another embodiment, it is outside the Origin 4000 and in another device, which may be a Bot, another Origin, a cloud server, a fog server, a local server, and an edge server. The optional motion detector 4022 may be configured for detecting the motion of the object in the venue based on motion information related to the motion of the object. The motion information associated with the first and second wireless devices is computed based on the time series of CI by the motion detector 4022 or another motion detector outside the Origin 4000.

The synchronization controller 4006 in this example may be configured to control the operations of the Origin 4000 to be synchronized or un-synchronized with another device, e.g. a Bot, another Origin, or an independent motion detector. In one embodiment, the synchronization controller 4006 may control the Origin 4000 to be synchronized with a Bot that transmits a wireless signal. In another embodiment, the synchronization controller 4006 may control the Origin 4000 to receive the wireless signal asynchronously with other Origins. In another embodiment, each of the Origin 4000 and other Origins may receive the wireless signals individually and asynchronously. In one embodiment, the optional motion detector 4022 or a motion detector outside the Origin 4000 is configured for asynchronously computing respective heterogeneous motion information related to the motion of the object based on the respective time series of CI.

The various modules discussed above are coupled together by a bus system 4030. The bus system 4030 can include a data bus and, for example, a power bus, a control signal bus, and/or a status signal bus in addition to the data bus. It is understood that the modules of the Origin 4000 can be operatively coupled to one another using any suitable techniques and mediums.

Although a number of separate modules or components are illustrated in FIG. 40, persons of ordinary skill in the art will understand that one or more of the modules can be combined or commonly implemented. For example, the processor 4002 can implement not only the functionality described above with respect to the processor 4002, but also implement the functionality described above with respect to the channel information extractor 4020. Conversely, each of the modules illustrated in FIG. 40 can be implemented using a plurality of separate components or elements.

In one embodiment, in addition to the Bot 3900 and the Origin 4000, the system may also comprise: an assistance device, a third wireless device, e.g. another Bot, configured for transmitting an additional heterogeneous wireless signal through an additional wireless multipath channel impacted by the motion of the object in the venue, or a fourth wireless device, e.g. another Origin, that has a different type from that of the third wireless device. The fourth wireless device may be configured for: receiving the additional heterogeneous wireless signal through the additional wireless multipath channel impacted by the motion of the object in the venue, and obtaining a time series of additional channel information (CI) of the additional wireless multipath channel based on the additional heterogeneous wireless signal. The additional CI of the additional wireless multipath channel is associated with a different protocol or configuration from that associated with the CI of the wireless multipath channel. For example, the wireless multipath channel is associated with LTE, while the additional wireless multipath channel is associated with Wi-Fi. In this case, the optional motion detector 4022 or a motion detector outside the Origin 4000 is configured for detecting the motion of the object in the venue based on both the motion information associated with the first and second wireless devices and additional motion information associated with the third and fourth wireless devices computed by at least one of: an additional motion detector and the fourth wireless device based on the time series of additional CI.

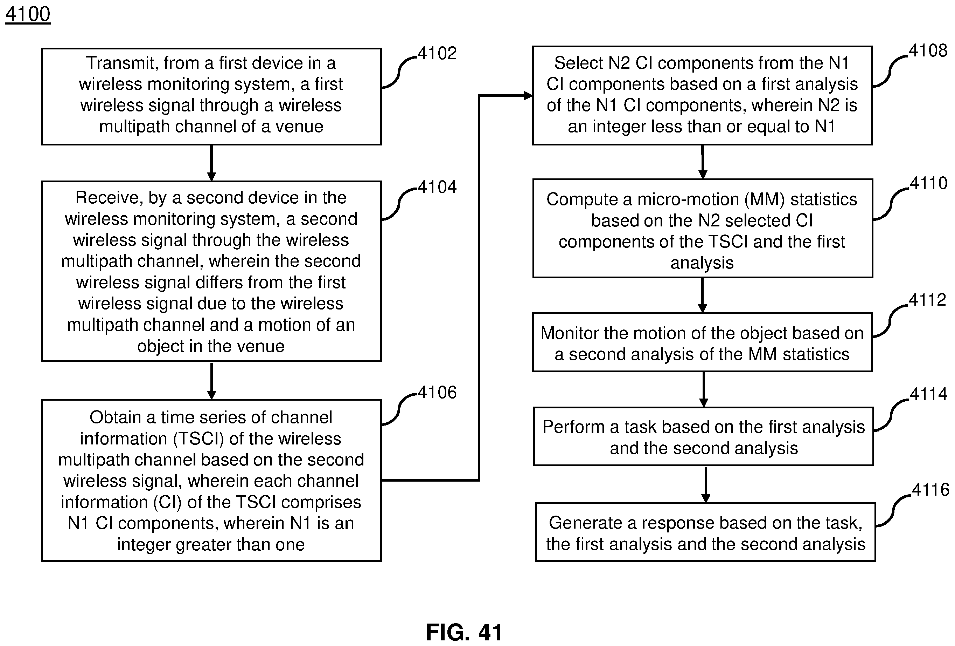

FIG. 41 illustrates a flow chart of an exemplary method 4100 for wireless micro motion monitoring, according to some embodiments of the present teaching. At operation 4102, a first wireless signal is transmitted from a first device in a wireless monitoring system through a wireless multipath channel of a venue. At operation 4104, a second wireless signal is received by a second device in the wireless monitoring system through the wireless multipath channel, where the second wireless signal differs from the first wireless signal due to the wireless multipath channel and a motion of an object in the venue. At operation 4106, a time series of channel information (TSCI) of the wireless multipath channel is obtained based on the second wireless signal, wherein each channel information (CI) of the TSCI comprises N1 CI components, wherein N1 is an integer greater than one. At operation 4108, N2 CI components are selected from the N1 CI components based on a first analysis of the N1 CI components, wherein N2 is an integer less than or equal to N1. At operation 4110, a micro-motion (MM) statistics is computed based on the N2 selected CI components of the TSCI and the first analysis. At operation 4112, the motion of the object is monitored based on a second analysis of the MM statistics. At operation 4114, a task is performed based on the first analysis and the second analysis. At operation 4116, a response is generated based on the task, the first analysis and the second analysis. The order of the operations in FIG. 41 may be changed according to various embodiments of the present teaching.

In some embodiments, a disclosed system can compute micro-motion (MM) statistics based on TSCI and use the MM statistics to perform at least one of the following: motion detection (e.g. light/medium/ large motion detection or determination), breathing detection (e.g. light/heavy breathing detection or determination), presence detection (e.g. presence, presence in different "zones" associated with different distance, distance range, or orientation (e.g. sectors) from the Type1 or Type2 device), activity/inactivity detection (e.g. activity location, activity level, inactive, presence), sleep status tracking (e.g. time to bed and wake up, frequent motion during sleep), and other wireless sensing task (e.g. fall down detection, vital sign detection, heart beat detection, tracking) based on micro motion (MM).

In some embodiments, each CI (e.g. CSI, CFR, CIR) or its transform may have many components (e.g. subcarrier of CFR, taps of CIR). Components of a CI (or its transform) may be called CI-components. Some examples of transform of CI include: transform of CIR may be CFR; transform of CFR may be CIR. The transform may be a transform of the CI, a feature of the CI, a transform of the feature of the CI, or a second feature of the transform. The feature may be a magnitude, a phase, or a first function of the CI, the magnitude or the phase, etc. The transform may be a second feature of the transform, with the second feature being magnitude, phase or a second function of the transform, its magnitude, or its phase. The transform may be (i) a transform of a feature of the CI, or (ii) another feature of the transform in (i). The feature may be magnitude, phase, a function of the CI component, the magnitude or the phase, etc. The another feature may be magnitude, phase, another function of the transform, the magnitude or the phase, etc. Other transforms may be Fourier transform/FFT, Cosine transform, Sine transform, trigonometric transform, Hadamard transform, sparse transform, graph-based transform, decomposition, frequency decomposition, time/time-domain decomposition, time-frequency decomposition, over-complete projection, matching pursuit, principal component analysis/PCA, eigen-analysis, independent component analysis/ICA, singular value decomposition/SVD, dimension reduction, orthogonal projection, vector quantization, neural network, etc.

In some embodiments, a window of CI may have many components, e.g. autocorrelation function/ACF of the window of CI, ACF of a group of CI-components (or features of the CI components), ACF of each CI-component (or a feature of each CI-component). The components of a window of CI may be called CI-window-components. The feature may be magnitude, phase, a function of the CI component, the magnitude or the phase, etc. The ACF of the group of CI-components may be a weighted average of a group of ACF, each weight being ACF of a CI-component, a normalized ACF of a CI-component, a function of the ACF of a CI-component, a function of a CI-component, the magnitude or the phase, etc.

In some embodiments, the micro motion (MM) may be computed by performing at least one of the following: computing CI-components or CI-window-components; computing an intermediate statistics (i.e. the MM statistics) based on the CI-components or the CI-window-components, or a function of them; detecting motion if MM exceeds a threshold; analyzing MM in a sliding time window to compute a periodic characteristics (e.g. a frequency, period, a function of it, etc.); analyzing the periodic characteristics to compute a real-time performance statistics, such as mean, arithmetic mean, geometric mean, harmonic mean, trimmed mean, percentile, mode, median, range, statistics, histogram, stationarity, steadiness, variance, standard deviation, variation, derivative, slope, total variation, absolute variation, square variation, spread, dispersion, variability, deviation, absolute deviation, square deviation, total deviation, divergence, range, interquartile range, skewness, kurtosis, L-moment, coefficient of variation, quartile coefficient of dispersion, mean absolute difference, Gini coefficient, relative mean difference, median absolute deviation, average absolute deviation, distance standard deviation, coefficient of dispersion, entropy, variance-to-mean ratio, maximum-to-minimum ratio, variation measure, regularity measure, similarity measure, likelihood, probability distribution function, sample distribution, moment generating function, expected value, expected function, etc.; or analyzing the periodic characteristics and/or the real-time performance statistics to compute a repeatedness, periodicity, pseudo-periodicity, impulsiveness, suddenness, fall-down occurrence, recurrence, transient event, behavior, transient behavior, period, time trend, temporal profile, temporal characteristics, occurrence, time, timing, starting time, initiating time, ending time, duration, history, motion classification, motion type, change, temporal change, frequency change, CI change, DI change, timing change, gait cycle change.

In some embodiments, a motion statistics (MS) $\phi(f)$ on each subcarrier $f$ may be defined as $\phi(f) = \rho_G(\tau = \frac{1}{F_s}, f)$, where $\rho_G(\tau, f)$ is the autocorrelation function (ACF) of the CI power response measurement $G(t, f)$. A composite MS of all $N_1$ component MS $\phi(f)$ may be defined as a weighted average of the component MS: $\Phi = \sum_{f=1}^{N_1} w_0(f)\phi(f)$. Since the frequency response may vary across different subcarriers, some subcarriers may be more sensitive than the others to motion. When the motion strength is very small (small-scale/micro motion), using the composite MS of all the $N_1$ component MS $\phi(f)$ may result in too small MS to trigger motion detection. It is better to select a subset of "more sensitive" subcarriers and calculate MS based on the "more sensitive" subcarriers so as to better characterize the micro motion. Mathematically, one may sort all $\phi(f)$ and select $N_2$ subcarriers with the $N_2$ highest $\phi(f)$. Accordingly, a micro motion (MM) statistics can be defined as $\hat{\Phi} = \Sigma_{f \in Fs} \, w(f) \phi(f)$, where $w(f) = \frac{\phi(f)}{\Sigma_{f \in Fs} \phi(f)}$ is the weight based on maximal ratio combining that can further boost the sensitive subcarriers. In some embodiments, $N_2$ is about 20% of $N_1$.

In some embodiments, for a time window of T and a threshold $\eta$, micro motion is detected when $\frac{1}{T}\sum_{t=1}^{T} \hat{\Phi}(t) > \eta$ ; otherwise, no motion is detected. In some embodiments, parameters $N_2$, $T$, $\eta$ can be tunable to achieve good performance in different environments. In general, the smaller $N_2$ is, the higher value $\hat{\phi}$ will be obtained, and thus the more sensitive this MM will be. For applications such as Child Presence Detection in a relatively clean environment, a small $N_2$ can be used; while in more noisy environments, a larger $N_2$ is preferred. In some embodiment, $N_2$ is within 20 in practice. $T$ is the average window for $\hat{\Phi}$, which is usually in the range of a few seconds. A larger $T$ could be applied for a noisier environment, while a smaller $T$ is recommended for a more sensitive detection. In some embodiments, $\eta$ can be accordingly adjusted with respect to $N_2$, and/or may be determined empirically by examining the micro motion for empty periods, which could be done automatically.

Some exemplary rules for automatic determination of the thresholds are as follows. One may explore periods, with a minimum length of W, that satisfy one or more of the following conditions. First, no single value of MS is larger than $Th_\Phi$, which may be a conservatively large value, e.g., 0.2. Second, no single value of micromotion (MM) is larger than $h_{\hat{\Phi}}$ , which may be a conservatively large value, e.g., 0.4. Third, no single value of the standard deviation of MM is larger than $\sigma_{\hat{\phi}}$. In some embodiments, such periods may be identified as empty periods, and the threshold for micromotion will be accordingly determined automatically as the maximum value of MM within the window. A margin M may also be added to tolerate some noises. Then, the final threshold for micromotion would be $\eta$ = max (micromotion values within window W) + $M$.

Based on the micro motion detection methods disclosed herein, a system can detect tiny motions that cannot be detected by regular motion statistics. The tiny motions include but not limited to: occasional hand/head or other body motions while a user is quasi-still (e.g., watching TV in a couch); and motions caused by chest movement of breathing. The micro motion detection system disclosed herein can detect the "breathing" motion of a baby doll reliably. While there could be other metrics (e.g., variance) that can be used to detect small motions, the micro motion detection system is theoretically optimal as it employs maximal ratio combining (MRC) to boost the motion statistics.

In some embodiments, a motion detection/monitoring system may first try to detect a normal motion in a venue. If no normal motion is detected, the system can further detect micro motion (MM) based on methods disclosed herein to determine a quasi-static presence of an object, e.g. a person staying still (breathing, reading, watching TV etc.), a baby left in a car with sporadic movement/breathing, which cannot be detected by normal motion statistics.

The following numbered clauses provide implementation examples for wirelessly monitoring micro motions of objects.

Clause H1. A system for wireless motion monitoring, comprising: a transmitter configured for transmitting a first wireless signal through a wireless multipath channel of a venue; a receiver configured for receiving a second wireless signal through the wireless multipath channel, wherein the second wireless signal differs from the first wireless signal due to the wireless multipath channel and a motion of an object in the venue; and a processor configured for: obtaining a time series of channel information (TSCI) of the wireless multipath channel based on the second wireless signal, wherein each channel information (CI) of the TSCI comprises N1 CI components, wherein N1 is an integer greater than one, selecting N2 CI components from the N1 CI components based on a first analysis of the N1 CI components of the TSCI, wherein N2 is an integer less than or equal to N1, computing a micro-motion (MM) statistics based on the N2 selected CI components of the TSCI and the first analysis, monitoring the motion of the object based on a second analysis of the MM statistics, performing a task based on the first analysis and the second analysis, and generating a response based on the task, the first analysis and the second analysis.

Clause H2. The system of Clause H1, wherein the processor is further configured for: computing N1 component MM statistics each associated with a respective CI component of the TSCI, wherein the N2 CI components are selected based on the N1 component MM statistics.

Clause H3. The system of Clause H2, wherein the component MM statistics associated with a CI component of the TSCI comprises at least one of: an autocorrelation function of a feature of the CI component; an autocovariance function of the feature of the CI component; a temporal filtering of the feature of the CI component; a temporal processing of the feature of the CI component; a weighted averaging of the feature of the CI component, wherein at least one of: the autocorrelation function, the autocovariance function, the temporal filtering, the temporal processing or the weighted averaging of the feature of the CI component is based on a sliding window of the CI component of the TSCI; a dot product of the feature of the CI component; or a sum, weighted sum, difference, weighted difference, product, weighted product, quotient, weighted quotient, or bivariate function of two temporal neighbors of the feature of the CI component, wherein the feature of the CI component comprises at least one of: the CI component itself, its magnitude, magnitude square, phase, real component, imaginary component, derivative, temporal derivative, inter-component derivative, gradient, temporal gradient, inter-component gradient, or a univariate function of any of preceding features of the feature.

Clause H4. The system of Clause H2 or Clause H3, wherein the N2 CI components are selected as CI components associated with one of the following: first N2 of the N1 component MM statistics; last N2 of the N1 component MM statistics; a contiguous N2 of the N1 component MM statistics; a contiguous N2 of the N1 component MM statistics of which a function of N2 features each being associated with a respective one of the contiguous N2 component MM statistics is at least one of: maximum, minimum, zero, equal to a pre-determined value, greater than a first threshold, or smaller than a second threshold; first N2 of N1 sorted component MM statistics; last N2 of the N1 sorted component MM statistics; a contiguous N2 of the N1 sorted component MM statistics; or a contiguous N2 of the N1 sorted component MM statistics of which the function of N2 features each being associated with a respective one of the contiguous N2 sorted component MM statistics is at least one of: maximum, minimum, zero, equal to the pre-determined value, greater than a third threshold, or smaller than a fourth threshold, wherein: each feature comprises at least one of: index, index before sorting, index after sorting, magnitude, magnitude square, phase, real component, imaginary component, derivative, temporal derivative, inter-component derivative, gradient, temporal gradient, inter-component gradient, or a univariate function of any of preceding features of the feature, the univariate function comprises at least one of: linear function, nonlinear function, square, cube, polynomial, exponential function, logarithmic function, inverse function, or rational function, the function comprises at least one of: aggregation, sum, weighted sum, product, weighted product, mean, median, variance, coverage measure, maximum, minimum, local maximum, or local minimum, the N1 sorted component MM statistics are the N1 component MM statistics sorted with respect to one of the following: index, magnitude, phase, real component, imaginary component, or the univariate function of any of preceding features of the feature.

Clause H5. The system of Clause H4, wherein the processor is further configured for: computing the MM statistics based on an aggregate of the N2 component MM statistics associated with the N2 selected CI components, wherein the aggregate comprises at least one of: a representative value, a weighted function, a weighted sum, a weighted mean, weighted median, weighted product, or an aggregate of any of preceding aggregates.

Clause H6. The system of Clause H5, wherein the processor is further configured for: computing the aggregate based on a weighted quantity with N2 weights for the N2 component MM statistics, wherein the weighted quantity is one of: a weighted sum, weighted mean, weighted geometric mean, weighted harmonic mean, or weighted median, wherein the N2 weights are computed based on at least one of: a magnitude, phase, or sign of the N2 component MM statistics.

Clause H7. The system of Clause H6, wherein the weights are monotonic non-decreasing with respect to the magnitude of the component MM statistics.

Clause H8. The system according to any of Clauses H5-H7, wherein the processor is further configured for: detecting a MM of the motion of the object when the MM statistics is greater than a fifth threshold; detecting the motion of the object when a motion statistics computed based on the TSCI is greater than a sixth threshold; and determining a presence of the object when the MM statistics is greater than a seventh threshold and when the motion statistics is greater than an eighth threshold.

Clause H9. The system of Clause H8, wherein: the fifth threshold, the sixth threshold, the seventh threshold and the eighth threshold are different from each other.

Clause H10. The system of Clause H8 or Clause H9, wherein the processor is further configured for performing at least one of: detecting a breathing or a heartbeat of the object by detecting a pseudo-periodic behavior of at least one of: the MM statistics or the motion statistics; computing a breathing rate or a heart rate of the object by analyzing a frequency or timing of the pseudo-periodic behavior of the MM statistics or the motion statistics; computing a sleep state or a sleep analytics based on at least one of: the breathing rate, the heart rate, the MM statistics, or the motion statistics; detecting a fall-down motion, a state, a condition, a change or an emergency of the object by computing and analyzing a speed of the motion based on the MM statistics; detecting an irregularity, a condition or a situation of the object based on at least one of: the breathing, the heartbeat, the pseudo-periodic behavior of the MM statistics, or the speed of the detected motion; detecting an activity of the object by analyzing the detected MM, detected motion, detected breathing or detected heartbeat; determining a MM level of the detected MM of the motion of the object by determining that the MM statistics lies in a first range associated with the MM level; determining a motion level of the detected motion of the object by determining that the motion statistics lies in a second range associated with the motion level; determining a breathing level of the detected breathing or a heartbeat level of the detected heartbeat of the object by analyzing a frequency, timing, amplitude, phase or characteristics of the pseudo-periodic behavior of the MM statistics or the motion statistics; or determining an activity level of the detected activity of the detected heartbeat of the object by analyzing the MM statistics, the motion statistics, or at least one of: the frequency, timing, amplitude, phase or characteristics of the pseudo-periodic behavior of the MM statistics or the motion statistics.

Clause H11. The system according to any of Clauses H2-H10, wherein the processor is further configured for: determining a series of reporting time windows; and for each reporting time window: computing N2 respective MM statistics based on the N2 selected CI components of the TSCI in the reporting time window, computing a respective MM statistics based on the N2 respective MM statistics, monitoring the motion of the object in the reporting time window based on the respective MM statistics, performing the task in the reporting time window based on the monitoring in the reporting time window, and generating the response in the reporting time window based on the monitoring in the reporting time window.

Clause H12. The system of Clause H11, wherein the processor is further configured for: for each reporting time window: computing N1 respective MM statistics based on the N1 CI components of the TSCI in the reporting time window, and computing the respective MM statistics based on the N1 respective MM statistics.

Clause H13. The system of Clause H12, wherein the processor is further configured for: for each reporting time window: selecting the N2 CI components adaptively based on the N1 respective component MM statistics, computing N2 weights based on N2 respective component MM statistics corresponding to the selected N2 CI components, wherein each weight is associated with a respective selected CI component such that a larger weight is associated with a component MM statistics with a larger magnitude, and computing the respective MM statistics as a weighted quantity of the N2 respective component MM statistics based on the N2 weights, the weighted quantity being one of: weighted sum, weight mean, weighted geometric mean, weighted harmonic mean, or weighted median.

Clause H14. The system according to any of Clauses H11-H13, wherein the processor is further configured for: for each reporting time window: performing the first analysis of the N1 CI components of the TSCI in the reporting time window, computing the respective MM statistics based on the first analysis, and monitoring the motion of the object by performing the second analysis of the respective MM statistics in the reporting time window.

Clause H15. The system of Clause H14, wherein the processor is further configured for: for each reporting time window: selecting the N2 CI components adaptively for the reporting time window by the first analysis of the N1 CI components of the TSCI in the reporting time window.

Clause H16. The system of Clause H15, wherein: N2 is a scalar quantity that is unchanged during the series of reporting time windows.

Clause H17. The system of Clause H16, wherein: N2 is pre-determined before transmitting the first wireless signal.

Clause H18. The system of Clause H16 or Clause H17, wherein the processor is further configured for: determining, once for all of the series of reporting time windows, the scalar quantity N2 adaptively based on the N1 components of the TSCI.

Clause H19. The system according to any of Clauses H15-H18, wherein: N2 is an adaptive quantity that is changed during the series of reporting time windows; and the processor is further configured for: computing, for each reporting time window, the adaptive quantity N2 for the reporting time window based on the first analysis of the N1 CI components of the TSCI in the reporting time window.

Clause H20. The system of Clause H19, wherein the processor is further configured for: for each reporting time window: computing the adaptive quantity N2 of the reporting time window based on the adaptive quantity N2 of at least one of: a previous reporting time window or a neighboring reporting time window.

Clause H21. The system according to any of Clauses H15-H20, wherein the processor is further configured for: for each reporting time window: selecting the N2 respective CI components adaptively for the reporting time window based on selected CI components in at least one of: a respective previous reporting time window or a respective neighboring reporting time window.

Clause H22. The system according to any of Clauses H15-H21, wherein the processor is further configured for: for each reporting time window: computing N1 respective component MM statistics, wherein each of the N1 respective component MM statistics is computed based on a respective CI component of each CI in the reporting time window, selecting the N2 respective CI components based on the N1 respective component MM statistics, and computing the respective MM statistics based on N2 respective component MM statistics associated with the N2 respective selected CI components.

Clause H23. The system of Clause H22, wherein the processor is further configured for: for each reporting time window: computing the respective MM statistics as an aggregate of the N2 respective components MM statistics associated with the N2 respective selected CI components, wherein the aggregate comprises at least one of: a representative value, a weighted sum, a weighted quantity, a weighted mean, weighted median, weighted product, or an aggregate of any of preceding aggregates.

Clause H24. The system of Clause H23, wherein: the aggregate is a weighted quantity with N2 weights for the N2 component MM statistics; the weighted quantity is one of: weighted sum, weighted mean, weighted geometric mean, weighted harmonic mean, or weighted median; and the processor is further configured for: computing, for each reporting time window, the N2 weights based on at least one of: a magnitude, phase, or sign of the N2 component MM statistics, wherein each of the N2 weights is monotonic non-decreasing with respect to the magnitude of a respective component MM statistics.

Clause H25. The system according to any of Clauses H22-H24, wherein the processor is further configured for: for each reporting time window: subdividing the reporting time window into N3 analyzing time windows, wherein N3 is an integer greater than one, for each of the N3 analyzing time windows and for each of the N1 CI components, computing a respective temporary component MM statistics associated with the respective CI component based on the respective CI component of each CI in the respective analyzing time window, computing the N1 respective component MM statistics, each as a first aggregate of the N3 respective temporary component MM statistics, selecting the N2 respective CI components based on the N1 respective component MM statistics, and computing the respective MM statistics as a second aggregate of N2 respective component MM statistics associated with the N2 respective selected CI components, wherein at least one of the first aggregate or the second aggregate comprises at least one of: a representative value, a weighted sum, a weighted mean, a weighted median or a weighted product.

Clause H26. The system according to any of Clauses H15-H25, wherein the processor is further configured for: for each reporting time window: subdividing the reporting time window into N3 analyzing time windows, wherein N3 is an integer greater than one, for each of the N3 analyzing time windows and for each of the N1 CI components, computing a respective temporary component MM statistics associated with the respective CI component based on the respective CI component of each CI in the respective analyzing time window, selecting the N2 respective CI components based on the N1*N3 respective temporary component MM statistics, for each of the N3 analyzing time windows, computing a respective temporary MM statistics as a first aggregate of N2 temporary component MM statistics associated with the N2 respective selected CI components, and computing the respective MM statistics as a second aggregate of the N3 respective temporary MM statistics, wherein at least one of the first aggregate or the second aggregate comprises at least one of: a representative value, a weighted sum or a weighted mean.

Clause H27. The system of Clause H26, wherein the processor is further configured for: for each reporting time window: performing the second analysis on at least one of: the respective MM statistics, the N2 temporary component MM statistics, or the N3 respective temporary MM statistics.

Clause H28. A method of a wireless monitoring system, comprising: transmitting, from a first device in the wireless monitoring system, a first wireless signal through a wireless multipath channel of a venue; receiving, by a second device in the wireless monitoring system, a second wireless signal through the wireless multipath channel, wherein the second wireless signal differs from the first wireless signal due to the wireless multipath channel and a motion of an object in the venue; obtaining a time series of channel information (TSCI) of the wireless multipath channel based on the second wireless signal, wherein each channel information (CI) of the TSCI comprises N1 CI components, wherein N1 is an integer greater than one; selecting N2 CI components from the N1 CI components based on a first analysis of the N1 CI components of the TSCI, wherein N2 is an integer less than or equal to N1; computing a micro-motion (MM) statistics based on the N2 selected CI components of the TSCI and the first analysis; monitoring the motion of the object based on a second analysis of the MM statistics; performing a task based on the first analysis and the second analysis; and generating a response based on the task, the first analysis and the second analysis.

Clause H29. The method of Clause H28, further comprising: computing N1 component MM statistics each associated with a respective CI component of each CI of the TSCI, wherein the N2 CI components are selected based on the N1 component MM statistics, wherein each of the N1 component MM statistics comprises at least one of: an autocorrelation function of a feature of the CI component, a dot product of the feature of the CI component, or a bivariate function of two temporal neighbors of the feature of the CI component, wherein the feature of the CI component comprises at least one of: the CI component itself, a magnitude of the CI component, a phase of the CI component, or a univariate function of any of preceding features of the feature.

Clause H30. A wireless device of a wireless monitoring system, comprising: a processor; a memory communicatively

coupled to the processor; and a receiver communicatively coupled to the processor, wherein: an additional wireless device of the wireless monitoring system is configured for transmitting a first wireless signal through a wireless multipath channel of a venue, the receiver is configured for receiving a second wireless signal through the wireless multipath channel, the second wireless signal differs from the first wireless signal due to the wireless multipath channel and a motion of an object in the venue, and the processor is configured for: obtaining a time series of channel information (TSCI) of the wireless multipath channel based on the second wireless signal, wherein each channel information (CI) of the TSCI comprises N1 CI components, wherein N1 is an integer greater than one, selecting N2 CI components from the N1 CI components based on a first analysis of the N1 CI components of the TSCI, wherein N2 is an integer less than or equal to N1, computing a micro-motion (MM) statistics based on the N2 selected CI components of the TSCI and the first analysis, monitoring the motion of the object based on a second analysis of the MM statistics, performing a task based on the first analysis and the second analysis, and generating a response based on the task, the first analysis and the second analysis.

The following numbered clauses provide implementation examples for wirelessly monitoring micro motions of objects.

Clause I1. A method/device/system/software of a wireless sensing system, comprising: transmitting a wireless signal from a Type1 heterogeneous wireless device of the system through a wireless multipath channel of a venue, wherein the wireless multipath channel is impacted by a motion of an object in the venue; receiving the wireless signal by a Type2 heterogeneous wireless device of the system through the wireless multipath channel, wherein the received wireless signal differs from the transmitted wireless signal due to the wireless multipath channel of the venue and the movement of the object; obtaining a time series of channel information (TSCI) of the wireless multipath channel based on the received wireless signal using a processor, a memory and a set of instructions, wherein each channel information (CI) comprises N1 CI components wherein N1 is greater than one; computing a micro-motion (MM) statistics by performing a first analysis of the N1 CI components of the TSCI; monitoring the object motion by performing a second analysis of the MM statistics; performing a task based on the first and second analysis; generating a response based on the task and the first and second analysis; selecting N2 CI components based on the first analysis of the N1 CI components of the TSCI, wherein N2 is less than or equal to N1; and computing the MM statistics based on the N2 selected CI components of the TSCI.

Clause I2. The method/device/system/software of the wireless sensing system of Clause I1, further comprising: computing N1 component MM statistics each associated with a respective CI component of the TSCI; selecting the N2 CI components based on the N1 component MM statistics.

Clause I3. The method/device/system/software of the wireless sensing system of Clause I2: wherein the component MM statistics associated with a CI component of the TSCI comprises at least one of: an autocorrelation function of a feature of the CI component, an autocovariance function of the feature of the CI component, a temporal filtering of the feature of the CI component, a temporal processing of the feature of the CI component, a weighted averaging of the feature of the CI component, at least one of: the autocorrelation function, the autocovariance function, the temporal filtering ,the temporal processing or the weighted averaging of the feature of the CI component based on a sliding window of the CI component of the TSCI, at least one of: a sum, weighted sum, difference, weighted difference, product, weighted product, quotient, weighted quotient, or bivariate function of two temporal neighbors of the feature of the CI component, or at least one of: a dot product, or cross product of the feature of the CI component; where the feature of the CI component comprise at least one of: the CI component itself, its magnitude, magnitude square, phase, real component, imaginary component, derivative, temporal derivative, inter-component derivative, gradient, temporal gradient, inter-component gradient, or univariate function of any one of the preceding features.

Clause I4. The method/device/system/software of the wireless sensing system of Clause I2 or Clause I3, further comprising: selecting the N2 selected CI components as the CI components associated with one of the following: first N2 of the N1 component MM statistics (i.e. component 1 to component N2, "first N2" is with respect to the natural indices of the N1 CI components), last N2 of the N1 component MM statistics (i.e. component N1-N2+1 to component N1), a contiguous N2 of the N1 component MM statistics (i.e. component k to component k+N2-1, wherein 1<=k<=N1-N2+1), a contiguous N2 of the N1 component MM statistics of which a function of N2 features each being associated with a respective one of the contiguous N2 component MM statistics is at least one of: maximum, minimum, zero, equal to a pre-determined value, greater than a first threshold, or smaller than a second threshold, first N2 of N1 sorted component MM statistics (i.e. component 1 to component N2, "first N2" is with respect to the natural indices of the N1 sorted CI components), last N2 of the N1 sorted component MM statistics (i.e. component N1-N2+1 to component N1), a contiguous N2 of the N1 sorted component MM statistics (i.e. component k to component k+N2-1, wherein 1<=k<=N1-N2+1), and a contiguous N2 of the N1 sorted component MM statistics of which the function of N2 features each being associated with a respective one of the contiguous N2 sorted component MM statistics is at least one of: maximum, minimum, zero, equal to the pre-determined value, greater than the first threshold, or smaller than the second threshold, wherein each feature comprise at least one of: index, index before sorting, index after sorting, magnitude, magnitude square, phase, real component, imaginary component, derivative, temporal derivative, inter-component derivative, gradient, temporal gradient, inter-component gradient, or a univariate function of any one of the preceding features, wherein the univariate function comprises at least one of: linear function, nonlinear function, square, cube, polynomial, exponential function, inverse function, rational function, wherein the function comprises at least one of: aggregation, sum, weighted sum, dot product, vector projection, trimmed sum, product, weighted product, mean, weighted mean, trimmed mean, arithmetic mean, geometric mean, harmonic mean, median, percentile, mode, conditional mean, centroid, cluster center, variance, standard deviation, variation, derivative, slope, gradient, total variation, absolute variation, square variation, spread, dispersion, variability, deviation, absolute deviation, square deviation, total deviation, divergence, range, interquartile range, skewness, kurtosis, L-moment, coefficient of variation, quartile coefficient of dispersion, mean absolute difference, Gini coefficient, relative mean difference, median absolute deviation, average absolute deviation, distance standard deviation, coefficient of dispersion, entropy, variance-to-mean ratio, maximum-to-minimum ratio, variation measure, regularity measure, similarity measure, likelihood, probability distribution function, sample distribution, moment generating function, expected value, expected function, coverage measure, support, range, displacement, angle, length, area, volume, characteristic value, representative value, maximum, minimum, local maximum, or local minimum wherein the N1 sorted component MM statistics are the N1 component MM statistics sorted with respect to one of the following: index, magnitude, phase, real component, imaginary component, or the univariate function of the above.

Clause I5. The method/device/system/software of the wireless sensing system of Clause I4, further comprising: computing the MM statistics as an aggregate of the N2 component MM statistics associated with the N2 selected CI components, wherein the aggregate comprises at least one of: a representative value, dominant value, fusion value, aggregated value, maximum, minimum, local maximum, local minimum, sum, weighted sum, dot product, vector projection, trimmed sum, product, weighted product, average, mean, trimmed mean, arithmetic mean, geometric mean, harmonic mean, median, percentile, mode, weighted mean, weighted geometric mean, weighted harmonic mean, weighted median, maximum likelihood, expected value, conditional mean, centroid, cluster center, or an aggregate of any of the preceding aggregates.

Clause I6. The method/device/system/software of the wireless sensing system of Clause 15, further comprising: wherein the aggregate is a weighted quantity with N2 weights for the N2 component MM statistics, the weighted quantity being one of: weighted sum, weighted mean, weighted geometric mean, weighted harmonic mean, and weighted median; computing the N2 weights based on at least one of: magnitude, phase, or sign (positive/negative) of the N2 component MM statistics.

Clause I7. The method/device/system/software of the wireless sensing system of Clause I6: wherein the weights are monotonic non-decreasing with respect to the magnitude of the component MM statistics.

Clause 18. The method/device/system/software of the wireless sensing system according to any of Clauses 15-17, further comprising: performing at least one of the following task: detecting a MM of the motion of the object if the MM statistics is greater than a first threshold, detecting the motion of the object if a motion statistics computed based on the TSCI is greater than a second threshold, computing a presence of the object if at least one of: the MM statistics is greater than a third threshold, or the motion statistics is greater than a fourth threshold, detecting a breathing or a heartbeat of the objecting by detecting a pseudo-periodic behavior of at least one of: the MM statistics or the motion statistics, computing a breathing rate or a heart rate of the object by analyzing the frequency or timing of the pseudo-periodic behavior of the MM statistics or the motion statistics, computing a sleep state or a sleep analytics based on at least one of: the breathing rate, the heart rate, the MM statistics, or the motion statistics, detecting a fall-down motion, a state, a condition, a change and an emergency of the object by computing and analyzing a speed of the motion based on the MM statistics, detecting an irregularity, a condition or a situation of the object based on at least one of: the breathing, the heartbeat, the pseudo-periodic behavior of the MM statistics, the speed of the detected motion, detecting an activity of the object by analyzing the detected MM, detected motion, detected breathing or detected heartbeat, determining a MM level of the detected MM of the motion of the object by determining that the MM statistics lies in a first range associated with the MM level, determining a motion level of the detected motion of the object by determining that the motion statistics lies in a second range associated with the motion level, determining a breathing level of the detected breathing or a heart beat level of the detected heart beat of the object by analyzing the frequency, timing, amplitude, phase or characteristics of the pseudo-periodic behavior of the MM statistics or the motion statistics, determining an activity level of the detected activity of the detected heart beat of the object by analyzing the MM statistics, the motion statistics, or at least one of: the frequency, timing, amplitude, phase or characteristics of the pseudo-periodic behavior of the MM statistics or the motion statistics, determining a MM location of the detected MM of the object or the motion of the object by comparing the MM statistics with at least one of: a fifth threshold, a second MM statistics computed based on a second TSCI obtained from a second wireless signal transmitted from a second Type1 device to the Type2 device, or a third MM statistics computed based on a third TSCI obtained from a third wireless signal transmitted from the Type1 device to a second Type2 device, determining a motion location of the object or the detected motion of the object by comparing the motion statistics with at least one of: a sixth threshold, a second motion statistics computed based on the second TSCI obtained from the second wireless signal transmitted from the second Type1 device to the Type2 device, or a third motion statistics computed based on the third TSCI obtained from the third wireless signal transmitted from the Type1 device to the second Type2 device, determining a breathing location of the object or its detected breathing, or heartbeat location of the object or its detected heartbeat, by comparing the pseudo-periodic behavior of the MM statistics or motion statistic with at least one of: a seventh threshold, a second pseudo-periodic behavior of a second MM statistics or a second motion statistic computed based on the second TSCI obtained from the second wireless signal transmitted from the second Type1 device to the Type2 device, or a third pseudo-periodic behavior of a third MM statistics or a third motion statistic computed based on the third TSCI obtained from the third wireless signal transmitted from the Type1 device to the second Type2 device, determining an activity location of the object by comparing the MM statistics, the motion statistics, or pseudo-periodic behavior of the MM statistics or motion statistic respectively with at least one of: a respective threshold, at least one of: the second MM statistics, the second motion statistics or a second pseudo-periodic behavior of a second MM statistics or a second motion statistic computed based on the second TSCI obtained from the second wireless signal transmitted from the second Type1 device to the Type2 device, or at least one of: the third MM statistics, the third motion statistics, a third pseudo-periodic behavior of a third MM statistics or a third motion statistic computed based on the third TSCI obtained from the third wireless signal transmitted from the Type1 device to the second Type2 device, monitoring daily activity of the object based on analyzing the daily behavior of at least one of: the MM statistics, motion statistics, their pseudo-periodic behavior, the presence, the speed, the breathing, the heartbeat, the fall-down, the state, the condition, the change, the irregularity, the condition, the situation or the activity, or recognizing the motion of the object based on the MM statistics or the motion statistics.

Clause 19. The method/device/system/software of the wireless sensing system according to any of Clauses 11-18, further comprising: determining a series of reporting time windows; for each reporting time window: computing N2 respective MM statistics based on the N2 selected CI components of the TSCI in the reporting time window, computing a respective MM statistics based on the N2 respective MM statistics, monitoring the object motion in the reporting time window based on the respective MM statistics, performing the task in the reporting time window based on the monitoring, and generating the response in the reporting time window based on the monitoring.

Clause 110. The method/device/system/software of the wireless sensing system of Clause 19, further comprising: for each reporting time window: computing N1 respective MM statistics based on the N1 CI components of the TSCI in the reporting time window, and computing the respective MM statistics based on the N1 respective MM statistics.

Clause 111. The method/device/system/software of the wireless sensing system of Clause 110, further comprising: for each reporting time window: selecting the N2 CI components adaptively based on the N1 respective component MM statistics, computing N2 weights based on the N2 respective component MM statistics, each weight associated with a respective selected CI components such that larger weights are given to component MM statistics with larger magnitude, computing the respective MM statistics as a weighted quantity of the N2 respective component MM statistics based on the N2 weights, the weighted quantity being one of: weighted sum, weight mean, weighted geometric mean, weighted harmonic mean, and weighted median.

Clause 112. The method/device/system/software of the wireless sensing system according to any of Clauses I2-I11, further comprising: for each reporting time window: performing the first analysis of the N1 CI components of the TSCI in the reporting time window, computing the respective MM statistics based on the first analysis, and monitoring the object motion by performing the second analysis of the respective MM statistics in the reporting time window.

Clause 113. The method/device/system/software of the wireless sensing system of Clause 112, further comprising: for each reporting time window: selecting N2 CI components adaptively for the reporting time window by the first analysis of the N1 CI components of the TSCI in the reporting time window.

Clause 114. The method/device/system/software of the wireless sensing system of Clause 113: wherein the scalar quantity N2 is unchanged among the reporting time windows.

Clause 115. The method/device/system/software of the wireless sensing system of Clause 114: wherein the quantity N2 is a pre-determined value.

Clause 116. The method/device/system/software of the wireless sensing system of Clause 115: determining the scalar quantity N2 adaptively once based on the N1 components of the TSCI.

Clause 117. The method/device/system/software of the wireless sensing system according to any of Clauses I13-I16, further comprising: wherein the quantity N2 is changed among the reporting time windows; for each reporting time window: computing the adaptive quantity N2 for the reporting time window based on the first analysis of the N1 CI components of the TSCI in the reporting time window.

Clause 118. The method/device/system/software of the wireless sensing system of Clause 117, further comprising: for each reporting time window: computing the adaptive quantity N2 of the reporting time window based on the adaptive quantity N2 of at least one of: a previous reporting time window or a neighboring reporting time window.

Clause 119. The method/device/system/software of the wireless sensing system according to any of Clauses I13-I18, further comprising: for each reporting time window: selecting the N2 respective CI components adaptively for the reporting time window based on the selected CI components in at least one of: a respective previous reporting time window or a respective neighboring reporting time window.

Clause 120. The method/device/system/software of the wireless sensing system according to any of Clauses I13-I19, comprising: for each reporting time window: computing N1 respective component MM statistics, each respective component MM statistics computed based on the respective CI component of each of the CI in the reporting time window, selecting the N2 respective CI components based on the N1 respective component MM statistics, computing the respective MM statistics based on N2 respective component MM statistics associated with the N2 respective selected CI components.

Clause 121. The method/device/system/software of the wireless sensing system of Clause 120, comprising: for each reporting time window: computing the respective MM statistics as an aggregate of the N2 respective components MM statistics associated with the N2 respective selected CI components, wherein the aggregate comprises at least one of: a representative value, dominant value, fusion value, aggregated value, maximum, minimum, local maximum, local minimum, sum, weighted sum, dot product, vector projection, trimmed sum, product, weighted product, average, mean, trimmed mean, arithmetic mean, geometric mean, harmonic mean, median, percentile, mode, weighted mean, weighted geometric mean, weighted harmonic mean, weighted median, maximum likelihood, expected value, conditional mean, centroid, cluster center, or an aggregate of any of the preceding aggregates.

Clause 122. The method/device/system/software of the wireless sensing system of Clause 121, further comprising: for each reporting time window: wherein the respective aggregate is a weighted quantity with N2 weights for the N2 component MM statistics, the weighted quantity being one of: weighted sum, weighted mean, weighted geometric mean, weighted harmonic mean, and weighted median; computing the N2 respective weights based on at least one of: magnitude, phase, or sign (positive/negative) of the N2 respective component MM statistics, wherein the respective weights are monotonic non-decreasing with respect to the magnitude of the respective component MM statistics.

Clause 123. The method/device/system/software of the wireless sensing system according to any of Clauses 120-122, comprising: for each reporting time window: subdividing the reporting time window into N3 analyzing time windows wherein N3 is greater than 1, for each of the N3 analyzing time windows and for each of the N1 CI component, computing a respective temporary component MM statistics associated with the respective CI component based on the respective CI component of each of the CI in the respective analyzing time window, computing the N1 respective component MM statistics, each as a first aggregate of the N3 respective temporary component MM statistics, selecting the N2 respective CI components based on the N1 respective component MM statistics, computing the respective MM statistics as a second aggregate of the N2 respective component MM statistics associated with the N2 respective selected CI components, wherein at least one of: the first aggregate, or the second aggregate comprises at least one of: a representative value, dominant value, fusion value, aggregated value, maximum, minimum, local maximum, local minimum, sum, weighted sum, dot product, vector projection, trimmed sum, product, weighted product, average, mean, trimmed mean, arithmetic mean, geometric mean, harmonic mean, median, percentile, mode, weighted mean, weighted geometric mean, weighted harmonic mean, weighted median, maximum likelihood, expected value, conditional mean, centroid, cluster center, or an aggregate of any of the preceding aggregates.

Clause 124. The method/device/system/software of the wireless sensing system according to any of Clauses I13-I23, comprising: for each reporting time window: subdividing the reporting time window into N3 analyzing time windows wherein N3 is greater than 1, for each of the N3 analyzing time windows and for each of the N1 CI component, computing a respective temporary component MM statistics associated with the respective CI component based on the respective CI component of each of the CI in the respective analyzing time window, selecting the N2 respective CI components based on the N1*N3 respective temporal component MM statistics, for each of the N3 analyzing time windows, computing a respective temporary MM statistics as a first aggregate of the N2 temporary component MM statistics associated with the N2 selected respective CI components, computing the respective MM statistics as a second aggregate of the N3 respective temporary MM statistics wherein at least one of: the first aggregate, or the second aggregate comprises at least one of: a representative value, dominant value, fusion value, aggregated value, maximum, minimum, local maximum, local minimum, sum, weighted sum, dot product, vector projection, trimmed sum, product, weighted product, average, mean, trimmed mean, arithmetic mean, geometric mean, harmonic mean, median, percentile, mode, weighted mean, weighted geometric mean, weighted harmonic mean, weighted median, maximum likelihood, expected value, conditional mean, centroid, cluster center, or an aggregate of any of the preceding aggregates.

Clause 125. The method/device/system/software of the wireless sensing system of Clause 124, further comprising: for each reporting time window: performing the second analysis on at least one of: the respective MM statistics, the N2 component MM statistics, or the N3 respective temporary MM statistics.

The features described above may be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that may be used, directly or indirectly, in a computer to perform a certain activity or bring about a certain result. A computer program may be written in any form of programming language (e.g., C, Java), including compiled or interpreted languages, and it may be deployed in any form, including as a stand-alone program or as a module, component, subroutine, a browser-based web application, or other unit suitable for use in a computing environment.

Suitable processors for the execution of a program of instructions include, e.g., both general and special purpose microprocessors, digital signal processors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

While the present teaching contains many specific implementation details, these should not be construed as limitations on the scope of the present teaching or of what may be claimed, but rather as descriptions of features specific to particular embodiments of the present teaching. Certain features that are described in this specification in the context of separate embodiments may also be implemented in combination in a single embodiment. Conversely, various features that are described in the context of a single embodiment may also be implemented in multiple embodiments separately or in any suitable sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

Particular embodiments of the subject matter have been described. Any combination of the features and architectures described above is intended to be within the scope of the following claims. Other embodiments are also within the scope of the following claims. In some cases, the actions recited in the claims may be performed in a different order and still achieve desirable results. In addition, the processes depicted in the accompanying figures do not necessarily require the particular order shown, or sequential order, to achieve desirable results. In certain implementations, multitasking and parallel processing may be advantageous.

**Claims**

1. A system for wireless motion monitoring, comprising:

a transmitter configured for transmitting a first wireless signal through a wireless multipath channel of a venue;
a receiver configured for receiving a second wireless signal through the wireless multipath channel, wherein the second wireless signal differs from the first wireless signal due to the wireless multipath channel and a motion of an object in the venue; and
a processor configured for:

obtaining a time series of channel information (TSCI) of the wireless multipath channel based on the second wireless signal,
computing a spatial-temporal information (STI) based on the TSCI,
monitoring the motion of the object based on the TSCI and the STI,
performing a task based on the monitoring, and
generating a response based on the task.

2. The system of claim 1, wherein the processor is further configured for:

choosing, from a plurality of supported operating modes associated with the task, an operating mode to be a current operating mode of the task; and
monitoring at least one aspect of the object based on the TSCI and the current operating mode, wherein the response is generated based on the current operating mode of the task.

3. The system of claim 2, wherein:

the current operating mode is a user-away mode for monitoring the venue when a user of the system is not present in the venue; and
the processor is further configured for:

performing at least one of the following under the user-away mode, with the object being an intruder:

configuring a sensitivity setting for monitoring the motion of the object,
enabling or disabling at least one of: the transmitter or at least one other receiver of the system,
configuring a time table for the user-away mode with respective configurations associated with respective time periods of the time table,
configuring parameters, thresholds and timings for the user-away mode,
configuring a method and a mode of notification for the user, or
configuring the monitoring of the at least one aspect of the object to be associated with the user-away mode;

monitoring the TSCI and the STI for patterns pointing to a presence of the intruder; and
configuring the response to comprise at least one of:

sending a notification to a designated user,
generating an alarm,
generating an alarm animation,
playing a warning message,
conducting a dialog with the intruder,
requesting the intruder to produce an identification of any authorized user,
sounding a siren of the system, or
securing the venue.

4. The system of claim 2, wherein:

the current operating mode is a user-in-venue mode for monitoring the venue when a user of the system is present in the venue; and
the processor is further configured for:

performing at least one of the following under the user-in-venue mode, with the object being the user:

configuring a sensitivity setting for monitoring the motion of the object,
enabling or disabling at least one of: the transmitter or at least one other receiver of the system,
configuring a time table for the user-in-venue mode with respective configurations associated with respective time periods of the time table,
configuring parameters, thresholds and timings for the user-in-venue mode,
configuring a method and a mode of notification for the user, or
configuring the monitoring of the at least one aspect of the object to be associated with the user-in-venue mode;

monitoring activities of the user in the venue based on the TSCI and the STI; and
configuring the response to comprise at least one of:

locating the user,
monitoring movement of the user,
monitoring at least one of: a daily routine, a habit or a behavior, of the user,
monitoring any deviation from at least one of: the daily routine, the habit or the behavior, of the user,
detecting an additional user,
monitoring movement of the additional user,
monitoring a behavior of the additional user,
monitoring interaction between the user and the additional user,
detecting dangerous motion of the user,
detecting a fall-down motion of the user,
monitoring a vital sign of the user,
monitoring at least one of: a breathing or a heartbeat, of the user,
monitoring a sleeping of the user,
monitoring at least one of: a motion sequence, a dancing, an exercising, a pacing, a pause, or a resting, of the user,
detecting a gesture of the user,
conducting a dialog, an exchange or an interaction with the user,
conducting a notification, a report or a reminder to the user,
directing at least one user device to conduct the dialog, exchange, interaction, notification, report or reminder,
generating at least one presentation or user-interface on the at least one user device in the dialog, exchange, interaction, notification, report or reminder,
verifying a danger, a fall-down, an event, a situation, a condition, a gesture, a command of the user based on the dialog, exchange, or interaction, or
communicating an information of the activities of the user to at least one of: another user, another user device of the another user, a server, a cloud server, a local server, a storage, a network storage, a distributed storage, a block chain, a database, or an analysis module.

5. The system of claim 2, wherein:

the current operating mode is a vigilant mode for monitoring the venue when a user of the system is not present in the venue and the user does not want siren; and
the processor is further configured for:

performing at least one of the following under the vigilant mode, with the object being an intruder:

configuring a sensitivity setting for monitoring the motion of the object,
enabling or disabling at least one of: the transmitter or at least one other receiver of the system,
configuring a time table for the vigilant mode with respective configurations associated with respective time periods of the time table,
configuring parameters, thresholds and timings for the vigilant mode,
configuring a method and a mode of notification for the user, or
configuring the monitoring of the at least one aspect of the object to be associated with the vigilant mode;

monitoring the TSCI and the STI for patterns pointing to a presence of the intruder, wherein the response comprises at least one of:

sending a notification to a designated user,
generating an alarm,
generating an alarm animation,
playing a warning message,
conducting a dialog with the intruder,
requesting the intruder to produce an identification of the authorized user,
sounding a siren of the system, or
securing the venue; and

configuring the response to exclude at least one of:

generating an alarm,
generating an alarm animation,
playing a warning message,
conducting a dialog with the intruder,
requesting the intruder to produce an identification of any authorized user,
sounding a siren of the system, or
securing the venue.

6. The system of claim 2, wherein:

the current operating mode is a guard mode for monitoring the venue when a user of the system is not present in the venue and the user wants to be notified of any detected object motion; and
the processor is further configured for:

performing at least one of the following under the guard mode, with the object being an intruder:

configuring a sensitivity setting for monitoring the motion of the object,
enabling or disabling at least one of: the transmitter or at least one other receiver of the system,
configuring a time table for the guard mode with respective configurations associated with respective time periods of the time table,
configuring parameters, thresholds and timings for the guard mode,
configuring a method and a mode of notification for the user, or
configuring the monitoring of the at least one aspect of the object to be associated with the guard mode;

monitoring the TSCI and the STI for patterns pointing to a presence of the intruder; and
configuring the response to comprise at least one of:

sending a notification to the user,
taking further action upon a confirmation from the user, or
switching to another operating mode.

**7.** The system of claim 2, wherein:

the current operating mode is a power-saving mode for monitoring the venue; and
the processor is further configured for pausing or stopping at least one of:

the transmitting of the first wireless signal from the transmitter,
the receiving of the second wireless signal by the receiver,
the obtaining of the TSCI based on the second wireless signal,
the computing of the STI based on the TSCI,
the monitoring of the motion of the object based on the TSCI and the STI,
the performing of the task, or
the generating of the response based on the task.

**8.** The system of claim 2, wherein:

the current operating mode is: (a) a user-challenge mode for monitoring the venue when the motion of the object is detected in the venue and the object is unidentified or (b) a user-interactive mode for monitoring the venue when the object is a user; and
the processor is further configured for:

configuring the response in the user-challenge mode to comprise at least one of:

sending a notification to a designated user,
generating an alarm,
generating an alarm animation,
playing a warning message,
conducting a dialog with the intruder,
requesting the object to produce an identification of any authorized user,
securing the venue, or
switching to another operating mode;

configuring the response in the user-interactive mode to comprise at least one of:

conducting a dialog, an exchange or an interaction with the user,
conducting a notification, a report or a reminder to the user,
directing at least one user device to conduct the dialog, exchange, interaction, notification, report or reminder,
generating at least one presentation or user-interface on the at least one user device in the dialog, exchange, interaction, notification, report or reminder,
verifying at least one of: a danger, a fall-down, an event, a situation, a condition, a sleep-related condition, an activity, a dancing, an exercising, a pacing, a resting, a deviation from at least one of: a daily routine, a habit or a behavior, a movement, a gesture, or a command of the user based on the dialog, exchange, or interaction, or
communicating an information of the activities of the user to at least one of: another user, another user device of the another user, a server, a cloud server, a local server, a storage, a network storage, a distributed storage, a block chain, a database, or an analysis module;
and

monitoring the motion of the object in reaction to the response.

**9.** The system according to any of claims 2 to 8, wherein the processor is further configured for changing the current operating mode of the task from the operating mode to a different operating mode of the supported operating modes based on at least one of:

a choice of a user of the system,
a preference of the user,
an input on a user device by the user,
a selection on a user-interface (UI) by the user,

a button press on the UI by the user,
a verbal selection by the user,
a presentation to the user,
a presentation on the UI,
a dialog, an exchange or an interaction with the user,
the dialog, exchange or interaction based on the user device,
a finite state machine (FSM) comprising at least one state each associated with a respective supported operating mode,
a finite state machine (FSM) comprising a state associated with a sequence of supported operating modes,
the at least one aspect of the object being monitored,
a time table associated with at least one of: the task, the user, the object, or the venue,
a presence or absence of the user in the venue,
a communication with another system,
a power-on, a power interruption, a system reset, or
a power saving need of the system.

10. The system of claim 9, wherein the processor is further configured for:

associating at least one registered wirelessly detectable item with the system;
generating at least one of: a query, a presentation, a notification, a dialog, an exchange, or an interaction in a user-in-venue mode, when no motion is detected for a period of time and none of the at least one registered wirelessly detectable item is detected, wherein the query is communicated to the user device to ask whether the user has an intent of switching to a user-away mode;
changing the current operating mode of the task from the user-in-venue mode to the user-away mode after the user confirms the switching or after the user fails to decline the switching within a time-out period;
in a user-in-venue mode, changing the current operating mode of the task from the user-in-venue mode to a user-away mode after no motion is detected for a period of time;
associating at least one registered wirelessly detectable item with the system;
generating a notification, a greeting, a dialog, an exchange, an interaction, or a presentation to welcome the user in a user-away mode, when any of the at least one registered wirelessly detectable item is detected;
changing the current operating mode of the task from the user-away mode to a user-in-venue mode, when any of the at least one registered wirelessly detectable item is detected;
when a motion is detected in a user-away mode, waiting for a predetermined time period before raising an alarm;
when the user chooses to switch the current operating mode from a user-in-venue mode to a user-away mode, waiting for a predetermined time period before changing the current operating mode to the user-away mode; and
when the user chooses to switch the current operating mode from a user-in-venue mode to a user-away mode but fails to leave the venue within a predetermined time period, waiting for an additional predetermined time period before changing the current operating mode to the user-away mode.

11. The system according to any previous claim, wherein the processor is further configured for:

receiving an emergency message; and
performing at least one of the following emergency actions based on the emergency message:

conducting a dialog, an exchange or an interaction with a user of the system,
conducting a notification, a report or a reminder to the user,
directing at least one user device of the user to conduct the dialog, exchange, interaction, notification, report or reminder,
generating at least one presentation or user-interface on the at least one user device in the dialog, exchange, interaction, notification, report or reminder,
verifying an emergency associated with the emergency message, a danger, a fall-down, an event, a situation, a condition, a gesture, a command of the user based on the dialog, exchange, or interaction,
initiating an evacuation,
actuating an emergency warning system,
mobilizing an emergency response system,
turning on an emergency lighting,
triggering an emergency broadcasting system,
setting off an emergency messaging system,

activating a priority notification system,
sounding a siren,
sounding an audio alarm,
displaying a visual alarm,
animating an animated alarm,
generating a notification or personalized alarm to at least one of: a user of the system, one or more designated contact person,
requesting an emergency service, or
requesting a dispatch of at least one first responder to at least one of: the venue, a designated location, a home address of the user, or a current location of the user.

12. The system according to any previous claim, wherein:

the transmitter is located at a first device;
the receiver is located at a second device;
at least one of the first device or the second device is a device having a single role in the system;
the processor is further configured for changing one of the first device and the second device in the system based on at least one of: a software update, firmware update, software upgrade, or over-the-air software upgrade;
at least one of the first device or the second device is communicatively coupled with at least one of: a wired network or a wireless network;
at least one of the first device or the second device comprises at least one of: an audible alarm generator, a dialogue generator, a conversation engine, a siren, a bell, a speaker, a status indicator, a pathway sound indicator, a location sound indicator, a light, a pathway light for safety, a colored light, an alarm light, a warning light, or a timed light;
the processor is further configured for setting up the first device and the second device according to one of the following manners:

the second device is set up before the first device,
the first device is set up before the second device, or
the first device and the second device are set up at the same time;

the processor is further configured for generating a label for at least one of:

the first device, a location associated with the first device, a region associated with the first device,
the second device, a location associated with the second device, a region associated with the second device,
a pair of the first device and the second device,
a location associated with the pair, or
a region associated with the pair;

the label is generated based on at least one of:

an input of a user of the system during a set-up stage of the system,
the TSCI, the STI, the task, or the response after the set-up stage;

the venue comprises at least one of:

a floor of a multi-floor structure,
a plurality of floors of the multi-floor structure,
an interior space of a structure, or
an immediate neighboring exterior space of the structure; and

the processor is further configured for:

generating a presentation related to the monitoring for a user-interface (UI) of a user device of a user of the system; and
obtaining a user input from the user via the UI.

13. The system according to any previous claim, wherein:

the task comprises at least one of:

generating at least one of: a presentation, a reminder, a notification, a report, a dialog, an exchange or an interaction based on at least one of: a scheduled event, an unread message, an unread news item, a schedule, a time table, subscribed channel news, a user setting, an event, an alarm clock, or a situation, or changing a mode of the system based on at least one of: the motion of the object, the STI, a plan, a time table, a condition, a detected event, a recognized situation, or a triggering event;

at least one of the presentation, the reminder, the notification, the report, the dialog, the exchange, the interaction, or the mode is communicated to at least one of: a user device of a user, a smart phone of the user, a tablet of the user, a computer of the user, a smart speaker, a smart device with a display, a smart device with a speaker, a key fob, a smart watch, a smart wearable, a smart display, a smart appliance, a smart device, a smart smoke detector, a smart door bell, a smart TV, or a small surveillance camera; and

at least one of the reminder, the notification, the report, the dialog, the exchange, the interaction, or the mode is determined based on at least one of: a time in a day, a day in a week, a day in a month, a day in a year, a location of a user device, a status of the system, a prediction based on machine learning, or an analysis of a historical record of at least one of: the TSCI, the STI or an analytics computed based on the STI.

14. The system according to any previous claim, wherein the processor is further configured for:

filtering at least one of: the TSCI, the STI, or an analytics computed based on the TSCI or the STI, based on at least one of: a threshold or a parameter;

recognizing a pattern based on the TSCI or the STI;

generating a super user (SU) account for a SU to control and manage the system with highest authority levels and rights;

generating a plurality of regular user (RU) accounts each for a respective RU to control and manage the system;

configuring each RU account based on at least one of the following performed by the SU:

entering information of the RU associated with the RU account,

assigning to the RU account respective authority levels and rights with respect to monitoring the motion of the object based on the TSCI and the STI, wherein the respective authority levels and rights are less than or equal to the highest authority levels and rights of the SU, or

assigning to the RU account an access to the task or a sub-task of the task;

computing a location of the motion of the object based on the TSCI and the STI;

determining, based on the TSCI and the STI, whether there is object motion in real time; and

generating a presentation of a history, a trend or a temporal summary of at least one of: the STI, the task or the response, the monitoring of the motion, a location of the motion, a motion analytics computed based on the STI or the TSCI, associated with a time period.

15. A method of a wireless monitoring system, comprising:

transmitting a plurality of wireless signals asynchronously through a wireless multipath channel of a venue, wherein each wireless signal is transmitted from a respective one of a plurality of first devices in the wireless monitoring system;

receiving the plurality of wireless signals by a plurality of second devices in the wireless monitoring system through the wireless multipath channel, wherein each received wireless signal differs from the respective transmitted wireless signal due to the wireless multipath channel and a motion of an object in the venue;

obtaining each of a plurality of time series of channel information (TSCI) of the wireless multipath channel based on a respective received wireless signal;

computing a plurality of spatial-temporal information (STI) each based on a respective TSCI;

monitoring a first aspect of the motion of the object based on a first subset of the plurality of TSCI and a first subset the plurality of STI;

monitoring a second aspect of the motion of the object based on a second subset of the plurality of TSCI and a second subset the plurality of STI;

performing a first task based on monitoring the first aspect of the motion;

performing a second task based on monitoring the second aspect of the motion;

generating a first response based on the first task; and

generating a second response based on the second task.

FIG. 1

100

FIG. 2

**FIG. 3**

FIG. 4

FIG. 5

FIG. 6

FIG. 7

**800**

802 — Generate at least one sensing information (SI)

804 — Obtain and analyze at least one time series of SI (TSSI)

806 — Track a movement of an object in a venue based on the at least one TSSI

808 — Compute an incremental distance associated with the movement of the object in a first incremental time period based on the at least one TSSI

810 — Compute a direction associated with the movement of the object in a second incremental time period based on the at least one TSSI

812 — Compute a next location of the object at a next time based on: a current location of the object at a current time, a current orientation of the object at the current time, the incremental distance, the direction, and a map of the venue

**FIG. 8**

FIG. 9

(a) Original measurement

(b) Distance measurement — Aligned by the arrival moment when the tester just gets to the car

FIG. 10

1100

Wi-Fi FTM distance measurements

Driver approaching sensing — 1102

Speed estimation — 1104

Speed consistency checking — 1106

Driver arrival time estimation — 1108

Driver arrival time

**FIG. 11**

**FIG. 12**

TABLE I: Accuracy of the arrival time estimation

| # | Parameter/Conditions | | | | Arrival time estimation error: $\hat{T}^k_{AM} - T_{AM}$ | | | | | |
|---|---|---|---|---|---|---|---|---|---|---|
| | Max. initial distance (m) | Same initial distance (Y/N) | Speed | Direction | -3s | -2s | -1s | 0s | 1s | $\|\bullet\| \leq 1s$ |
| 1 | 30 | N | Normal walking | $0 - 360°$ | 6.2% | 0 | 10.4% | 83.4% | 0 | 93.8% |
| 2 | 20 | N | Normal running | $0 - 360°$ | 0 | 0 | 10% | 90% | 0 | 100% |
| 3 | 20 | N | Walking slowly | $0 - 360°$ | 3.4% | 4.1% | 10.8% | 73.3% | 8.4% | 92.5% |

**FIG. 13**

**FIG. 14**

FIG. 15

EP 3 978 949 A2

Transmit a first wireless signal through a wireless channel of a venue — 1602

↓

Receive a second wireless signal through the wireless channel, wherein the second wireless signal comprises a reflection of the first wireless signal by at least one object in the venue — 1604

↓

Obtain a time series of channel information (CI) of the wireless channel based on the second wireless signal — 1606

↓

Determine a presence of a person moving in the venue based on the time series of CI (TSCI) — 1608

↓

Extract at least one gait feature of the person from the TSCI — 1610

↓

Recognize an identity of the person based on the at least one gait feature — 1612

**FIG. 16**

**FIG. 17**

FIG. 18A

FIG. 18B

FIG. 18C

**)) : Additional Source Signature**

**FIG. 18D**

Sound Signal Conversion

Diversity Combining

Rx | Multipath

DL Based Bandwidth Expansion and Denoising

Raw Signal Conversion

Sound Metric Calculation

Vibrating Object Localization

Background Cancellation

Radio Channel

**FIG. 19**

**FIG. 20**

**FIG. 21**

EP 3 978 949 A2

<u>2200</u>

```
┌──────────────────────────────────────────────────────────────┐
│  Transmit a first wireless signal through a wireless channel   │⟋2202
│  of a venue                                                    │
└──────────────────────────────────────────────────────────────┘
                              │
                              ▼
┌──────────────────────────────────────────────────────────────┐
│  Receive a second wireless signal through the wireless channel,│⟋2204
│  wherein the second wireless signal comprises a reflection of  │
│  the first wireless signal by at least one object in the venue │
└──────────────────────────────────────────────────────────────┘
                              │
                              ▼
┌──────────────────────────────────────────────────────────────┐
│  Obtain a time series of channel information (CI) of the       │⟋2206
│  wireless channel based on the second wireless signal          │
└──────────────────────────────────────────────────────────────┘
                              │
                              ▼
┌──────────────────────────────────────────────────────────────┐
│  Determine a presence of a vibrating object in the venue based │⟋2208
│  on the time series of CI (TSCI)                               │
└──────────────────────────────────────────────────────────────┘
                              │
                              ▼
┌──────────────────────────────────────────────────────────────┐
│  Extract a sound signal from the TSCI                          │⟋2210
└──────────────────────────────────────────────────────────────┘
                              │
                              ▼
┌──────────────────────────────────────────────────────────────┐
│  Reconstruct at least one speech based on the sound signal     │⟋2212
└──────────────────────────────────────────────────────────────┘
```

**FIG. 22**

**FIG. 23**

EP 3 978 949 A2

**FIG. 24**

**FIG. 25**

Channel
information
(CI)
→

```
    ┌─────2610        Basic    ┌─────2620                ┌─────2630
    │  Origin     │   engine   │  Origin    │  Sensing   │  Origin   │
    │  Daemon     │   output   │  Fusion    │  result    │  Client   │  →
    │  Module     │ ─────────→ │  Module    │ ─────────→ │  Module   │
    └────────────┘            └────────────┘            └───────────┘
```

2600

FIG. 26

FIG. 27

EP 3 978 949 A2

**FIG. 28**

2900

EP 3 978 949 A2

Determine an interconnection structure of a system comprising a plurality of wireless devices in a venue to be a tree — 2902

Transmit, by a first device, a wireless signal through a wireless multipath channel of the venue to a second device — 2904

Receive the wireless signal by the second device paired with the first device by a pairwise wireless link — 2906

Obtain a time series of channel information (CI) of the wireless multipath channel based on the wireless signal — 2908

Compute a linkwise analytics related to an object motion of an object in the venue based on the TSCI — 2910

Monitor the object motion of the object based on the linkwise analytics — 2912

Obtain all of the computed linkwise analytics by a root device of the tree — 2914

Compute an overall analytics by the root device based on the obtained linkwise analytics — 2916

Make available in a database the overall analytics, the linkwise analytics, or an information of the devices or the tree — 2918

Update the tree by adding a new device to the tree, or by removing or modifying an existing device of the tree — 2920

Update the tree by adding a new link to the tree, or by removing or modifying an existing link of the tree — 2922

Propagate the update(s) to the plurality of wireless devices of the tree — 2924

FIG. 29

3000

Transmit a plurality of wireless signals asynchronously through a wireless multipath channel of a venue, each wireless signal transmitted from a respective one of a plurality of first devices in a wireless monitoring system — 3002

Receive the plurality of wireless signals by a plurality of second devices in the wireless monitoring system through the wireless multipath channel, each received wireless signal differing from the respective transmitted wireless signal due to the wireless multipath channel and a motion of an object in the venue — 3004

Obtain each of a plurality of time series of channel information (TSCI) of the wireless multipath channel based on a respective received wireless signal — 3006

Compute a plurality of spatial-temporal information (STI) each based on a respective TSCI — 3008

Monitor a first aspect of the motion of the object based on a first subset of the plurality of TSCI and a first subset the plurality of STI — 3010

Monitor a second aspect of the motion of the object based on a second subset of the plurality of TSCI and a second subset the plurality of STI — 3012

Perform a first task based on monitoring the first aspect of the motion — 3014

Perform a second task based on monitoring the second aspect of the motion — 3016

Generate a first response based on the first task — 3018

Generate a second response based on the second task — 3020

**FIG. 30**

EP 3 978 949 A2

**FIG. 31**

EP 3 978 949 A2

FIG. 32

**FIG. 33**

FIG. 34

On chip reduction

WIFI    Example 1: individual WiFi
MCU     and MCU for Tx and Rx

Example 2: individual WiFi
and shared MCU for Tx and Rx

Example 2: shared WiFi
and shared MCU for Tx and Rx

FIG. 35

EP 3 978 949 A2

On TX/RX role

On metal separation

Mirror plan
thermal vent
PCB

On pairing /synchronization
TX
RX

On application
Fall
Motion
Sleep

On working with the current architecture
TX/RX itself is enough to cover a single room
Can still add a TX

FIG. 36

**FIG. 37**

FIG. 38

**FIG. 39**

EP 3 978 949 A2

**FIG. 40**

EP 3 978 949 A2

Transmit, from a first device in a wireless monitoring system, a first wireless signal through a wireless multipath channel of a venue ⟍4102

↓

Receive, by a second device in the wireless monitoring system, a second wireless signal through the wireless multipath channel, wherein the second wireless signal differs from the first wireless signal due to the wireless multipath channel and a motion of an object in the venue ⟍4104

↓

Obtain a time series of channel information (TSCI) of the wireless multipath channel based on the second wireless signal, wherein each channel information (CI) of the TSCI comprises N1 CI components, wherein N1 is an integer greater than one ⟍4106

Select N2 CI components from the N1 CI components based on a first analysis of the N1 CI components, wherein N2 is an integer less than or equal to N1 ⟍4108

↓

Compute a micro-motion (MM) statistics based on the N2 selected CI components of the TSCI and the first analysis ⟍4110

↓

Monitor the motion of the object based on a second analysis of the MM statistics ⟍4112

↓

Perform a task based on the first analysis and the second analysis ⟍4114

↓

Generate a response based on the task, the first analysis and the second analysis ⟍4116

**FIG. 41**

EP 3 978 949 A2